(19) Europäisches Patentamt
European Patent Office
Office européen des brevets

(11) **EP 1 058 810 B1**

(12) **EUROPEAN PATENT SPECIFICATION**

(45) Date of publication and mention
of the grant of the patent:
**03.07.2013 Bulletin 2013/27**

(51) Int Cl.:
***G01B 9/02*** *(2006.01)*    ***G01N 21/45*** *(2006.01)*

(21) Application number: **99902341.9**

(86) International application number:
**PCT/US1999/001041**

(22) Date of filing: **16.01.1999**

(87) International publication number:
**WO 1999/042786 (26.08.1999 Gazette 1999/34)**

(54) **APPARATUS AND METHODS FOR MEASURING INTRINSIC OPTICAL PROPERTIES OF A GAS**

APPARAT UND VERFAHREN ZUM MESSEN DER INTRINSISCHEN OPTISCHEN
EIGENSCHAFTEN EINES GASES

APPAREIL ET PROCEDES POUR LA MESURE DES PROPRIETES OPTIQUES INTRINSEQUES
D'UN GAZ

(84) Designated Contracting States:
**DE NL**

(30) Priority: **23.02.1998 US 75595 P**
          **21.10.1998 US 176442**

(43) Date of publication of application:
**13.12.2000 Bulletin 2000/50**

(73) Proprietor: **ZYGO CORORATION**
**Middlefield**
**Connecticut 06455-0448 (US)**

(72) Inventor: **HILL, Henry, Allen**
**Tucson, AZ 85716 (US)**

(74) Representative: **Cole, David John**
**46 Kirkhill Gardens,**
**West Greenlees Estate**
**Cambuslang,**
**Glasgow G72 8EZ (GB)**

(56) References cited:
**WO-A1-98/08214      GB-A- 2 236 181**
**US-A- 4 685 803      US-A- 4 813 783**
**US-A- 5 483 343      US-A- 5 642 195**

**Description**

The present invention generally relates to a method and apparatus for measuring and monitoring the intrinsic optical properties of a gas. More particularly, the invention relates to interferometric measurement of the reciprocal dispersive power of a gas and to optical apparatus which is useful for high accuracy displacement metrology in the presence of an uncontrolled turbulent gas.

Interferometric techniques have broad applicability to a variety of tasks requiring precision measurement.

The precise measurement of length, displacement, geometric features, surface structure, and vibration have been common applications where these techniques have played important roles, which continue to grow and evolve because of the ever increasing demands for greater precision. However, as with other metrologies, practicalities often intrude to make it difficult to achieve what may be theoretically possible.

One dominant factor which limits the absolute accuracy of interferometric displacement metrology is the uncertainty in the refractive index of the ambient air, see W. T. Estler, "High-Accuracy Displacement Interferometry in Air," Appl. Opt., 24, 808-815 (1985); C. L. Farrand, V. F. Foster, and W. H. Grace, U.S. Pat. No. 4,215,938 issued Aug. 15, 1980; N. Bobroff, "Residual Errors in Laser Interferometry from Air Turbulence and Non-Linearity," Appl. Opt. 26(13), 2676-2682 (1987); and N. Bobroff, "Recent Advances in Displacement Measuring Interferometry," Measurement Science & Tech. 4(9), 907-926 (1993).

As noted in the aforementioned cited references, interferometric displacement measurements in air are subject to environmental uncertainties, particularly to changes in air pressure, temperature, and humidity; air composition; and to the effects of turbulence in the air. Such factors alter the wavelength of the light used to measure the displacement. Under normal conditions the refractive index of air is approximately 1.0003 with a variation of the order of $1 \times 10^{-5}$ to $1 \times 10^{-4}$. In many applications the refractive index of air must be known with a relative precision of less than 0.1 ppm (parts per million) to 0.003 ppm, these two relative precisions corresponding to a displacement measurement accuracy of 100 nm and 3 nm, respectively, for a one meter interferometric displacement measurement.

One way to detect refractive index fluctuations is to measure changes in pressure and temperature along a measurement path and calculate the effect on refractive index of the path. Mathematical equations for effecting this calculation are disclosed in an article entitled "The Refractivity Of Air" by F. E. Jones, J. Res. NBS 86(1), 27-32 (1981). An implementation of the technique is described in the cited article by Estler. Unfortunately, this technique provides only approximate values, is cumbersome, and corrects only for slow, global fluctuations in air density.

One prior-art technique of the type described in the preceding paragraph for correcting the environmental uncertainties is based on using individual sensors to measure the barometric pressure, temperature, and humidity, and then using these measurements to correct the measured displacement. The commercially available Automatic Compensator, Model 5510 Opt 010, from Hewlett-Packard uses this technique. This technique has been only partly satisfactory due to the errors in the sensors and due to the errors arising from variations in the composition of the air, *e.g.,* the percentage $CO_2$ content and presence of industrial gases, *i.e.* Freon and solvents are ignored in the technique.

Another type of technique for correcting for the effects of air is based on a measurement of the refractivity of the air. A procedure of this type will hereinafter be referred to as a refractivity technique. One of the more serious limitations encountered with a refractivity technique with regard to use in high precision distance measuring interferometry arises at a fundamental level. The refractivity of a gas is directly proportional to the density of the gas that is dependent in first order on environmental conditions such as temperature and pressure. Thus, to relate the value of a refractivity measured at the site of a refractivity measuring apparatus to a second site, *e.g.* the measuring path of a distance measuring interferometer, the environmental conditions at the latter site relative to the environmental conditions at the former site must be known with a relative precision of less than 300 ppm to 10 ppm, the required relative precision for the refractive index at the latter site being less than 0.1 ppm to 0.003 ppm in accordance with relative precisions previously cited. This serious limitation in regard to use in high precision distance measuring interferometry will in general be present with all techniques classified as refractivity techniques.

A prior-art refractivity technique for correcting for environmental uncertainties is based on the C. L. Farrand, V. F. Foster, and W. H. Grace U.S. Pat., *ibid.*. This technique incorporates a rigid enclosure, the length of which must be accurately known, independent of environmental conditions and constant in time. The change in optical path length of this enclosure is measured as remotely controlled valves allow the enclosure to be evacuated and refilled with ambient air. The refractivity of the air in the enclosure is proportional to the measured change in optical path length. This technique has been only partly satisfactory due to the fact that the characteristics of the air in the enclosure do not adequately represent those of the air in the measurement path, thusly systematic errors are introduced. It has been found that even with a perforated enclosure, serious systematic differences exist between the characteristics of the air inside of and external to the enclosure in addition to the limitations of the refractivity technique previously cited.

Other prior-art refractivity techniques which incorporate a fixed length optical reference path are found in commonly owned U. S. Pat. No. 4,685,803 issued Aug. 11,1987 and U. S. Pat. No. 4,733,967 issued March 29, 1988, to G. E. Sommargren. The former patent describes an optical apparatus capable of measuring the absolute refractive index of a gas. The apparatus comprising comprises an evacuated cell with transparent windows ; means, such as mirror coatings, for obtaining reflections from the surfaces on the vacuum sides of the windows; means for varying the distances between the mirror coatings from less than a few micrometers to approximately 100 millimeters; a first differential plane mirror interferometer with its measurement leg in the gas to be measured outside of the vacuum cell; a second differential plane mirror interferometer with its measurement leg in the vacuum cell; means for measuring the phase variations in the first and second interferometers as the variable distance varies; a microcomputer for taking the ratio of said first and second phase variations to provide an output (92) which is the absolute index of refraction of the gas. The principal advantages of the inventions disclosed in the two cited Sommargren patents are that the length of the measurement path need not be known with extreme accuracy, small variations in the measurement path length during the measurement are tolerable, and the air around the refractive index cell can truly represent the ambient environment. However, the two cited Sommargren patents measure the refractivity of a gas and therefore encounter the cited limitations of the refractivity technique with regard to use in high precision distance measuring interferometry.

Perhaps the most difficult measurement related to the effects of environmental conditions on the refractive index of air is the measurement of index fluctuations over a measurement path of unknown or variable length, with uncontrolled temperature and pressure. Such circumstances arise frequently in geophysical and meteorological surveying, for which the atmosphere is obviously uncontrolled and the refractive index is changing dramatically because of variations in air density and composition. The problem is described in an article entitled "Effects Of The Atmospheric Phase Fluctuation On Long-Distance Measurement" by H. Matsumoto and K. Tsukahara, Appl. Opt. 23(19), 3388-3394 (1984) and in an article entitled "Optical Path Length Fluctuation In The Atmosphere" by G. N. Gibson, J. Heyman, J. Lugten, W. Fitelson, and C. H. Townes, Appl. Opt. 23(23), 4383-4389 (1984).

Another example situation with respect to uncontrolled atmosphere and changing refractive index is high-precision distance measuring interferometry, such as is employed in micro-lithographic fabrication of integrated circuits. See for example the two cited articles by N. Bobroff. The correction for index fluctuations due to air turbulence is typically on the order of 0.1 ppm in magnitude, and the residual errors due to index fluctuations resulting in part from air turbulence in the corrected measured path length must be with a relative precision less than or of the order of 0.003 ppm in high accuracy displacement interferometry, a relative precision corresponding to a displacement measurement accuracy of 3 nm for a one meter interferometric displacement measurement. This high level of precision involves frequency-stabilized laser sources and high-resolution phase detection.

One direct way to detect index fluctuations over a path is taught in U.S. Patent No. 5,218,426 issued Jun. 8, 1993 to J. L. Hall, P. J. Martin, M. L. Eickhoff, and M. P. Winters and entitled "Highly Accurate In-Situ Determination of the Refractivity of an Ambient Atmosphere". The system of Hall *et al.* includes use of a refractometer exposed to an ambient atmosphere and having light directed thereto to form an optical interference fringe pattern having a dependence upon the refractivity of the ambient atmosphere. The fringe pattern is measured as a function of angle either by sequentially scanning a collimated input beam in angle while detecting the transmitted light, or by imaging (onto a multi-element detector) the angular exit space of the interferometer illuminated with a diverging input beam. The measuring path of the apparatus of Hall *et. al.* is substantially a combination of two right circular cones whereas the measuring path of a distance measuring interferometer is substantially comprised of a set of right circular cylinders. As a consequence, the apparatus of Hall *et al.* is not suited to measuring fluctuations in the optical path length of distance measuring interferometers due to atmospheric turbulence.

Another more direct way to detect index fluctuations over a path is by multiple-wavelength distance measurement. The basic principle may be understood as follows. Interferometers and laser radar measure the optical path length between a reference and an object, most often in open air. The optical path length is the integrated product of the refractive index and the physical path traversed by the measurement beam. In that the refractive index varies with wavelength, but the physical path is independent of wavelength, it is generally possible to separate the physical path length from the contributions of the refractive index, provided that the instrument employs at least two wavelengths. The variation of index with wavelength is known in the art as dispersion, accordingly this technique will be referred to hereinafter as the dispersion technique.

The dispersion technique measures the difference in optical path at two different wavelengths and then uses properties of the refractive index to compute the effects of the refractive index on a path length from the measured difference in optical path at two different wavelengths. The dispersion technique encounters two serious limitations. The more basic limitation arises from the fact that the dispersion technique is by definition a technique that uses properties of the first derivative with respect to wavelength of the refractive index. The second limitation arises from the fact that the properties of the refractive index must be available to the required accuracy.

The first derivative character of the dispersion technique increases the relative precision at which interferometric phase measurements must be made relative to distance measuring interferometers by more than one to two orders of magnitude. The first derivative character of the dispersion technique also increases the relative precision to which properties of the refractive index must be known relative to refractivity techniques by more than one to two orders of magnitude. The information available on the refractive index is not known with sufficient relative precision for certain applications of the refractivity technique and consequently is not known with sufficient relative precision for even fewer applications of the dispersion technique.

The dispersion technique for refractive index measurement has a long history, and predates the introduction of the laser. An article entitled "Long-Path Interferometry Through An Uncontrolled Atmosphere" by K. E. Erickson, J. Opt. Soc. Am. 52(7), 781-787 (1962) describes the basic principles and provides an analysis of the feasibility of the technique for geophysical measurements. Additional theoretical proposals are found in an article entitled "Correction Of Optical Distance Measurements for the Fluctuating Atmospheric Index of Refraction" by P. L. Bender and J. C. Owens, J. Geo. Res. 70(10), 2461-2462 (1965).

Commercial distance-measuring laser radar based on the dispersion technique for index compensation appeared in the 1970's. An article entitled "Two-Laser Optical Distance-Measuring Instrument That Corrects For The Atmospheric Index Of Refraction" by K. B. Earnshaw and E. N. Hernandez, Appl. Opt. 11(4), 749-754 (1972), discloses an instrument employing microwave-modulated HeNe and HeCd lasers for operation over a 5 to 10 km measurement path. Further details of this instrument are found in an article entitled "Field Tests of a Two-Laser (4416A And 6328A) Optical Distance-Measuring Instrument Correcting for the Atmospheric Index of Refraction" by E. N. Hernandez and K. B. Earnshaw, J. Geo. Res. 77(35), 6994-6998 (1972). A further example of an application of the dispersion technique is discussed in an article entitled "Distance Corrections for Single- and Dual-Color Lasers by Ray Tracing" by E. Berg and J. A. Carter, J. Geo. Res. 85(B11), 6513-6520 (1980).

Although instrumentation for geophysical measurements typically employs intensity-modulation laser radar, it is understood in the art that optical interference phase detection is more advantageous for shorter distances. In U.S. Patent No. 3,647,302 issued to R. B. Zipin and J. T. Zalusky, Mar. 1972, entitled "Apparatus For And Method Of Obtaining Precision Dimensional Measurements," there is disclosed an interferometric displacement-measuring system employing multiple wavelengths to compensate for variations in ambient conditions such as temperature, pressure, and humidity. The instrument is specifically designed for operation with a movable object, that is, with a variable physical path length. In that the technique of Zipin *et al.* employs three different wavelengths and assumes knowledge of the wavelength dependent refractive index to correct for changes in environmental conditions along a measurement path, the technique of Zipin *et al.* is not a dispersion technique. The dispersion technique being described as a technique which uses properties of the first derivative of the refractive index with respect to wavelength, the technique of Zipin *et al.* may be described as a technique which uses properties of the second derivative of the refractive index with respect to wavelength and accordingly, will hereinafter be referred to a second derivative refractive index technique.

An example of an application of the second derivative refractive index technique in geophysical experiments is found in an article entitled "A Multi-Wavelength Distance-Measuring Instrument For Geophysical Experiments" by L. E. Slater and G. R. Huggett, J. Geo. Res. 81(35), 6299-6306 (1976).

The second derivative refractive index technique encounters two serious limitations. The more basic limitation arises from the fact that the second derivative refractive index technique is by definition a technique that uses properties of the second derivative with respect to wavelength of the refractive index. The second limitation arises from the fact that the properties of the refractive index must be available to the required relative precision. The second derivative character of the second derivative refractive index technique increases the relative precision at which interferometric phase measurements must be made relative to dispersion techniques by more than one to two orders of magnitude. The second derivative character of the second derivative refractive index technique also increases the relative precision to which properties of the refractive index must be known relative to dispersion techniques by more than one to two orders of magnitude. The information available on the refractive index is not known with sufficient relative precision for certain applications of the refractivity technique, to fewer applications of the dispersion technique, and consequently to yet an even smaller set of applications of the second derivative refractive index technique.

A detailed example of a system employing a dispersion technique with the basic limitations previously cited is described by Y. Zhu, H. Matsumoto, and T. O'ishi in an article entitled "Long-Arm Two-Color Interferometer For Measuring The Change Of Air Refractive Index," SPIE, 1319, Optics in complex systems, 538-539 (1990). The system of Zhu *et al.* employs a 1064 nm wavelength YAG laser and an 632 nm HeNe laser together with quadrature phase detection. Substantially the same instrument is described in Japanese in an earlier article by Zhu et al. entitled "Measurement Of Atmospheric Phase And Intensity Turbulence For Long-Path Distance Interferometer," Proc. 3rd meeting on lightwave sensing technology, Appl. Phys. Soc. of Jpn. 39 (1989).

A recent attempt at high-precision interferometry for microlithography using a dispersion technique is represented by U.S. Patent No. 4,948,254 issued to A. Ishida, Aug. 1990. A similar device is described by Ishida in an article entitled "Two Wavelength Displacement-Measuring Interferometer Using Second-Harmonic Light To Eliminate Air-Turbulence-Induced Errors," Jpn. J. Appl. Phys. 28(3), L473-475 (1989). In the article, a displacement-measuring interferometer is disclosed which reduces errors caused by fluctuations in the refractive index by means of two-wavelength dispersion detection. An $Ar^+$ laser source provides both wavelengths simultaneously by means of a frequency-doubling crystal known in the art as BBO. The use of a BBO doubling crystal results in two wavelengths that are fundamentally phase-locked, thus greatly improving the stability and accuracy of the dispersion measurement. In addition to the basic limitations of the dispersion technique previously cited, the phase detection and signal processing means are not suitable for dynamic measurements, in which the motion of the object results in rapid variations in phase that are difficult to detect accurately.

In U.S. Patent No. 5,404,222 entitled "Interferometric Measuring System With Air Turbulence Compensation," issued to S. A. Lis, Apr. 1995, there is disclosed a two-wavelength interferometer employing the dispersion technique for detecting and compensating index fluctuations. A similar device is described by Lis in an article entitled "An Air Turbulence Compensated Interferometer For IC Manufacturing," SPIE 2440 (1995). Improvement on U. S. Patent No. 5,404,222 by S. A. Lis is disclosed in U. S. Patent No. 5,537,209 issued Jul. 1996. The principle innovation of this system with respect to that taught by Ishida in Jpn. J. Appl. Phys. (*ibid*.) is the addition of a second BBO doubling crystal to improve the precision of the phase detection means. The additional BBO crystal makes it possible to optically interfere two beams having wavelengths that are exactly a factor of two different. The resultant interference signal has a phase that is directly dependent on the dispersion but is substantially independent of stage motion. However, the cited patents of Lis are all based on the dispersion technique and therefore have the basic limitations of the dispersion technique previously cited.

U.S. Patent No. 5,642,195 describes a dispersion interferometer for measuring a dispersion portion of the refractive index of a by an interferometric method; the interferometer is stated to be useful in the optical industry and in the composition of diagnostic complexes of various plasma installations. The interferometer comprises a radiation source, two nonlinear optical doublers of frequency at a distance ensuring location of an object therebetween, a light filter and a recording device, all arranged along an optical axis. Also provided is a polarization beam splitter, and the two non-linear optical frequency doublers are so oriented that the directions of polarization of fast waves are orthogonal to each other and do not coincide with ones separated by the beam splitter and the radiation source.

U.S. Patent No. 5,483,343 describes a wavelength compensator including a reference vacuum tube having closed ends. A laser beam enters the reference vacuum tube from one of its ends and is reflected by the other end backwardly. The wavelength compensator also comprises an interference device for causing interference of the laser beam to produce an interference beam, and a light receiving device for receiving the interference beam which bears information related to a change in wavelength of the laser beam. The wavelength compensator further includes a specific arrangement which is effective to reduce vacuum deterioration of the reference vacuum tube.

U.S. Patent No. 4,813,783 describes a interferometer for making length or angle measurements and comprising: an evacuable arrangement for determining the index of refraction of air surrounding the interferometer and including first and second evacuable chambers; a first interferometer system for generating first and second component beams, and including a first comparison arm and a first measuring arm, the first measuring arm including the first evacuable chamber and a movable reflector mounted adjacent the first evacuable chamber so as to be movable with respect to the latter; a second interferometer system for generating third and fourth component beams, and including a second comparison arm and a second measuring arm, the second comparison arm including said second evacuable chamber and a fixed reflector fixedly mounted adjacent the second evacuable chamber; and, optical means for directing the first and second component beams to the first comparison arm and the first measuring arm, respectively, and for directing the third and fourth component beams to the second comparison arm and the second measuring arm, respectively; and for directing the second component beam from the first measuring arm through the first evacuable chamber and for directing the third component beam from the second comparison arm through the second evacuable chamber.

WO 99/18424, which was published only after the priority date of the present application, describes an interferometric apparatus for monitoring select intrinsic optical properties of a gas. The interferometric apparatus comprises: interferometer means; means for generating at least two light beams having different wavelengths; and means for introducing at least a portion of each of the light beams into the interferometer means. The interferometer means comprises a reference leg and a measurement leg, each of which has predetermined physical path lengths, the reference leg being occupied by a predetermined medium and the measurement leg being occupied by the gas being tested. Each beam portion travels through the predetermined medium and gas along predetermined paths of substantially the same physical path lengths, and portions of the beams emerge from the interferometer means as exit beams containing information about the respective optical path lengths through the predetermined medium in the reference leg and the gas in the measurement leg. The apparatus further comprising means for combining the exit beams to produce mixed optical signals containing information corresponding to the phase differences between each of the exit beams from corresponding ones of the predetermined paths of the reference and measurement legs; and means for detecting the mixed optical signals and generating electrical interference signals containing information corresponding to the refractivities of the gas at the different beam wavelengths Finally, the apparatus comprises electronic means for analyzing the interference signals and determining the select intrinsic optical properties of the gas.

US 4 948 254 describes a displacement-measuring interferometer which eliminates errors caused by fluctuations in the refractive index of the atmosphere by means of two-wavelength dispersion detection. An Ar+ laser source provides both wavelengths simultaneously by means of a frequency-doubling crystal known in the art as BBO. The use of a BBO doubling crystal results in two wavelengths that are fundamentally phase locked, thus greatly improving the stability and accuracy of the refractive index measurement.

US 4 552 457 A describes a fiber optic interferometric physical sensor. In this sensor, a fiber optical Mach-Zehnder interferometer includes a sensor arm and a reference arm having different optical path lengths. A transducer coupled to the sensor arm modulates the phase of light signals passing therethrough in response to a physical quantity. The interferometer is supplied with an input optical signal which includes light components at two different wavelengths. The detected intensity of the output of the interferometer includes two components, each of which vary in relation to the physical quantity. Each output component is related to one of the two optical input wavelengths. The two output components differ in phase by an amount proportional to the path length difference between the sensor and reference arms and proportional to the wavelength difference between the light components of the input optical signal. The phase difference is adjusted such that the sensitivities of the two output components to the physical quantity are never simultaneously at a minimum. In an alternative embodiment, a single laser having a continuously variable wavelength is used with the interferometer having differing sensor and reference path lengths to achieve maximum sensitivity.

GB 2 236 181A describes a refractometer for gases comprising a polychromatic laser source to produce a beam of radiation, a beam splitter to separate the radiation into a pair of component beams, a sample cell having two chambers, one of which provides a known standard optical path, a beam combiner to recombine the component beams and a dispersive component to separate out the polychromatic components of the component beams prior to fringe measurement by a plurality of photodetectors. The displacement of the fringes after introducing air into one of the two chambers is used to determine the refractive index of the air, accurate calculations or a further wavelength measurement being used to identify which of several possible fringe displacements have occurred. Air may also be introduced into a third chamber and the affect of pressure change on optical path length investigated.

WO 98/08214 describes a method and apparatus for measuring fluctuations in the refractive index of a gas, such as air, in a measurement path, thus enabling measuring displacement of an object independent of these fluctuations. A coherent source of light provides two source light beams having differing source wavelengths along the measurement path which are substantially harmonically related to each other. The beams are electronically processed to provide modified heterodyne phase shifts based on the provided source wavelengths which are similarly harmonically related to the harmonically related source wavelengths for providing a superheterodyne modulation phase substantially insensitive to motion along the measurement path.

The relative precision of any dispersion technique depends directly on the accuracy to which both the dispersion and the reciprocal dispersive power of the gas in the measurement path is known, the reciprocal dispersive power being defined as the ratio of the refractivity of a gas measured at a first wavelength to the dispersion of the refractivity of the gas between a second and third wavelengths. The first wavelength is preferably the same wavelength as used in an associated distance measuring interferometer. The second or third wavelengths used in the measurement of the dispersion may be the same as the first wavelength used in the measurement of the refractivity. The reciprocal dispersive power is used to compute the refractivity of a gas in the measuring path of for example a distance measuring interferometer from measured values of the dispersion of the gas in the measuring path of the distance measuring interferometer.

The reciprocal dispersive power depends on the three wavelengths for which a specific reciprocal dispersive power is defined as well as on the composition of the gas. The principle advantage of the dispersion technique is that the reciprocal dispersive power is independent of environmental conditions such as temperature and pressure for environmental conditions normally encountered in high- precision distance-measuring interferometers. However, in many situations the composition of the gas may be unknown, the gas composition may vary in time in an unknown way, and the dispersion of the refractivity and/or the refractivity of the gas constituents is not available or not known to the accuracy required for a given application. Either lack of the knowledge of the gas composition or of the reciprocal dispersive power to the necessary relative precision can pose serious limitations on the utility of the dispersion technique.

With respect to the latter point regarding availability of refractivities and corresponding reciprocal dispersive powers, consider the accuracy to which the reciprocal dispersive power is known for the example of water vapor. The widely used equations for the refractivity of water vapor found in the work of B. Edlén entitled "The Refractive Index of Air," Metrologia 2(2), 71-80 (1966) or the improved results reported by K. P. Birch and M. J. Downs, Appl. Opt. 28(5), 825-826 (1989) may be used to compute the reciprocal dispersive power for water vapor. The Birch and Downs findings have been verified by J. Beers and T. Doiron, Metrologia 29, 315-316 (1992). The relative precision to which the reciprocal dispersive power can be computed using either of these two cited sources for the refractivity of water vapor is of the order of 0.1%, the first, second, and third wavelengths used in the computing the reciprocal dispersive power being in the visible part of the spectrum, the first and second wavelengths being equal, and the second and third wavelengths being in the ratio of 2:1, respectively. The situation respect to $CO_2$ is only better by approximately a factor of 3.

It is evident from the examples given in the preceding paragraph that current knowledge of the refractivity of water vapor and $CO_2$ are not accurate enough to make absolute length measurements using dispersion interferometry in ambient air to the relative precision of approximately 0.003 ppm. They may also not be known accurate enough for atmospheric turbulence compensation for the more turbulent environments. The situation with respect to contaminant gases *vis-à-vis* respective reciprocal dispersive powers may present an even more serious problem in the use of dis-

person interferometry [*cf.* N. Bobroff, Meas. Sci. Technol. 4, 907-926, (1993)].

It is clear from the foregoing, that the prior art does not provide a practical, high-speed, high-precision method and corresponding means for measuring and compensating the refractive index including fluctuations in the refractive index of a gas. The limitations in the prior art arise principally from the following, unresolved technical difficulties: (1) the refractivity technique does not measure for example the refractivity of a gas in a measurement path of a distance measuring interferometer directly and as a consequence, requires detailed high precision knowledge of the environmental conditions at two separated sites; (2) the dispersion technique does not measure the refractivity of a gas in a measurement path of a distance measuring interferometer directly and as a consequence requires knowledge of the constituents of the gas in the measurement path and knowledge of the reciprocal dispersive powers of the gas constituents; (3) the gas composition may not be known with sufficient accuracy for the dispersion technique in either a turbulent or a non-turbulent gas; (4) the composition of a gas may be changing significantly on relative short time scales; (5) the data age of composition determinations may be too long; and (6) the refractivity and reciprocal dispersive powers of the gas constituents may not be known with sufficient accuracy.

Consequently, while prior-art techniques for measuring the refractive index of a gas are useful for some applications, none known to the applicant provide the technical performance in a commercially viable form for applications requiring the determination of the reciprocal dispersive power of a gas with the high accuracy required in dispersion interferometry for compensation of air in distance measuring interferometry.

Accordingly, this invention seeks to provide a method and apparatus for measuring and monitoring intrinsic optical properties of a gas, particularly its reciprocal dispersive power. The method and apparatus does not require measurement and monitoring of environmental conditions such as temperature and pressure, and do not require knowledge of the gas composition. The method and apparatus are operative over a wide temporal frequency range with respect to changes in gas composition, and do not require knowledge of the refractivities and of the dispersions of the refractivities for constituents of the gas. The method and apparatus may use but does not require the use of two or more optical beams of differing wavelengths which are phase locked. Also, in the method and apparatus the lengths of measuring paths in an interferometric measurement and monitoring of a reciprocal dispersive power are substantially not used in a computation of the reciprocal dispersive power of the gas.

In the method and apparatus of the invention the frequencies of the optical beams used in an interferometric measurement and monitoring of a reciprocal dispersive power are substantially not used in a computation of the reciprocal dispersive power of the gas.

Accordingly, this invention provides an interferometric apparatus describes an interferometric apparatus for monitoring select intrinsic optical properties of a gas generally similar to that described in the aforementioned WO 99/18424. The interferometric apparatus of the invention comprises:

a source of at least two light beams having different wavelengths;
an interferometer comprising a reference leg and a measurement leg, the reference leg being configured and arranged to be occupied by a predetermined medium and the measurement leg being configured and arranged to be occupied by the gas;
introduction means for introducing at least a portion of each of the light beams into the interferometer so that each beam portion travels through the gas along predetermined paths, and another portion of at least one of the beams travels through the predetermined medium along predetermined paths, the portions and the another portion emerging from the interferometer as exit beams containing information about the respective optical path lengths through the predetermined medium in the reference leg and about the optical path lengths through the gas in the measurement leg,
mixing means for combining the exit beams to produce mixed optical signals containing information corresponding to the phase differences between each of the exit beams from corresponding ones of the predetermined paths of the reference and measurement legs; and
detecting means for detecting the mixed optical signals and generating electrical interference signals containing information corresponding to the select intrinsic optical properties of the gas

The interferometric apparatus of the invention is characterized in that:

the introduction means is configured such that portions of each of the light beams travel through the predetermined medium along predetermined paths; and
a first exit beam corresponding to one of the beam wavelengths has traveled through the gas in the measurement leg, a second exit beam corresponding to the other wavelength has traveled through the gas in the measurement leg, a third exit beam corresponding to said one wavelength has traveled through the predetermined medium in the reference leg, and a fourth exit beam corresponding to said other wavelength has traveled through the predetermined medium in the reference leg.

As indicated above, the present invention generally relates to apparatus and methods by which information about select intrinsic optical properties of gases can be measured and monitored for use in electro-optical metrology and other applications. More specifically, the invention operates to provide measurements of relative refractivities, relative dispersions, and reciprocal dispersive power, the relative refractivity, relative dispersion, and reciprocal dispersive power being substantially independent of environmental conditions such as gas temperature and pressure. In making these measurements, the gas may be turbulent, the gas composition may not be known, the gas composition may be variable in time, and knowledge of refractivities and dispersions of the refractivities for constituents of the gas is not required. The information generated by the inventive apparatus is particularly suitable for use in interferometric distance measuring instruments (DMI) to compensate for errors related to refractive index in the measurement leg and especially to refractive index changes in the measurement leg brought about by environmental effects and turbulence induced by rapid stage slew rates.

Several embodiments of the invention have been made and these fall into three groups which address the need for more or less precision in final measurements and the need for more or less sensitivity of final measured quantities to changes in wavelengths of the light beams used in determination of the final measured quantities. While the various embodiments share common features, they differ in some details to achieve individual goals.

The inventive apparatus comprises interferometer means having reference legs and measurement legs. Each of the constituent legs has a predetermined physical path length with one reference leg configured and arranged to be occupied by a predetermined medium, preferably a vacuum. A second reference leg may be configured to have substantially zero physical length, and the measurement legs configured and arranged to be occupied by the gas whose intrinsic optical properties are to be measured and monitored. In preferred form, the interferometer means comprises a concentric cell having a closed inner chamber that serves as one of the reference legs and an outer chamber, surrounding the inner chamber, that serves as the measurement legs. The inner chamber is substantially evacuated to provide the vacuum, and the outer chamber is opened to the ambient surroundings which, in a typical interferometric DMI application, is air. The concentric cell is preferably in form a right circular cylinder with end sections capped with wavelength selective mirrors fixed normal to the cell's longitudinal axis.

In preferred embodiments, a source generates a set of light beams, the set of light beams comprising at least two light beams, each beam of the set of light beams having a different wavelength. The approximate relationship between the wavelengths of the beams of the set of light beams, the approximate relationship, is known.

A set of frequency-shifted light beams is generated from the set of light beams by introducing a frequency difference between two orthogonally polarized components of each beam of the set of light beams such that no two beams of the set of frequency-shifted light beams have the same frequency difference. In a number of the embodiments, the ratios of the wavelengths are the same as the known approximate relationship to respective relative precisions, the respective relative precisions of the ratios of the wavelengths, wherein a respective relative precision of the respective relative precisions of the ratios of the wavelengths is of an order of magnitude less than the respective dispersive power of the gas times the relative precision required for the measurement of the respective reciprocal dispersive power of the gas. In certain ones of the embodiments, the approximate relationship is expressed as a sequence of ratios, each ratio comprising a ratio of low order non-zero integers, e.g. 1/2, to respective relative precisions, the respective relative precisions of the sequence of ratios, wherein a respective relative precision of the respective relative precisions of the sequence of ratios is of an order of magnitude less than the respective dispersive power of the gas times the relative precision required for the measurement of the respective reciprocal dispersive power. In other embodiments, where the respective relative precisions of the ratios of the wavelengths is inappropriate to the desired respective relative precisions of the ratios of the wavelengths, means are provided for monitoring the ratios of the wavelengths and either providing feedback to control the respective relative precisions of the ratios of the wavelengths, information to correct subsequent calculations influenced by undesirable departures of the respective relative precisions of the ratios of the wavelengths from the desired respective relative precisions of the ratios of the wavelengths, or some combination of both.

At least a portion of each of the frequency shifted light beams is introduced into the interferometer means by suitable optical means so that each light beam portion travels through either the reference leg of predetermined medium and/or the reference leg of substantially zero physical length and the gas along predetermined paths, the predetermind paths of the reference leg of predetermined medium and of the gas having substantially the same physical path lengths. Afterwards, the light beam portions emerge from the interferometer means as exit beams containing information about the optical path length through the gas in the measurement leg, about the optical path length through the predetermined medium (preferably a vacuum) in one reference leg, a first reference leg, and/or about the optical path length through a second reference leg of substantially zero physical length, a second reference leg. In preferred form, the optical means for introducing the light beam portions into the interferometer means is configured and arranged to introduce one of the light beam portions corresponding to one wavelength through one of the wavelength selective end mirrors of the concentric cell and another of the light beam portions corresponding to another of the wavelengths through the other wavelength selective mirror of the end sections of the concentric cell. In one of the embodiments three sets of light beam portions are generated, one at one wavelength being introduced into one end of the concentric cell and two at another wavelength into the other end of the concentric cell.

In yet another embodiment, the optical means are configured to cause certain of the light beam portions to undergo multiple passes as they travel through the concentric cell.

Combining means are provided for receiving the exit beams to produce mixed optical signals which contain information corresponding to the phase differences between the exit beams of each light beam portion from a first reference leg and a measurement leg and/or from a second reference leg and the measurement leg. The mixed optical signals are then sensed by photodetectors which operate to generate electrical interference signals that contain a combination of information corresponding to the refractivities of the gas at the different beam wavelengths, of information corresponding to the index of refraction of the gas at the different beam wavelengths, and of information corresponding to the beam wavelengths.

The electrical interference signals are then analyzed by electronic means that operate to determine the select intrinsic optical properties of the gas. The electronic means can be in the form of a microprocessor or a general purpose computer suitably programmed in well-known ways to perform the needed calculations. The electronic means is configured to determine the intrinsic optical property, the reciprocal dispersive power, r, of the gas, as

$$\Gamma = \frac{\left[n_1(\lambda_1) - 1\right]}{\left[n_3(\lambda_3) - n_2(\lambda_2)\right]}$$

where $\lambda_1$, $\lambda_2$, and $\lambda_3$ are wavelengths and $n_1$, $n_2$, and $n_3$ are indices of refraction and wherein the denominator may be replaced by $[n_3(\lambda_3)-n_1(\lambda_1)]$ or $[n_2(\lambda_2)-n_1(\lambda_1)]$. The electronic means can also be configured to determine the intrinsic optical property, the reciprocal dispersive power, r, of the gas, as

$$\Gamma = \frac{\left[n_i(\lambda_i) - 1\right]}{\left[n_{j+1}(\lambda_{j+1}) - 1\right] - \left[n_j(\lambda_j) - 1\right]}$$

where $i$ and $j$ are integers corresponding to wavelengths. The electronic means can further be configured to determine other intrinsic optical properties, the relative refractivities and the relative dispersions of the gas at different beam wavelengths, where the relative refractivities of the gas are of the form

$$\frac{n_{\lambda_i} - 1}{n_{\lambda_j} - 1}$$

and where the relative dispersions of the gas are of the form

$$\frac{n_i - n_j}{n_r - n_s}$$

where $i$, $j$, $r$, and $s$ are integers corresponding to wavelengths, $i \neq j$, $r \neq s$, and at least either $i$ or $j$ different from either $r$ or $s$.

In a preferred form, the electrical interference signals comprise heterodyne signals containing phase information corresponding to the refractivities of the gas, to the indices of refraction of the gas, and to the beam wavelengths and the apparatus further comprises means for mixing, *i.e.* multiplying, the heterodyne signals to generate at least one superheterodyne signal containing phase information corresponding to the dispersion of the index of refraction of the gas, the dispersion of the index of refraction of the gas being obtained either from the index of refraction of the gas or from the refractivities of the gas. Means are also included for resolving phase ambiguities of the heterodyne and superheterodyne signals. Depending on the details of the optical paths experienced by the light beam portions as they travel through the interferometer means of the various embodiments, additional or different electronics are provided which, in one embodiment, requires the production of modified heterodyne signals prior to final data processing.

While the inventive method disclosed may be carried out using the preferred apparatus described, it will be evident that it may also be practiced using other well-known apparatus. In addition, it is shown that apparatus may be employed which uses homodyne signals.


BRIEF DESCRIPTION OF THE DRAWINGS

The structure and operation of the invention, together with other objects and advantages thereof, may best be understood by reading the detailed description in conjunction with the drawings wherein the invention's parts have an assigned reference numeral that is used to identify them in all of the drawings in which they appear and wherein:

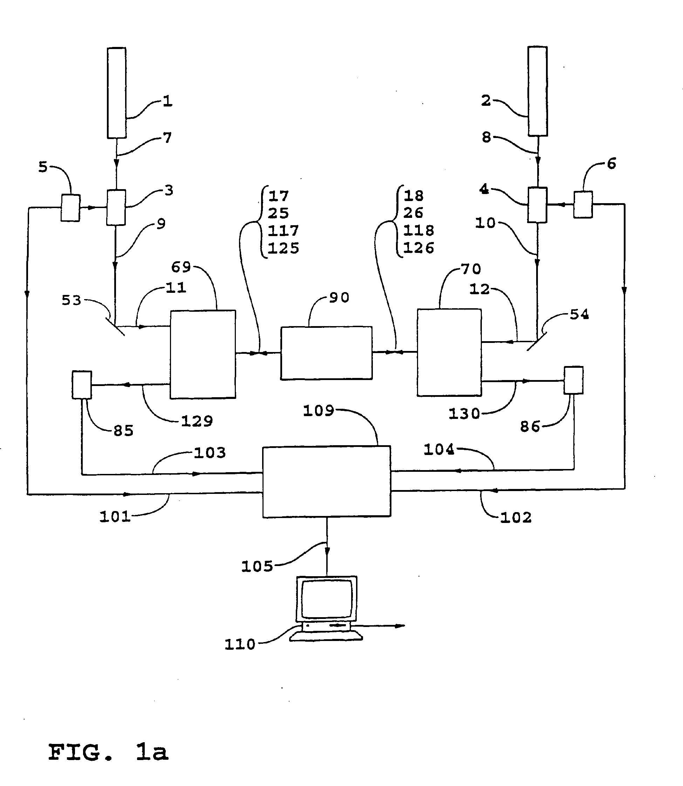

FIGS. **1a**-1f taken together illustrate, in diagrammatic form, the presently preferred first embodiment of the present invention with FIG. **1a** showing optical paths between indicated elements source **1**, modulator **3**, source **2**, modulator **4**, differential plane mirror interferometers **69** and 70, measurement cell **90**, detectors **85** and **86** and the paths of electrical signals between indicated elements driver **5**, modulator **3**, driver **6**, modulator **4**, detectors **85** and **286**, electronic processor **109**, and computer **110**;

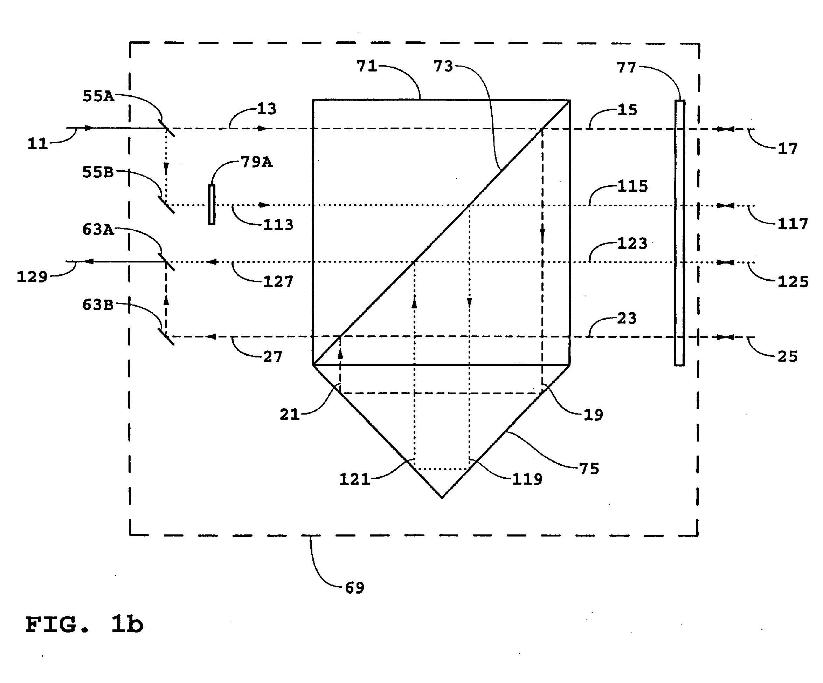

FIG. 1b illustrates differential plane mirror interferometer **69**;

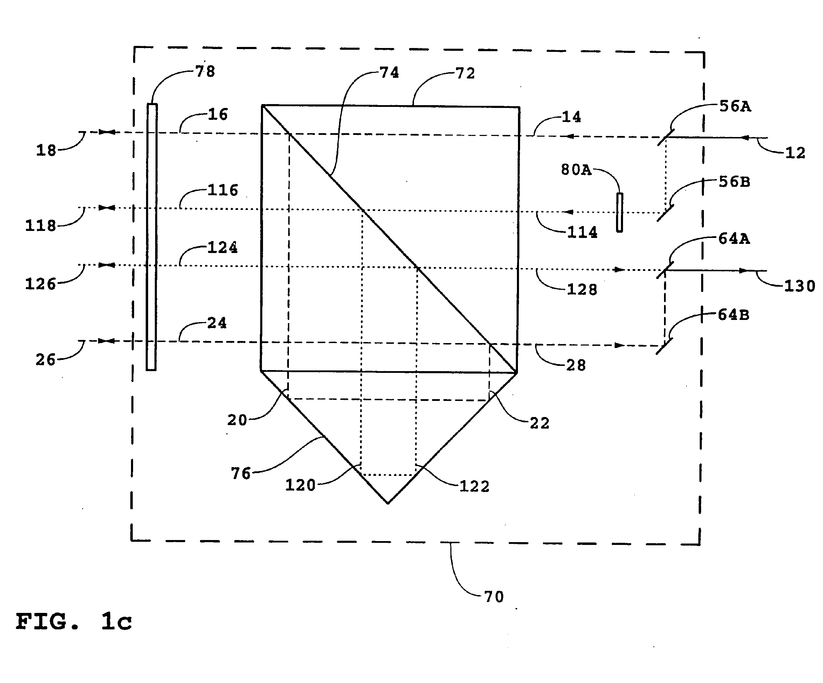

FIG. 1c illustrates differential plane mirror interferometer **70**;

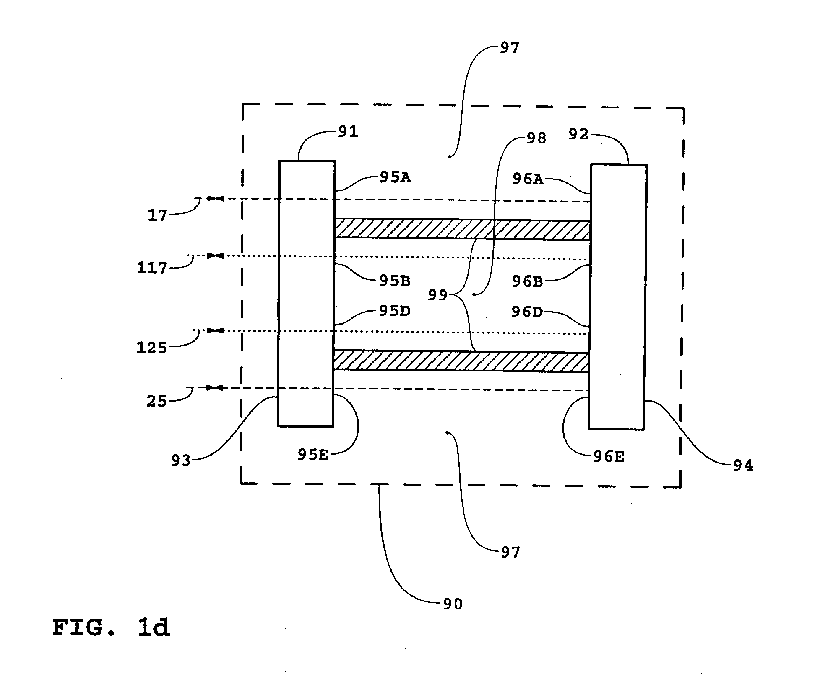

FIG. **1d** illustrates measurement cell **90** furnishing the external mirrors for differential plane mirror interferometer **69**;

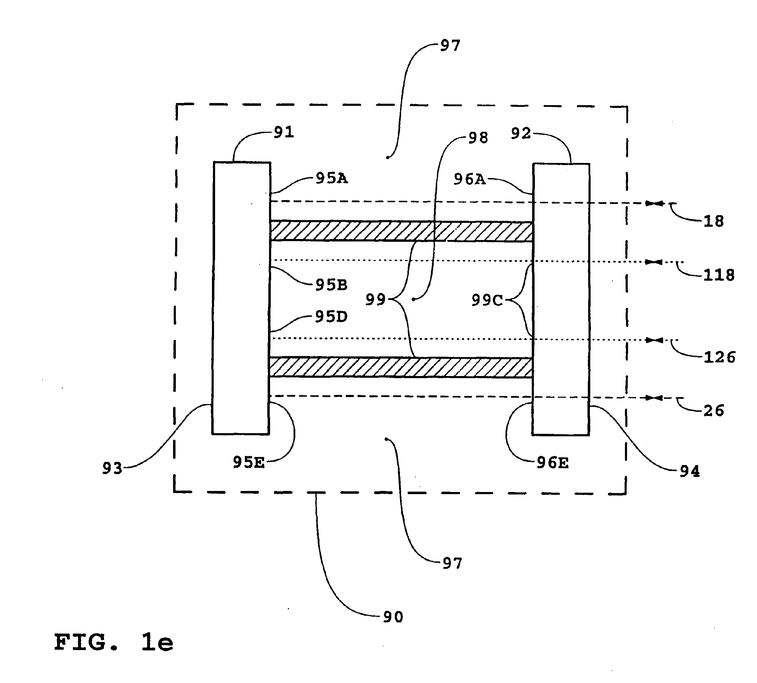

FIG. **1e** illustrates measurement cell **90** furnishing the external mirrors for differential plane mirror interferometer **70**;

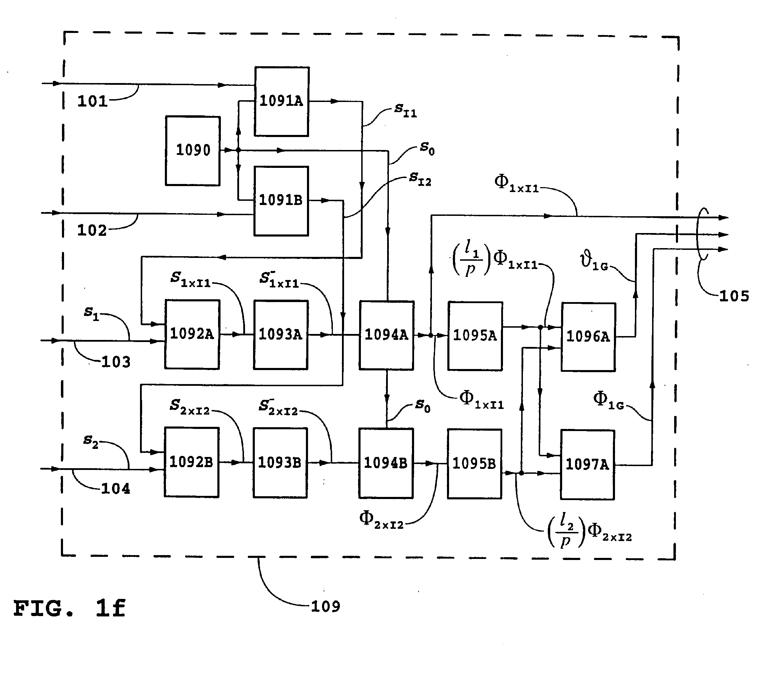

FIG. **1f** is a drawing showing a block diagram of the processing electronics **109**;

FIGS. **1a-1e** and **1g** taken together illustrate, in diagrammatic form, the presently preferred first variant of the first embodiment of the present invention with FIG. 1g showing a block diagram of the processing electronics 109A;

FIG. **1h** illustrates, in diagrammatic form, the components, optical paths, and paths of electronic signals of the presently preferred second variant of the first embodiment of the present invention;

FIG. **1i** shows a block diagram of the processing electronics **1109** used in the second variant of the first embodiment of the present invention;

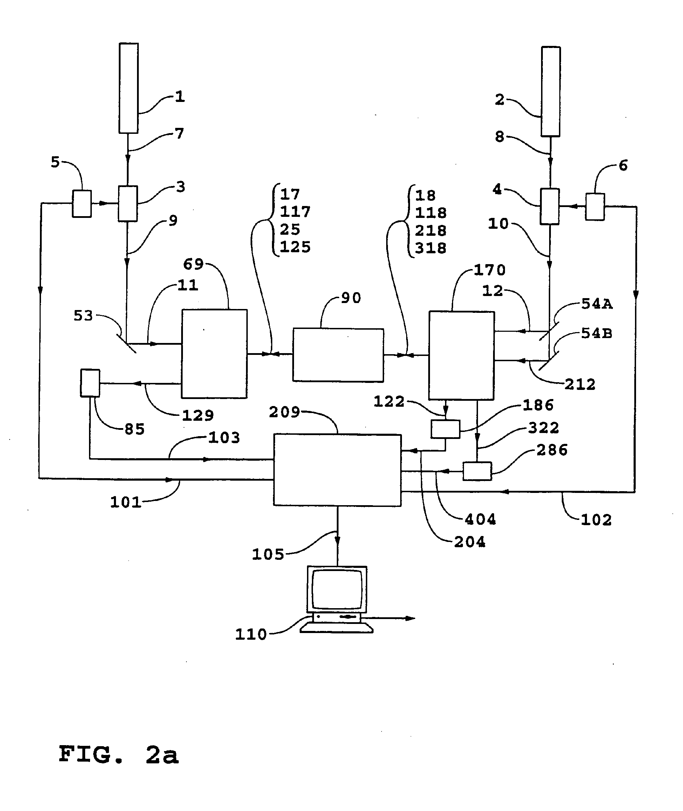

FIGS. **2a-2d** taken together illustrate, in diagrammatic form, the presently preferred second embodiment of the present invention with FIG. **2a** showing optical paths and the paths of electrical signals between indicated elements source 1, modulator **3**, source **2**, modulator **4**, differential plane mirror interferometer **69**, differential plane mirror interferometer group **170**, measurement cell **90**, detectors **85**, **186**, and **286**, and the paths of electrical signals between indicated elements driver **5**, modulator **3**, driver **6**, modulator **4**, detectors 85, **186**, and **286**, electronic processor **209**, and computer 110;

FIG. **2b** illustrates differential plane mirror interferometer group **170**;

FIG. **2c** illustrates measurement cell **90** furnishing the external mirrors for differential plane mirror interferometer group **170**;

FIG. **2d** is a drawing showing a block diagram of the processing electronics **209**;

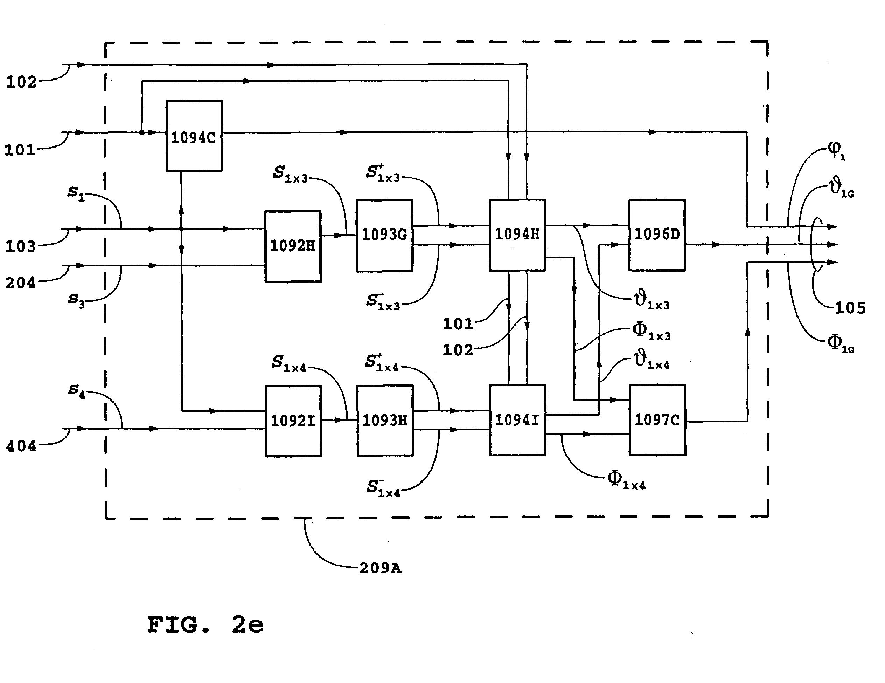

FIGS. **2a-2c** and **2e** taken together illustrate, in diagrammatic form, the presently preferred variant of the second embodiment of the present invention with FIG. **2e** showing a block diagram of the processing electronics **209A**;

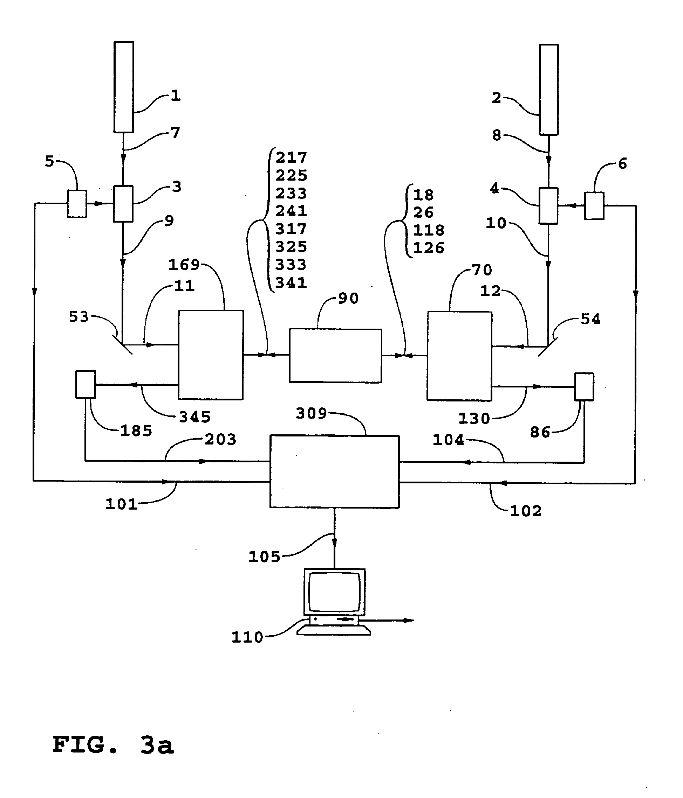

FIGS. 3a-3d taken together illustrate, in diagrammatic form, the presently preferred third embodiment of the present invention with FIG. **3a** showing optical paths and the paths of electrical signals between indicated elements source 1, modulator **3**, source **2**, modulator **4**, differential plane mirror interferometers **169** and **70**, measurement cell **90**, detectors **185** and **86**, and the paths of electrical signals between indicated elements driver **5**, modulator **3**, driver **6,** modulator **4**, detectors 185 and **86**, electronic processor **309**, and computer **110**;

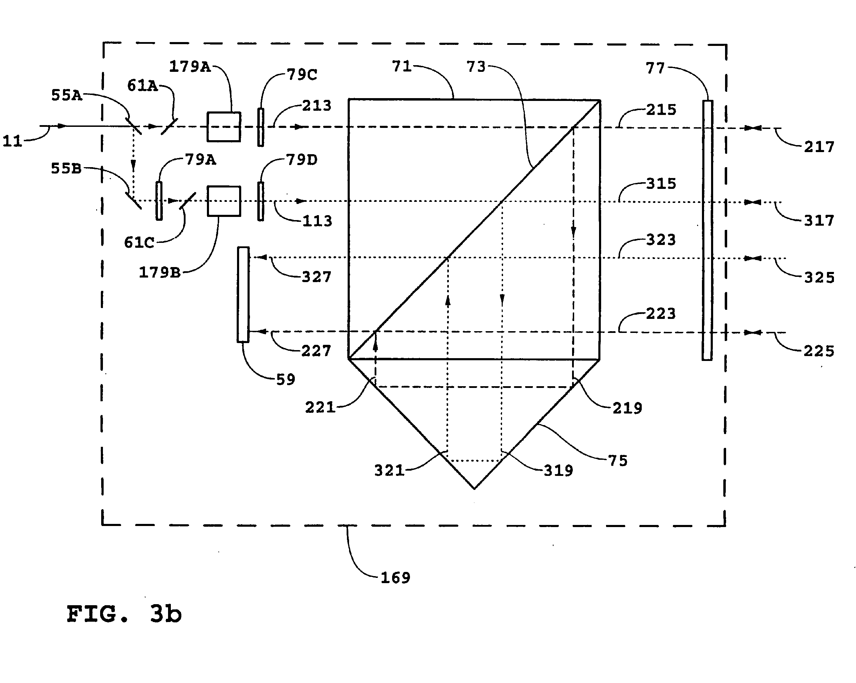

FIG. **3b** illustrates differential plane mirror interferometer **169** for the case of light beam 11 entering differential plane mirror interferometer **169**;

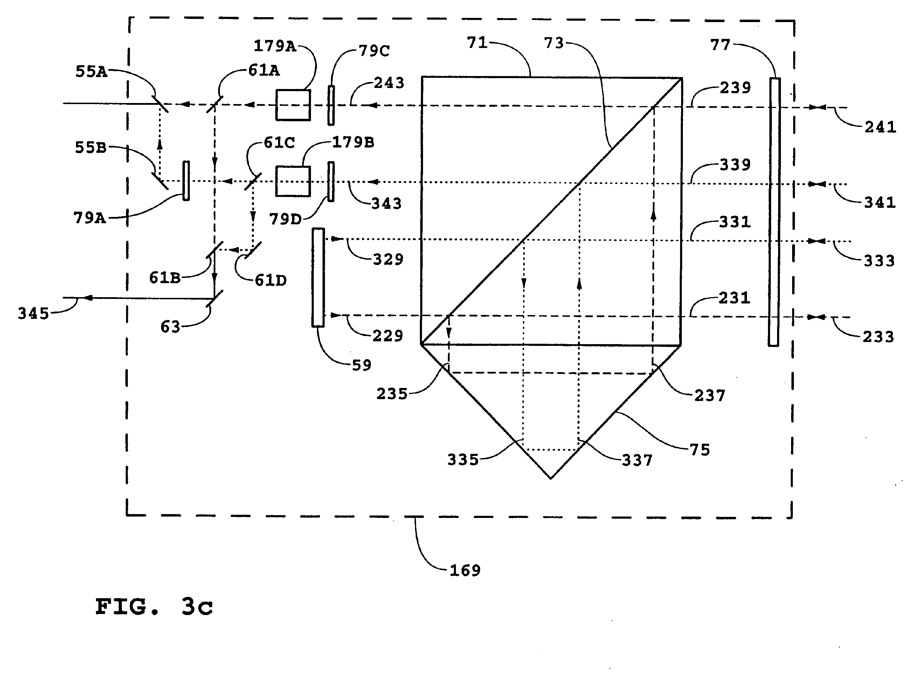

FIG. **3c** illustrates differential plane mirror interferometer **169** for the case of light beam **345** exiting differential plane mirror interferometer **169**;

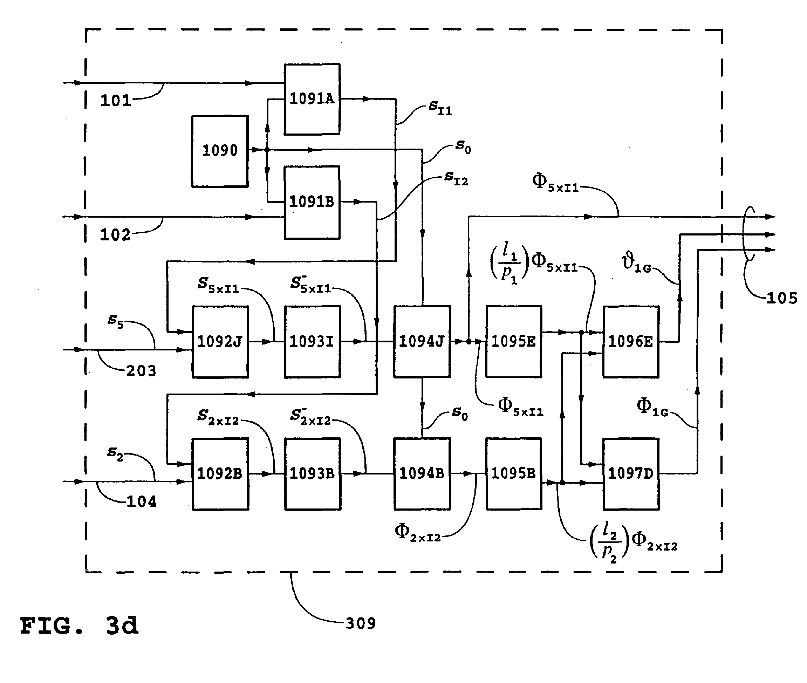

FIG. **3d** is a drawing showing a block diagram of the processing electronics **309;**

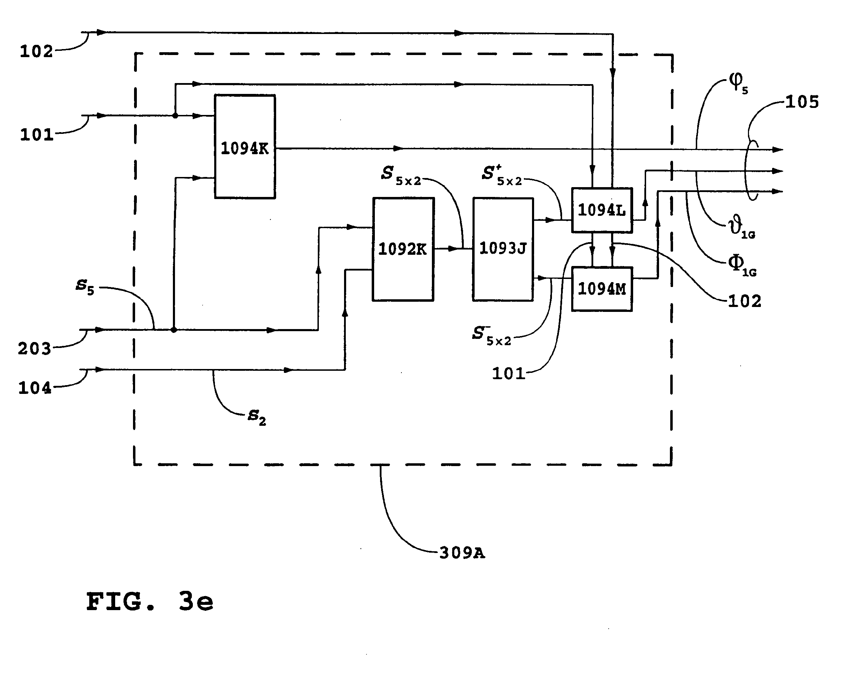

FIGS. **3a-3c** and **3e** taken together illustrate, in diagrammatic form, the presently preferred variant of the third embodiment of the present invention with FIG. **3e** showing a block diagram of the processing electronics **309A**;

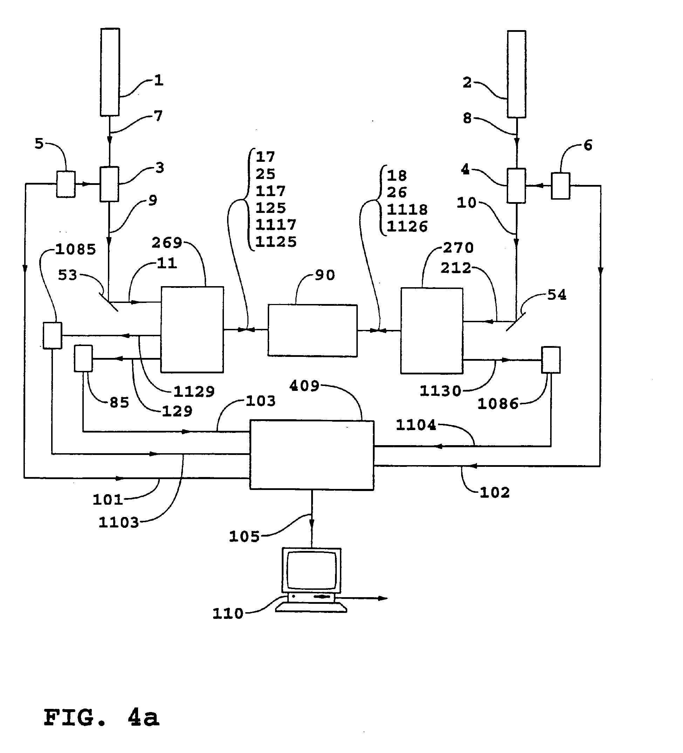

FIGS. **4a-4f** taken together illustrate, in diagrammatic form, the presently preferred fourth embodiment of the present invention with FIG. **4a** showing optical paths and the paths of electrical signals between indicated elements source 1, modulator **3**, source **2**, modulator **4**, differential plane mirror interferometer group **269**, differential plane mirror interferometer **270,** measurement cell **90**, detectors **85**, **1085,** and **1086**, and the paths of electrical signals between indicated elements driver 5, modulator **3**, driver **6**, modulator **4**, detectors **85**, **1085**, and **1086**, electronic processor **409**, and computer **110**;

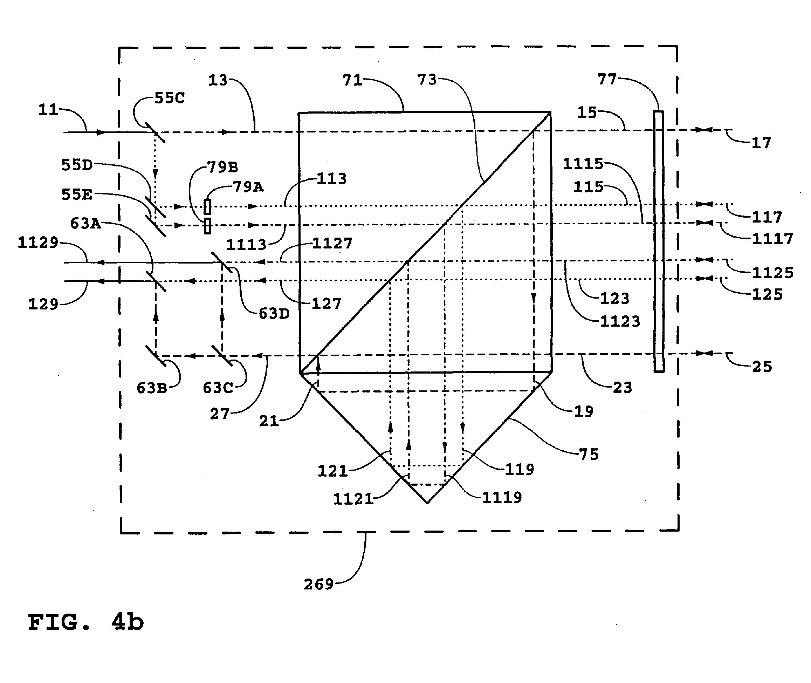

FIG. **4b** illustrates differential plane mirror interferometer group **269**;

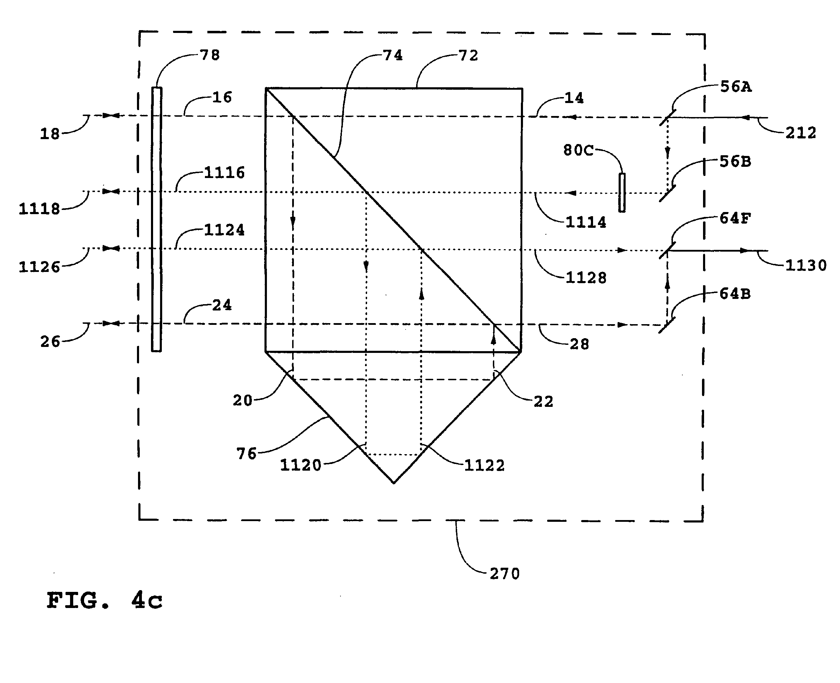

FIG. **4c** illustrates differential plane mirror interferometer **270**;

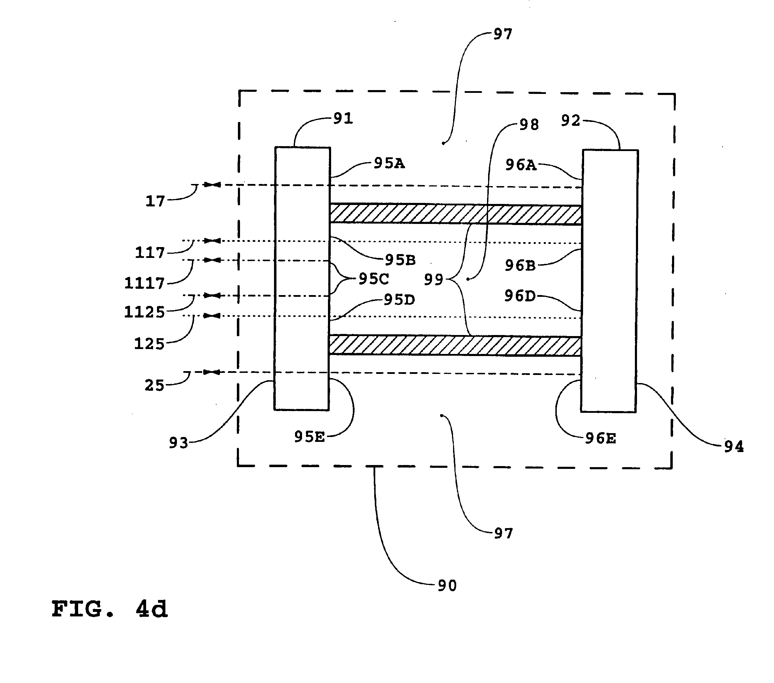

FIG. **4d** illustrates measurement cell **90** furnishing the external mirrors for differential plane mirror interferometer group **269**;

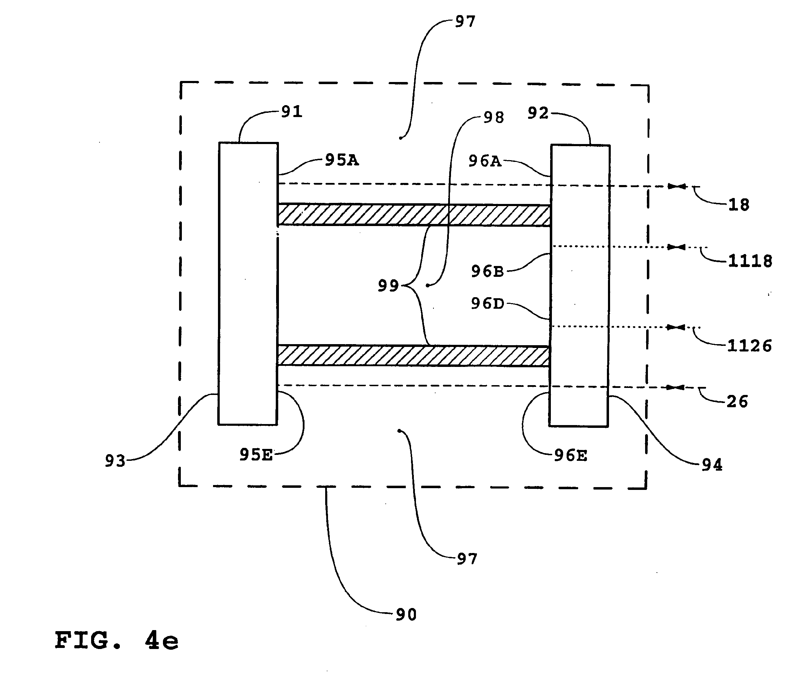

FIG. **4e** illustrates measurement cell **90** furnishing the external mirrors for differential plane mirror interferometer **270**;

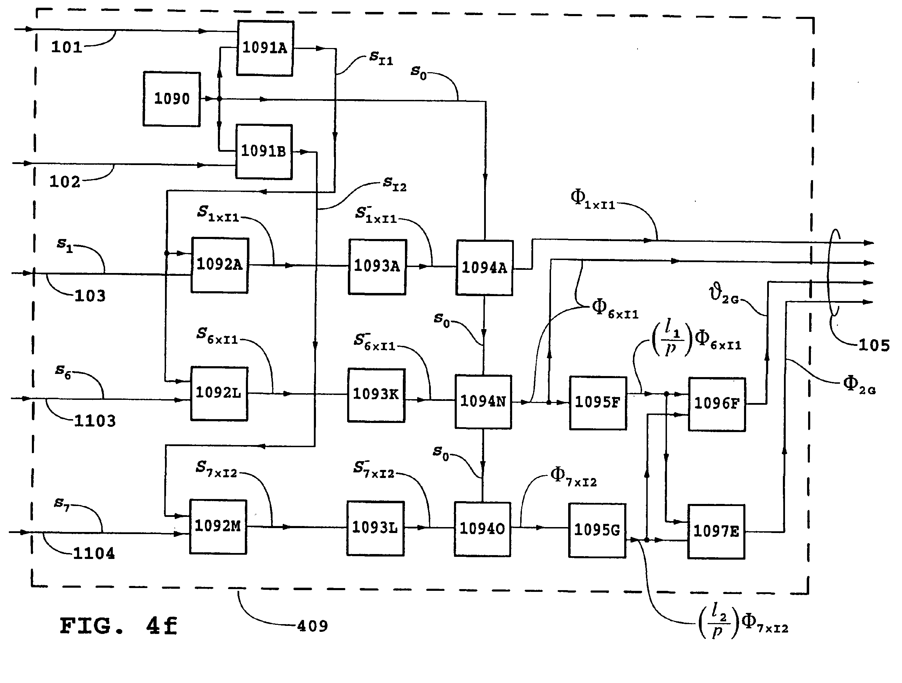

FIG. **4f** is a drawing showing a block diagram of the processing electronics **409**;

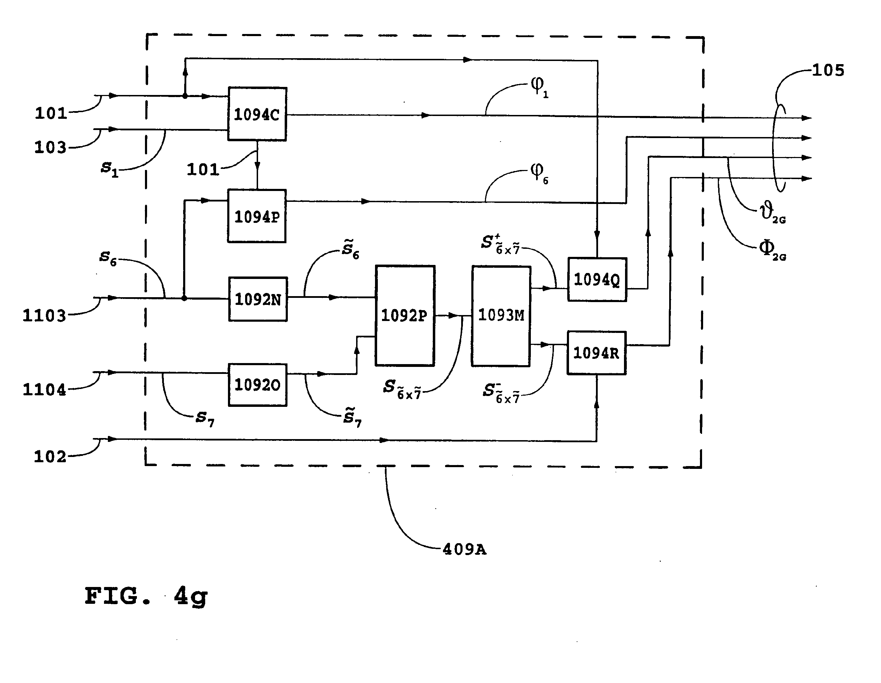

FIGS. **4a-4e** and **4g** taken together illustrate, in diagrammatic form, the presently preferred variant of the fourth embodiment of the present invention with FIG. **4g** showing a block diagram of the processing electronics **409A**;

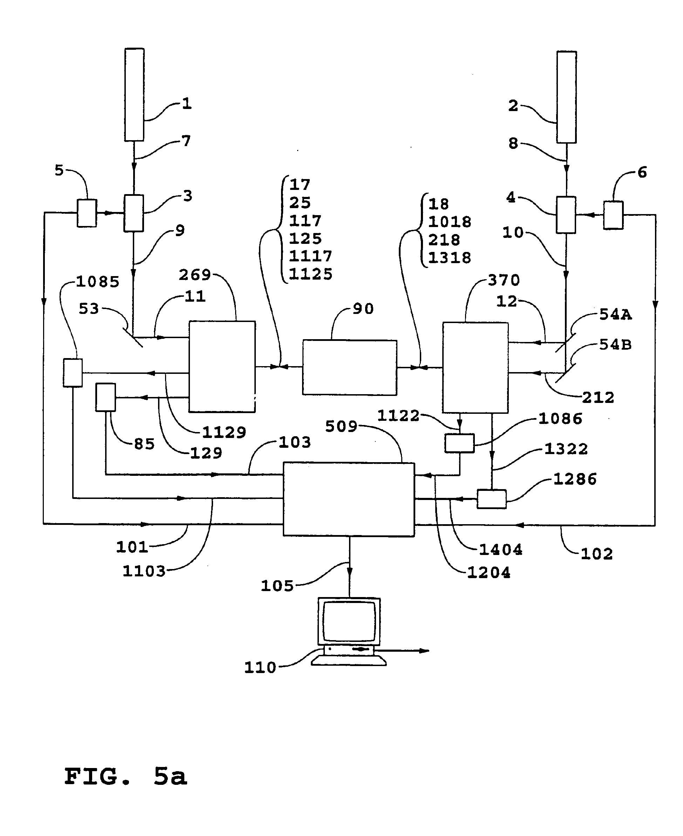

FIGS. **5a-5d** taken together illustrate, in diagrammatic form, the presently preferred fifth embodiment of the present invention with FIG. **5a** showing optical paths and the paths of electrical signals between indicated elements source **1,** modulator **3,** source **2,** modulator **4**, differential plane mirror interferometer groups **269** and **370**, measurement cell **90**, detectors **85**, **1085**, **1086**, and **1286**, and the paths of electrical signals between indicated elements driver **5,** modulator **3**, driver 6, modulator **4**, detectors **85**, **1085**, **1086**, and **1286**, electronic processor **509**, and computer **110**;

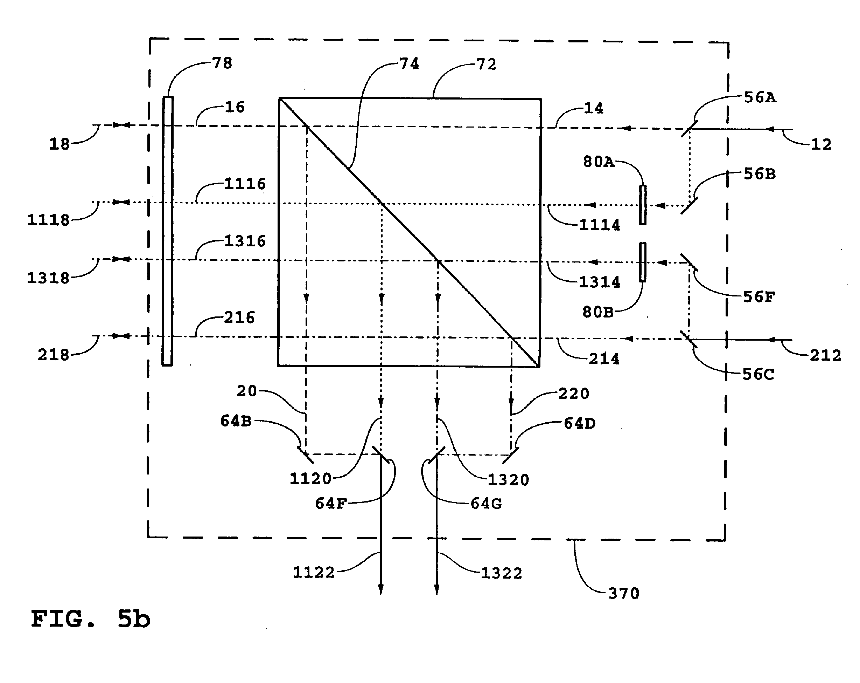

FIG. **5b** illustrates differential plane mirror interferometer group 370;

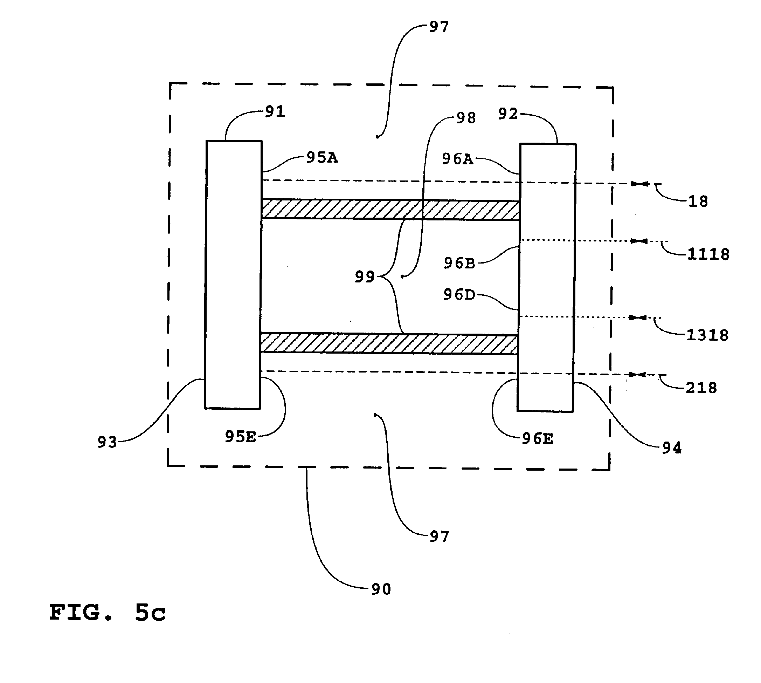

FIG. **5c** illustrates measurement cell **90** furnishing the external mirrors for differential plane mirror interferometer group **370**;

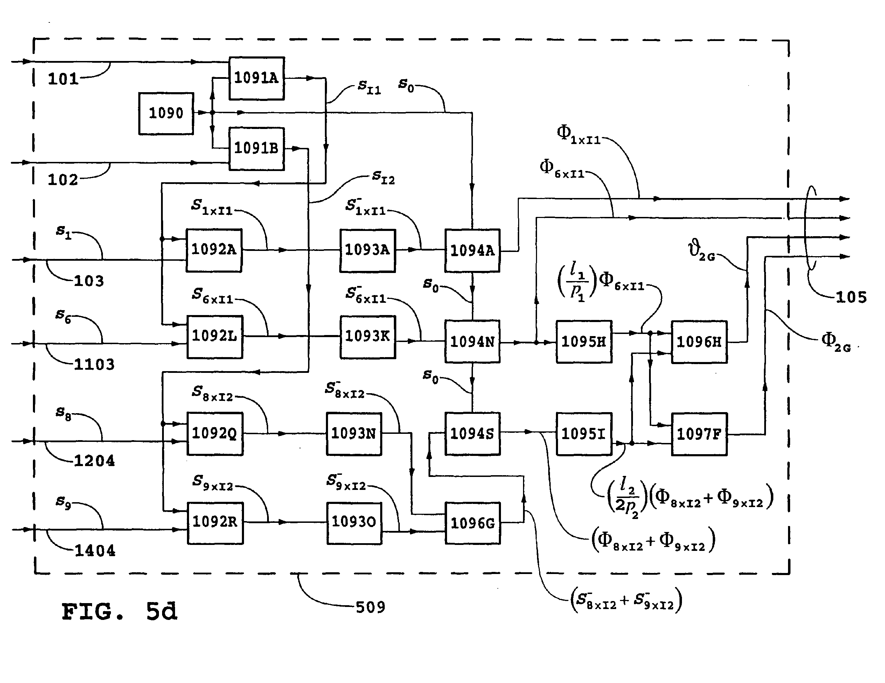

FIG. **5d** is a drawing showing a block diagram of the processing electronics **509**;

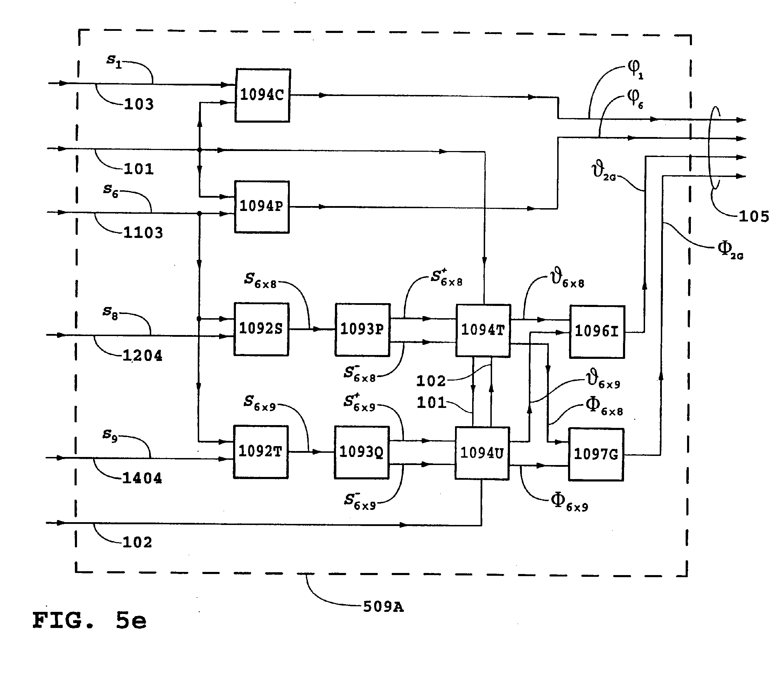

FIGS. **5a-5c** and **5e** taken together illustrate, in diagrammatic form, the presently preferred variant of the fifth embodiment of the present invention with FIG. **5e** showing a block diagram of the processing electronics **509A**;

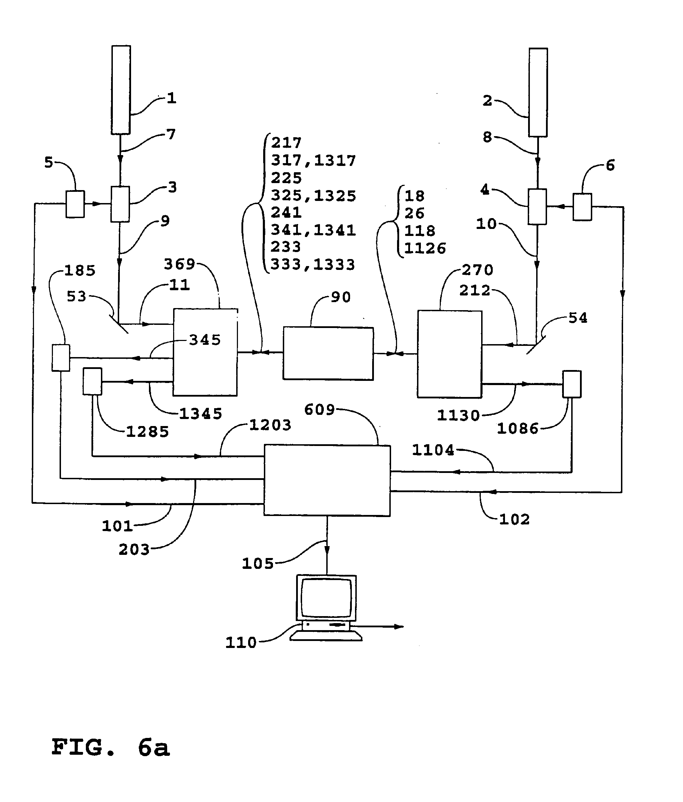

FIGS. **6a-6e** taken together illustrate, in diagrammatic form, the presently preferred sixth embodiment of the present invention with FIG. **6a** showing optical paths and the paths of electrical signals between indicated elements source **1**, modulator **3**, source **2**, modulator **4**, differential plane mirror interferometer group **369**, differential plane mirror interferometer **270**, measurement cell **90**, detectors **185**, **1285**, and **1086**, and the paths of electrical signals between indicated elements driver **5**, modulator **3**, driver **6**, modulator **4**, detectors **185**, **1285**, and **1086**, electronic processor **609**, and computer 110;

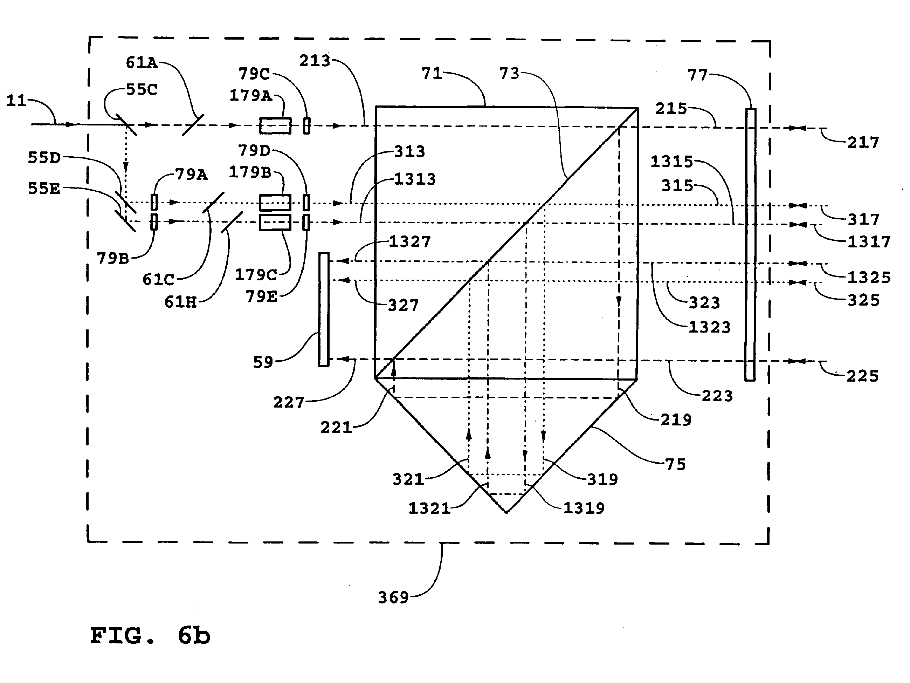

FIG. **6b** illustrates differential plane mirror interferometer group **369** for the case of light beam 11 entering differential plane mirror interferometer group **369**;

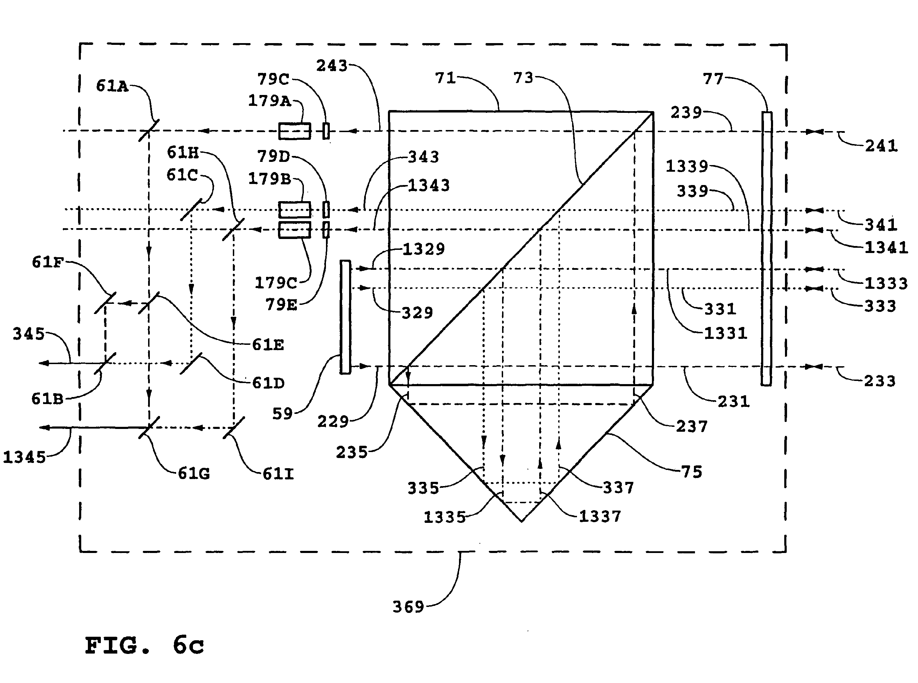

FIG. **6c** illustrates differential plane mirror interferometer **369** for the case of light beams **345** and **1345** exiting differential plane mirror interferometer group **369**;

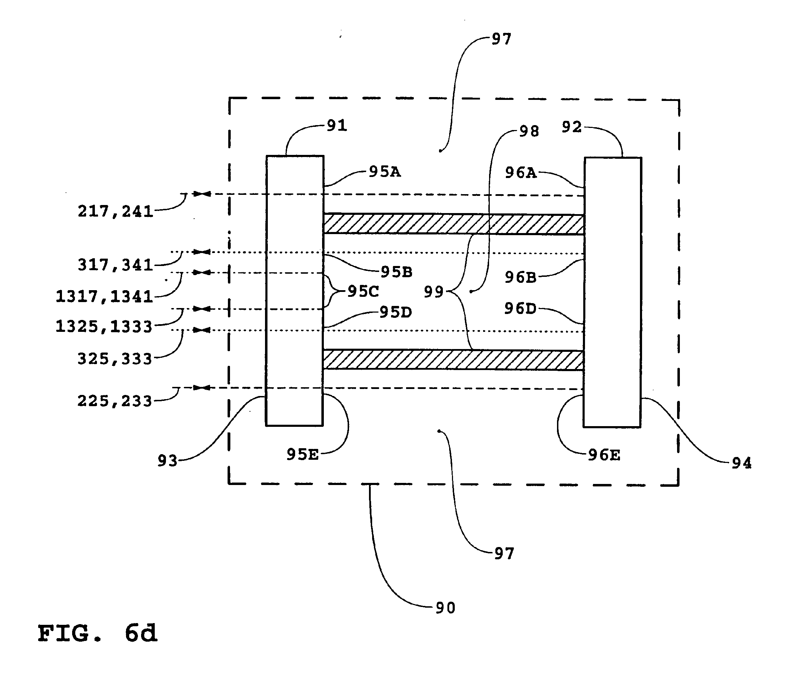

FIG. 6d illustrates measurement cell 90 furnishing the external mirrors for differential plane mirror interferometer group **369**;

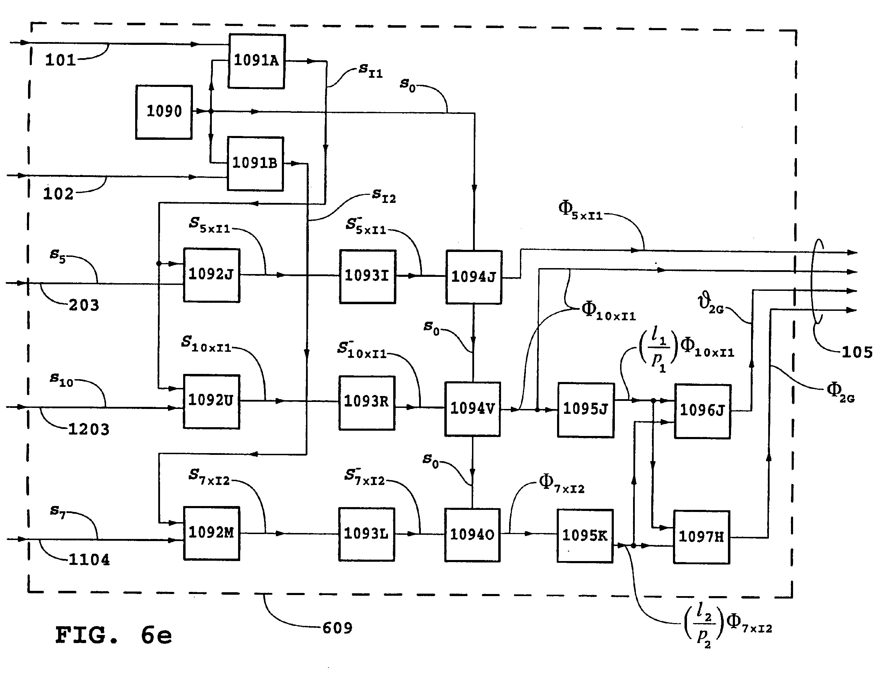

FIG. **6e** is a drawing showing a block diagram of the processing electronics **609**;

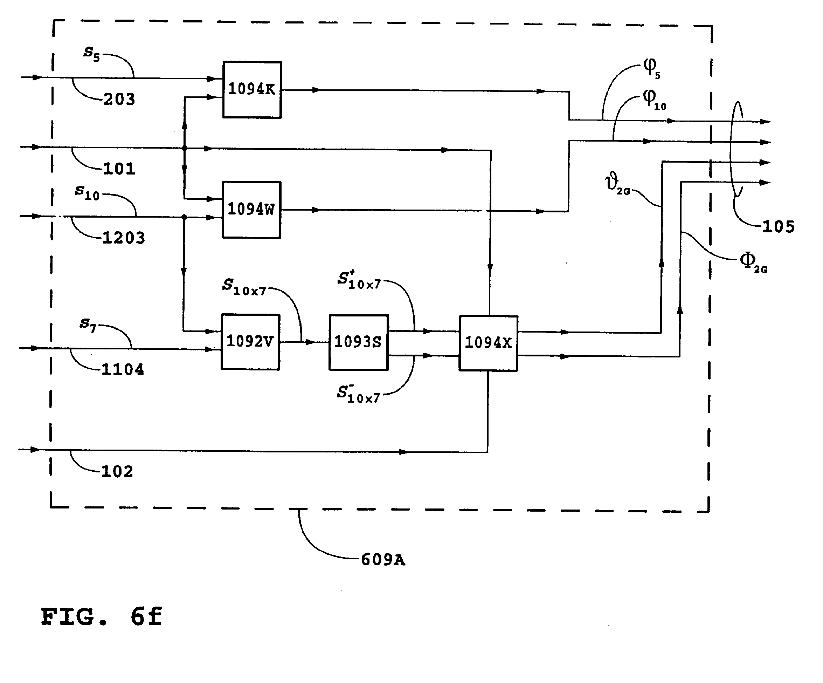

FIGS. **6a-6d** and **6f** taken together illustrate, in diagrammatic form, the presently preferred variant of the sixth embodiment of the present invention with FIG. **6f** showing a block diagram of the processing electronics **609A**;

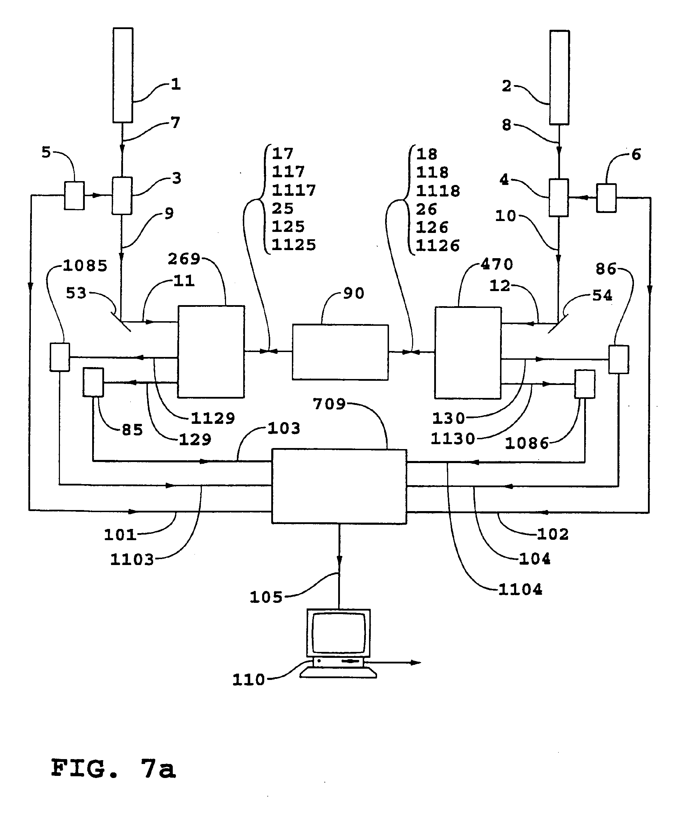

FIGS. **7a-7c** taken together illustrate, in diagrammatic form, the presently preferred seventh embodiment of the present invention with FIG. **7a** showing optical paths and the paths of electrical signals between indicated elements source **1**, modulator **3**, source **2**, modulator **4**, differential plane mirror interferometer groups **269** and **470**, measurement cell **90,** detectors **85**, **1085**, **86**, and **1086**, and the paths of electrical signals between indicated elements driver **5**, modulator **3**, driver **6**, modulator **4,** detectors **85**, **1085**, **86**, and **1086**, electronic processor **709**, and computer **110**;

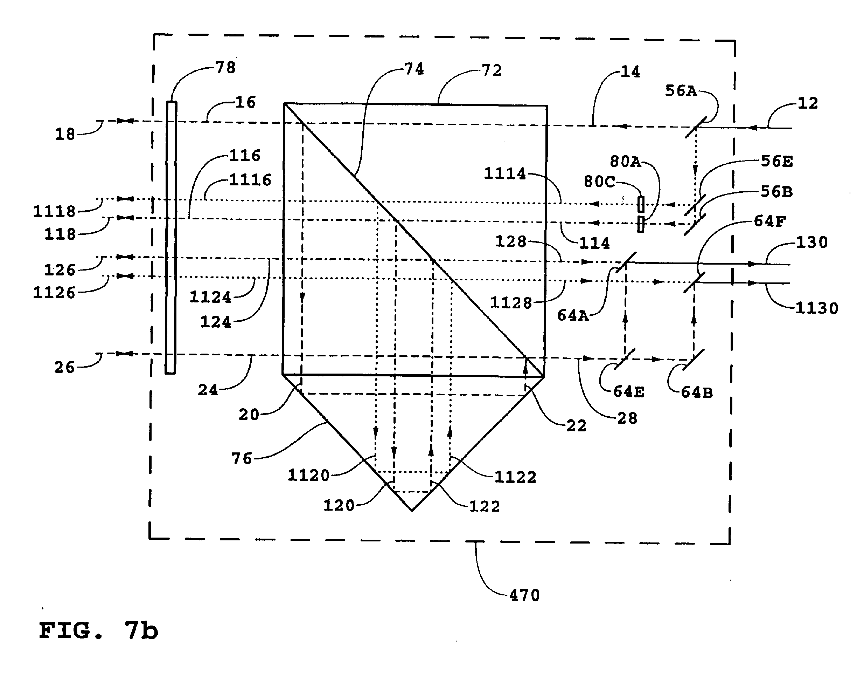

FIG. **7b** illustrates differential plane mirror interferometer group **470**;

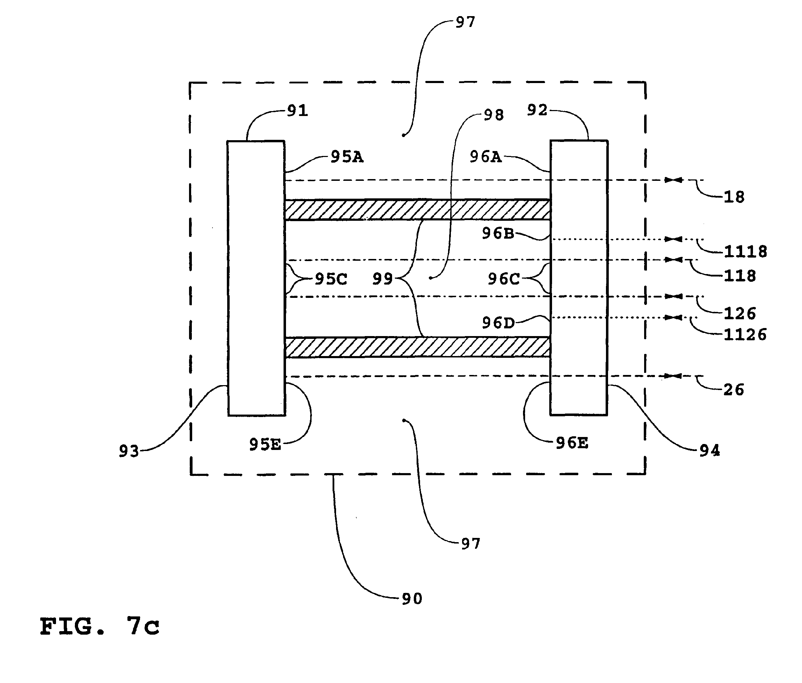

FIG. **7c** illustrates measurement cell **90** furnishing the external mirrors for differential plane mirror interferometer group **470**;

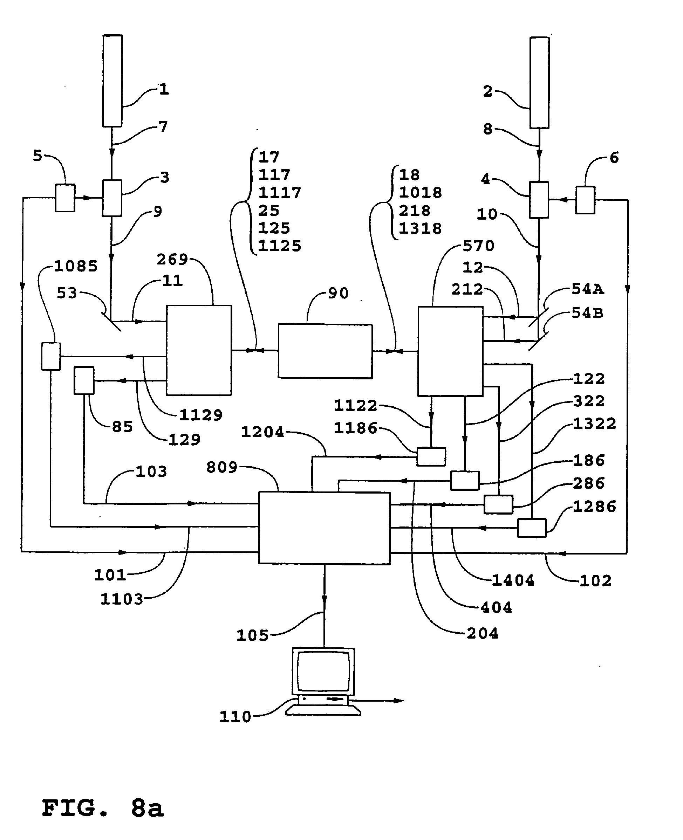

FIGS. **8a-8c** taken together illustrate, in diagrammatic form, the presently preferred eighth embodiment of the present invention with FIG. **8a** showing optical paths and the paths of electrical signals between indicated elements source 1, modulator **3**, source **2**, modulator **4**, differential plane mirror interferometer groups **269** and **570**, measurement cell **90**, detectors **85**, **1085**, **186, 286, 1186**, and 1286, and the paths of electrical signals between indicated elements driver 5, modulator **3**, driver **6**, modulator **4**, detectors **85**, **1085**, **186**, **286**, **1186**, and **1286**, electronic processor **809**, and computer **110**;

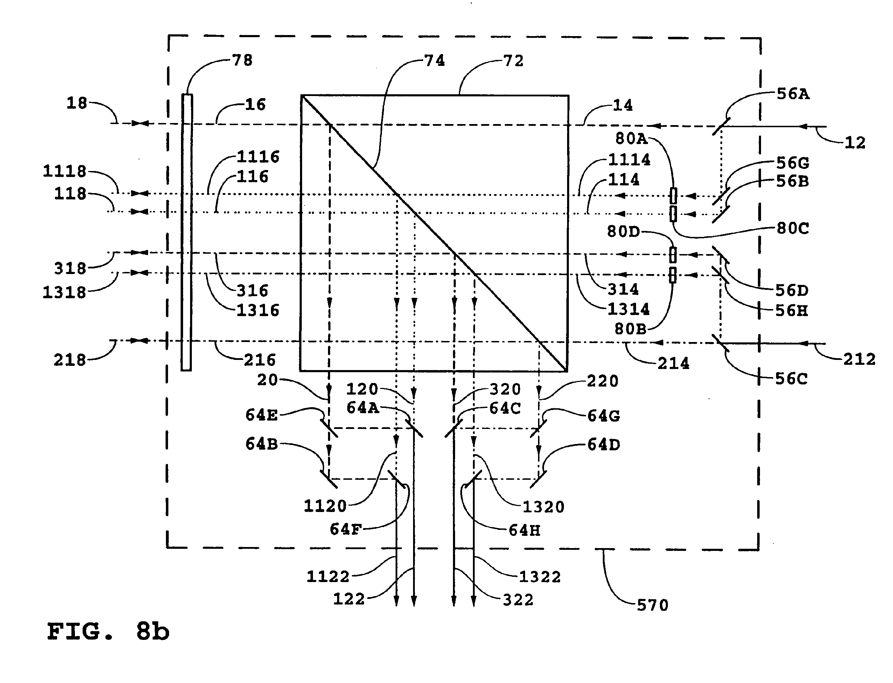

FIG. **8b** illustrates differential plane mirror interferometer group **570**;

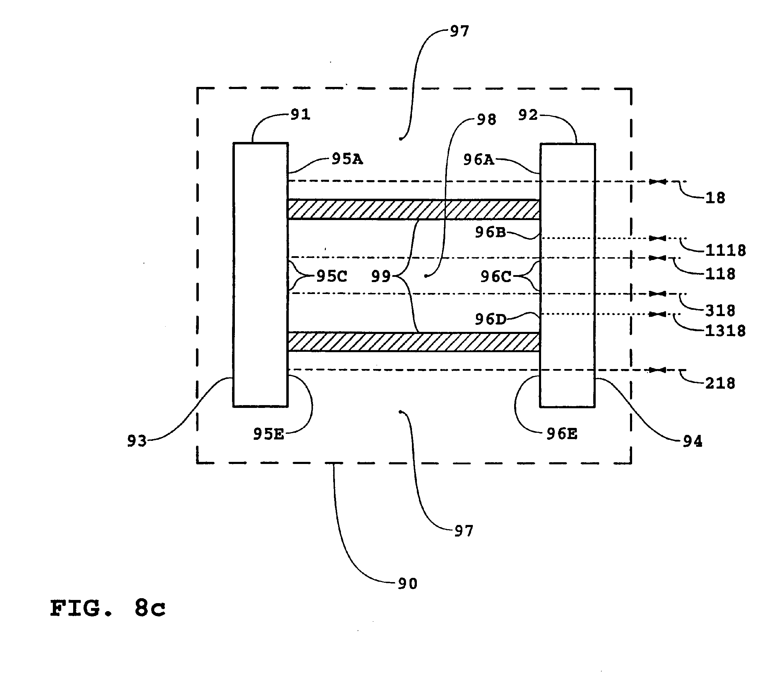

FIG. **8c** illustrates measurement cell **90** furnishing the external mirrors for differential plane mirror interferometer group **570;**

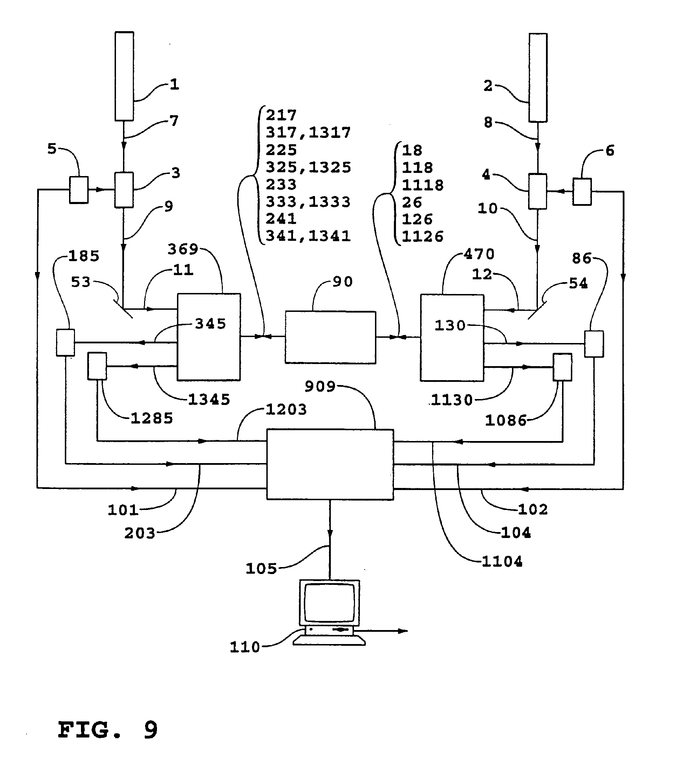

FIG. **9** illustrates, in diagrammatic form, the presently preferred ninth embodiment of the present invention with FIG. **9** showing optical paths and the paths of electrical signals between indicated elements source **1**, modulator **3**, **source 2**, modulator **4,** differential plane mirror interferometer groups **369** and **470**, measurement cell **90**, detectors **185**, **1285**, **86**, and **1086**, and the paths of electrical signals between indicated elements driver **5**, modulator **3**, driver **6**, modulator **4**, detectors **185**, **1285**, **86**, and **1086,** electronic processor **909**, and computer 110;

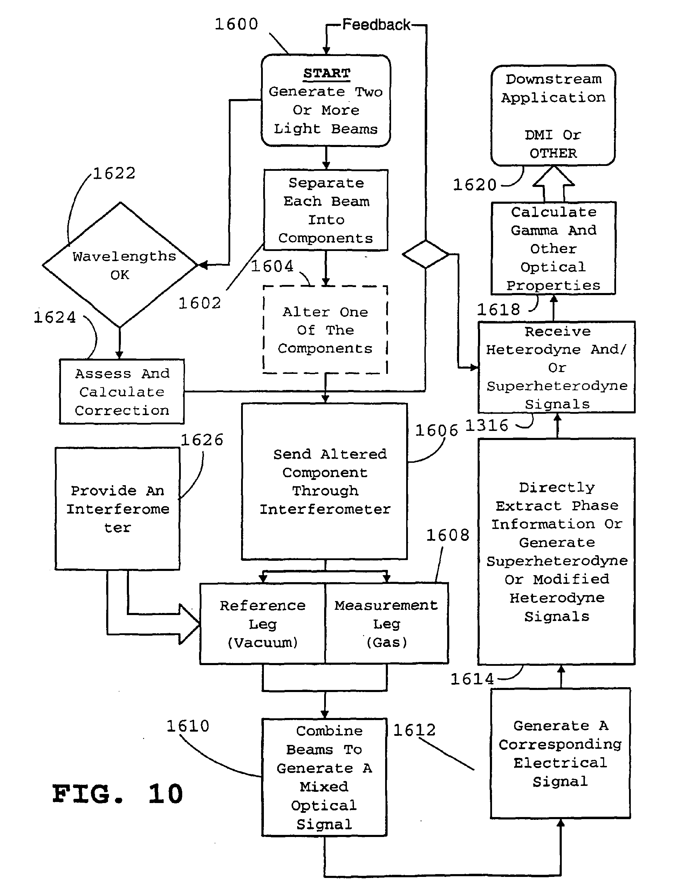

Fig. **10** is a high-level flowchart depicting various steps carried out in practicing a method in accordance with the invention.

## DETAILED DESCRIPTION OF THE INVENTION

The present invention relates to apparatus and methods by which intrinsic optical properties of a gas, especially its reciprocal dispersive power, may be quickly measured and used in subsequent downstream or contemporaneous applications as, for example, in an interferometric distance measuring instrument to enhance accuracy by compensating for index of refraction of gas in measuring path, especially changes in index of refraction that take place proximate to or during the distance measuring instrument measuring period because of changing environmental conditions or air turbulence induced in the measurement leg by rapid stage slew rates.

A number of different embodiments of the apparatus of the invention are shown and described. While they differ in some details, the disclosed embodiments otherwise share many common elements and naturally fall into three groups depending on the end use application and on the degree of control demanded of their light sources. As will be seen, the disclosed embodiments within each group also differ in the details of how their interferometric optical paths are implemented and/or how certain information signals are handled electronically. Each group of embodiments to be described comprise three embodiments and variants thereof.

The first group is intended for applications where the end use application substantially does not effect the choice of the particular manner in which the intrinsic optical properties of the gas are determined and where the stability of the adopted light sources is sufficient and the ratio of the wavelengths of the light beams generated by the adopted light sources is matched to a known ratio value with a relative precision sufficient to meet the required precision imposed on the output data by the final end use application.

The second group is particularly suitable for use where the end use application essentially does effect the choice of the particular manner in which the intrinsic optical properties of the gas are determined and where the stability of the adopted light sources is sufficient and the ratio of the wavelengths of the light beams generated by the adopted light sources is matched to a known ratio value with a relative precision sufficient to meet the required precision imposed on the output data by the final end use application although not necessarily sufficient to meet the corresponding requirements of the first group.

The third group is particularly suitable for use where it is necessary to monitor the stability of the light sources and measure the ratio of the wavelengths of the light beams generated by the adopted light sources to meet performance requirements on accuracy. The third group is in addition suitable for use in either of the end use application categories of the first and second groups wherein consideration of the end use application either essentially does not or does effect, respectively, the choice of the particular manner in which the intrinsic optical properties of the gas are determined. For each of the groups, apparatus is disclosed for dealing with phase ambiguities and phase offsets that may arise in analyzing homodyne, heterodyne, and/or superheterodyne signals, and methods are disclosed for implementing the steps of the invention.

Reference is now made to FIGS. **1a-1f** which depict in diagrammatic form one preferred embodiment of the apparatus of the present invention from the first group for measuring intrinsic optical properties of a gas, particularly its reciprocal dispersive power wherein the end use application substantially does not effect the particular manner in which the intrinsic optical properties of the gas are determined and where the stability of the adopted light sources is sufficient and the ratio of the wavelengths of the light beams generated by the adopted light sources is matched to a known ratio value with a relative precision sufficient to meet the required precision imposed on the output data by the final end use application. While the apparatus has application for a wide range of radiation sources, the following description is taken by way of example with respect to an optical measuring system.

Referring to FIG. 1a and in accordance with the preferred method of the first preferred embodiment of the present invention, a light beam 7 emitted from source 1 passes through a modulator 3 becoming light beam 9. Modulator 3 is excited by a driver 5. Source 1 is preferably a laser or like source of coherent radiation, preferably polarized, and having a wavelength $\lambda_1$. Modulator 3 may for example be an acousto-optical device or a combination of acousto-optical devices with additional optics for selectively modulating polarization components of beam **7**. Modulator **3** preferably shifts the oscillation frequency of one linearly polarized component of beam 7 an amount $f_1$ with respect to an orthogonally linearly polarized component, the directions of polarizations of the components denoted herein as $x$ and $y$. In the following description of the first embodiment, it will be assumed that the $x$ polarization component of beam 9 has an oscillation frequency shifted an amount $f_1$ with respect to the $y$ polarization component of beam 9 without departing from the spirit or scope of the present invention.

In a next step, a light beam 8 emitted from a source 2 passes through a modulator **4** becoming light beam 10. Modulator **4** is excited by a driver **6,** similar to modulator **3** and driver **5**, respectively. Source **2,** similar to source 1, is preferably a laser or like source of polarized, coherent radiation, but preferably at a different wavelength, $\lambda_2$, wherein the ratio of the wavelengths $(\lambda_1/\lambda_2)$ have a known approximate ratio value $l_1/l_2$, $i.e.$

$$(\lambda_1/\lambda_2) \cong (l_1/l_2) \quad , \qquad\qquad\qquad (1)$$

where $l_1$ and $l_2$ may assume integer and non-integer values. The $x$ polarized component of beam 10 has an oscillation frequency shifted an amount $f_2$ with respect to the $y$ polarized component of beam **10**. In addition, the directions of the frequency shifts of the $x$ components of beams **9** and 10 are the same.

It will be appreciated by those skilled in the art that beams **9** and **10** may be provided alternatively by a single laser source emitting more than one wavelength, or by a single laser source combined with optical frequency doubling means, or any equivalent source configuration capable of generating light beams of two or more wavelengths. It will also be appreciated by those skilled in the art that one or both of the frequency shifts $f_1$ and $f_2$ may be the result of Zeeman splitting or like phenomena characteristic of the laser sources themselves.

Referring to FIG. 1a, beam **9** is reflected by mirror **53** becoming beam **11** and beam **10** is reflected by mirror **54** becoming beam **12**. Beam 11 is incident on differential plane mirror interferometer **69** and beam **12** is incident on differential plane mirror interferometer **70**. Differential plane mirror interferometers **69** and **70** with external mirrors furnished by measurement cell **90** comprise interferometric means for introducing a phase shift $\varphi_1$ between the $x$ and $y$ components of beam **11** and a phase shift $\varphi_2$ between the $x$ and $y$ components of beam **12.**

Measurement cell 90 is conveniently formed as a set of nested, concentric chambers in the form of a right circular cylinder, the inner chamber of which is evacuated to a vacuum and the outer occupied by the gas whose intrinsic optical properties are to be monitored.

A differential plane mirror interferometer measures the optical path changes between two external plane mirrors. Differential plane mirror interferometer 69 as shown in **FIG**. **1b** has four exit/return beams **17**, **25**, **117**, and **125**. Beams **17** and **25** originating from one frequency component of beam **11**, the first frequency component, comprise beams for one measurement leg and beams **117** and **125** originating from a second frequency component of beam **11** comprise beams for a second measurement leg. Beams for which the first frequency component of beam **11** is the sole progenitor are indicated in FIG. **1b** by dashed lines and beams for which the second frequency component of beam 11 is the sole progenitor are indicated in FIG. **1b** by dotted lines.

Differential plane mirror interferometer **70** has four exit/return beams **18**, **26, 118**, and **126** as shown in FIG. **1c**. Beams **18** and **26** originating from one frequency component of beam **12** comprise one measurement leg and beams 118 and **126** originating from a second frequency component of beam 12 comprise a second measurement leg. Beams for which the first frequency component of beam **12** is the sole progenitor are indicated in FIG. **1c** by dashed lines and beams for which the second frequency component of beam **12** is the sole progenitor are indicated in FIG. **1c** by dotted lines.

Beams 17, 25, 117, and **125** are incident on measurement cell 90, illustrated in FIG. **1d**, which results in beams **27** and **127** ($cf$. FIG. **1b**). Beams for which the first frequency component of beam 11 is the sole progenitor are indicated in FIG. **1d** by dashed lines and beams for which the second frequency component of beam **11** is the sole progenitor are indicated in FIG. **1d** by dotted lines. Beams **27** and **127** contain information at wavelength $\lambda_1$ about the optical path length through the gas whose reciprocal dispersive power is to be determined and about the optical path length through a vacuum, respectively.

Beams 18, **26**, **118,** and **126** are incident on measurement cell **90**, illustrated in FIG. **1e**, which results in beams **28** and **128** ($cf$. FIG. **1c**). Beams for which the first frequency component of beam **12** is the sole progenitor are indicated in FIG. **1e** by dashed lines and beams for which the second frequency component of beam **12** is the sole progenitor are indicated in FIG. **1e** by dotted lines. Beams **28** and **128** contain information at wavelength $\lambda_2$ about optical path lengths through the gas and about optical path lengths through a vacuum, respectively.

With reference to FIG. **1b**, beam **27** is reflected by mirror **63B**, a portion of which is reflected by beam splitter **63A**, preferably a nonpolarizing type, to become one component of beam **129**. A portion of beam **127** is transmitted by beam splitter **63A to** become a second component of beam **129. **Beam **129** exits differential plane mirror interferometer **69** as a mixed beam, the first and second components of beam **129** having the same linear polarizations with different frequencies.

Beam **28** is reflected by mirror **64B** and then a portion reflected by beam splitter **64A**, preferably a nonpolarizing beam splitter, to become a first component of phase-shifted beam **130**. A portion of beam **128** is transmitted by beam splitter **64A** to become a second component of phase-shifted beam **130**. Phase-shifted beam **130** exits differential plane mirror interferometer **70** as a mixed beam, the first and second components of beam **130** having the same polarizations with different frequencies.

The magnitude of phase shifts $\varphi_1$ and $\varphi_2$ are related to the round-trip physical lengths of measurement path **97** and reference path **98** shown in FIGS. **1d** and **1e** according to the formulae

$$\varphi_1 = k_1 \sum_{i=1}^{p} \left( L_{G,i} n_{1,i} - L_{V,i} \right) + \zeta_1 \quad ,$$

$$(2)$$

$$\varphi_2 = k_2 \sum_{i=1}^{p} \left( L_{G,i} n_{2,i} - L_{V,i} \right) + \zeta_2$$

where $n_{ji}$ is the index of refraction of gas in path $i$ of measurement path **97** corresponding to wavenumber $k_j = (2\pi)/\lambda_j$, the index of refraction in the reference path **98** has been set to 1, and $L_{G,i}$ and $L_{V,i}$ are the round trip physical lengths of path $i$ of measurement path **97** and reference path **98,** respectively.

Eqs. (2) are valid for the case where the paths for the two different wavelengths are substantially coextensive, a case chosen to illustrate in the simplest manner the function of the invention in the first embodiment. The illustrations in FIGS. **1b** and **1c** are for $p=2$ for the same reason. To those skilled in the art, the generalization to the case where paths for the two different wavelengths are not substantially coextensive and to the case when $p\neq2$ is a straight forward procedure.

Cyclic errors that produce nonlinearities in distance measuring interferometry (*cf.* the cited articles by Bobroff) have been omitted in Eqs. (2). Techniques known to those skilled in the art can be used to either reduce the cyclic errors to negligible levels or compensate for the presence of cyclic errors, techniques such as using separated beams in the interferometer and/or separated beams in the delivery system for light beams from each light beam source to the interferometer [M. Tanaka, T. Yamagami, and K. Nakayama, "Linear Interpolation of Periodic Error in a Heterodyne Laser Interferometer at Subnanometer Levels," IEEE Trans. Instrum. and Meas., 38(2), 552-554, 1989].

In a next step as shown in FIG. **1a,** phase-shifted beams **129** and **130** impinge upon photodetectors **85** and **86,** respectively, resulting in two interference signals, heterodyne signals $s_1$ and $s_2$, respectively, preferably by photoelectric detection. The signal $s_1$ corresponds to wavelength $\lambda_1$ and signal $s_2$ corresponds to the wavelength $\lambda_2$. The signals $s_j$ have the form

$$s_j = A_j \cos\left[\alpha_j(t)\right] \quad , \qquad j = 1 \text{ and } 2 \qquad\qquad (3)$$

where the time-dependent arguments $\alpha_j(t)$ are given by

$$\alpha_j(t) = 2\pi f_j t + \varphi_j \quad , \qquad j = 1 \text{ and } 2 \qquad . \qquad\qquad (4)$$

Heterodyne signals $s_1$ and $s_2$ are transmitted to electronic processor 109 for analysis as electronic signals 103 and 104, respectively, in either digital or analog format, preferably in digital format.

The phases of drivers 5 and 6 are transmitted by electrical signals, reference signals **101** and **102,** respectively, in either digital or analog format, preferably in digital format to electronic processor 109.

A preferred method for electronically processing the heterodyne signals $s_1$ and $s_2$ is presented herewithin for the case where $l_1$ and $l_2$ are not low order integers. For the case where $l_1$ and $l_2$ are low order integers and the ratio of the wavelengths matched to the known ratio $(l_1/l_2)$ with a relative precision sufficient to meet the required precision imposed on the output data by the end use application, the preferred procedure for electronically processing the heterodyne signals $s_1$ and $s_2$ is the same as the one subsequently set down for the variant of the first preferred embodiment of the present invention.

The phases $\varphi_1$ and $\varphi_2$ of signals $s_1$ and $s_2$, respectively, are obtained preferably by application of superheterodyne receiver techniques wherein the frequencies of signals $s_1$ and $s_2$ are shifted to frequencies substantially lower

than $f_1$ and $f_2$ where conditions are generally more favorable for high precision phase measurements. Referring now to FIG. **1f,** electronic processor **109** preferably comprises a stable local oscillator **1090** that generates signal $s_0$ at frequency $f_0$, $f_0$ typically being substantially lower than both $f_1$ and $f_2$. Electronic processor **109** further comprises image-reject mixers **1091A** and **1091B** to create, either as analog or digital processes, preferably a digital process, two mixed signals each with single sidebands at frequencies $f_1$-$f_0$ and $f_2$-$f_0$ from the reference signals 101 and 102, respectively, and signal $s_0$. It will be evident to those skilled in the art that the single sideband signals can also be generated by other procedures such as the well known technique of mixing two signals followed by a tuned filter to reject an unwanted image sideband. It will also be evident to those skilled in the art that the image sideband, the higher frequency sideband, could have been selected for retention without departing from the scope or spirit of the present invention. The single sideband signals are of the form

$$s_{\text{I}1} = A_{\text{I}1} \cos\left[2\pi\left(f_1 - f_0\right)t + \varphi_{\text{I}1}\right]$$
$$s_{\text{I}2} = A_{\text{I}2} \cos\left[2\pi\left(f_2 - f_0\right)t + \varphi_{\text{I}2}\right] \tag{5}$$

where $\varphi_{\text{I}1}$ and $\varphi_{\text{I}2}$ are phase offset errors.

Electronic processor **109** further comprises electronic processor **1092A** for electronically multiplying together, either as an analog or digital process, preferably a digital process, heterodyne signals $s_1$ and $s_{\text{I}1}$ to create a superheterodyne signal $S_{1\text{xI}1}$ having the mathematical form

$$S_{1\text{xI}1} = s_1 s_{\text{I}1} \tag{6}$$

The superheterodyne signal $S_{1\times\text{I}1}$ comprises two sidebands with a suppressed carrier and may be rewritten as

$$S_{1\text{xI}1} = S^+_{1\text{xI}1} + S^-_{1\text{xI}1} \tag{7}$$

where

$$S^+_{1\text{xI}1} = \frac{1}{2} A_1 A_{\text{I}1} \cos\left(2\pi\nu_1 t + \vartheta_{1\text{xI}1}\right) \tag{8}$$

$$S^-_{1\text{xI}1} = \frac{1}{2} A_1 A_{\text{I}1} \cos\left(2\pi F t + \Phi_{1\text{xI}1}\right) \tag{9}$$

$$\nu_1 = \left(2 f_1 - f_0\right) \tag{10}$$

$$\vartheta_{1\times I1} = \left( \varphi_1 + \varphi_{I1} \right) \tag{11}$$

$$F = f_0 \tag{12}$$

$$\Phi_{1\times I1} = \left( \varphi_1 - \varphi_{I1} \right) \quad . \tag{13}$$

The superheterodyne signal $S_{1\times I1}$ therefore comprises two sidebands, $S_{1\times I1}^+$ and $S_{1\times I1}^-$, of equal amplitude, one sideband with frequency $\nu_1$ and phase $\vartheta_{1\times I1}$ and a second sideband with frequency $F$ and phase $\Phi_{1\times I1}$.

In a next step, the sidebands $S_{1\times I1}^+$ and $S_{1\times I1}^-$ are separated by electronic processor **1093A** through high pass and low pass filtering or any of the like techniques for separating two signals that are separated in frequency.

The frequency $F$ of the lower frequency sideband $S_{1\times I1}^-$ can be very much smaller than the frequency $\nu_1$ of the higher frequency sideband of $S_{1\times I1}^+$. Electronic process **109** further comprises electronic processor **1094A** to determine the phase $\Phi_{1\times I1}$ using time-based phase detection such as a digital Hilbert transform phase detector [see section 4.1.1 of "Phase-locked loops: theory, design, and applications" 2nd ed. McGraw-Hill (New York) 1993, by R. E. Best; Chapter 10 of "Discrete Hilbert Transforms" in Discrete-Time Signal Processing, (Prentice Hall) 1989, by A. V. Opperheim and R. W. Schafer] or the like and the reference signal $s_0$.

Electronic processor **109** further comprises electronic processor **1092B** which electronically multiplies together, either as an analog or digital process, preferably a digital process, heterodyne signals $s_2$ and $s_{I2}$ to create a superheterodyne signal $S_{2\times I2}$ having the mathematical form

$$S_{2\times I2} = s_2 s_{I2} \quad . \tag{14}$$

The superheterodyne signal $S_{2\times I2}$ also comprises two sidebands with a suppressed carrier and may be rewritten as

$$S_{2\times I2} = S_{2\times I2}^+ + S_{2\times I2}^- \tag{15}$$

where

$$S_{2\times I2}^+ = \frac{1}{2} A_2 A_{I2} \cos\left( 2\pi\nu_2 t + \vartheta_{2\times I2} \right) \tag{16}$$

$$S_{2\times I2}^{-} = \frac{1}{2} A_2 A_{I2} \cos\left(2\pi F t + \Phi_{2\times I2}\right) \qquad (17)$$

$$\nu_2 = \left(2 f_2 - f_0\right) \quad , \qquad (18)$$

$$\vartheta_{2\times I2} = \left(\varphi_2 + \varphi_{I2}\right) \qquad (19)$$

$$\Phi_{2\times I2} = \left(\varphi_2 - \varphi_{I2}\right) \qquad (20)$$

The superheterodyne signal $S_{2\times I2}$ therefore comprises two sidebands, $S_{2\times I2}^{+}$ and $S_{2\times I2}^{-}$, of equal amplitude, one sideband with frequency $\nu_2$ and phase $\vartheta_{2\times I2}$ and a second sideband with frequency $F$ and phase $\Phi_{2\times I2}$.

In a next step, the sidebands $S_{2\times I2}^{+}$ and $S_{2\times I2}^{-}$ are separated by electronic processor **1093B** through high pass and low pass filtering or any of the like techniques for separating two signals that are separated in frequency. As noted in the discussion of electronic processor **1093A**, the frequency $F$ of the lower frequency sideband $S_{2\times I2}^{-}$ can be very much smaller than the frequency $\nu_2$ of the higher frequency sideband $S_{2\times I2}^{+}$, considerably simplifying the separating task of processor **1093B**. Electronic processor **109** further comprises processor **1094B** to determine the phase $\Phi_{2\times I2}$ using time-based phase detection such as a digital Hilbert transform phase detector (see Best *ibid.*) or the like and the reference signal so.

Subsequently, the phase $\Phi_{1\times I1}$ and $\Phi_{2\times I2}$ are multiplied by $l_1$ and $l_2$, respectively, in electronic processors **1095A** and 1095B, respectively. Next, phases $(l_1/p)\Phi_{1\times I1}$ and $(l_2/p)\Phi_{2\times I2}$ are added together in electronic processor **1096A** and subtracted one from the other in electronic processor **1097A,** by analog or digital processes, preferably a digital process, the phases $\vartheta_{1G}$ and $\Phi_{1G}$, respectively, the subscript 1G of $\vartheta_{1G}$ and $\Phi_{1G}$ denoting phases obtained with an embodiment belonging to the first group of embodiments. Formally

$$\vartheta_{1G} = \left(\frac{l_1}{p} \Phi_{1\times I1} + \frac{l_2}{p} \Phi_{2\times I2}\right) \qquad (21)$$

$$\Phi_{1G} = \left(\frac{l_1}{p} \Phi_{1\times I1} - \frac{l_2}{p} \Phi_{2\times I2}\right) \qquad (22)$$

Note from Eqs. (21) and (22) that $\vartheta_{1G}$ and $\Phi_{1G}$ are not sensitive to tilts of either reflecting surfaces **95** or **96** of measurement cell **90** and are insensitive to thermal and mechanical disturbances that may occur in interferometer beam splitting cubes and associated optical components as a consequence of the use of differential plane mirror interferometers.

For a measuring path **97** comprised of a vacuum, phase $\Phi_{1G}$ should be a constant substantially independent of Doppler shifts due to motion of one or both mirrors in measurement cell **90**, that motion which changes the mirror separation. This may not be the case in practice due to differences in group delays experienced by the electrical signals $s_1$ and $s_2$. Group delay, often called envelope delay, describes the delay of a packet of frequencies and the group delay at a particular frequency is defined as the negative of the slope of the phase curve at the particular frequency [see H. J. Blinchikoff and A. I. Zverev, Filtering in the Time and Frequency Domains, Section 2.6, 1976 (Wiley, New York)]. If phase $\Phi_{1G}$ is not a constant for a measuring path comprised of a vacuum, techniques known to those skilled in the art can be used to compensate for such departures of phase $\Phi_{1G}$ from the constant (*cf.* Blinchikoff and Zverev, *ibid.*). Compensation for a particular group delay can generally be introduced before or after, or in part before and in part after, the processing elements producing the particular group delay.

It is important to note that the group delay effects in $\Phi_{1G}$ can not only be detected but can also be determined by measuring $\Phi_{1G}$ as a function of different translational velocities of mirror **92** arranged to be moveable wherein the measuring path comprises a vacuum. It is also important to note that the group delay effects in $\Phi_{1G}$ can be significantly reduced by performing analog-to-digital conversion of signals $s_1$ and $s_2$ as close as practical to the photoelectric detectors in detectors **85** and **86**, respectively, followed by digital signal processing as opposed to transmitting the signals $s_1$ and $s_2$ as analog signals for subsequent analog signal processing and/or analog-to-digital conversion downstream.

Reference signals, alternatives to reference signals **101** and **102**, may also be generated by an optical pick-off means and detectors (not shown in figures) by splitting off portions of beams **9** and **10** with beam splitters, preferably nonpolarizing beam splitters, mixing the split off portion of beam **9** and the split off portion of beam **10,** and detecting the mixed portions to produce heterodyne reference signals.

The reciprocal dispersive power r of the gas defined as

$$\Gamma \equiv \frac{n_1 - 1}{n_2 - n_1} \tag{23}$$

can be expressed in terms of other quantities by the formulae

$$(n_1 - 1) = \frac{1}{(\chi + K)L_G}\left(\frac{l_1}{p}\right)\left[\Phi_{1 \times I1} - (\zeta_1 - \varphi_{I1})\right] - \frac{(L_G - L_V)}{L_G} \tag{24}$$

$$(n_2 - n_1)_{1G} = \frac{1}{\chi L_G\left[1 - (K/\chi)^2\right]}\left\{\left[\vartheta_{1G}(K/\chi) - \Phi_{1G}\right] - \left[\xi(K/\chi) - Z\right]\right\} \tag{25}$$

where $L_G$ and $L_V$ are the average of the physical path lengths in measurement path **97** and reference path **98,** respectively,

$$\chi = \left(l_1 k_1 + l_2 k_2\right)/2 \tag{26}$$

$$K = \left(l_1 k_1 - l_2 k_2\right)/2 \tag{27}$$

$$\xi = \left[\frac{l_1}{p}(\zeta_1 - \varphi_{I1}) + \frac{l_2}{p}(\zeta_2 - \varphi_{I2})\right] \qquad (28)$$

$$Z = \left[\frac{l_1}{p}(\zeta_1 - \varphi_{I1}) - \frac{l_2}{p}(\zeta_2 - \varphi_{I2})\right] \qquad (29)$$

The ratio $(\lambda_1/\lambda_2)$ can be expressed from Eqs. (26) and (27) in terms of $K/\chi$ with the result

$$\frac{\lambda_1}{\lambda_2} = \left(\frac{l_1}{l_2}\right)\left[\frac{1-(K/\chi)}{1+(K/\chi)}\right] \qquad (30)$$

When operating under the condition

$$|K/\chi| \ll \frac{1}{2\Gamma + 1} \qquad (31)$$

the ratio of the phases $\Phi_{1G}$ and $\vartheta_{1G}$ has the approximate value

$$(\Phi_{1G}/\vartheta_{1G}) \cong -\frac{1}{2\Gamma + 1} \qquad . \qquad (32)$$

Therefore, for the case where the ratio $(\lambda_1/\lambda_2)$ is the same as the known ratio $(l_1/l_2)$ to a relative precision of an order of magnitude or more less than the half the dispersive power of the gas, $1/(2\Gamma)$, times the relative precision $\varepsilon$ desired for the measurement of the reciprocal dispersive power $\Gamma$, Eq. (24) reduces to the more simple form

$$(n_2 - n_1)_{1G} = \frac{1}{\chi L_G}(-\Phi_{1G} + Z) \qquad . \qquad (33)$$

Note that only the difference of the lengths $L_G$ and $L_V$, $(L_G - L_V)$, enter as a factor in a correction term in the computation of r, the factor $(1/L_G)$ being common to both $(n_1-1)$ and $(n_2-n_1)_{1G}$. The quantity $(L_G-L_V)$ can be made less than the magnitude of the wavelengths $\lambda_1$ and $\lambda_2$ as a consequence of the design of and use of differential plane mirror interferometers and the design of the measurement cell **90.** Thus the quantities $L_G$ and $L_V$ need not be explicitly measured for the computation of **r** but only the difference $(L_G - L_V)$ is required to a precision relative to $L_G$ of the order of $\varepsilon(n_1 - 1)$. Also note the wavenumber $\chi$ enters into the computation of **r** only as a factor in the correction term $\chi(L_G - L_V)$, a correction term wherein $\chi(L_G-L_V) \ll (l_1/p)\Phi_{1xl1}$ as a result of $L_G$ and $L_V$ being substantially equal. Thus the relative precision required for quantity $\chi$ in the computation of $\Gamma$ is of the order of $\varepsilon(n_1 - 1)L_G/(L_G - L_V)$, a quantity which generally is substantially larger than the relative precision obtained for $\Gamma$.
Eq. (33) is the equation used in the first embodiment to compute the reciprocal dispersive power $\Gamma$. The condition

on the wavelengths $\lambda_1$ and $\lambda_2$ which leads to Eq. (33) from Eq. (25) expressed as an equation is

$$\left| \frac{\lambda_2}{\lambda_1} - \frac{l_2}{l_1} \right| \ll \left( \frac{l_2}{l_1} \right)\left( \frac{\varepsilon}{\Gamma} \right) \tag{34}$$

There is a case of special interest that occurs when the ratio $(l_1/l_2)$ is expressible as the ratio of low order non-zero integers, i.e.

$$l_1 = p_1 \quad , \quad l_2 = p_2 \quad ,$$
$$\left( \frac{l_1}{l_2} \right) = \left( \frac{p_1}{p_2} \right) \quad , \quad p_1, p_2 = 1, 2, \ldots \quad , \quad p_1 \neq p_2 \tag{35}$$

which corresponds to the wavelengths $\lambda_1$ and $\lambda_2$ being approximately harmonically related. For this case, there exist the possibility for having the sources 1 and 2 phase locked. Eq. (34) is actually a weak condition when viewed in terms of a phase-locked requirement for sources **1** and **2**. Consider for an example a desired precision of $\varepsilon \cong 3 \times 10^{-6}$ for the reciprocal dispersive power, corresponding to a relative distance measuring precision of approximately $1 \times 10^{-9}$ in a distance measuring interferometer, $(n_1-1) \cong 3 \times 10^{-4}$, and $(n_2-n_1) \cong 1 \times 10^{-5}$. For the example, the condition expressed by Eq. (34) written in terms of source frequencies $v_1$ and $v_2$ instead of wavelengths $\lambda_1$ and $\lambda_2$, respectively, is

$$\left| v_2 - \frac{p_1}{p_2} v_1 \right| \lesssim 10^{-7} v_2 \quad . \tag{36}$$

For source wavelengths in the visible part of the spectrum, Eq. (36) translates into a condition

$$\left| v_2 - \frac{p_1}{p_2} v_1 \right| \lesssim 100 \ \text{MHz} \tag{37}$$

The result expressed in Eq. (37) is clearly a significantly less restrictive condition on the frequencies of sources **1** and **2** than a phase-locked condition.

In a next step, electronic processing means **109** transmits to the computer **110** $\Phi_{1 \times l1}$ and $\Phi_{1G}$ as electronic signal 105 in either digital or analog format for the computation of $\Gamma$ according to Eqs. (23), (24), and (33) substantially independent of fluctuations in the column density of the gas or turbulence of the gas in the measuring path **97** to the extent that measuring paths experienced by beams of differing wavelengths are coextensive, without knowledge of the gas constituents, without knowledge of the environmental conditions, and without knowledge of the properties of the refractivities of the gas constituents.

The computation of $\Gamma$ using Eqs. (24) and (33) may require resolution of the phase redundancy in $\Phi_{1 \times l1}$ and $(1/l_1)(\Phi_{1G}$ to a given level determined by the required relative precision in a determination of r. In the first embodiment, the equivalent wavelengths comprising $\Phi_{1 \times l1}$ and $(1/l_1)\Phi_{1G}$, are significantly larger than either of the wavelengths $\lambda_1$ and $\lambda_2$ and as a consequence, produces a significant simplification in a procedure implemented for resolution of phase redundancy in $\Phi_{1 \times l1}$ and $(1/l_1)\Phi_{1G}$. The equivalent wavelengths $\lambda\Phi_{1 \times l1}$ and $\lambda(1/l_1)\Phi_{1G}$ for $\Phi_{1 \times l1}$ and $(1/l_1)\Phi_{1G}$, respectively, are

$$\lambda_{\Phi_{1 \times I1}} = \frac{\lambda_1}{p(n_1 - 1)} \qquad , \qquad (38)$$

$$\lambda_{(1/l_1)\Phi_{1G}} = \frac{\lambda_1}{(n_2 - n_1)} \qquad . \qquad (39)$$

For the example of $\lambda_1 = 0.633$ $\mu$m, $(n_1 - 1) \cong 3 \times 10^{-4}$, and $(n_2 - n_1) \cong 1 \times 10^{-5}$, the equivalent wavelengths given by Eqs. (38) and (39) are

$$\lambda_{\Phi_{1 \times I1}} \cong \left(\frac{2}{p}\right) \text{ mm} \qquad (40)$$

$$\lambda_{(1/l_1)\Phi_{1G}} \cong 63 \text{ mm} \qquad . \qquad (41)$$

Any one of several procedures may be easily employed to resolve the phase redundancy in $\Phi_{1 \times I1}$ and $(1/l_1)$ $\Phi_{1G}$, given their equivalent wavelengths as expressed by Eqs. (38) and (39). One procedure which may be employed to resolve the phase redundancy in $\Phi_{1 \times I1}$ is based on the use of a series of measurement cells where the physical lengths, not the round trip physical lengths, for the measuring and reference paths of the series of measurement cells form a geometric progression. The smallest or first physical length in the series will be approximately $(\lambda_{\Phi_{1 \times I1}}/8)$ divided by the relative precision that the initial value of $\Phi_{1 \times I1}$ is known. The physical length of the second measurement cell in the series will be approximately the length of the first measurement cell divided by the relative precision that $\Phi_{1 \times I1}$ is measured using the first measurement cell. This is a geometric progression procedure, the resulting physical lengths forming a geometric progression, which is continued until the length of the measurement cell used to measure r would be exceeded if the number of measurement cells in the series were incremented by one. For a value of $10^{-3}$ as the initial value for the known relative precision of $\Phi_{1 \times I1}$ and $p$=2, a typical physical length for the first measurement cell in the series is of the order of 10 cm and a typical physical length for the second measurement cell in the series is of the order of 10 m. The phase redundancy in $(1/l_1)\Phi_{1G}$ is resolved using the same series of measuring cells as used to resolve the phase redundancy in $\Phi_{1 \times I1}$ since $\lambda\Phi_{1 \times I1} < \lambda(1/l_1)\Phi_{1G}$.

A second procedure is based upon the use of a source (not shown in FIGS. **1a-1f**) of a series of known wavelengths and measuring $\Phi_{1 \times I1}$ and $(1/l_1)\Phi_{1G}$ for these wavelengths. The number of known wavelengths required for the resolution of the phase redundancy is generally comprised of a small set as a direct consequence of the relatively large equivalent wavelengths as expressed by Eqs. (38) and (39).

Another procedure to resolve the phase redundancy in $\Phi_{1 \times I1}$ and $(1/l_1)\Phi_{1G}$ would be to observe the changes in $\Phi_{1 \times I1}$ and $(1/l_1)\Phi_{1G}$ as the reference path **98** is changed from gas as present in the measuring path **97** to an evacuated state (the vacuum pump and requisite gas handling system are not shown in FIGS. **1a-1e**) to resolve the phase redundancy in $\Phi_{1 \times I1}$ and $(1/l_1)\Phi_{1G}$. The problems normally encountered in measuring absolute values for refractivity and dispersion of refractivity based in part on changing the gas pressure from a non-zero value to a vacuum are not present in the first preferred embodiment because of the relatively large equivalent wavelengths as expressed by Eqs. (38) and (39).

The offset terms involving $(\zeta_1 - \varphi_{I1})$ and $Z$ that are present in Eq. (33) and defined in Eqs. (2), (5), and (29) are terms that may require determination and monitoring to a given level of precision determined by the required relative precision in a determination of r and $\chi$ if $\chi$ is variable in time, the relative precision required for $\chi$ being also determined in part by the magnitude of $(L_G - L_v)$. One procedure for the determination of $(\zeta_1 - \varphi_{I1})$ and $Z$ is based on replacement of measurement cell **90** with a single mirror **R91** (not shown in FIGS. **1d** and **1e**) having a surface **R93** corresponding to surface **93** of mirror **91** coated so as be a reflecting surface for wavelength $\lambda_1$ and having a second surface **R95** corresponding to surface **95** of mirror **91** coated so as be a reflecting surface for wavelength $\lambda_2$ and measuring the resulting values of $\Phi_{1\times I1}$ and $\Phi_{1G}$. Let the resulting values of $\Phi_{1\times I1}$ and $\Phi_{1G}$ be $(\Phi_{1\times I1})_R$ and $(\Phi_{1G})_R$, respectively. The quantities $(\zeta_1 - \varphi_{I1})$ and $Z$ are related to $(\Phi_{1\times I1})_R$ and $(\Phi_{1G})_R$, respectively, *cf.* Eqs. (2), (13), and (25), by the formulae

$$\left(\zeta_1 - \varphi_{I1}\right) = \left(\Phi_{1\times I1}\right)_R \tag{42}$$

$$Z = \left(\Phi_{1G}\right)_R \tag{43}$$

The non-electronic contributions to $(\zeta_1 - \varphi_{I1})$ and $Z$ should be substantially constant in time because of the significant level of compensation that takes place in the differential plane mirror interferometer **69,** the differential plane mirror interferometer group **70,** and measurement cell **90.** The electronic contributions to $\zeta_1$ and $Z$ may be monitored by purely electronic means (not shown).

A second reciprocal dispersive power, $\Gamma_2$, may also be defined for the gas where

$$\Gamma_2 \equiv \frac{\left(n_2 - 1\right)}{\left(n_2 - n_1\right)} \tag{44}$$

However, $\Gamma_2$ can be obtained directly from r since

$$\Gamma_2 = \Gamma + 1 \qquad . \tag{45}$$

Therefore, the description of first preferred embodiment with regard to $\Gamma_2$ is substantially the same as the description of first preferred embodiment with regard to r.

The intrinsic property of a gas represented by $\Gamma$ may be obtained and subsequently used downstream in another form such as the ratio $(n_1\text{-}1)/(n_2\text{-}1)$. The ratio $(n_1\text{-}1)/(n_2\text{-}1)$ can be written in terms of measured quantities by the formula

$$\frac{\left(n_1 - 1\right)}{\left(n_2 - 1\right)} = \left\{\frac{l_1\left[\Phi_{1\times I1} - \left(\zeta_1 - \varphi_{I1}\right)\right] - p\chi\left(L_G - L_V\right)\left[1 + \left(K/\chi\right)\right]}{l_2\left[\Phi_{2\times I2} - \left(\zeta_2 - \varphi_{I2}\right)\right] - p\chi\left(L_G - L_V\right)\left[1 - \left(K/\chi\right)\right]}\right\} \\ \times \left[\frac{1 - \left(K/\chi\right)}{1 + \left(K/\chi\right)}\right] \qquad . \tag{46}$$

The ratio $(n_1\text{-}1)/(n_2\text{-}1)$ can also be expressed in terms of $\Gamma$ or r and $\Gamma_2$ by the equations

$$\frac{(n_1 - 1)}{(n_2 - 1)} = \frac{\Gamma}{\Gamma_2} = \frac{\Gamma}{\Gamma + 1} \qquad . \qquad (47)$$

As a consequence of Eq. (47), the description of the first embodiment with regard to measuring and monitoring the ratio $(n_1-1)/(n_2-1)$ is substantially the same as the description of first preferred embodiment with regard to $\Gamma$ and $\Gamma_2$.

For those applications requiring measurement of the relative dispersion $(n_r-n_j)/(n_r-n_s)$, it will be apparent to those skilled in the art that the relative dispersion can be determined using Eq. (33) for the determination of both the numerator and denominator of the relative dispersion. In the relative dispersion, $i \neq j$, $r \neq s$, and at least $i$ or $j$ are different from either $r$ or $s$.

It will be appreciated by those skilled in the art that a reciprocal dispersive power $\Gamma_3$ can also be defined in terms of indices of refraction at three different wavelengths, $\lambda_1$, $\lambda_2$, and $\lambda_3$, according to the formula

$$\Gamma_3 = \frac{(n_3 - 1)}{(n_2 - n_1)} \qquad (48)$$

where $n_3$ is the index of refraction at $\lambda_3$ without departing from the spirit and scope of the invention.

It will be further appreciated by those skilled in the art that phases $\varphi_1$ and $\varphi_2$ may be directly measured with analog or digital techniques to relative precisions sufficient to meet the required precision imposed on the output data by the final end use application output. With direct phase measurement, superheterodyne receiver techniques may be omitted in the first embodiment, and subsequent embodiments as noted, without departing from the scope and spirit of the first embodiment.

The beams **129** and **130** are shown in FIG. **1a** as being detected in two different detectors, detectors **85** and **86,** respectively. It will be appreciated by those skilled in the art that the beams **129** and **130** can be detected by a single detector with the appropriate modification of the signal processor **109.** The use of a single detector generally will produce reduced group delay differences compared to the group delay differences arising when using two separate detectors.

It will be also appreciated by those skilled in the art that data processing steps comprised of multiplications performed by processors **1095A** and **1095B** for the first embodiment may instead be comprised of divisions wherein a multiplication by $I_1$ is replaced by a division by $I_2$ and *vice versa* without departing from the spirit and scope of the first embodiment of the present invention.

The description of the first embodiment noted that the configuration of interferometers illustrated in FIGS. **1a-1e** are known in the art as differential plane mirror interferometers. Other forms of the differential plane mirror interferometer and forms of other interferometers such as the plane mirror interferometer or the angle-compensating interferometer or similar device such as is described in an article entitled "Differential interferometer arrangements for distance and angle measurements: Principles, advantages and applications" by C. Zanoni, VDI Berichte Nr. 749, 93-106 (1989), may be incorporated into the apparatus of the first embodiment of the present invention without departing from the spirit or scope of the present invention.

FIG. 1b depicts in schematic form one embodiment of the differential plane mirror interferometer **69** shown in FIG. **1a.** It operates in the following way: beam **11** is incident on beam splitter **55A,** preferably a polarizing beam splitter, with a portion of beam **11** being transmitted as beam **13.** A second portion of beam **11** is reflected by beam splitter **55A,** subsequently reflected by mirror **55B,** and then transmitted by half-wave phase retardation plate **79A** as beam **113,** the half-wave phase retardation plate **79A** rotating the plane of polarization of the reflected portion of beam **11** by 90°. Beams **13** and **113** have the same polarizations but still have different frequencies. Beam **13** and beams for which beam **13** is the sole progenitor are indicated in FIGS. **1b** and **1d** by dashed lines and beam **113** and beams for which beam **113** is the sole progenitor are indicated in FIGS. **1b** and **1d** by dotted lines. The function of beam splitter **55A** and mirror **55B** is to spatially separate the two frequency components of beam **11** using conventional polarization techniques.

Beams **13** and **113** enter polarizing beam splitter **71,** which has a polarizing coating **73,** and are transmitted as beams **15** and **115,** respectively. Beams **15** and **115** pass through quarter-wave phase retardation plate **77** and are converted into circularly polarized beams **17** and **117,** respectively. Beams **17** and **117** are reflected back on themselves by mirrors within measurement cell **90,** pass back through quarter-wave retardation plate **77,** and are converted back into linearly polarized beams that are orthogonally polarized to the original incident beams **15** and **115.** These beams are reflected by polarizing coating **73** to become beams **19** and **119,** respectively. Beams **19** and **119** are reflected by retroreflector **75** to become beams **21** and **121,** respectively. Beams **21** and **121** are reflected by polarizing coating **73** to become beams **23** and **123,** respectively. Beams **23** and **123** pass through quarter-wave phase retardation plate **77** and are converted into circularly polarized beams **25** and **125,** respectively. Beams **25** and **125** are reflected back on themselves by mirrors within measurement cell **90,** pass back through quarter-wave retardation plate **77,** and are converted back into linearly polarized beams the same as the original incident beams **15** and **115.** These beams are transmitted by coating **73** to become beams **27** and **127,** respectively. Beams **27** and **127** contain information at wavelength $\lambda_1$ about the optical path lengths through the gas whose reciprocal dispersive power r is to be determined and about the optical path lengths through a vacuum, respectively.

Beam **27** is reflected by mirror **63B,** and then a portion reflected by beam splitter **63A,** preferably a nonpolarizing type, as a first component of beam **129.** Beam **127** is incident on beam splitter **63A** with a portion of beam **127** being transmitted as a second component of beam **129,** the first and second components of beam **129** having the same linear polarizations but still having different frequencies.

FIG. **1c** depicts in schematic form one embodiment of differential plane mirror interferometer **70** shown in FIG. **1a.** It operates in the following way: beam **12** is incident on beam splitter **56A,** preferably a polarizing beam splitter, with a portion of beam **12** being transmitted as beam **14.** A second portion of beam **12** is reflected by beam splitter **56A,** subsequently reflected by mirror **56B,** and then transmitted by half-wave phase retardation plate **80A** as beam **114,** the half-wave phase retardation plate **80** rotating the plane of polarization of the reflected portion of beam **12** by 90°. Beams **14** and **114** have the same polarizations but still have different frequencies. Beam **14** and beams for which beam **14** is the sole progenitor are indicated in FIGS. **1c** and **1e** by dashed lines and beam **114** and beams for which beam **114** is the sole progenitor are indicated in FIGS. **1c** and **1e** by dotted lines. The function, in part, of beam splitter **56A** and mirror **56B** is to spatially separate the frequency components of beam **12** using conventional polarization techniques.

Beams **14** and **114** enter polarizing beam splitter **72,** which has a polarizing coating **74,** and are transmitted as beams **16** and **116,** respectively. Beams **16** and **116** pass through quarter-wave phase retardation plate **78** and are converted into circularly polarized beams **18** and **118,** respectively. Beams **18** and **118** are reflected back on themselves by mirrors within measurement cell **90,** pass back through quarter-wave retardation plate **78,** and are converted back into linearly polarized beams that are orthogonally polarized to the original incident beams **16** and **116.** These beams are reflected by polarizing coating **74** to become beams **20** and **120,** respectively. Beams **20** and **120** are reflected by retroreflector **76** to become beams **22** and **122,** respectively. Beams **22** and **122** are reflected by polarizing coating **74** to become beams **24** and **124,** respectively. Beams **24** and **124** pass through quarter-wave phase retardation plate **78** and are converted into circularly polarized beams **26** and **126,** respectively. Beams **26** and **126** are reflected back on themselves by mirrors within measurement cell **90,** pass back through quarter-wave retardation plate **78,** and are converted back into linearly polarized beams the same as the original incident beams **16** and **116.** These beams are transmitted by coating **74** to become beams **28** and **128,** respectively. Beams **28** and **128** contain information at wavelength $\lambda_2$ about the optical path lengths through the gas whose reciprocal dispersive power $\Gamma$ is to be determined and about the optical path lengths through a vacuum, respectively.

Beam **28** is reflected by mirror **64B,** and then a portion reflected by beam splitter **64A,** preferably a nonpolarizing type, as a first component of beam **130.** Beam **128** is incident on beam splitter **64A** with a portion of beam **128** being transmitted as a second component of beam **130,** the first and second components of beam **130** having the same linear polarizations but still having different frequencies.

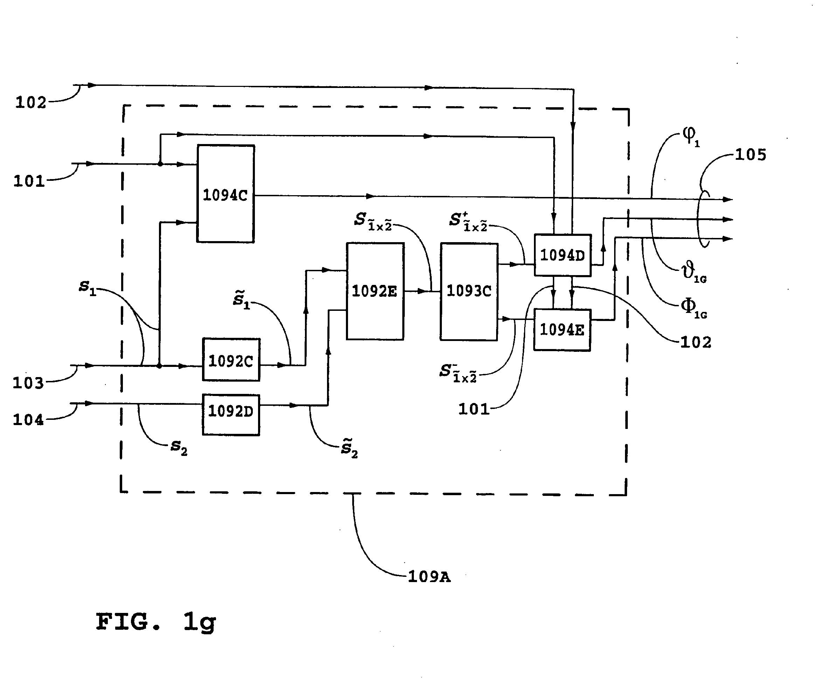

Reference is now made to FIGS. **1a-1e** and **1g** which taken together depict in diagrammatic form a variant of the first preferred embodiment of the present invention for measuring intrinsic optical properties of a gas, particularly its reciprocal dispersive power where the end use application substantially does not effect the choice of the particular manner in which the intrinsic optical properties of the gas are determined and where the stability of the adopted light sources is sufficient and the wavelengths of the light beams generated by the adopted light sources are harmonically related to a relative precision sufficient to meet the required precision imposed on the output data by the final end use application. The condition wherein the wavelengths are approximately harmonically related corresponds to a special case of the first embodiment in which the ratio $(l_1/l_2)$ is expressible as the ratio of low order non-zero integers $(p_1/p_2)$, *cf.* Eq. (35).

The description of the sources of light beams 9 and **10** and of light beams **9** and **10** for the variant of the first embodiment is the same as that for description of the sources of light beams **9** and **10** and of light beams **9** and **10** given for the first embodiment with the additional requirement that the wavelengths be harmonically related to a relative precision sufficient to meet the required precision imposed on the output data by the final end use application. The description of the apparatus for the variant of the first embodiment is the same as corresponding portions of the description given for the first embodiment.

The dispersion information contained in phases $\varphi_1$ and $\varphi_2$ is obtained in the variant of the first embodiment preferably through the creation of a superheterodyne signal wherein the frequency of the superheterodyne signal is at a frequency much lower than $f_1$ and $f_2$ where it is generally possible to make more accurate phase measurements. Referring to FIG. **1g** and in accordance with the preferred method of the variant of the first embodiment, electronic processing means **109A** preferably comprises means, mixers **1092C** and **1092D,** for electronically multiplying time-

dependent arguments $\alpha_1(t)$ and $\alpha_2(t)$ of heterodyne signals $s_1$ and $s_2$, respectively, by coefficients $p_1$ and $p_2$, respectively, so as to create two modified heterodyne signals $\tilde{s}_1$ and $\tilde{s}_2$ having the form

$$\tilde{s}_j = \tilde{A}_j \cos\left[p_j \alpha_j(t)\right] \quad , \quad j = 1, 2 \quad . \tag{49}$$

The multiplication may be achieved by any one of the conventional frequency multiplying techniques commonly known in the art, such as signal squaring followed by electronic filtering, preferably by a digital process.

Referring again to FIG. **1g,** electronic processing means **109A** preferably comprises means mixer **1092E** for electronically multiplying together, either as an analog or digital process, preferably a digital process, modified heterodyne signals $\tilde{s}_1$ and $\tilde{s}_2$ to create a superheterodyne signal $S_{\tilde{1}\times\tilde{2}}$ having the mathematical form

$$S_{\tilde{1}\times\tilde{2}} = \tilde{s}_1 \tilde{s}_2 \tag{50}$$

The superheterodyne signal $S_{\tilde{1}\times\tilde{2}}$ is comprised of two sidebands with a suppressed carrier and may be rewritten as

$$S_{\tilde{1}\times\tilde{2}} = S^{+}_{\tilde{1}\times\tilde{2}} + S^{-}_{\tilde{1}\times\tilde{2}} \tag{51}$$

where

$$S^{+}_{\tilde{1}\times\tilde{2}} = \frac{1}{2} \tilde{A}_1 \tilde{A}_2 \cos\left(2\pi\tilde{v}t + \tilde{\vartheta}_{1G}\right) \tag{52}$$

$$S^{-}_{\tilde{1}\times\tilde{2}} = \frac{1}{2} \tilde{A}_1 \tilde{A}_2 \cos\left(2\pi\tilde{F}t + \tilde{\Phi}_{1G}\right) \tag{53}$$

$$\tilde{v} = \left(p_1 f_1 + p_2 f_2\right) \tag{54}$$

$$\tilde{\vartheta}_{1G} = \left(p_1 \varphi_1 + p_2 \varphi_2\right) \tag{55}$$

$$\tilde{F} = \left(p_1 f_1 - p_2 f_2\right) \tag{56}$$

$$\tilde{\Phi}_{1G} = \left(p_1\varphi_1 - p_2\varphi_2\right) \qquad (57)$$

The superheterodyne signal $S_{\tilde{1}\times\tilde{2}}$ is therefore comprised of two sidebands, $S_{\tilde{1}\times\tilde{2}}^{+}$ and $S_{\tilde{1}\times\tilde{2}}^{-}$, of equal amplitude, one sideband with frequency $\tilde{v}$ and phase $\tilde{9}_{1G}$ and a second sideband with frequency $\tilde{F}$ and phase $\tilde{\Phi}_{1G}$.

Electronic processor **109A** further comprises processor 1094D to determine phase $\tilde{9}_{1G}$ and electronic processor 1094E to determined phase $\tilde{\Phi}_{1G}$ both using time-based phase detection such as a digital Hilbert transform phase detector (see Best *ibid.*) or the like and the reference signals **101** and **102**. Electronic processor **109A** further comprises electronic processor **1094C** for determination of $\varphi_1$ by phase sensitive detection with reference signal **101** or like technique for determination of the phases of a heterodyne signal. In a next step, $\varphi_1$, $\tilde{9}_{1G}$, and $\tilde{\Phi}_{1G}$ are transmitted, either in analog or digital format, to computer 110 for the calculation of the $\Gamma$ wherein the phase offsets $\tilde{\xi}$ and $\tilde{Z}$ are defined as

$$\tilde{\xi} = \left(p_1\zeta_1 + p_2\zeta_2\right) \qquad (58)$$

$$\tilde{Z} = \left(p_1\zeta_1 - p_2\zeta_2\right) \qquad (59)$$

Note that phases $\varphi_1$, $p\tilde{9}_{1G}$, and $p\tilde{\Phi}_{1G}$ and phase offsets $p\tilde{\xi}$ and $p\tilde{Z}$ are formally equivalent to $\Phi_{1\times1R}$, $9_{1G}$, $\Phi_{1G}$, $\xi$, and $Z$, respectively, of the first embodiment with $\varphi_{I1}$ and $\varphi_{I2}$ equal to zero, $l_1 = p_1$, and $l_2 = p_2$. Therefore, the remaining description of the variant of the first embodiment is the same as corresponding portions of the description given for the first embodiment.

The principal advantage of the variant of the first embodiment lies in a simplified electronic processing in relation to that of the first embodiment although at the risk of possibly enhancing frequency sensitive phase offset errors due to differences in group delays experienced by heterodyne and/or modified heterodyne signals having significantly different frequencies. The discussion of the effects of group delay for the variant of the first embodiment is the same as corresponding portions of the description given for the first embodiment.

It will be appreciated by those skilled in the art that alternative data processing may be considered for the variant of the first preferred embodiment without departing from the spirit and scope of the present invention. For example, it may prove useful to generate the modified heterodyne signals by electronically dividing time-dependent arguments $\alpha_1(t)$ and $\alpha_2(t)$ of heterodyne signals $s_1$ and $s_2$, respectively, by coefficients $p_2$ and $p_1$, respectively, so as to create two modified heterodyne signals $\tilde{s}_1'$ and $\tilde{s}_2'$ having the forms

$$\tilde{s}_1' = \tilde{A}_1' \cos\left[\alpha_1(t)/p_2\right] \quad ,$$
$$\tilde{s}_2' = \tilde{A}_2' \cos\left[\alpha_2(t)/p_1\right] \qquad (60)$$

The dividing may be achieved by any one of the conventional frequency dividing techniques commonly known in the art, such as the use of phase-locked loops or generation of a rectangle wave signal which changes sign at every other zero crossing of the signal whose argument is being divided by two. The subsequent description of the variant of the first embodiment based on modified heterodyne signals $\tilde{s}_1'$ and $\tilde{s}_2'$ is the same as corresponding portions of the description given for the variant of the first embodiment based on modified heterodyne signals $\tilde{s}_1$ and $\tilde{s}_2$ with the replacements of $p_1$ by $p_2$ and visa *versa* in the equations.

Another alternative data processing that may be considered for the variant of the first embodiment without departing from the spirit and scope of the present invention is the addition of the modified heterodyne signals $\tilde{s}_1$ and $\tilde{s}_2$ together, rather than multiplying them as was proposed above, resulting in the expression:

$$S_{\tilde{1}+\tilde{2}} = \tilde{s}_1 + \tilde{s}_2 \qquad\qquad (61)$$

A superheterodyne signal would be obtained from $S_{\tilde{1}+\tilde{2}}$ by conventional techniques commonly known in the art such square law detection or by signal rectification. (*cf.* Dändliker *et al., ibid.*, and Redman and Wall, *ibid.*.) Further, another alternative signal to $S_{\tilde{1}+\tilde{2}}$ may be generated by selecting the appropriate term in the binomial expansion of $(s_1 + s_2)^{p+q}$ through the use of phase sensitive detection.

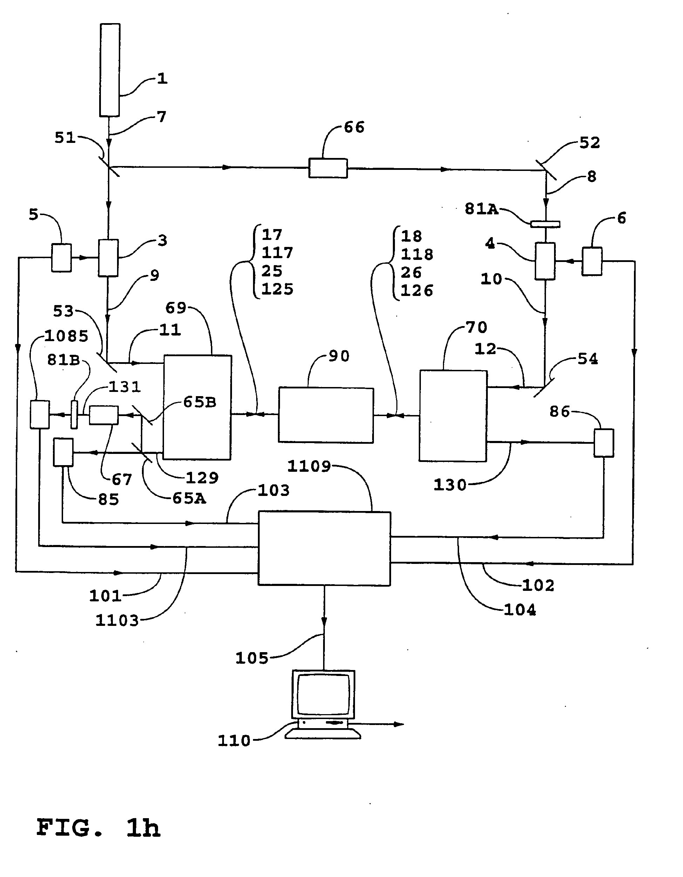

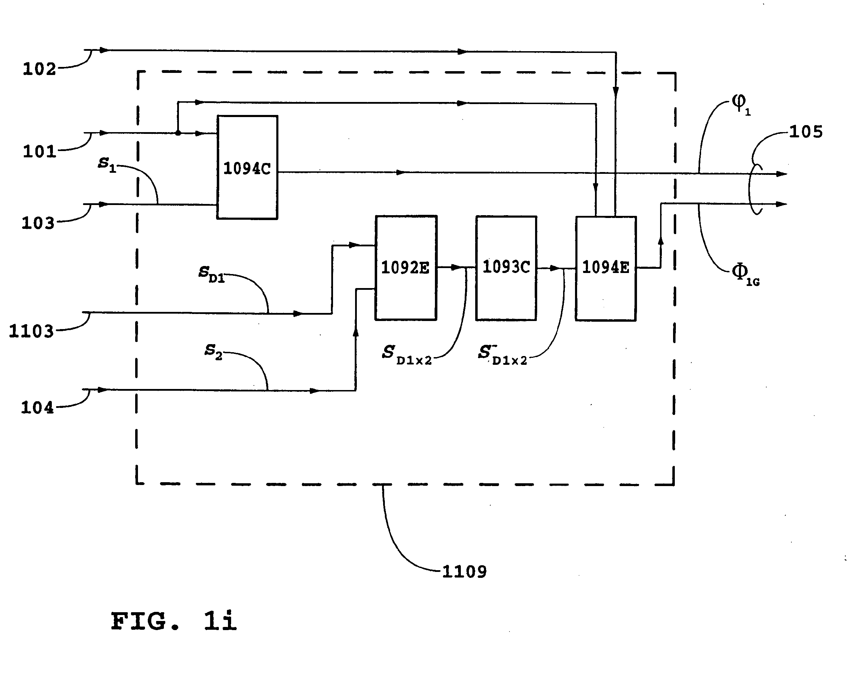

Reference is now made to FIGS. 1h and 1i that depict in diagrammatic form a variant of the first variant of the first preferred embodiment, the second variant of the first preferred embodiment of the present invention, for measuring the reciprocal dispersive power or other intrinsic optical properties of a gas. The primary difference between the second variant of the first embodiment and the first variant of the first embodiment lies principally in the means for generating input light beams and the means for generating heterodyne signals.

The description of the source of light beam **7** and of light beam **7** illustrated in FIG. 1h is the same as the description given for the source of light beam **7** and of light beam **7** of the first variant of the first embodiment. The description of light beam **11** of the second variant of the first embodiment, light beam **11** being derived from a portion of beam **7** transmitted by nonpolarizing beam splitter **51,** is the same as the corresponding portion of the description given in the first variant of the first embodiment for light beam **11** derived from beam **7.**

As illustrated in FIG. **1h,** a second portion of beam **7** is reflected by nonpolarizing beam splitter **51,** passes through a nonlinear crystal **66,** is reflected by mirror **52,** and a portion thereof transmitted by optical filter **81A** to form light beam **8.** Nonlinear crystal **66,** *e.g.* $\beta$-$BaB_2O_4$ (BBO), is aligned so as to double the frequency of a portion of the second portion of beam **7** passing through nonlinear crystal **66** by second harmonic generation, SHG. That portion thereof transmitted by optical filter **81A** is the frequency doubled portion of the second portion of the beam **7** passing through nonlinear crystal **66.** As a consequence, the ratio of the wavelength of beam **7** to the wavelength of beam **8** is 2/1. The description of light beam **12** derived from beam **8** for the second variant of the first embodiment is the same as the corresponding portion of the description given for light beam **12** derived from beam **8** of the first variant of the first embodiment. Alternatively, a nonlinear crystal may be placed in the cavity of a laser used for the source of beam **7** and the second beam corresponding to beam **8** generated by SHG internal to the cavity of the laser.

The description of the propagation of beams **11** and **12** of the second variant of the first embodiment through interferometers **69** and **70,** respectively, to form output beams **129** and **130,** respectively, is the same as the corresponding portions of the description given for the propagation of beams **11** and **12** of the first variant of the first embodiment through interferometers **69** and **70,** respectively, to form output beams **129** and **130,** respectively. Differential plane mirror interferometers **69** and **70** with external mirrors furnished by measurement cell **90** comprise interferometric means for introducing a phase shift $\varphi_1$ between the *x* and *y* components of beam **11** and a phase shift $\varphi_2$ between the *x* and *y* components of beam **12** where $\varphi_1$ and $\varphi_2$ are given by equations the same as Eqs. (2) for $\varphi_1$ and $\varphi_2$ of the first embodiment.

In a next step as shown in FIG. **1h,** a portion of phase-shifted beam **129** is reflected by nonpolarizing beam splitter **65A,** reflected by mirror **65B,** and passes through a nonlinear crystal **67** to form light beam **131.** Beam **131** is comprised of two pairs of components, one pair of components with frequencies the same as the frequencies of beam **129** and a second pair of components with frequencies twice the frequencies of the components of beam **129.** Nonlinear crystal **67,** *e.g.* BBO, is aligned so as to double by SHG the frequencies of a portion of the portion of beam **129** entering nonlinear crystal **67** to form the second pair of components of beam **131.** The first pair of components of beam **131** are the remaining portion of the portion of beam **129** entering nonlinear crystal **67** and that is not frequency doubled. Differential plane mirror interferometer **69** with external mirrors furnished by measurement cell **90** and nonlinear crystal **67** comprise interferometric means for introducing a phase shift $\varphi_{D1}$ between the *x* and *y* components of the second pair of components of beam **131.** Phase $\varphi_{D1}$ is substantially twice the phase $\varphi_1$ of beam **129** and is given by the formula

$$\varphi_{D1} = \sum_{i=1}^{i=p} 2k_1 \left( L_{G,i} n_{1i} - L_{v,i} \right) + \zeta_{D1}$$

(62)

where the phase offset $\zeta_{D1}$ comprises all contributions to phase $\varphi_{D1}$ not related to the measurement path **97** or reference path **98**.

In a subsequent step as depicted in FIG. **1h,** a second portion of phase-shifted beam **129** is transmitted by nonpolarizing beam splitter **65A** and impinges on detector **85,** the second pair of components of beam **131** is transmitted by optical filter **81B,** the frequencies of the first and second pairs of components of beam **131** being located outside and inside, respectively, the passband of optical filter **81B,** to impinge on detector **1085,** and phase-shifted beam **130** impinges on detector **86** resulting in three electrical interference signals, heterodyne signals $s_1$, $S_{D1'}$ and $s_2$, respectively, preferably by photoelectric detection. Signals $s_1$ and $s_{D1}$ correspond to optical path information at wavelength and signal $s_2$ corresponds to optical path information at wavelength $\lambda_2$.

Signals $s_1$ and $s_2$ have forms the same as the forms $s_1$ and $s_2$, respectively, of the first variant of the first embodiment and $s_{D1}$ has the form

$$s_{D1} = A_{D1}(t)\cos[\alpha_{D1}(t)]$$

(63)

where

$$\alpha_{D1}(t) = 2\pi(2f_1)t + \varphi_{D1} \quad .$$

(64)

Heterodyne signals $s_1$, $S_{D1}$' and $s_2$ are transmitted to electronic processor **1109** for analysis as electronic signals **103, 1103,** and **104,** respectively, preferably in digital format.

Referring to FIG. 1i, electronic processor **1109** comprises electronic processor **1094C** to determine the phase shift $\varphi_1$ the same as described for the first embodiment with signal **101** serving as the reference signal in the phase sensitive detection. Electronic processor **1109** further comprises means **1092E** for electronically multiplying together, by either an analog or a digital process, heterodyne signals $s_{D1}$ and $s_2$ to create a superheterodyne signal $S_{D1\times2}$. Superheterodyne signal $S_{D1\times2}$ has the form

$$S_{D1\times2} = s_{D1}s_2 \quad .$$

(65)

Superheterodyne signal $S_{D1\times2}$ is comprised of two sidebands with a suppressed carrier and may be written as

$$S_{D1\times2} = S_{D1\times2}^+ + S_{D1\times2}^-$$

(66)

where

$$S_{D1\times2}^{+} = \frac{1}{2}A_{D1}A_2\cos(2\pi vt + \vartheta_{1G}) \quad , \tag{67}$$

$$S_{D1\times2}^{-} = \frac{1}{2}A_{D1}A_2\cos(2\pi Ft + \Phi_{1G}) \quad ,$$

$$v = (2f_1 + f_2) \quad , \tag{68}$$

$$\vartheta_{1G} = (\varphi_{D1} + \varphi_2) \quad , \tag{69}$$

$$F = (2f_1 - f_2) \quad , \tag{70}$$

$$\Phi_{1G} = (\varphi_{D1} - \varphi_2) \quad . \tag{71}$$

In a next step, the phase $\Phi_{1G}$ of Eq. (71) is determined by electronic processor **1C94E** of electronic processor **1109** using frequency $F$ of Eq. (70) in the phase determination, the description of the process being the same as corresponding portions of the description given for determination of phase $\Phi_{1G}$ of the first variant of the first embodiment.

The equation for the reciprocal dispersive power r of the gas defined by Eq. (23) can be expressed in terms of quantities of the second variant of the first embodiment by the formulae

$$(n_1 - 1) = \frac{2}{p\chi L_G}(\varphi_1 - \zeta_1) - \frac{(L_G - L_V)}{L_V} \quad , \tag{72}$$

$$(n_2 - n_1)_{1G} = \frac{1}{p\chi L_G}(-\Phi_{1G} + Z) \quad , \tag{73}$$

where

$$Z = (\zeta_{D1} - \zeta_2) \quad , \tag{74}$$

$$\chi = 2k_1 \quad , \qquad\qquad (75)$$

$$K = 0 \quad . \qquad\qquad (76)$$

The remaining description of the second variant of the first embodiment of the present invention is the same as corresponding portions of the description given for the first variant of the first embodiment of the present invention.

Second harmonic generation may be incorporated in other variants of the first variant of the first embodiment, such as in the third variant of the first embodiment subsequently described herein, without departing from the scope and spirit of the present invention. In the third variant of the first embodiment (not shown in a figure), SHG is employed in both the source and heterodyne signal detection scheme. The primary differences between the third and second variants of the first embodiment lie principally in the definition and use of reference and measurement paths in an interferometer and in respective intrinsic properties determined for a gas.

The input beam for the third variant of the first embodiment is comprised of three frequency components, a first low frequency component comprised of a portion of a single frequency laser beam, a second low frequency, frequency-shifted component generated, *e.g.* by an acousto-optical modulator, from another portion of the single frequency laser beam, and a third high frequency component generated from yet another portion of the single frequency laser beam by SHG. The description of the laser source is the same as the corresponding portion of the description given for the laser source of the second variant of the first embodiment.

The three frequency components are transported as substantially coextensive beam components from the source of the components to the interferometer. At the interferometer, the input beam is divided by a combination of polarizing beam splitters, nonpolarizing beamsplitters, and dichroic beam splitters into three input beams. The first input beam of the three input beams comprises portions of each of the low frequency and the low frequency, frequency-shifted components of the input beam and each of the second and third input beams comprise other portions of each of the low frequency, frequency-shifted component of the input beam and of the high frequency component of the input beam.

A phase shift $\varphi_1$ is introduced by the interferometer of the third variant of the first embodiment between the reference and measurement output beams corresponding to the first input beam. The description of introduction and detection of the phase shift $\varphi_1$ for the third variant of the first embodiment is the same as corresponding portions of the description given for the description of introduction and detection of the phase shift $\varphi_1$ of the second variant of the first embodiment.

A phase $\Phi_{2G}$ is determined for the third variant of the first embodiment, the phase $\Phi_{2G}$ corresponding to the phase $\Phi_{2G}$ subsequently described with respect to the second group of preferred embodiments. The second input beam enters the interferometer and exits the interferometer as an intermediate second output beam wherein the optical path for both frequency components of the second input beam are substantially coextensive in the interferometer and over a measurement path comprising the gas. The third input beam enters the interferometer and exits the interferometer as an intermediate third output beam wherein the optical path for both frequency components of the third input beam are substantially coextensive in the interferometer and over a measurement path comprising a vacuum path. The physical length of the path of the second input beam in the gas is nominally the same as the physical length of the path of the third input beam in the vacuum. The optical paths for the second and third input beams in the interferometer are substantially the same except for the respective portions of paths in the gas and the vacuum.

In a next step, the intermediate second and third output beams are each passed through a nonlinear crystal to form the second and third output beams. Each of the second and third output beams comprise frequency doubled portions, frequency doubled by SHG, of each of the low frequency, frequency-shifted components of the intermediate second and third output beams, respectively, and portions of each of non-frequency doubled higher frequency components of the intermediate second and third output beams, respectively.

Second and third interference electrical signals are generated by photoelectric detection of the frequency doubled, frequency-shifted components and the respective non-frequency doubled higher frequency components of the second and third output beams, respectively. The difference of the phases of the second and third interference electrical signals, $\Phi_{2G}$, contains information about the dispersion of the optical path lengths of the portions of optical paths in the gas.

The difference of the phases $\Phi_{2G}$ is used with a measurement of the refractivity of the gas related to $\varphi_1$ to determine the reciprocal dispersive power of the gas as subsequently described with respect to the second group of preferred embodiments.

The remaining description of the third variant of the first embodiment of the present invention is the same as corresponding portions of the description given for the second variant of the first embodiment and corresponding portions of the descriptions given for embodiments from the second group of preferred embodiments.

It will be appreciated by those skilled in the art that the length of the vacuum path for the third input beam of the third variant of the first embodiment may be reduced to a value of zero without substantially altering the properties of $\Phi_{2G}$ and without departing from the scope and spirit of the present invention.

Reference is now made to FIGS. 2a-2d which depict in diagrammatic form the second preferred embodiment of the present invention from the first group of preferred embodiments for measuring intrinsic optical properties of a gas, particularly its reciprocal dispersive power where the end use application substantially does not effect the choice of the particular manner in which the intrinsic optical properties of the gas are determined and where the stability of the adopted light sources is sufficient and the ratio of the wavelengths of the light beams generated by the adopted light sources are matched to a known ratio value to a relative precision sufficient to meet the required precision imposed on the output data by the final end use application. The second embodiment uses a configuration of differential plane mirror interferometers different from the configuration of differential plane mirror interferometers used in the first embodiment and variant thereof. The configuration of differential plane mirror interferometers in the second embodiment has the effect of producing a number of multiple passes through a measurement path at one wavelength different from the number of multiple passes through the measurement path for a second wavelength, the measurement paths for the two wavelengths being substantially coextensive.

The description of the sources of light beams **9** and **10** and of light beams **9** and **10** for the second embodiment is the same as that for description of the sources of light beams **9** and **10** and of light beams **9** and **10** given for the first preferred embodiment.

Referring to FIG. 2a, beam **9** is reflected by mirror **53** becoming beam **11.** A portion of beam **10** is reflected by a beam splitter **54A,** preferably a nonpolarizing type, as beam **12,** and a second portion of beam **10** is transmitted by beam splitter **54A** and subsequently reflected by mirror **54B** becoming beam **212.** Beam **11** is incident on differential plane mirror interferometer **69** and beams **12** and **212** are incident on differential plane mirror interferometer group 70 comprised of two differential plane mirror interferometers. Differential plane mirror interferometer **69** and differential plane mirror interferometer group **70** with external mirrors furnished by measurement cell **90** comprise interferometric means for introducing a phase shift $\varphi_1$ between the x and y components of beam **11,** a phase shift $\varphi_3$ between the x and y components of beam **12,** and a phase shift $\varphi_4$ between the x and y components of beam **212.**

The description of differential plane mirror interferometer **69** and propagation of beams in differential plane mirror interferometer **69** is the same as that given for corresponding portions of the descriptions of differential plane mirror interferometer **69** and the propagation of beams in differential plane mirror interferometer **69** of the first embodiment shown in FIG. **1b.**

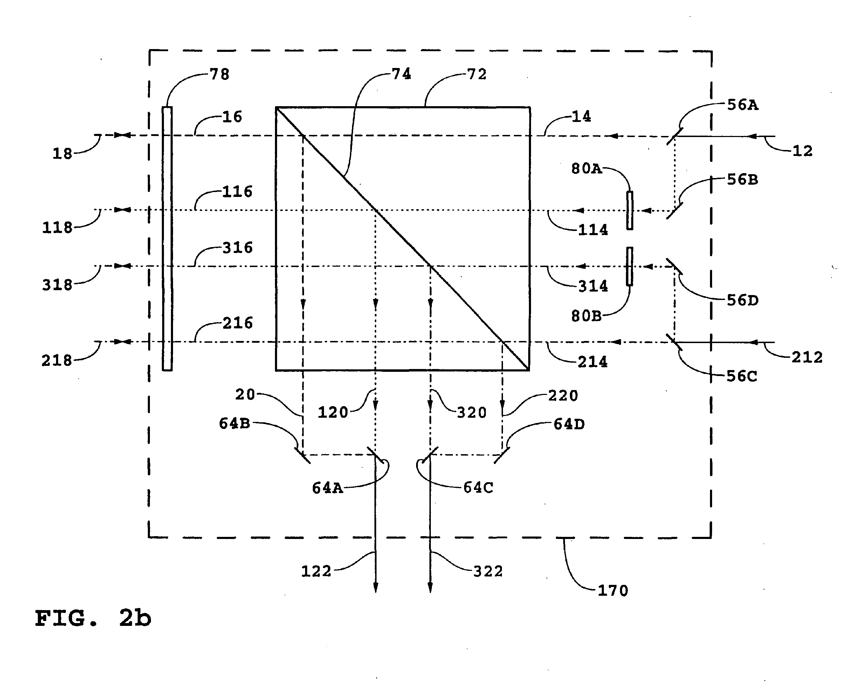

One differential plane mirror interferometer of differential plane mirror interferometer group 170 as shown in FIG. **2b** has two exit/return beams **18** and **118.** Beam **18** originating from one frequency component, a first frequency component, of beam **12** comprises a beam for one measurement leg and beam **118** originating from a second frequency component of beam **12** comprises a beam for a second measurement leg. Beams for which the first frequency component of beam **12** is the sole progenitor are indicated in FIG. **2b** by dashed lines and beams for which the second frequency component of beam **12** is the sole progenitor are indicated in FIG. **2b** by dotted lines.

A second differential plane mirror interferometer of differential plane mirror interferometer group **170** as shown in FIG. **2b** has two exit/return beams **218** and **318.** Beam **218** originating from one frequency component, a first frequency component, of beam **212** comprises a beam for one measurement leg and beam **318** originating from a second frequency component of beam **212** comprises a beam for a second measurement leg. Beams for which the first frequency component of beam **212** is the sole progenitor are indicated in FIG. **2b** by lines comprised of alternating dots and dashes and beams for which the second frequency component of beam **212** is the sole progenitor are indicated in FIG. **2b** by lines comprised of alternating dot pairs and dashes.

Beams **17, 25, 117,** and **125** are incident on measurement cell **90** which results in beams **27** and **127,** the same as illustrated for the first embodiment in FIGS. **1b** and **1d.** Beams **27** and **127** contain information at wavelength $\lambda_1$ about the optical path length through the gas whose reciprocal dispersive power is to be determined and about the optical path length through a vacuum, respectively.

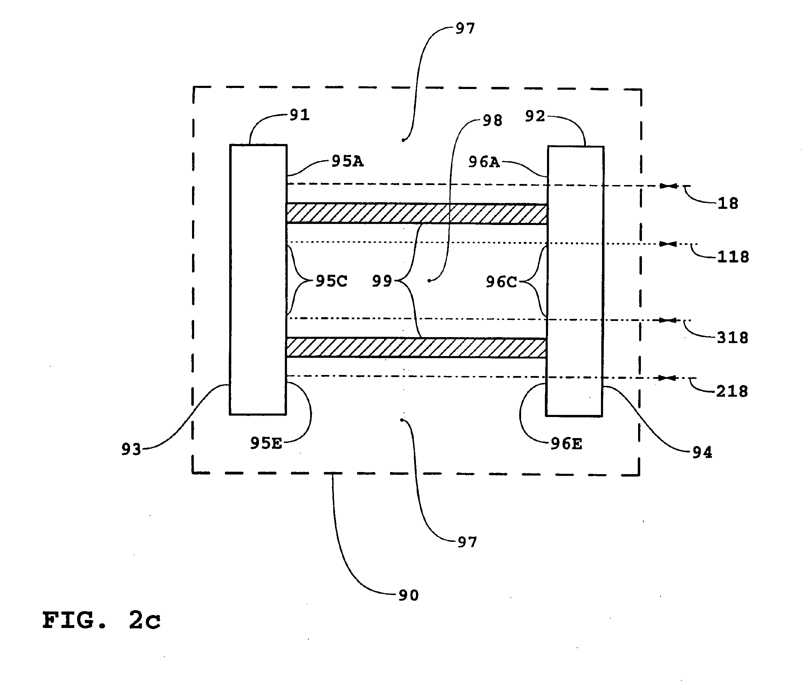

Likewise, beams **18** and **118** are incident on measurement cell **90**, illustrated in FIG. **2c,** which results in beams **20** and **120** (cf. FIG. **2b**). Beams for which the first frequency component of beam **12** is the sole progenitor are indicated in FIG. **2c** by dashed lines and beams for which the second frequency component of beam **12** is the sole progenitor are indicated in FIG. **2c** by dotted lines. Similarly, beams **218** and **318** are incident on measurement cell **90,** as shown in FIG. **2c,** which results in beams **220** and **320** (cf. FIG. **2b**). Beams for which the first frequency component of beam **212** is the sole progenitor are indicated in FIG. **2c** by lines comprised of alternating dots and dashes and beams for which the second frequency component of beam **212** is the sole progenitor are indicated in FIG. **2c** by lines comprised of alternating dot pairs and dashes. Beams **20** and **220** contain information at wavelength $\lambda_2$ about optical path lengths through the gas whose reciprocal dispersive power is to be determined and beams **120** and **320** contain information at wavelength $\lambda_2$ about optical path lengths through a vacuum.

Beam **27** and beam **127** are combined to form beam **129**, the same as described for the corresponding portion of the first embodiment. Beam **129** exits differential plane mirror interferometer **69** as a mixed beam, the first and second components of beam **129** having the same linear polarizations.

Referring to FIG. **2b**, beam **20** is reflected by mirror **64B**, a portion of which is reflected by beamsplitter **64A**, preferably a nonpolarizing beamsplitter, to become a first component of beam **122**. A portion of beam **120** is transmitted by beamsplitter **64A** to become a second component of beam **122**. Beam **122** is a mixed beam, the first and second components of beam **122** having the same linear polarizations. Beam **220** is reflected by mirror **64D**, a portion of which is reflected by beam splitter **64C**, preferably a nonpolarizing beamsplitter, to become a first component of beam **322**. A portion of beam **320** is transmitted by beamsplitter **64C** to become a second component of beam **322**. Beam **322** is a mixed beam, the first and second components of beam **322** having the same linear polarizations. Beams **122** and **322** exit differential plane mirror interferometer group **170**.

The magnitude of phase shifts $\varphi_1$, $\varphi_3$, and $\varphi_4$ are related to the round-trip physical lengths of measurement path **97** and reference path **98** (*cf*. FIGS. **1d** and **2c**) according to formulae

$$\varphi_1 = k_1 \sum_{i=1}^{p_1} \left( L_{G,i} n_{1,i} - L_{V,i} \right) + \zeta_1 \quad ,$$

$$\varphi_3 = k_2 \sum_{i=1}^{p_2} \left( L_{G,i} n_{2,i} - L_{V,i} \right) + \zeta_3 \quad , \tag{77}$$

$$\varphi_4 = k_2 \sum_{i=p_2+1}^{p_1} \left( L_{G,i} n_{2,i} - L_{V,,i} \right) + \zeta_4$$

for the case of $p_1 = 2p_2$. The phase offsets $\zeta_j$ comprise all contributions to the phase shifts $\varphi_j$ that are not related to the measurement path **97** or reference path **98**. Eqs. (77) are valid for the case where the paths for the two different wavelengths are substantially coextensive, a case chosen to illustrate in the simplest manner the function of the invention in the second embodiment.

Cyclic errors that produce nonlinearities in distance measuring interferometry (*cf.* the cited articles by Bobroff) have been omitted in Eqs. (77). Techniques known to those skilled in the art can be used to either reduce the cyclic errors to negligible levels or compensate for the presence of cyclic errors, techniques such as using separated beams in the interferometer and/or separated beams in the delivery system for light beams from each light beam source to the interferometer (Tanaka, Yamagami, and Nakayama, *ibid.*).

To those skilled in the art, generalization to a case where paths for the two different wavelengths are not substantially coextensive and to a case when $p_1 \neq 2p_2$ is a straight forward procedure. In FIGS. **2a-2c,** differential plane mirror interferometer **69**, differential plane mirror interferometer group 70, and cell 90 are configured with $p_1 = 2$ and $p_2 = 1$ so as to illustrate in the simplest manner the function of the apparatus of the second embodiment.

In a next step as shown in FIG. **2a**, beams **129, 122,** and **322** impinge upon photodetectors **85, 186,** and **386**, respectively, resulting in three interference signals, heterodyne signals $s_1$, $s_3$, and $s_4$, respectively, preferably by photoelectric detection. The signal $s_1$ corresponds to wavelength $\lambda_1$ and signals $s_3$ and $s_4$ correspond to the wavelength $\lambda_2$. The signals $s_j$ have the form

$$s_j = A_j \cos\left[\alpha_j(t)\right] \quad , \qquad j = 1, 3, \text{ and } 4 \tag{78}$$

where the time-dependent arguments $\alpha_j(t)$ are given by

$$\alpha_1(t) = 2\pi f_1 t + \varphi_1 \quad,$$
$$\alpha_3(t) = 2\pi f_2 t + \varphi_3 \qquad\qquad (79)$$
$$\alpha_4(t) = 2\pi f_2 t + \varphi_4 \quad.$$

Heterodyne signals $s_1$, $s_3$, and $s_4$ are transmitted as electronic signals **103, 204,** and **404,** respectively, to processor **209,** preferably in digital format, for analysis.

A preferred method for electronically processing the heterodyne signals $s_1$, $s_3$, and $s_4$ is presented herewithin for the case when $l_1$ and $l_2$ are not low order integers. For the case when $l_1$ and $l_2$ are low order integers and the ratio of the wavelengths matched to the ratio $(l_1/l_2)$ with a relative precision sufficient to meet the required precision imposed on the output data by the end use application, the preferred procedure for electronically processing the heterodyne signals $s_1$, $s_3$, and $s_4$ is the same as the one subsequently set down for the variant of the second preferred embodiment of the present invention.

The phases $\varphi_1$, $\varphi_3$, and $\varphi_4$ of signals $s_1$, $s_3$, and $s_4$, respectively, are obtained preferably by application of superheterodyne receiver techniques wherein frequencies of $s_1$, $s_3$, and $s_4$ are shifted to frequencies substantially lower than $f_1$ and $f_2$ where conditions are generally more favorable for high precision phase measurements.

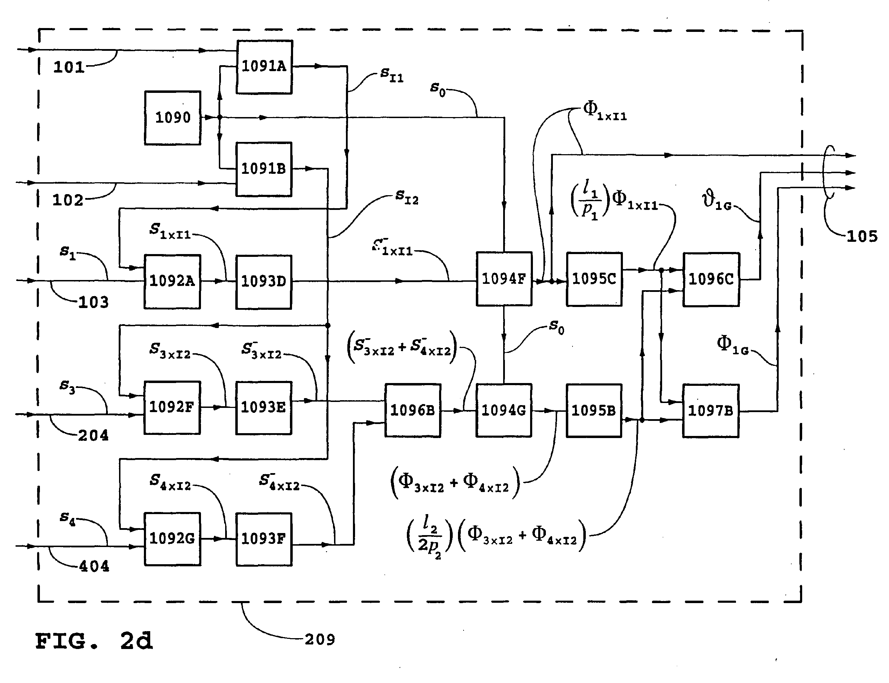

Referring now to FIG. **2d,** electronic processor **209** preferably is comprised of alphameric numbered elements wherein the numeric component of the alphameric numbers indicate the function of an element, the same numeric component/function association as described for the electronic processing elements of the first embodiment depicted in FIG. **1f.** The description of the steps in processing of the heterodyne signals $s_1$, $s_3$, and $s_4$ by electronic processor **209** is the same as corresponding portions, according to the numeric component of the alphameric numbers of elements, of the descriptions of steps in the processing of the heterodyne signals $s_1$ and $s_2$ of the first embodiment by electronic processor **109.** The processing of the heterodyne signals $s_1$, $s_3$, and $s_4$ by processor **209** creates three sideband phases $\Phi_{1\times l1}$, $\Phi_{3\times l2}$, and $\Phi_{4\times l2}$ where

$$\Phi_{1\times I1} = (\varphi_1 - \varphi_{I1}) \quad,$$
$$\Phi_{3\times I2} = (\varphi_3 - \varphi_{I2}) \qquad\qquad (80)$$
$$\Phi_{4\times I2} = (\varphi_4 - \varphi_{I2}) \quad,$$

and $\varphi_{I2}$ and $\varphi_{I2}$ are phase offset errors [cf. Eqs. (5)].

Referring again to FIG. **2d,** electronic processor **209** comprises electronic processors **1096B** to add together $\Phi_{3\times l2}$, and $\Phi_{4\times l2}$. Next, the phase $\Phi_{1\times l1}$ and the resulting phase sum $(\Phi_{3\times l2} + \Phi_{4\times l2})$ are multiplied by $l_1/p_1$ and $(l_2/p_2)$ (1/2), respectively, in electronic processors 1095C and 1095D, respectively, resulting in phases $(l_1/p_1)\Phi_{1\times l1}$ and $(l_2/p_2)$ $(\Phi_{3\times l2} + \Phi_{4\times l2})/2$. The phases $(l_1/p_1)\Phi_{1\times l1}$ and $(l_2/p_2)(\Phi_{3\times l2} + \Phi_{4\times l2})/2$ are next added together in electronic processor **1096C** and subtracted one from the other in electronic processor **1097B,** by analog or digital processes, preferably a digital process, to create the phases $\vartheta_{1G}$ and $\Phi_{1G}$, respectively. Formally,

$$\vartheta_{1G} = \left[\frac{l_1}{p_1}\Phi_{1\times I1} + \frac{l_2}{p_2}\frac{(\Phi_{3\times I2} + \Phi_{4\times I2})}{2}\right] \qquad\qquad (81)$$

$$\Phi_{1G} = \left[\frac{l_1}{p_1}\Phi_{1\times I1} - \frac{l_2}{p_2}\frac{\left(\Phi_{3\times I2} + \Phi_{4\times I2}\right)}{2}\right] \quad . \tag{82}$$

Note from Eqs. (81) and (82) that $\vartheta_{1G}$ and $\Phi_{1G}$ are not sensitive to tilts of either reflecting surfaces **95** or **96** of measurement cell **90** and insensitive to thermal and mechanical disturbances that may occur in interferometer beam splitting cubes and associated optical components as a consequence of the use of differential plane mirror interferometers. The phases $\Phi_{1\times I1}$, $\vartheta_{1G}$, and $\Phi_{1G}$ are transmitted to computer **110** as signal **105,** preferably in digital format.

The reciprocal dispersive power $\Gamma$ of the gas defined by Eq. (23) can be expressed in terms of other quantities obtained in the second embodiment by a formula

$$(n_1 - 1) = \frac{1}{(\chi + K)L_G}\left(\frac{l_1}{p_1}\right)\left[\Phi_{1\times I1} - (\zeta_1 - \varphi_{I1})\right] - \frac{(L_G - L_V)}{L_G} \tag{83}$$

$$(n_2 - n_1)_{1G} = \frac{1}{\chi L_G\left[1 - (K/\chi)^2\right]}\left\{\left[\vartheta_{1G}(K/\chi) - \Phi_{1G}\right] - \left[\xi(K/\chi) - Z\right]\right\} \tag{84}$$

where $\chi$ and $K$ are given by Eqs. (26) and (27),

$$\xi = \left[\frac{l_1}{p_1}(\zeta_1 - \varphi_{I1}) + \frac{l_2}{p_2}\left(\frac{\zeta_3 + \zeta_4}{2} - \varphi_{I2}\right)\right] \tag{85}$$

$$Z = \left[\frac{l_1}{p_1}(\zeta_1 - \varphi_{I1}) - \frac{l_2}{p_2}\left(\frac{\zeta_3 + \zeta_4}{2} - \varphi_{I2}\right)\right] \tag{86}$$

and second order correction terms have been omitted. The correction terms are due to variations in the index of refraction along the measurement path and due to differences in the physical length of path $i$ in the measurement path and the reference path from the respective average physical lengths. In addition, Eq. (84) is valid for the case where the paths for the two different wavelengths are substantially coextensive, a case chosen to illustrate in the simplest manner the function of the invention in the second embodiment. To those skilled in the art, generalization to the case where paths for the different wavelengths are not substantially coextensive is a straight forward procedure.

The remaining description of the second embodiment is the same as corresponding portions of the description given for the first embodiment.

Reference is now made to FIGS. **2a-2c** and **2e** which taken together depict in diagrammatic form a variant of the second preferred embodiment of the present invention for measuring intrinsic optical properties of a gas, particularly its reciprocal dispersive power where the end use application substantially does not effect the choice of the particular manner in which the intrinsic optical properties of the gas are determined and where the stability of the adopted light sources is sufficient and the wavelengths of the light beams generated by the adopted light sources are harmonically related to a relative precision sufficient to meet the required precision imposed on the output data by the final end use application. The condition wherein the wavelengths are approximately harmonically related corresponds to the special case of the first embodiment in which the ratio $(l_1/l_2)$ is expressible as the ratio of low order non-zero integers $(p_1/p_2)$, *cf.* Eq. (35).

The description of the sources of light beams **9** and **10** and of light beams **9** and 10 for the variant of the second embodiment is the same as that for description of the sources of light beams **9** and **10** and of light beams **9** and **10** given for the first embodiment with the additional requirement that the wavelengths be harmonically related to a relative precision sufficient to meet the required precision imposed on the output data by the final end use application. The description of the apparatus for the variant of the second embodiment depicted in FIGS. **2a-2c** is the same as corresponding portions of the description given for the second embodiment for the case where $p_1$=2 and $p_2$=1.

Referring now to FIG. **2e,** electronic processor **209A** preferably comprises electronic processor **1092H** for electronically multiplying together, either as an analog or digital process, preferably a digital process, heterodyne signals $s_1$ and $s_3$ to create a superheterodyne signal $S_{1\times3}$ having the mathematical form

$$S_{1\times3} = s_1 s_3 \quad . \tag{87}$$

The superheterodyne signal $S_{1\times3}$ may be rewritten as

$$S_{1\times3} = S_{1\times3}^+ + S_{1\times3}^- \tag{88}$$

where

$$S_{1\times3}^+ = \frac{1}{2} A_1 A_3 \cos\left(2\pi\nu t + \vartheta_{1\times3}\right) \tag{89}$$

$$S_{1\times3}^- = \frac{1}{2} A_1 A_3 \cos\left(2\pi F t + \Phi_{1\times3}\right) \tag{90}$$

$$\nu = \left(f_1 + f_2\right) \tag{91}$$

$$\vartheta_{1\times3} = \left(\varphi_1 + \varphi_3\right) \tag{92}$$

$$F = \left(f_1 - f_2\right) \tag{93}$$

$$\Phi_{1\times3} = \left(\varphi_1 - \varphi_3\right) \qquad\qquad (94)$$

The superheterodyne signal $S_{1\times3}$ is therefore comprised of two sidebands, $S_{1\times3}^+$ and $S_{1\times3}^-$, of equal amplitude, one sideband with frequency $v$ and phase $\vartheta_{1\times3}$ and a second sideband with frequency $F$ and phase $\Phi_{1\times3}$.

In a next step, the sidebands $S_{1\times3}^+$ and $S_{1\times3}^-$, are separated by electronic processor **1093G** through high pass and low pass filtering or any of the like techniques for separating two signals that are separated in frequency. The frequency $F$ of the lower frequency sideband of the superheterodyne signal can be very much smaller than the frequency $v$ of the higher frequency sideband of the superheterodyne signal as described in the corresponding portion of the discussion of the first embodiment, considerably simplifying the separating task of processor **1093G.** Electronic processor **209A** further comprises electronic processor **1094H** to determine the phases $\vartheta_{1\times3}$ and $\Phi_{1\times3}$ using time-based phase detection such as a digital Hilbert transform phase detector (see R. E. Best, *ibid.*; Oppenheim and Schafer, *ibid.*) or the like and the phases of the drivers **5** and **6**.

Electronic processor **209A** further comprises electronic processor **1092I** which electronically multiplies together, either as an analog or digital process, preferably a digital process, heterodyne signals $s_1$ and $s_4$ to create a superheterodyne signal $S_{1\times4}$ having the mathematical form

$$S_{1\times4} = s_1 s_4 \qquad . \qquad\qquad (95)$$

The superheterodyne signal $S_{1\times4}$ also comprises two sidebands with a suppressed carrier and may be rewritten as

$$S_{1\times4} = S_{1\times4}^+ + S_{1\times4}^- \qquad\qquad (96)$$

where

$$S_{1\times4}^+ = \frac{1}{2} A_1 A_4 \cos\!\left(2\pi v t + \vartheta_{1\times4}\right) \qquad\qquad (97)$$

$$S_{1\times4}^- = \frac{1}{2} A_1 A_4 \cos\!\left(2\pi F t + \Phi_{1\times4}\right) \qquad\qquad (98)$$

$$\vartheta_{1\times4} = \left(\varphi_1 + \varphi_4\right) \qquad\qquad (99)$$

$$\Phi_{1\times4} = \left(\varphi_1 - \varphi_4\right) \tag{100}$$

The superheterodyne signal $S_{1\times4}$ therefore comprises two sidebands, $S_{1\times4}^+$ and $S_{1\times4}^-$, of equal amplitude, one sideband with frequency $v$ and phase $\vartheta_{1\times4}$ and a second sideband with frequency $F$ and phase $\Phi_{1\times4}$.

In a next step, the sidebands $S_{1\times4}^+$ and $S_{1\times4}^-$ are separated by electronic processor **1093H** through high pass and low pass filtering or any of the like techniques for separating two signals that are separated in frequency. As noted in the discussion of electronic processor **1093G,** the frequency $F$ of the lower frequency sideband of superheterodyne signal $S_{1\times4}$ can be very much smaller than the frequency $v$ of the higher frequency sideband of superheterodyne signal $S_{1\times4}$, considerably simplifying the separating task of processor **1093H.** Electronic process **209A** further comprises processor **1094I** to determine the phases $\vartheta_{1\times4}$ and $\Phi_{1\times4}$ using time-based phase detection such as a digital Hilbert transform phase detector (see Best *ibid.*; Oppenheim and Schafer, *ibid.*) or the like and the phases of the drivers 5 and 6.

Subsequently, the phases $\vartheta_{1\times3}$ and $\vartheta_{1\times4}$ are added together in electronic processor **1096D,** by an analog or digital process, and phases $\Phi_{1\times3}$ and $\Phi_{1\times4}$ are subtracted one from the other in electronic processor **1097C,** by an analog or digital process, preferably a digital process, to create the phases $2\vartheta_{1G}$ and $2\Phi_{1G}$, respectively. Formally,

$$\vartheta_{1G} = \frac{\left(\Phi_{1\times3} + \Phi_{1\times4}\right)}{2} = \left[\varphi_1 + \frac{\left(\varphi_3 + \varphi_4\right)}{2}\right] \tag{101}$$

$$\Phi_{1G} = \frac{\left(\Phi_{1\times3} - \Phi_{1\times4}\right)}{2} = \left[\varphi_1 - \frac{\left(\varphi_3 + \varphi_4\right)}{2}\right] \tag{102}$$

Note from Eqs. (101) and (102) that $\vartheta_{1G}$ and $\Phi_{1G}$ are not sensitive to tilts of either reflecting surfaces **95** or **96** and insensitive to thermal and mechanical disturbances that may occur in the interferometer beam splitting cubes and associated optical components as a consequence of the use of differential plane mirror interferometers.

Electronic processor **209A,** and shown in FIG. **2e,** comprises electronic processor **1094C** to determine phase $\varphi_1$ from heterodyne signal $s_1$ using time-based phase sensitive detection with reference signal **101** or the like. Phases $\varphi_1$, $\vartheta_{1G}$, and $\Phi_{1G}$ are transmitted, preferably in digital format, to computer **110** as signal **105** for the calculation of $\Gamma$.

The reciprocal dispersive power r of the gas defined by Eq. (23) can be expressed in terms of other quantities obtained in the variant of the second embodiment by Eqs. (26), (27), (83), (84), (85), and (86) with

$$\varphi_1 = \Phi_{1\times I1} \quad ,$$
$$\varphi_{I1} = 0 \quad , \quad \varphi_{I2} = 0 \quad , \tag{103}$$
$$l_1 = p_1 \quad , \quad l_2 = p_2 \quad .$$

The remaining discussion of the variant of the second embodiment is the same as corresponding portions of the descriptions given for the second embodiment.

The principal advantage of the variant of the second embodiment is an option for the execution of critical electronic processing steps, such as the determination of phases $\Phi_{1\times3}$ and $\Phi_{1\times4}$ at substantially identical frequencies, frequencies low compared to the frequencies of heterodyne signals $s_1$, $s_3$, and $s_4$ which are also substantially identical, with a simplified electronic processing in relation to that of the first embodiment and variant thereof and of the second embodiment without the risk of possibly enhancing frequency sensitive phase offset errors due to differences in group delays experienced by heterodyne and/or modified heterodyne signals having significantly different frequencies. The discussion of the effects of group delay for the variant of the second embodiment is the same as corresponding portions of the description given for the second embodiment.

Reference is now made to FIGS. **3a-3d** which depict in diagrammatic form the third preferred embodiment of the present invention from the first group of preferred embodiments for measuring the reciprocal dispersive power or other intrinsic optical properties of a gas, particularly its reciprocal dispersive power where the end use application substantially does not effect the choice of the particular manner in which the intrinsic optical properties of the gas are determined and where the stability of the adopted light sources is sufficient and the ratio of the wavelengths of the light beams generated by the adopted light sources are matched to a known ratio value to a relative precision sufficient to meet the required precision imposed on the output data by the final end use application. The third embodiment uses a configuration of differential plane mirror interferometers different from the configuration of differential plane mirror interferometers used in the first and second embodiments and variants thereof. The configuration of differential plane mirror interferometers in the third embodiment has the effect, as for the second embodiment and variant thereof, of producing a different number of multiple passes through a measurement path at one wavelength relative to the number of multiple passes through the measurement path for a second wavelength. The primary difference between the third embodiment and the first and second embodiments lies in a relatively more complicated system of differential plane mirror interferometers and generally a reduced number of elements in the signal processor.

The description of the sources of light beams **9** and **10** and of light beams **9** and **10** for the third embodiment is the same as that for description of the sources of light beams **9** and **10** and of light beams **9** and **10** given for the first preferred embodiment of the present invention.

As illustrated in FIG. **3a,** beam **9** is reflected by mirror **53** becoming beam **11** and beam **10** is reflected by mirror **54** becoming beam **12.** Beam **11** is incident on differential plane mirror interferometer **169** and beam **12** is incident on differential plane mirror interferometer **70**, differential plane mirror interferometer **70** of the third embodiment being the same as differential plane mirror interferometer **70** depicted in FIGS. **1a** and **1c** for the first preferred embodiment. Beams for which the first frequency component of beam **11** is the sole progenitor are indicated in FIGS. **3b** and **3c** by dashed lines and beams for which the second frequency component of beam **11** is the sole progenitor are indicated in FIGS. **3b** and **3c** by dotted lines. Differential plane mirror interferometers **169** and **70** with external mirrors furnished by measurement cell **90** comprise interferometric means for introducing a phase shift $\varphi_5$ between the $x$ and $y$ components of beam **11** and a phase shift $\varphi_2$ between the $x$ and $y$ components of beam **12.**

Differential plane mirror interferometer **169** has eight exit/return beams, four exit/return beams **217, 225, 317,** and **325** as shown in FIG. **3b** and four exit/return beams **233, 241, 333,** and **341** as shown in FIG. **3c.** Beams **217, 225, 233,** and **241** originating from one frequency component of beam **11** comprise one measurement leg and beams **317, 325, 333,** and **341** originating from a second frequency component of beam 11 comprise a second measurement leg. Beams **217, 225, 233, 241, 317, 325, 333,** and **341** are incident on measurement cell **90,** as illustrated in FIGS. **3b** and **3c,** which results in beams **243** and **343.** The description of the propagation of beams **217, 225, 233,** and **241** in measurement cell **90** is the same as corresponding portions of descriptions given for the propagation of beams **17, 25, 33,** and **41,** respectively, in measurement cell **90** for the first preferred embodiment. Similarly, the description of the propagation of beams **317**, **325, 333,** and **341** in measurement cell **90** is the same as corresponding portions of descriptions given for the propagation of beams **17, 25, 33,** and **41,** respectively, in measurement cell **90** for the first preferred embodiment. Beam **243** and **343** contain information at wavelength $\lambda_1$ about optical path lengths through the gas whose reciprocal dispersive power r is to be determined and about optical path lengths through a vacuum, respectively.

The description of differential plane mirror interferometer **70** and the propagation of beams in differential plane mirror interferometer **70** is the same as that given for corresponding portions of the descriptions of differential plane mirror interferometer **70** and the propagation of beams in differential plane mirror interferometer **70** of the first embodiment shown in FIG. **1b.**

Beams **18, 26, 118,** and **126** are incident on measurement cell **90,** which results in beams **28** and **128,** the same as illustrated for the first embodiment in FIGS. **1c** and **1e.** Beams **28** and **128** contain information at wavelength $\lambda_2$ about the optical path length through the gas whose reciprocal dispersive power is to be determined and about the optical path length through a vacuum, respectively.

The magnitude of phase shifts $\varphi_5$ and $\varphi_2$ are related to $L_i$ the round-trip physical length of path $i$ of measurement path **97** or reference path **98** the same as shown in FIGS. **1d** and **1e** for the first embodiment according to the formulae

$$\varphi_5 = \sum_{i=1}^{i=p_1} k_1 \left( L_{G,j} n_{1i} - L_{V,j} \right) + \zeta_5$$

$$\varphi_2 = \sum_{i=1}^{i=p_2} k_2 \left( L_{G,j} n_{2i} - L_{V,j} \right) + \zeta_2 \quad,$$

(104)

where the illustrations in FIGS. **3b, 3c,** and **1c,** as used in reference to the third embodiment, is for $p_1$=4 and $p_2$=2 so as to illustrate in the simplest manner the function of the invention in the third preferred embodiment.

Cyclic errors that produce nonlinearities in distance measuring interferometry (*cf.* the cited articles by Bobroff) have been omitted in Eqs. (104). Techniques known to those skilled in the art can be used to either reduce the cyclic errors to negligible levels or compensate for the presence of cyclic errors, techniques such as using separated beams in the interferometer and/or separated beams in the delivery system for light beams from each light beam source to the interferometer (Tanaka, Yamagami, and Nakayama, *ibid.*).

The operation of differential plane mirror interferometer **169** depicted in FIGS. **3b** and **3c** is the same as the operation described for differential plane mirror interferometer **69** except for the means used to separate the two frequency components of input beam **11** and the means used to create the mixed output beam **345.** Referring to FIG. **3b,** a first portion of beam **11** is reflected by beam splitter **55A,** preferably a polarizing beam splitter, reflected by mirror **55B,** transmitted by half-wave phase-retardation plate **79A,** transmitted by beam splitter **61C,** preferably a polarizing beam splitter, transmitted by Faraday rotator **179B,** and transmitted by half-wave phase-retardation plate **79D** to become beam **313.** The Faraday rotator **179B** and the half-wave phase-retardation plate **79D** rotate the plane of polarization of transmitted beams by $\pm 45°$ and $\pm 45°$, respectively, producing no net rotation of the plane of polarization of transmitted beams.

A second portion of beam **11** is transmitted by beam splitter **55A,** transmitted by beam splitter **61A,** preferably a polarizing beamsplitter, transmitted by Faraday rotator **179A,** and transmitted by half-wave phase-retardation plate **79C** to become beam **213.** The Faraday rotator **179A** and the half-wave phase-retardation plate **79C** rotate the plane of polarization of transmitted beams by $\pm 45°$ and $\pm 45°$, respectively, producing no net rotation of the plane of polarization of transmitted beams. Half-wave phase-retardation plate **79** rotates the plane of polarization of transmitted beam by 90° so that beams **213** and **313** have the same polarizations but have different frequencies. The purpose of the Faraday rotators **179A** and **179B** and the half-wave phase-retardation plates **79C** and **79D** is to have substantially no effect on the properties of beams **213** and **313** but to rotate the polarizations of beams **243** and **343** by 90° so as to achieve an efficient spatial separation of beams **243** and **343** from the path of beam **11.**

Referring to FIG. **3c,** beam **243** is transmitted by half-wave phase retardation plate **79C** and Faraday rotator **179A,** reflected by beam splitter **61A,** transmitted by beam splitter **61B,** and then reflected by mirror **63** to become a first component of phase shifted beam **345.** Half-wave phase retardation plate **79C** and Faraday rotator **179A** each rotate the polarization of beam **243** by 45° so that the first component of phase shifted beam **345** is orthogonally polarized to the polarization of beam **243.** Beam splitter **61A** is preferably a polarizing beam splitter and beam splitter **61B** is preferably a nonpolarizing beam splitter. Beam **343** is transmitted by half-wave phase-retardation plate **79D** and Faraday rotator **179B,** reflected by beam splitter **61C,** reflected by mirror **61D,** reflected by beam splitter **61B,** and then reflected by mirror **63** to become a second component of phase shifted beam **345.** Half-wave phase-retardation plate **79D** and Faraday rotator **179B** each rotate the polarization of beam **343** by 45° so that the second component of phase shifted beam **345** is orthogonally polarized to the polarization of beam **343.** Beam splitter **61C** is preferably a polarizing beam splitter. Phase shifted beam **345** is a mixed beam, the first and second components of phase shifted beam **345** having the same polarizations but different frequencies.

Beam **28** and beam **128** are combined to form beam **130,** the same as described for the corresponding portion of the first embodiment. Beam **130** exits differential plane mirror interferometer **70** as a mixed beam, the first and second components of beam **130** having the same linear polarizations.

In a next step as shown in FIG. **3a,** phase-shifted beams **345** and **130** impinge upon photodetectors **185** and **86,** respectively, resulting in two interference signals, heterodyne signals $s_5$ and $s_2$, respectively, preferably by photoelectric detection. The signal $s_5$ corresponds to wavelength $\lambda_1$ and signal $s_2$ corresponds to the wavelength $\lambda_2$. The signals $s_j$ have the form expressed by Eq. (3) with time-dependent arguments $\alpha_j(t)$ of the form expressed by Eq. (4) except $j$ = 5 and 2 instead of 1 and 2, respectively. Heterodyne signals $s_5$ and $s_2$ are transmitted to electronic processor **309** for analysis as electronic signals **203** and **104,** respectively, in either digital or analog format.

A preferred method for electronically processing the heterodyne signals $s_5$ and $s_2$ is presented herewithin for the case when $l_1$ and $l_2$ are not low order integers. For the case when $l_1$ and $l_2$ are low order integers and the ratio of the wavelengths matched to the ratio $(l_1/l_2)$ with a relative precision sufficient to meet the required precision imposed on the output data by the end use application, the preferred procedure for electronically processing the heterodyne signals $s_5$ and $s_2$ is the same as the one subsequently set down for the variant of the third preferred embodiment of the present invention.

The phases $\varphi_5$ and $\varphi_2$ of signals $s_5$ and $s_2$, respectively, are obtained preferably by application of superheterodyne receiver techniques wherein the frequencies of signals $s_5$ and $s_2$ are shifted to frequencies substantially lower than $f_1$ and $f_2$ where conditions are generally more favorable for high precision phase measurements.

Referring now to FIG. **3d,** electronic processor **309** preferably is comprised of alphameric numbered elements wherein the numeric component of the alphameric numbers indicate the function of an element, the same numeric component/function association as described for the electronic processing elements of the first embodiment depicted in FIG. **1f.** The description of the steps in processing of the heterodyne signals $s_5$ and $s_2$ by electronic processor **309** is the same as corresponding portions, according to the numeric component of the alphameric numbers of elements, of the descriptions of steps in the processing of the heterodyne signals $s_1$ and $s_2$ of the first embodiment by electronic processor 109. The processing of the heterodyne signals $s_5$ and $s_2$ by electronic processor **309** creates two sideband phases $\Phi_{5\times I1}$ and $\Phi_{2\times I2}$ where

$$\Phi_{5 \times I1} = \left( \varphi_5 - \varphi_{I1} \right)$$

$$\Phi_{2 \times I2} = \left( \varphi_2 - \varphi_{I2} \right) \quad , \tag{105}$$

and $\varphi_{I1}$ and $\varphi_{I2}$ are phase offset errors [*cf.* Eqs. (5)].

Referring again to FIG. **3d,** phases $\Phi_{5\times I1}$ and $\Phi_{2\times I2}$ are multiplied by $(l_1/p_1)$ and $(l_2/p_2)$, respectively, in electronic processors **1095E** and **1095B,** respectively, resulting in phases $(l_1/p_1)\Phi_{5\times I1}$ and $(l_2/p_2)\Phi_{2\times I2}$. The phases $(l_1/p_1)\Phi_{5\times I1}$ and $(l_2/p_2)\Phi_{2\times I2}$ are next added together in electronic processor **1096E** and subtracted one from the other in electronic processor **1097D,** by analog or digital processes, to create the phases $\vartheta_{1G}$ and $\Phi_{1G}$, respectively. Formally,

$$\vartheta_{1G} = \left( \frac{l_1}{p_1} \Phi_{5 \times I1} + \frac{l_2}{p_2} \Phi_{2 \times I2} \right) \tag{106}$$

$$\Phi_{1G} = \left( \frac{l_1}{p_1} \Phi_{5 \times I1} - \frac{l_2}{p_2} \Phi_{2 \times I2} \right) \quad . \tag{107}$$

Note from Eqs. (106) and (107) that $\vartheta_{1G}$ and $\Phi_{1G}$ are not sensitive to tilts of either reflecting surfaces **95** or **96** of measurement cell **90** and insensitive to thermal and mechanical disturbances that may occur in the interferometer beam splitting cubes and associated optical components as a consequence of the use of differential plane mirror interferometers.

The reciprocal dispersive power $\Gamma$ of the gas defined by Eq. (23) can be expressed in terms of other quantities obtained in the third embodiment by a formulae

$$(n_1 - 1) = \frac{1}{(\chi + K)L_G} \left( \frac{l_1}{p_1} \right) \left[ \Phi_{5 \times I1} - \left( \zeta_5 - \varphi_{I1} \right) \right] - \frac{(L_G - L_V)}{L_G} \tag{108}$$

$$(n_2 - n_1)_{1G} = \frac{1}{\chi L_G \left[1 - (K/\chi)^2\right]} \left\{ \left[\vartheta_{1G}(K/\chi) - \Phi_{1G}\right] - \left[\xi(K/\chi) - Z\right] \right\} \qquad (109)$$

where $\chi$ and $K$ are given by Eqs. (26) and (27), respectively, and $\xi$ and $Z$ are given by

$$\xi = \left[\frac{l_1}{p_1}(\zeta_5 - \varphi_{I1}) + \frac{l_2}{p_2}(\zeta_2 - \varphi_{I2})\right] \qquad (110)$$

$$Z = \left[\frac{l_1}{p_1}(\zeta_5 - \varphi_{I1}) - \frac{l_2}{p_2}(\zeta_2 - \varphi_{I2})\right] \qquad (111)$$

Eq. (109) is valid for the case where the paths for the two different wavelengths are substantially coextensive, a case chosen to illustrate in the simplest manner the function of the invention in the second embodiment. To those skilled in the art, the generalization to the case where paths for the two different wavelengths are not substantially coextensive is a straight forward procedure.

The remaining description of the third embodiment is the same as corresponding portions of the description given for the first and second embodiments.

Reference is now made to FIGS. **3a-3c** and **3e** which taken together depict in diagrammatic form a variant of the third preferred embodiment of the present invention for measuring intrinsic optical properties of a gas, particularly its reciprocal dispersive power where the end use application substantially does not effect the choice of the particular manner in which the intrinsic optical properties of the gas are determined and where the stability of the adopted light sources is sufficient and the wavelengths of the light beams generated by the adopted light sources are harmonically related to a relative precision sufficient to meet the required precision imposed on the output data by the final end use application. The condition wherein the wavelengths are approximately harmonically related corresponds to the special case of the first embodiment in which the ratio $(l_1/l_2)$ is expressible as the ratio of low order non-zero integers $(p_1/p_2)$, *cf.* Eq. (35).

The description of the sources of light beams **9** and **10** and of light beams **9** and **10** for the variant of the third embodiment is the same as that for description of the sources of light beams **9** and **10** and of light beams **9** and **10** given for the first embodiment with the additional requirement that the wavelengths be harmonically related to a relative precision sufficient to meet the required precision imposed on the output data by the final end use application. The description of the apparatus for the variant of the third embodiment depicted in FIGS. **3a-3c** is the same as corresponding portions of the description given for the third embodiment for the case where $p_1 = 4$ and $p_2 = 2$.

Referring to FIG. **3e**, electronic processing means **309A** preferably comprises means **1092K** for electronically mixing the two heterodyne signals $s_5$ and $s_2$ to create a superheterodyne signal $S_{5\times2}$ having the mathematical form

$$S_{5\times2} = s_5 s_2 \qquad (112)$$

The superheterodyne signal $S_{5\times2}$ is comprised of two sidebands with a suppressed carrier and may be rewritten as

$$S_{5\times2} = S_{5\times2}^{+} + S_{5\times2}^{-} \qquad\qquad (113)$$

where

$$S_{5\times2}^{+} = \frac{1}{2} A_5 A_2 \cos\left(2\pi\nu t + \vartheta_{1G}\right) \qquad\qquad (114)$$

$$S_{5\times2}^{-} = \frac{1}{2} A_5 A_2 \cos\left(2\pi F t + \Phi_{1G}\right) \qquad\qquad (115)$$

and

$$\nu = \left(f_1 + f_2\right) \qquad\qquad (116)$$

$$\vartheta_{1G} = \left(\varphi_5 + \varphi_2\right) \qquad\qquad (117)$$

$$F = \left(f_1 - f_2\right) \qquad\qquad (118)$$

$$\Phi_{1G} = \left(\varphi_5 - \varphi_2\right) \qquad\qquad (119)$$

The superheterodyne signal $S_{5\times2}$ is therefore comprised of two sidebands, $S_{5\times2}^{+}$ and $S_{5\times2}^{-}$, of equal amplitude, one sideband with frequency $\nu$ and phase $\vartheta_{1G}$ and a second sideband with frequency $F$ and phase $\Phi_{1G}$.

In a next step, the sidebands $S_{5\times2}^{+}$ and $S_{5\times2}^{-}$ are separated by electronic processor **1093J** through high pass and low pass filtering or any of the like techniques for separating two signals that are separated in frequency. The frequency $F$ of the lower frequency sideband of the superheterodyne signal can be very much smaller than the frequency $\nu$ of the higher frequency sideband of the superheterodyne signal as described in the corresponding portion of the discussion of the first embodiment, considerably simplifying the separating task of processor **1093I**. Electronic processor **209A** further comprises electronic processors **1094L** and **1094M** to determine the phases $\vartheta_{1G}$ and $\Phi_{1G}$, respectively, using time-based phase detection such as a digital Hilbert transform phase detector (see R. E. Best, ibid.; Oppenheim and Schafer, ibid.) or the like and the phases of the drivers 5 and 6.

Electronic processor **309A**, and shown in FIG. **3e**, is comprised of electronic processor **1094K** to determine

phase $\varphi_5$ from heterodyne signal $s_5$ using time-based phase sensitive detection with reference signal **101** or the like. Phases $\varphi_5$, $\vartheta_{1G}$, and $\Phi_{1G}$ are transmitted, in digital or analog format, preferably a digital format, to computer **110** as signal **105** for the calculation of r.

The reciprocal dispersive power r of the gas defined by Eq. (23) can be expressed in terms of other quantities obtained in the variant of the third embodiment by formulae which correspond to Eqs. (108), (109), (110), and (111) with

$$\varphi_5 = \Phi_{5 \times I1} \quad ,$$
$$\varphi_{I1} = 0 \quad , \quad \varphi_{I2} = 0 \quad , \qquad (120)$$
$$l_1 = p_1 \quad , \quad l_2 = p_2 \quad .$$

The remaining description of the variant of the third embodiment is the same as corresponding portions of the description given for the third embodiment of the present invention. '

The principal advantage of the variant of the third embodiment is an option for the execution of critical electronic processing steps, such as the mixing of signals $s_5$ and $s_2$, which are also substantially identical, with a simplified electronic processing in relation to that of the first embodiment and variant thereof and of the second embodiment without the risk of possibly enhancing frequency sensitive phase offset errors due to differences in group delays experienced by heterodyne and/or modified heterodyne signals having significantly different frequencies. The discussion of the effects of group delay for the variant of the third embodiment is the same as corresponding portions of the description given for the third embodiment.

The second group of preferred embodiments of the present invention represent preferred modes for the determination of intrinsic optical properties such as r for a subsequent downstream use wherein the properties of the subsequent downstream use effects the choice of the particular manner in which the intrinsic optical properties are determined. An example of a downstream use with such properties is found in distance measuring interferometry wherein dispersion interferometry is used to obtain a measurement of $(n_2-n_1)$ as a proxy for the column density of a gas in a measuring path and using the measured value of $(n_2-n_1)$ for making a correction for the gas present in the measuring path.

The distinction between the first group of preferred embodiments and the second group of preferred embodiments with respect to r, for example, is in the particular manner in which the denominator $(n_2-n_1)$ is obtained for use in the calculation of r according to Eq. (23). For the first group of preferred embodiments, a measurement of the respective denominator, $(n_2-n_1)_{1G}$, is obtained as a difference of two refractivities, $(n_2-1)$ and $(n_1-1)$ [*cf.* Eqs. (2)]. For the second group of preferred embodiments, the respective denominator, $(n_2-n_1)_{2G}$, is obtained as the difference of two measured indices of refraction $n_2$ and $n_1$. In distance measuring interferometry wherein dispersion interferometry is used to obtain as a proxy $(n_2-n_1)$ for the gas column density in a measuring path, the proxy, $(n_2-n_1)_{DMI}$, is also obtained as the difference of two measured indices of refraction $n_2$ and $n_1$. As a consequence, the measured ratio of $(n_2-n_1)_{DMI}$ and $(n_2-n_1)_{2G}$ is substantially independent of errors in measured values of wavelengths $\lambda_2$ and $\lambda_1$ for the lower spatial frequency components of $(n_2-n_1)$ whereas the measured ratio of $(n_2-n_1)_{DMI}$ and $(n_2-n_1)_{1G}$ in general is not independent of errors in measured values of wavelengths $\lambda_2$ and $\lambda_1$ for any part of the spectrum of spatial frequency components of $(n_2-n_1)$. The substantially null sensitivity of the measured ratio of $(n_2-n_1)_{DMI}$ and $(n_2-n_1)_{2G}$ to errors in measured values of $\lambda_2$ and $\lambda_1$ for the lower spatial frequency components of $(n_2-n_1)$ is discussed further in the description of the fourth preferred embodiment and can lead to a significant advantage in precision distance measuring interferometry such as required in microlithography.

Reference is now made to FIGS. **4a-4f** which depict in diagrammatic form the fourth preferred embodiment of the present invention, from the second group of preferred embodiments, for measuring intrinsic optical properties of a gas, particularly its reciprocal dispersive power r, where the end use application effects the choice of the particular manner in which the intrinsic optical properties of the gas are determined and where the stability of the adopted light sources is sufficient and the ratio of the wavelengths of the light beams generated by the adopted light sources is matched to a known ratio value with a relative precision sufficient to meet the required precision imposed on the output data by the final end use application. The configuration of differential plane mirror interferometers in the fourth embodiment permits measurement of a refractivity $(n_1-1)$ for use as the numerator and a measurement of $(n_2-n_1)_{2G}$ equivalent to a measurement of $(n_2-n_1)$ as a difference of two measured indices of refraction $n_2$ and $n_1$ for use as the denominator of Eq. (23) in the calculation of r.

The description of the sources of light beams **9** and **10** and of light beams **9** and 10 for the fourth embodiment is the same as that for description of the sources of light beams **9** and **10** and of light beams **9** and **10** given for the first preferred embodiment.

Referring to FIG. **4a,** beam **9** is reflected by mirror **53** becoming beam 11. Beam 10 is reflected by a mirror **54** as beam **212.** Beam **11** is incident on differential plane mirror interferometer group **269** and beam **212** is incident on differential plane mirror interferometer **270.** Differential plane mirror interferometer group 269 and differential plane mirror interferometer **270** with external mirrors furnished by measurement cell **90** comprise interferometric means for introducing a phase shift $\varphi_1$ between a first portion of the $x$ and $y$ components of beam **11,** a phase shift $\varphi_6$ between a second portion of the $x$ and $y$ components of beam **11,** and a phase shift $\varphi_7$ between the $x$ and $y$ components of beam **212.**

Referring to FIG. **4b,** a portion of beam **11** is transmitted by beam splitter **55A,** preferably a polarizing type, as beam **13** and a second portion of beam **11** is reflected by beam splitter **55A** which impinges on beam splitter **55C,** preferably a nonpolarizing type. A first portion of the second portion of beam **11** is reflected by beam splitter **55C** and than transmitted by half-wave phase retardation plate **79** as beam **113.** A second portion of the second portion of beam **11** is transmitted by beam splitter **55C,** reflected by mirror **55D,** and than transmitted by half-wave phase retardation plate **79** as beam **1113.** The half-wave phase retardation plate **79** is orientated so as to rotate the planes of polarizations of the first and second portions of the second portion of beam **11** by 90 degrees so that beams **13,** **113,** and **1113** have the same polarizations. However, beam **13** has a frequency different from the frequencies of beams **113** and **1113,** the frequencies of beams **113** and **1113** being the same. Beams for which the first frequency component of beam **11** is the sole progenitor are indicated in FIG. **4b** by dashed lines and beams for which the second frequency component of beam **11** is the sole progenitor are indicated in FIG. **4b** either by dotted lines or by lines of alternating dots and dashes.

Differential plane mirror interferometer group 269 comprises many of the same elements as differential plane mirror interferometer **69** of the first embodiment, like numbered elements in the two differential plane mirror interferometers performing like functions. Many of the beams shown in **FIG**. 4b for differential plane mirror interferometer group **269** have the same properties as beams shown in FIG. **1b** for differential plane mirror interferometer **69,** like numbered beams in the two differential plane mirror interferometers having like properties. Further, the beams shown in FIG. **4b** for differential plane mirror interferometer group **269** with numbers of (1000+N) have the same properties as beams with numbers N shown in FIG. 1b for differential plane mirror interferometer **69** except for the lengths of the corresponding reference paths in the vacuum path **98** have nominal values of zero (*cf*. FIG. **4d**). Beams **27,** **127,** and **1127** created by differential plane mirror interferometer **269** and measurement cell **90** (cf. FIG. **4b**) contain information at wavelength $\lambda_1$ about the optical path length through the gas whose reciprocal dispersive power is to be determined, about the optical path length through a vacuum, and about an optical path length of zero length, respectively.

With reference to FIG. **4b,** a first portion of beam **27** is transmitted by beam splitter **63C,** preferably a nonpolarizing type, and reflected by mirror **63B** and a portion of the first portion of beam **27** is reflected by beamsplitter **63A,** preferably a nonpolarizing type, to become one component of beam **129.** A portion of beam **127** is transmitted by beam splitter **63A** to become a second component of beam **129.** Beam **129** exits differential plane mirror interferometer group **269** as a mixed beam, the first and second components of beam **129** having the same linear polarizations with different frequencies. A second portion of beam **27** is reflected by beam splitter **63C** and a portion of the second portion of beam **27** is reflected by beamsplitter **63D,** preferably a nonpolarizing type, to become one component of beam **1129.** A portion of beam **1127** is transmitted by beam splitter **63D** to become a second component of beam **1129.** Beam **1129** exits differential plane mirror interferometer group **269** as a mixed beam, the first and second components of beam **1129** having the same linear polarizations with different frequencies.

Differential plane mirror interferometer **270** shown in FIG. **4c** comprises many of the same elements as differential plane mirror interferometer **70** of the first embodiment, like numbered elements of the two differential plane mirror interferometers performing like functions. Many of the beams shown in FIG. **4c** for differential plane mirror interferometer **270** have the same properties as beams shown in FIG. **1c** for differential plane mirror interferometer **70,** like numbered beams of the two differential plane mirror interferometers having like properties. Further, the beams shown in **FIG. 4c** for differential plane mirror interferometer **270** with numbers of (1000+N) have the same properties as beams with numbers N shown in FIG. **1c** for differential plane mirror interferometer **70** except for the lengths of the corresponding reference paths in vacuum path **98** have nominal values of zero. Beams **28** and **1128** created by differential plane mirror interferometer **270** and measurement cell **90** contain information at wavelength $\lambda_2$ about the optical path length through the gas whose reciprocal dispersive power is to be determined and about a reference path with an optical path length of zero length, respectively.

With reference to FIG. **4c,** beam **28** is reflected by mirror **64B** and a portion of beam **28** reflected by beam splitter **64A,** preferably a nonpolarizing type, to become one component of beam **1130.** A portion of beam **1128** is transmitted by beam splitter **64A** to become a second component of beam **1130.** Beam **1130** exits differential plane mirror interferometer **270** as a mixed beam, the first and second components of beam **1130** having the same linear polarizations with different frequencies.

The magnitude of phase shifts $\varphi_1$, $\varphi_6$, and $\varphi_7$ are related to the $L_i$ the round-trip physical length of path $i$ of measurement path **97**, reference path **98**, or a reference path of zero physical length as shown in FIG. **4d** according to the formulae

$$\varphi_1 = \sum_{i=1}^{i=p} k_1 \left( L_{G,i} n_{1i} - L_{V,i} \right) + \zeta_1$$

$$\varphi_6 = \sum_{i=1}^{i=p} k_1 L_{G,i} n_{1i} + \zeta_6 \quad , \qquad\qquad (121)$$

$$\varphi_7 = \sum_{i=1}^{i=p} k_2 L_{G,i} n_{2i} + \zeta_7 \quad ,$$

where the index of refraction in the reference path **98** has been set to 1. The illustrations in FIGS. **4b** and **4c** are for $p=2$ so as to illustrate in the simplest manner the function of the invention in the fourth embodiment. To those skilled in the art, the generalization to the case when $p \neq 2$ is a straight forward procedure.

Cyclic errors that produce nonlinearities in distance measuring interferometry (*cf.* the cited articles by Bobroff) have been omitted in Eqs. (121). Techniques known to those skilled in the art can be used to either reduce the cyclic errors to negligible levels or compensate for the presence of cyclic errors, techniques such as using separated beams in the interferometer and/or separated beams in the delivery system for light beams from each light beam source to the interferometer (Tanaka, Yamagami, and Nakayama, *ibid.*).

In a next step as shown in FIG. **4a,** phase-shifted beams **129**, **1129**, and **1130** impinge upon photodetectors **85**, **1085**, and **1186**, respectively, resulting in three interference signals, heterodyne signals $s_1$, $s_6$, and $s_7$, respectively, preferably by photoelectric detection. The signals $s_1$ and $s_6$ correspond to wavelength $\lambda_1$ and signal $s_7$ corresponds to wavelength $\lambda_2$. The signals $s_j$ have the form

$$s_j = A_j \cos\left[ \alpha_j(t) \right] \quad , \qquad j = 1, 6, \text{ and } 7 \qquad\qquad (122)$$

where the time-dependent arguments $\alpha_j(t)$ are given by

$$\alpha_1(t) = 2\pi f_1 t + \varphi_1 \quad ,$$

$$\alpha_6(t) = 2\pi f_1 t + \varphi_6 \quad , \qquad\qquad (123)$$

$$\alpha_7(t) = 2\pi f_2 t + \varphi_7 \quad .$$

Heterodyne signals $s_1$, $s_6$, and $s_7$ are transmitted to electronic processor **409** for analysis as electronic signals **103**, **1103**, and **1104**, respectively, in either digital or analog format, preferably in digital format.

The phases of drivers **5** and **6** are transmitted by electrical signals, reference signals **101** and **102**, respectively, preferably in either digital format, to electronic processor **409.**

A preferred method for electronically processing the heterodyne signals $s_1$, $s_6$, and $s_7$ is presented herewithin for the case when $l_1$, and $l_2$ are not low order integers.

For the case when $l_1$ and $l_2$ are low order integers and the ratio of the wavelengths matched to the known ratio $(l_1/l_2)$ with a relative precision sufficient to meet the required precision imposed on the output data by the end use application, the preferred procedure for electronically processing the heterodyne signals $s_1$, $s_6$, and $s_7$ is the same as the one subsequently set down for the variant of the fourth preferred embodiment of the present invention.

The phases $\varphi_1$, $\varphi_6$, and $\varphi_7$ of signals $s_1$, $s_6$, and $s_7$, respectively, are obtained preferably by application of superheterodyne receiver techniques wherein the frequencies of signals $s_1$, $s_6$, and $s_7$ are shifted to frequencies substantially lower than respective frequencies $f_1$ and $f_2$ *[cf.* Eqs. (123)] where conditions are generally more favorable for high precision phase measurements.

Referring now to FIG. **4f**, electronic processor **409** preferably comprises alphameric numbered elements wherein the numeric component of the alphameric numbers indicate the function of an element, the same numeric component/ function association as described for the electronic processing elements of the first embodiment depicted in FIG. 1f. The heterodyne signals $s_1$ and $s_6$ of the fourth embodiment are each processed by the same sequence of electronic processing steps as signal $s_1$ of the first embodiment and $s_7$ of the fourth embodiment is processed by the same sequence of electronic processing steps as signal $s_2$ of the first embodiment. The results of that analysis as indicated in FIG. 4f are phases

$$\Phi_{1 \times I1} = \varphi_1 - \varphi_{I1}$$

$$\Phi_{6 \times I1} = \varphi_6 - \varphi_{I1} \qquad\qquad (124)$$

$$\Phi_{7 \times I2} = \varphi_7 - \varphi_{I2}$$

where $\varphi_{I1}$ and $\varphi_{I2}$ are defined in Eqs. (5).

Subsequently, the phases $\Phi_{6 \times I1}$ and $\Phi_{7 \times I2}$ are multiplied by $(l_1/p)$ and $(l_2/p)$, respectively, in electronic processors 1095F and 1095G, respectively. Next, the phases $(l_1/p)\Phi_{6 \times I1}$ and $(l_2/p)\Phi_{7 \times I2}$ are added together in electronic processor **1096F** and subtracted one from the other in electronic processor **1097E,** by analog or digital processes, preferably digital processes, to create the phases $\vartheta_{2G}$ and $\Phi_{2G}$, respectively. Formally,

$$\vartheta_{2G} = \left( \frac{l_1}{p} \Phi_{6 \times I1} + \frac{l_2}{p} \Phi_{7 \times I2} \right) \qquad\qquad (125)$$

$$\Phi_{2G} = \left( \frac{l_1}{p} \Phi_{6 \times I1} - \frac{l_2}{p} \Phi_{7 \times I2} \right) \qquad\qquad (126)$$

Note from Eqs. (125) and (126) that $\vartheta_{2G}$ and $\Phi_{2G}$ are not sensitive to tilts of either reflecting surfaces **95** or **96** of measurement cell **90** and insensitive to thermal and mechanical disturbances that may occur in the interferometer beam splitting cubes and associated optical components as a consequence of the use of differential plane mirror interferometers.

The refractivity $(n_1\text{-}1)$, the dispersion $(n_2\text{-}n_1)_{2G}$, and the wavenumber $k_1$ can be expressed in terms of other quantities obtained with the fourth embodiment by the formulae

$$(n_1 - 1) = \frac{1}{(\chi + K)L_G} \left( \frac{l_1}{p} \right) \left[ \Phi_{1 \times I1} - (\zeta_1 - \varphi_{I1}) \right] - \frac{(L_G - L_V)}{L_G} \qquad\qquad (127)$$

$$(n_2 - n_1)_{2G} = \frac{1}{\chi L_G[1 - (K/\chi)^2]}\{[\vartheta_{2G}(K/\chi) - \Phi_{2G}] - [\xi(K/\chi) - Z]\} \qquad (128)$$

$$k_1 = \frac{1}{pL_V}[(\Phi_{6\times11} - \Phi_{1\times11}) - (\zeta_6 - \zeta_1)] \qquad (129)$$

where $\chi$ and $K$ are given by Eqs. (26) and (27), respectively, and $\xi$ and $Z$ are given by

$$\xi = \frac{l_1}{p}(\zeta_6 - \varphi_{11}) + \frac{l_2}{p}(\zeta_7 - \varphi_{12}) \qquad (130)$$

$$Z = \frac{l_1}{p}(\zeta_6 - \varphi_{11}) - \frac{l_2}{p}(\zeta_7 - \varphi_{12}) \qquad . \qquad (131)$$

Eq. (128) is valid for the case where the paths for the two different wavelengths are substantially coextensive, a case chosen to illustrate in the simplest manner the function of the invention in the second embodiment. To those skilled in the art, the generalization to the case where paths for the two different wavelengths are not substantially coextensive is a straight forward procedure.

The ratio $(\lambda_1/\lambda_2)$ can be expressed from Eqs. (26) and (27) in terms of $(K/\chi)$ with the same result as given in Eq. (30). When operating under the condition

$$|K/\chi| \ll \frac{(n_2 - n_1)}{(n_2 + n_1)} \qquad (132)$$

the ratio of the phases $\Phi_{2G}$ and $\vartheta_{2G}$ has the approximate value

$$(\Phi_{2G}/\vartheta_{2G}) \cong -\frac{(n_2 - n_1)}{(n_2 + n_1)} \qquad (133)$$

Therefore, for the case where the ratio $(\lambda_1/\lambda_2)$ is the same as the known ratio $(l_1/l_2)$ to a relative precision of an order of magnitude or more less than the dispersion of the index of refraction of the gas, $(n_2-n_1)$, times the relative precision $\varepsilon$ desired for the measurement of the reciprocal dispersive power r, Eq. (128) reduces to the more simple form

$$\left(n_2 - n_1\right)_{2G} = \frac{1}{\chi L_G}\left(-\Phi_{2G} + Z\right) \tag{134}$$

The condition on the wavelengths $\lambda_1$ and $\lambda_2$ which leads to Eq. (134) expressed as an equation is

$$\left|\frac{\lambda_2}{\lambda_1} - \frac{l_2}{l_1}\right| \ll \left(\frac{l_2}{l_1}\right)(n_2 - n_1)\varepsilon \quad . \tag{135}$$

Eq. (135) represents a tighter restriction on acceptable departures of the ratio of the wavelengths from the known ratio $(l_2/l_1)$ as compared to the corresponding restriction for the first group of preferred embodiments expressed by Eq. (34). The basis for the tighter restriction is evident from examination of Eqs. (32) and (133) wherein a $\Gamma$ obtained by the first group of preferred embodiments is less sensitive to an error in $(K/\chi)$ relative to a r obtained by the fourth embodiment, a representative of the second group of preferred embodiments, by a factor equal to the ratio $(\Phi_{2G}/\vartheta_{2G})/(\Phi_{1G}/\vartheta_{1G})$ where

$$\frac{\left(\Phi_{2G}/\vartheta_{2G}\right)}{\left(\Phi_{1G}/\vartheta_{1G}\right)} = (2\Gamma + 1)\frac{\left(n_2 - n_1\right)}{\left(n_2 + n_1\right)} \quad . \tag{136}$$

$$\cong \left(n_1 - 1\right) \quad .$$

Thus the first group of preferred embodiments are the preferred group of embodiments in relation to the fourth embodiment for a determination of the reciprocal dispersive power $\Gamma$ with respect to sensitivity of the end use result to errors in $(K/\chi)$.
It was noted in the introductory paragraphs to the second group of preferred embodiments that when the end use application is in distance measuring interferometry wherein dispersion interferometry is used to obtain a measurement of $(n_2-n_1)$ as a proxy for the column density of a gas in a measuring path and using the measured value of $(n_2-n_1)$ for making a correction for the gas present in the measuring path, the fourth embodiment is preferred over the embodiments of the first group of preferred embodiments for the determination of $\Gamma$. The basis for the preceding statement follows from the properties expressed by Eqs. (32) and (133). The sensitivity of the ratio of $(n_2-n_1)_{DMI}$ and $(n_2-n_1)_{1G}$ to errors in $(K/\chi)$ is the same as expressed by Eq. (136). In contrast, the sensitivities of $(n_2-n_1)_{DMI}$ and $(n_2-n_1)_{2G}$, as obtained by the fourth embodiment, to errors in $(K/\chi)$ are substantially the same. As a consequence, the net sensitivity of the ratio of $(n_2-n_1)_{DMI}$ and $(n_2-n_1)_{2G}$, as obtained by the fourth embodiment, to errors in $(K/\chi)$ can be substantially reduced compared to the corresponding sensitivity of the ratio of $(n_2 - n_1)_{DMI}$ and $(n_2 - n_1)_{1G}$ to errors in $(K/\chi)$. To the extent that the net sensitivity of the ratio of $(n_2 - n_1)_{DMI}$ and $(n_2 - n_1)_{2G}$, as obtained by the fourth embodiment, to errors in $(K/\chi)$ is reduced to a value less than the corresponding sensitivity of the ratio of $(n_2 - n_1)_{DMI}$ and $(n_2 - n_1)_{1G}$ to errors in $(K/\chi)$, the second group of preferred embodiments is the preferred embodiment for the determination of r.
The degree of reduced net sensitivity of the ratio of $(n_2 - n_1)_{DMI}$ and $(n_2 - n_1)_{2G}$, as obtained by the fourth embodiment, to errors in $(K/\chi)$ will depend on the degree to which $(n_2 - n_1)_{DMI}$ and $(n_2 - n_1)_{2G}$ are spatially correlated, *i.e.* the greater the correlation, the greater the reduction of net sensitivity.
For the lower spatial frequency components of $(n_2 - n_1)$, the cross correlation coefficient between $(n_2 - n_1)_{DMI}$ and $(n_2 - n_1)_{2G}$ will be substantially one. The spatial frequency beyond which the cross correlation coefficient between $(n_2 - n_1)_{DMI}$ and $(n_2 - n_1)_{2G}$ will significantly deviate from the maximum value of one will be a function of the spatial separation of the apparatus of the distance measuring/dispersion interferometry and the apparatus of the fourth embodiment.
It will be evident to those skilled in the art that the condition on the wavelengths $\lambda_1$ and $\lambda_2$ as expressed Eq. (135) for the fourth embodiment will be relaxed by a factor related to one minus the cross correlation coefficient between $(n_2 - n_1)_{DMI}$ and $(n_2 - n_1)_{2G}$ for the end use application of distance measuring interferometry wherein dispersion interferometry is used to obtain a measurement of $(n_2 - n_1)$ as a proxy for the column density of a gas in a measuring path and the measured value of $(n_2 - n_1)$ is used for making a correction for the gas present in the measuring path.
In a next step, electronic processing means **409** transmits to the computer **110** $\Phi_{1\times I1}$, $\Phi_{6\times I1}$, $\vartheta_{2G}$, and $\Phi_{2G}$ as

electronic signal **105,** preferably in digital format, for the computation of $\Gamma$ according to Eq. (23) and Eqs. (127), (128), and (129) and the calculation of $k_1$ if required, substantially independent of fluctuations in the column density of the gas or turbulence of the gas in the measuring path **97** to the extent that measuring paths experienced by beams of differing wavelengths are coextensive, without knowledge of the gas constituents, without knowledge of the environmental conditions, and without knowledge of the properties of the refractivities of the gas constituents.

The remaining description of the fourth embodiment is the same as corresponding portions of the description given for the first embodiment of the present invention.

Reference is now made to FIGS. **4a-4e** and **4g** which taken together depict in diagrammatic form a variant of the fourth preferred embodiment of the present invention for measuring intrinsic optical properties of a gas, particularly its reciprocal dispersive power where the end use application effects the choice of the particular manner in which the intrinsic optical properties of the gas are determined and where the stability of the adopted light sources is sufficient and the wavelengths of the light beams generated by the adopted light sources are harmonically related to a relative precision sufficient to meet the required precision imposed on the output data by the final end use application. The condition wherein the wavelengths are approximately harmonically related corresponds to the special case of the fourth embodiment in which ratio $(l_1/l_2)$ is expressible as the ratio of low order non-zero integers $(p_1/p_2)$, *cf.* Eq. (35).

The description of the sources of light beams **9** and **10** and of light beams **9** and **10** for the variant of the fourth embodiment is the same as that for description of the sources of light beams **9** and **10** and of light beams **9** and **10** given for the first embodiment with the additional requirement that the wavelengths be harmonically related to a relative precision sufficient to meet required precision imposed on the output data by the final end use application. The description of the apparatus for the variant of the fourth embodiment depicted in FIGS. **4a-4e** is the same as corresponding portions of the description given for the fourth embodiment.

The phase information contained in phases $\varphi_1$, $\varphi_6$, and $\varphi_7$ is obtained in the variant of the fourth embodiment preferably through the creation of a superheterodyne signal wherein the frequency of the superheterodyne signal is at a frequency much lower than $f_1$ and $f_2$ where it is general possible to make more accurate phase measurements.

Referring now to FIG. **4g**, and in accordance with the preferred method of the variant of the fourth embodiment, electronic processor **409A** preferably comprises alphameric numbered elements wherein the numeric component of the alphameric numbers indicate the function of an element, the same numeric component/function association as described for the electronic processing elements of the first embodiment depicted in FIG. **1f**. As depicted in FIG. **4g**, the heterodyne signals $s_1$ and $s_6$ of the variant of the fourth embodiment are each processed by the same sequence of electronic processing steps as signal $s_1$ of the variant of the first embodiment and $s_6$ and $s_7$ of the variant of the fourth embodiment are processed by the same sequence of electronic processing steps as signal $s_2$ of the variant of the first embodiment, there being two separate sequences of electronic processing steps for $s_6$. The results of that analysis are $\varphi_1$, $\varphi_6$, $\tilde{\vartheta}_{2G}$, and $\tilde{\Phi}_{2G}$ where

$$\tilde{\vartheta}_{2G} = \left( p_1 \dot{\varphi}_6 + p_2 \dot{\varphi}_7 \right) \qquad (137)$$

$$\tilde{\Phi}_{2G} = \left( p_1 \dot{\varphi}_6 - p_2 \dot{\varphi}_7 \right) \qquad (138)$$

$\tilde{v}$ an $\tilde{F}$ are given by Eqs. (53) and (55), respectively.

In a next step, $\varphi_1$, $\varphi_6$, $\tilde{\vartheta}_{2G}$, and $\tilde{\Phi}_{2G}$ are transmitted, preferably in digital format, to computer 110 for computation of the refractivity $(n_1 - 1)$, dispersion $(n_2 - n_1)_{2G}$, $\Gamma$, and/or $k_1$. The quantities $\varphi_1$, $\varphi_6$, $p\tilde{\vartheta}_{2G}$, $p\tilde{\Phi}_{2G}$, $p\tilde{\xi}$, and $p\tilde{Z}$ of the variant of the fourth embodiment are formally equivalent to $\Phi_{1 \times l1}$, $\Phi_{6 \times l1}$, $\vartheta_{2G}$, $\Phi_{2G}$, $\xi$, and $Z$, respectively, of the fourth embodiment with $\varphi_{l1}$ and $\varphi_{l2}$ set equal to zero, $l_1 = p_1$, and $l_2 = p_2$. Thus, the refractivity $(n_1 - 1)$, dispersion $(n_2 - n_1)_{2G}$, and $k_1$ can be expressed in terms of the quantities measured by the variant of the fourth embodiment with Eqs. (127), (128), and (129), respectively, using the relationships cited in this paragraph, $\chi$ and $K$ given by Eqs. (26) and (27), respectively, $\varphi_{l1}$ and $\varphi_{l2}$ set equal to zero, $l_1 = p_1$, and $l_2 = p_2$. The remaining description of the variant of the fourth embodiment is the same as corresponding portions of the descriptions given for the fourth embodiment.

Reference is now made to FIGS. **5a-5d** which depict in diagrammatic form the fifth preferred embodiment of the present invention from the second group of preferred embodiments for measuring intrinsic optical properties of a gas, particularly its reciprocal dispersive power r, where the end use application effects the choice of the particular manner in which the intrinsic optical properties of the gas are determined and where the stability of the adopted light sources is sufficient and the ratio of the wavelengths of the light beams generated by the adopted light sources is matched to a known ratio value with a relative precision sufficient to meet the required precision imposed on the output data by the final end use application. The configuration of differential plane mirror interferometers in the fifth embodiment permits measurement of a refractivity $(n_1 - 1)$ for use as the numerator and a measurement of $(n_2 - n_1)_{2G}$ equivalent to a measurement of $(n_2 - n_1)$ as a difference of two measured indices of refraction $n_2$ and $n_1$ for use as the denominator of Eq. (23) in the calculation of r.

The description of the sources of light beams **9** and **10** and of light beams **9** and **10** for the fifth embodiment is the same as that for description of the sources of light beams **9** and **10** and of light beams **9** and **10** given for the second preferred embodiment.

Referring to FIG. **5a**, beam **9** is reflected by mirror **53** becoming beam **11**. A portion of beam **10** is reflected by beam splitter **54A**, preferably a non-polarizing type, as beam **12**. A second portion of beam **10** is transmitted by beam splitter **54A** and subsequently reflected by mirror **54B** as beam **212**. Beam **11** is incident on differential plane mirror interferometer group **269** and beams **12** and **212** are +incident on differential plane mirror interferometer group **370** comprising two differential plane mirror interferometers. Differential plane mirror interferometer group **269** and differential plane mirror interferometer group **370** with external mirrors furnished by measurement cell **90** comprise interferometric means for introducing a phase shift $\varphi_1$ between a first portion of the x and y components of beam **11**, a phase shift $\varphi_6$ between a second portion of the *x* and *y* components of beam **11**, a phase shift $\varphi_8$ between the *x* and *y* components of beam **12**, and a phase shift $\varphi_9$ between the *x* and *y* components of beam **212.**

The description of differential plane mirror interferometer group **269** and the propagation of beams in differential plane mirror interferometer group **269** is the same as that given for corresponding portions of the descriptions of differential plane mirror interferometer group **269** and the propagation of beams in differential plane mirror interferometer group **269** of the fourth embodiment shown in **FIG. 4b**.

Differential plane mirror interferometer group **370** is comprised of many of the same elements as differential plane mirror interferometer group **170** of the second embodiment, like numbered elements in the two differential plane mirror interferometer groups performing like functions. Many of the beams shown in FIG. **5b** for differential plane mirror interferometer group 370 have the same properties as beams shown in FIG. **2b** for differential plane mirror interferometer group **170**, like numbered beams in the two differential plane mirror interferometer groups having like properties. Further, the beams shown in FIG. **5b** for differential plane mirror interferometer group **370** with numbers of (1000+ *N*) have the same properties as beams with numbers *N* shown in FIG. **2b** for differential plane mirror interferometer group **170** except for the lengths of the corresponding reference paths in the vacuum path **98** have nominal values of zero (cf. FIG. **5c**). Beams **20**, **220**, **1120**, and **1320** created by differential plane mirror interferometer group **370** and measurement cell **90** (cf. FIG. **5b**) contain information at wavelength $\lambda_2$ about the optical path length through the gas whose reciprocal dispersive power is to be determined and about an optical path length of zero length, respectively.

One differential plane mirror interferometer of differential plane mirror interferometer group **370** as shown in FIG. **5b** has two exit/return beams **18** and **1118.** Beam **18** originating from one frequency component, a first frequency component, of beam **12** comprises a beam for one measurement leg and beam **1118** originating from a second frequency component of beam **12** comprises a beam for a second measurement leg. Beams for which the first frequency component of beam **12** is the sole progenitor are indicated in FIG. **5b** by dashed lines and beams for which the second frequency component of beam **12** is the sole progenitor are indicated in FIG. **5b** by dotted lines.

A second differential plane mirror interferometer of differential plane mirror interferometer group 370 as shown in FIG. **5b** has two exit/return beams **218** and **1318.** Beam **218** originating from one frequency component, a first frequency component, of beam **212** comprises a beam for one measurement leg and beam **1318** originating from a second frequency component of beam **212** comprises a beam for a second measurement leg. Beams for which the first frequency component of beam **212** is the sole progenitor are indicated in FIG. **5b** by lines comprised of alternating dots and dashes and beams for which the second frequency component of beam **212** is the sole progenitor are indicated in FIG. **5b** by lines comprised of alternating dot pairs and dashes.

Referring to FIG. **5b**, beam **20** is reflected by mirror **64B**, a portion of which is reflected by beamsplitter **64F**, preferably a non-polarizing beam splitter, to become a first component of beam **1122**. A portion of beam **1120** is transmitted by beamsplitter 64F to become a second component of beam **1122**. Beam **1122** is a mixed beam, the first and second components of beam **1122** having the same linear polarizations. Beam **220** is reflected by mirror **64D**, a portion of which is reflected by beam splitter **64G**, preferably a non-polarizing beam splitter, to become a first component of beam **1322**. A portion of beam **1320** is transmitted by beamsplitter **64G** to become a second component of beam **1322**. Beam **1322** is a mixed beam, the first and second components of beam **1322** having the same linear polarizations. Beams **1122** and **1322** exit differential plane mirror interferometer group 370.

The magnitude of phase shifts $\varphi_1$, $\varphi_6$, $\varphi_8$, and $\varphi_9$ are related to the round-trip physical lengths of measurement path **97**, reference path **98**, or a reference path of zero physical length as shown in FIG. **4d** according to the formulae

$$\varphi_1 = \sum_{i=1}^{i=p_1} k_1 \left( L_{G,i} n_{1i} - L_{V,i} \right) + \zeta_1$$

$$\varphi_6 = \sum_{i=1}^{i=p_1} k_1 L_{G,i} n_{1i} + \zeta_6 \quad ,$$

(139)

$$\varphi_8 = \sum_{i=1}^{i=p_2} k_2 L_{G,i} n_{2i} + \zeta_8 \quad ,$$

$$\varphi_9 = \sum_{i=p_2+1}^{i=p_1} k_2 L_{G,i} n_{2i} + \zeta_9 \quad ,$$

for the case of $p_1=2p_2$. The phase offsets $\zeta_j$ comprise all contributions to the phase shifts $\varphi_j$ that are not related to the measurement path **97** or reference path **98**. To those skilled in the art, the generalization to the case when $p_1 \neq 2p_2$ is a straight forward procedure. Differential plane mirror interferometer group **269** (c.f. FIG. **4b**) and differential plane mirror interferometer group **370** shown in FIG. **5b**, along with measurement cell **90**, are configured with $p_1 = 2$ and $p_2 = 1$ so as to illustrate in the simplest manner the function of the apparatus of the fifth embodiment.

Cyclic errors that produce nonlinearities in distance measuring interferometry (*cf.* the cited articles by Bobroff) have been omitted in Eqs. (139). Techniques known to those skilled in the art can be used to either reduce the cyclic errors to negligible levels or compensate for the presence of cyclic errors, techniques such as using separated beams in the interferometer and/or separated beams in the delivery system for light beams from each light beam source to the interferometer (Tanaka, Yamagami, and Nakayama, *ibid.*)

In a next step as shown in FIG. **5a**, phase-shifted beams **129**, **1129**, **1122**, and **1322** impinge upon photodetectors **85**, **1085**, **1186**, and **1286**, respectively, resulting in four interference signals, heterodyne signals $s_1$, $s_6$, $s_8$, and $s_9$, respectively, preferably by photoelectric detection. The signals $s_1$ and $s_6$ correspond to wavelength $\lambda_1$ and signals $s_8$ and $s_9$ correspond to wavelength $\lambda_2$. The signals $s_j$ have the form

$$s_j = A_j \cos\left[ \alpha_j(t) \right] \quad , \qquad j = 1, 6, 8, \text{ and } 9$$

(140)

where the time-dependent arguments $\alpha_j(t)$ are given by

$$\alpha_1(t) = 2\pi f_1 t + \varphi_1 \quad ,$$

$$\alpha_6(t) = 2\pi f_1 t + \varphi_6 \quad ,$$

(141)

$$\alpha_8(t) = 2\pi f_2 t + \varphi_8$$

$$\alpha_9(t) = 2\pi f_2 t + \varphi_9 \quad .$$

Heterodyne signals $s_1$, $s_6$, $s_8$, and $s_9$ are transmitted to electronic processor **509** for analysis as electronic signals **103**, **1103**, **1204**, and **1404**, respectively, in either digital or analog format.

The phases of drivers **5** and **6** are transmitted by electrical signals, reference signals **101** and **102**, respectively, in either digital or analog format, preferably a digital format, to electronic processor **509**.

A preferred method for electronically processing the heterodyne signals $s_1$, $s_6$, $s_8$, and $s_9$ is presented herewithin

for the case when $l_1$ and $l_2$ are not low order integers. For the case when $l_1$ and $l_2$ are low order integers and the ratio of the wavelengths matched to the ratio $(l_1/l_2)$ with a relative precision sufficient to meet the required precision imposed on the output data by the end use application, the preferred procedure for electronically processing the heterodyne signals $s_1$, $s_6$, $s_8$, and $s_9$ is the same as the one subsequently set down for the variant of the fifth preferred embodiment of the present invention.

The phases $\varphi_1$, $\varphi_6$, $\varphi_8$, and $\varphi_9$ of signals $s_1$, $s_6$, $s_8$, and $s_9$, respectively, are obtained preferably by application of superheterodyne receiver techniques wherein the frequencies of signals $s_1$, $s_6$, $s_8$, and $s_9$ are shifted to frequencies substantially lower than $f_1$ and $f_2$ [*cf.* Eqs. (141)] where conditions are generally more favorable for high precision phase measurements.

Referring now to FIG. **5d**, electronic processor **509** preferably comprises alphameric numbered elements wherein the numeric component of the alphameric numbers indicate the function of an element, the same numeric component/function association as described for the electronic processing elements of the first embodiment depicted in FIG. **1f**. The description of the steps in processing of the heterodyne signals $s_1$, $s_6$, $s_8$, and $s_9$ by electronic processor **509** is the same as corresponding portions, according to the numeric component of the alphameric numbers of elements, of the descriptions of steps in the processing of the heterodyne signals $s_1$ and $s_2$ of the first embodiment by electronic processor **109**. The processing of the heterodyne signals $s_1$, $s_6$, $s_8$, and $s_9$ by electronic processor **509** creates four sideband phases $\Phi_{1\times I1}$, $\Phi_{6\times I1}$, $\Phi_{8\times I2}$, and $\Phi_{9\times I2}$ where

$$\Phi_{1\times I1} = \varphi_1 - \varphi_{I1}$$

$$\Phi_{6\times I1} = \varphi_6 - \varphi_{I1}$$

$$\Phi_{8\times I2} = \varphi_8 - \varphi_{I2} \qquad (142)$$

$$\Phi_{9\times I2} = \varphi_9 - \varphi_{I2}$$

where $\varphi_{I1}$, and $\varphi_{I2}$ are defined in Eqs. (5).

Referring again to FIG. **5d**, electronic processor **509** comprises electronic processors **1096G** to add together $\Phi_{8\times I2}$, and $\Phi_{9\times I2}$. Next, the phase $\Phi_{6\times I1}$ and the resulting phase sum $(\Phi_{8\times I2} + \Phi_{9\times I2})$ are multiplied by $l_1/p_1$ and $(l_2/p_2)$ (1/2), respectively, in electronic processors 1095H and 1095I, respectively, resulting in phases $(l_1/p_1)\Phi_{4\times I1}$ and $(l_2/p_2)$ $(\Phi_{8\times I2} + \Phi_{9\times I2})/2$ The phases $(l_1/p_1)\Phi_{1\times I1}$ and $(l_2/p_2)(\Phi_{8\times I2} + \Phi_{9\times I2})/2$ are next added together in electronic processor **1096H** and subtracted one from the other in electronic processor **1096F**, by analog or digital processes, preferably digital processes, to create the phases $\vartheta_{2G}$ and $\Phi_{2G}$, respectively. Formally,

$$\vartheta_{2G} = \left[ \frac{l_1}{p_1} \Phi_{6\times I1} + \frac{l_2}{p_2} \frac{\left(\Phi_{8\times I2} + \Phi_{9\times I2}\right)}{2} \right] \qquad (143)$$

$$\Phi_{2G} = \left[ \frac{l_1}{p_1} \Phi_{6\times I1} - \frac{l_2}{p_2} \frac{\left(\Phi_{8\times I2} + \Phi_{9\times I2}\right)}{2} \right] \qquad (144)$$

Note from Eqs. (143) and (144) that $\vartheta_{2G}$ and $\Phi_{2G}$ are not sensitive to tilts of either reflecting surfaces **95** or **96** of measurement cell **90** and insensitive to thermal and mechanical disturbances that may occur in the interferometer beam splitting cubes and associated optical components as a consequence of the use of differential plane mirror interferometers.

The refractivity $(n_1-1)$, the dispersion $(n_2-n_1)_{2G}$, and the wavenumber $k_1$ can be expressed in terms of other quantities obtained by the fifth embodiment by the formulae

$$(n_1 - 1) = \frac{1}{(\chi + K)L_G}\left(\frac{l_1}{p_1}\right)\left[\Phi_{1\times I1} - (\zeta_1 - \varphi_{I1})\right] - \frac{(L_G - L_V)}{L_G} \qquad (145)$$

$$(n_2 - n_1)_{2G} = \frac{1}{\chi L_G\left[1 - (K/\chi)^2\right]}\left\{\left[\vartheta_{2G}(K/\chi) - \Phi_{2G}\right] - \left[\xi(K/\chi) - Z\right]\right\} \qquad (146)$$

$$k_1 = \frac{1}{p_1 L_V}\left[(\Phi_{6\times I1} - \Phi_{1\times I1}) - (\zeta_6 - \zeta_1)\right] \qquad (147)$$

$$\xi = \left(\frac{l_1}{p_1}\right)(\zeta_6 - \varphi_{I1}) + \left(\frac{l_2}{p_2}\right)\left(\frac{\zeta_8 + \zeta_9}{2} - \varphi_{I2}\right) \qquad (148)$$

$$Z = \left(\frac{l_1}{p_1}\right)(\zeta_6 - \varphi_{I1}) - \left(\frac{l_2}{p_2}\right)\left(\frac{\zeta_8 + \zeta_9}{2} - \varphi_{I2}\right) \qquad (149)$$

where $\chi$ and $K$ are given by Eqs. (26) and (27), respectively, and second order correction terms have been omitted. The correction terms are due to variations in the index of refraction along the measurement path and due to differences in the physical length of path i in the measurement path and the reference path from the respective average physical lengths. In addition, Eq. (146) is valid for the case where the paths for the two different wavelengths are substantially coextensive, a case chosen to illustrate in the simplest manner the function of the invention in the fifth embodiment. To those skilled in the art, the generalization to the case where paths for the two different wavelengths are not substantially coextensive is a straight forward procedure.

In a next step, electronic processing means **509** transmits to the computer 110 $\Phi_{1\times I1}$, $\Phi_{6\times I1}$, $\vartheta_{2G}$, and $\Phi_{2G}$ as electronic signal **105** in either digital or analog format for the computation of $\Gamma$ and the calculation of $k_1$ if required according to Eqs. (23), (145), (146), and (147) substantially independent of fluctuations in the column density of the gas or turbulence of the gas in the measuring path **97** to the extent that measuring paths experienced by beams of differing wavelengths are coextensive, without knowledge of the gas constituents, without knowledge of the environmental conditions, and without knowledge of the properties of the refractivities of the gas constituents.

The remaining description of the fifth embodiment is the same as corresponding portions of the description for the second embodiment of the present invention.

Reference is now made to FIGS. **5a-5c** and **5e** which taken together depict in diagrammatic form a variant of the fifth preferred embodiment of the present invention for measuring intrinsic optical properties of a gas, particularly its reciprocal dispersive power where the end use application effects the choice of the particular manner in which the intrinsic optical properties of the gas are determined and where the stability of the adopted light sources is sufficient and the wavelengths of the light beams generated by the adopted light sources are harmonically related to a relative precision sufficient to meet the required precision imposed on the output data by the final end use application. The condition wherein the wavelengths are approximately harmonically related corresponds to the special case of the fifth embodiment in which the ratio $(l_1/l_2)$ is expressible as the ratio of low order non-zero integers $(p_2-p_1)$, *cf.* Eq. (35).

The description of the sources of light beams **9** and 10 and of light beams **9** and **10** for the variant of the fifth embodiment is the same as that for description of the sources of light beams **9** and **10** and of light beams **9** and 10 given for the first embodiment with the additional requirement that the wavelengths be harmonically related to a relative precision sufficient to meet the required precision imposed on the output data by the final end use application. The description of the apparatus for the variant of the fifth embodiment depicted in FIGS. **5a-5c** is the same as corresponding portions of the description given for the fifth embodiment.

The information contained in phases $\varphi_1$, $\varphi_6$, $\varphi_8$, and $\varphi_9$ of signals $s_1$, $s_6$, $s_8$, and $s_9$, respectively, is obtained in the variant of the fifth embodiment preferably through the creation of a superheterodyne signal wherein the frequency of the superheterodyne signal is at a frequency much lower than $f_1$ and $f_2$ where it is general possible to make more accurate phase measurements.

Referring now to FIG. **5e**, and in accordance with the preferred method of the variant of the fifth embodiment, electronic processor **509A** preferably comprises alphameric numbered elements wherein the numeric component of the alphameric numbers indicate the function of an element, the same numeric component/function association as described for the electronic processing elements of the first embodiment depicted in FIG. **1f**. As depicted in FIG. **5e**, the heterodyne signals $s_1$ and $s_6$ of the variant of the fifth embodiment are each processed by the same sequence of electronic processing steps as signal $s_1$ of the variant of the second embodiment and heterodyne signals $s_8$ and $s_9$ of the variant of the fifth embodiment are processed by the same sequence of electronic processing steps as signals $s_3$ and $s_4$ of the variant of the second embodiment. The results of that analysis are $\varphi_1$, $\varphi_6$, $\vartheta_{2G}$, and $\Phi_{2G}$ where

$$\vartheta_{2G} = \frac{\left(\vartheta_{6\times8} + \vartheta_{6\times9}\right)}{2} = \left[\varphi_6 + \frac{\left(\varphi_8 + \varphi_9\right)}{2}\right] \qquad (150)$$

$$\Phi_{2G} = \frac{\left(\Phi_{6\times8} - \Phi_{6\times9}\right)}{2} = \left[\varphi_6 - \frac{\left(\varphi_8 + \varphi_9\right)}{2}\right] \qquad (151)$$

Note from Eqs. (150) and (151) that $\vartheta_{2G}$ and $\Phi_{2G}$ are not sensitive to tilts of either reflecting surfaces 95 or 96 and insensitive to thermal and mechanical disturbances that may occur in the interferometer beam splitting cubes and associated optical components as a consequence of the use of differential plane mirror interferometers.

In a next step, $\varphi_1$, $\varphi_6$, $\vartheta_{2G}$, and $\Phi_{2G}$ are transmitted, preferably in digital format, to computer 110 for computation refractivity, dispersion, r and/or $k_1$. Quantities $\varphi_1$, $\varphi_6$, $\vartheta_{2G}$, $\Phi_{2G}$, $\xi$, and Z of the variant of the fifth embodiment are formally equivalent to $\Phi_{1\times l1}$, $\Phi_{6\times l1}$, $\vartheta_{2G}$, $\Phi_{2G}$, $\xi$, and Z, respectively, of the fifth embodiment with $\varphi_{l1}$ and $\varphi_{l2}$ set equal to zero, $l_1 = p_1$, and $l_2 = p_2$. Thus, r, the refractivity $(n_1 - 1)$, dispersion $(n_2 - n_1)_{2G}$, and $k_1$ can be expressed in terms of the quantities measured by the variant of the fifth embodiment by Eqs. (23), (145), (146), and (147), respectively, wherein the phase offsets $\xi$ and Z are defined by equations corresponding to Eqs. (148) and (149), respectively, and $\chi$ and $K$ are given by Eqs. (26) and (27), respectively, with $\varphi_{l1}$ and $\varphi_{l2}$ set equal to zero, $l1 = p_1$, and $l_2 = p_2$. The remaining description of the variant of the fifth embodiment is the same as corresponding portions of the descriptions given for the fifth embodiment.

Reference is now made to FIGS. **6a-6e** which depict in diagrammatic form the sixth preferred embodiment of the present invention from the second group of preferred embodiments for measuring intrinsic optical properties of a gas, particularly its reciprocal dispersive power $\Gamma$, where the end use application effects the choice of the particular manner in which the intrinsic optical properties of the gas are determined and where the stability of the adopted light sources is sufficient and the ratio of the wavelengths of the light beams generated by the adopted light sources is matched to a known ratio value with a relative precision sufficient to meet the required precision imposed on the output data by the final end use application. The configuration of differential plane mirror interferometers in the sixth embodiment permits measurement of a refractivity ($n_1$ - 1) for use as the numerator and a measurement of $(n_2 - n_1)_{2G}$ equivalent to a measurement of $(n_2 - n_1)$ as a difference of two measured indices of refraction $n_2$ and $n_1$ for use as the denominator of Eq. (23) in the calculation of Γ.

The description of the sources of light beams **9** and 10 and of light beams **9** and **10** for the sixth embodiment is the same as that for description of the sources of light beams **9** and **10** and of light beams **9** and **10** given for the first preferred embodiment.

Referring to FIG. **6a,** beam **9** is reflected by mirror **53** becoming beam **11** and beam **10** is reflected by mirror **54** as beam **212.** Beam **11** is incident on differential plane mirror interferometer group **369** and beam **212** is incident on differential plane mirror interferometer **270.** Differential plane mirror interferometer group **369** and differential plane mirror interferometer **270** with external mirrors furnished by measurement cell **90** comprise interferometric means for introducing a phase shift $\varphi_5$ between a first portion of the x and y components of beam **11**, a phase shift $\varphi_{10}$ between a second portion of the x and y components of beam **11**, and a phase shift $\varphi_7$ between the x and y components of beam **212**.

Differential plane mirror interferometer group **369** comprises many of the same elements as differential plane mirror interferometer **169** of the third embodiment, like numbered elements in the two differential plane mirror interferometers performing like functions. Many of the beams shown in FIGS. **6b** and **6c** for differential plane mirror interferometer group **369** have the same properties as beams shown in FIGS. **3b** and **3c** for differential plane mirror interferometer **169,** like numbered beams in the two differential plane mirror interferometers having like properties. Further, the beams shown in FIGS. 6b and 6c for differential plane mirror interferometer group **369** with numbers of (1000 + N) have the same properties as beams with numbers N shown in FIGS. **3b** and **3c** for differential plane mirror interferometer 169 except for the lengths of the corresponding reference paths in the vacuum path 98 have nominal values of zero (cf. FIG. **6d**). Beams **243, 343,** and **1343** created by differential plane mirror interferometer group **369** and measurement cell **90** (*cf*. FIG. 6c) contain information at wavelength $\lambda_1$ about the optical path length through the gas whose reciprocal dispersive power is to be determined, about the optical path length through a vacuum, and an optical path length of zero length, respectively.

The description of differential plane mirror interferometer **270** and the propagation of beams in differential plane mirror interferometer **270** is the same as that given for corresponding portions of the descriptions of differential plane mirror interferometer **270** and the propagation of beams in differential plane mirror interferometer **270** of the fourth embodiment shown in FIG. **4c**.

A first portion of beam **11** is transmitted by beam splitter **55C**, preferably a polarizing beamsplitter. A portion of the first portion of beam **11** is next transmitted by beam splitter **61A**, preferably a polarizing beamsplitter, transmitted by Faraday rotator **179A**, and then transmitted by half-wave phase-retardation plate **79C** to become beam **213**. The Faraday rotator **179A** and the half-wave phase-retardation plate **79C** rotate the plane of polarization of transmitted beams by ±45° and ∓45°, respectively, producing no net rotation of the plane of polarization of transmitted beams. A second portion of beam **11** is reflected by beam splitter **55C**. A first portion of the second portion of beam **11** is reflected by beam splitter **55D**, preferably a polarizing beam splitter, transmitted by half-wave phase-retardation plate **79A**, transmitted by beam splitter **61C**, preferably a polarizing beam splitter, transmitted by Faraday rotator **179B**, and transmitted by half-wave phase-retardation plate **79D** to become beam **313**. A second portion of second portion of beam **11** is transmitted by beam **splitter 55D,** reflected by mirror **55E**, transmitted by half-wave phase-retardation plate **79B**, next transmitted by beam splitter **61H**, preferably a polarizing beamsplitter, transmitted by Faraday rotator **179C**, and then transmitted by half-wave phase-retardation plate **79E** to become beam **1313**. Half-wave phase-retardation plates **79A** and **79B** rotate the planes of polarization of transmitted beams by 90° so that beams **213**, **313** and **1313** have the same polarizations but beam **213** has a frequency different from the frequencies of beams **313** and **1313**, beams **313** and **1313** having the same frequency. The purpose of the Faraday rotators **179A**, **179B**, and **179C** and the half-wave phase-retardation plates **79C**, **79D**, and **79E** is to have substantially no effect on the properties of beams **213**, **313**, and **1313** but to rotate the polarizations of beams **243**, **343**, and **1343** by 90° so as to achieve an efficient spatial separation of beams **243**, **343**, and **1343** from the path of beam **11** (*cf*. FIG. **6c**)**.**

Referring to FIG. **6c**, a portion of beam **243** transmitted by half-wave phase retardation plate **79C** and Faraday rotator **179A** is reflected by beam splitter **61A**. A first portion of the portion of beam **243** is reflected by beam splitter **61E**, preferably a nonpolarizing type, and reflected by mirror **61F**. A portion of the first portion of the portion of beam **243** is reflected by beam splitter **61B**, preferably a nonpolarizing type to become a first component of phase shifted beam **345**. Half-wave phase retardation plate **79C** and Faraday rotator **179A** each rotate the polarization of beam **243** by 45° so that the first component of phase shifted beam **345** is orthogonally polarized to the polarization of beam **243.** Beam splitter **61A** is preferably a polarizing beam splitter. A portion of beam **343** transmitted by half-wave phase retardation plate **79D** and Faraday rotator **179B** is reflected by beam splitter **61C**. A portion of the portion of beam **343** reflected by mirror **61D** is transmitted by beam splitter **61B** to become a second component of phase shifted beam **345**. Half-wave phase retardation plate **79D** and Faraday rotator **179B** each rotate the polarization of beam **343** by 45° so that the second component of phase shifted beam **345** is orthogonally polarized to the polarization of beam **343**. Beam splitter **61C** is preferably a polarizing beam splitter. Phase shifted beam **345** is a mixed beam, the first and second components of phase shifted beam **345** having the same polarizations but different frequencies.

A second portion of the portion of beam **243** is transmitted by beam splitter **61E**. A portion of the second portion of the portion of beam **243** is reflected by beam splitter **61G**, preferably a nonpolarizing type to become a first component of phase shifted beam **1345**. A portion of beam **1343** transmitted by half-wave phase retardation plate **79E** and Faraday rotator **179C** is reflected by beam splitter **61H**. A portion of the portion of beam **1343** reflected by mirror **61H** is transmitted by beam splitter 61G to become a second component of phase shifted beam **1345**. Half-wave phase retardation plate **79E** and Faraday rotator **179C** each rotate the polarization of beam **1343** by 45° so that the second component of phase shifted beam **1345** is orthogonally polarized to the polarization of beam **1343**. Beam splitter **61H** is preferably a polarizing beam splitter. Phase shifted beam **1345** is a mixed beam, the first and second components of phase shifted beam **1345** having the same polarizations but different frequencies.

The magnitude of phase shifts $\varphi_5$, $\varphi_{10}$, and $\varphi_7$ are related to the round-trip physical lengths of measurement path **97**, reference path **98**, or a reference path of zero physical length as shown in FIGS. **4d** and **6d** according to the formulae

$$\varphi_5 = \sum_{i=1}^{i=p_1} k_1 \left( L_{G,i} n_{1i} - L_{V,i} \right) + \zeta_5$$

$$\varphi_{10} = \sum_{i=1}^{i=p_1} k_1 L_{G,i} n_{1i} + \zeta_{10} \quad , \tag{152}$$

$$\varphi_7 = \sum_{i=1}^{i=p_2} k_2 L_{G,i} n_{2i} + \zeta_7 \quad ,$$

for the case of $p_1 = 2p_2$ and where the index of refraction in the reference path **98** has been set to 1. The phase offsets $e$ comprise all contributions to the phase shifts $\varphi_j$ that are not related to the measurement path **97** or reference path **98**. To those skilled in the art, the generalization to the case when $p_1 \neq 2p_2$ is a straight forward procedure. Differential plane mirror interferometer group **369** (*cf*. FIGS. **6b** and **6c)** and differential plane mirror interferometer **270** shown in FIG. **4c**, along with measurement cell **90**, are configured with $p_1 = 2$ and $p_2 = 1$ so as to illustrate in the simplest manner the function of the apparatus of the sixth embodiment.

Cyclic errors that produce non-linearities in distance measuring interferometry (*cf*. the cited articles by Bobroff) have been omitted in Eqs. (137). Techniques known to those skilled in the art can be used to either reduce the cyclic errors to negligible levels or compensate for the presence of cyclic errors, techniques such as using separated beams in the interferometer and/or separated beams in the delivery system for light beams from each light beam source to the interferometer (Tanaka, Yamagami, and Nakayama, *ibid.*).

In a next step as shown in FIG. 6a, phase-shifted beams **345**, **1345**, and **1130** impinge upon photodetectors **185**, **1285**, and **1086**, respectively, resulting in three interference signals, heterodyne signals $s_5$, $s_{10}$, and $s_7$, respectively, preferably by photoelectric detection. The signals $s_5$ and $s_{10}$ correspond to wavelength $\lambda_1$ and signal $s_7$ corresponds to wavelength $\lambda_2$. The signals $s_j$ have the form

$$s_j = A_j \cos\left[\alpha_j(t)\right] \quad , \qquad j = 5, 10, \text{ and } 7 \tag{153}$$

where the time-dependent arguments $\alpha_j(t)$ are given by

$$\alpha_5(t) = 2\pi f_1 t + \varphi_5 \quad ,$$

$$\alpha_{10}(t) = 2\pi f_1 t + \varphi_{10} \qquad (154)$$

$$\alpha_7(t) = 2\pi f_2 t + \varphi_7 \quad .$$

Heterodyne signals $s_5$, $s_{10}$, and $s_7$ are transmitted to electronic processor **609** for analysis as electronic signals **203**, **1203**, and **1104**, respectively, in either digital or analog format, preferably a digital format.

The phases of drivers **5** and **6** are transmitted by electrical signals, reference signals **101** and **102**, respectively, in either digital or analog format to electronic processor **609**.

A preferred method for electronically processing the heterodyne signals $s_5$, $s_{10}$, and $s_7$ is presented herewithin for the case when $l_1$ and $l_2$ are not low order integers. For the case when $l_1$ and $l_2$ are low order integers and the ratio of the wavelengths matched to the ratio $(l_1/l_2)$ with a relative precision sufficient to meet the required precision imposed on the output data by the end use application, the preferred procedure for electronically processing the heterodyne signals $s_5$, $s_{10}$, and $s_7$ is the same as the one subsequently set down for the variant of the sixth preferred embodiment of the present invention.

The phases $\varphi_5$, $\varphi_{10}$ and $\varphi_7$ of signals $s_5$, $s_{10}$, and $s_7$, respectively, are obtained preferably by application of superheterodyne receiver techniques wherein the frequencies of signals $s_5$, $s_{10}$, and $s_7$ are shifted to frequencies substantially lower than $f_1$ and $f_2$ [*cf.* Eqs. (154)] where conditions are generally more favorable for high precision phase measurements.

Referring now to FIG. **6e**, electronic processor **609** preferably comprises alphameric numbered elements wherein the numeric component of the alphameric numbers indicate the function of an element, the same numeric component/function association as described for the electronic processing elements of the first embodiment depicted in FIG. **1f**. The description of the steps in processing of the heterodyne signals $s_5$, $s_{10}$, and $s_7$ by electronic processor **609** is the same as corresponding portions, according to the numeric component of the alphameric numbers of elements, of the descriptions of steps in the processing of the heterodyne signals $s_1$ and $s_2$ of the first embodiment by electronic processor **109**. The processing of the heterodyne signals $s_5$, $s_{10}$, and $s_7$ by electronic processor **609** creates three sideband phases $\Phi_{5\times l1}$, $\Phi_{10\times l1}$, and $\Phi_{7\times l2}$ where

$$\Phi_{5\times l1} = \varphi_5 - \varphi_{l1} \quad ,$$

$$\Phi_{10\times l1} = \varphi_{10} - \varphi_{l1} \qquad (155)$$

$$\Phi_{7\times l2} = \varphi_7 - \varphi_{l2} \quad ,$$

where $\varphi_{l1}$ and $\varphi_{l2}$ are defined in Eqs. (5).

Subsequently, the phases $\Phi_{10\times l1}$ and $\Phi_{7\times l2}$ are multiplied by $l_1/p_1$ and $(l_2/p_2)$, respectively, in electronic processors **1095J** and **1095K,** respectively. Next, the phases $(l_1/p_1)\Phi_{5\times l1}$ and $(l_2/p_2)\Phi_{10\times l2}$ are added together in electronic processor **1096J** and subtracted one from the other in electronic processor **1097H,** by analog or digital processes, preferably digital processes, to create the phases $\vartheta_{2G}$ and $\Phi_{2G}$, respectively. Formally,

$$\vartheta_{2G} = \left[ \left( \frac{l_1}{p_1} \right) \Phi_{10\times l1} + \left( \frac{l_2}{p_2} \right) \Phi_{7\times l2} \right] \qquad (156)$$

$$\Phi_{2G} = \left[ \left( \frac{l_1}{p_1} \right) \Phi_{10 \times I1} - \left( \frac{l_2}{p_2} \right) \Phi_{7 \times I2} \right] \qquad . \tag{157}$$

Note from Eqs. (156) and (157) that $\vartheta_{2G}$ and $\Phi_{2G}$ are not sensitive to tilts of either reflecting surfaces **95** or **96** of measurement cell **90** and insensitive to thermal and mechanical disturbances that may occur in the interferometer beam splitting cubes and associated optical components as a consequence of the use of differential plane mirror interferometers.

The refractivity $(n_1 - 1)$, the dispersion $(n_2 - n_1)_{2G}$, and the wavenumber $k_1$ can be expressed in terms of other quantities obtained by the sixth embodiment by the formulae

$$(n_1 - 1) = \frac{1}{(\chi + K)L_G} \left( \frac{l_1}{p_1} \right) \left[ \Phi_{5 \times I1} - (\zeta_5 - \varphi_{I1}) \right] - \frac{(L_G - L_V)}{L_G} \tag{158}$$

$$(n_2 - n_1)_{2G} = \frac{1}{\chi L_G \left[ 1 - (K/\chi)^2 \right]} \left\{ \left[ \vartheta_{2G}(K/\chi) - \Phi_{2G} \right] - \left[ \xi(K/\chi) - Z \right] \right\} \tag{159}$$

$$k_1 = \frac{1}{p_1 L_V} \left[ (\Phi_{10 \times I1} - \Phi_{5 \times I1}) - (\zeta_{10} - \zeta_5) \right] \tag{160}$$

$$\xi = \left( \frac{l_1}{p_1} \right)(\zeta_{10} - \varphi_{I1}) + \left( \frac{l_2}{p_2} \right)(\zeta_7 - \varphi_{I2}) \tag{161}$$

$$Z = \left( \frac{l_1}{p_1} \right)(\zeta_{10} - \varphi_{I1}) - \left( \frac{l_2}{p_2} \right)(\zeta_7 - \varphi_{I2}) \tag{162}$$

where $\chi$ and $K$ are given by Eqs. (26) and (27), respectively.

In a next step, electronic processing means 609 transmits to the computer 110 $\Phi_{5 \times I1}$, $\Phi_{10 \times I1}$, $\vartheta_{2G}$, and $\Phi_{2G}$ as electronic signal 105 in either digital or analog format, preferably a digital format, for the computation of r and the calculation of $k_1$ if required according to Eqs. (23), (158), (159), and (160) substantially independent of fluctuations in the column density of the gas or turbulence of the gas in the measuring path **97** to the extent that measuring paths experienced by beams of differing wavelengths are coextensive, without knowledge of the gas constituents, without knowledge of the environmental conditions, and without knowledge of the properties of the refractivities of the gas constituents.

The remaining description of the sixth embodiment is the same as corresponding portions of the description for the third embodiment of the present invention.

Reference is now made to FIGS. **6a-6d** and **6f** which taken together depict in diagrammatic form a variant of the sixth preferred embodiment of the present invention for measuring intrinsic optical properties of a gas, particularly its reciprocal dispersive power where the end use application effects the choice of the particular manner in which the intrinsic optical properties of the gas are determined and where the stability of the adopted light sources is sufficient and the wavelengths of the light beams generated by the adopted light sources are harmonically related to a relative precision sufficient to meet the required precision imposed on the output data by the final end use application. The condition wherein the wavelengths are approximately harmonically related corresponds to the special case of the sixth embodiment in which the ratio ($l_1/l_2$) is expressible as the ratio of low order non-zero integers ($p_1/p_2$), *cf.* Eq. (35).

The description of the sources of light beams **9** and 10 and of light beams **9** and **10** for the variant of the sixth embodiment is the same as that for description of the sources of light beams **9** and **10** and of light beams **9** and **10** given for the first embodiment with the additional requirement that the wavelengths be harmonically related to a relative precision sufficient to meet the required precision imposed on the output data by the final end use application. The description of the apparatus for the variant of the sixth embodiment depicted in FIGS. **6a-6d** is the same as corresponding portions of the description given for the sixth embodiment.

The information contained in phases $\varphi_5$, $\varphi_{10}$, and $\varphi P_7$ of signals $s_5$, $s_{10}$, and $s_7$, respectively, is obtained in the variant of the sixth embodiment preferably through the creation of a superheterodyne signal wherein the frequency of the superheterodyne signal is at a frequency much lower than $f_1$ and $f_2$ where it is general possible to make more accurate phase measurements.

Referring now to FIG. **6f**, and in accordance with the preferred method of the variant of the sixth embodiment, electronic processor **609A** preferably comprises alphameric numbered elements wherein the numeric component of the alphameric numbers indicate the function of an element, the same numeric component/function association as described for the electronic processing elements of the first embodiment depicted in FIG. **1f**. As depicted in FIG. **6f**, the heterodyne signals $s_5$ and $s_{10}$ of the variant of the sixth embodiment are each processed by the same sequence of electronic processing steps as signal $s_5$ of the variant of the third embodiment and heterodyne signal $s_7$ of the variant of the sixth embodiment are processed by the same sequence of electronic processing steps as signal $s_2$ of the variant of the third embodiment. The results of that analysis are $\varphi_5$, $\varphi_{10}$, $\vartheta_{2G}$, and $\Phi_{2G}$ where

$$\vartheta_{2G} = \left(\varphi_{10} + \varphi_7\right) \qquad (163)$$

$$\Phi_{2G} = \left(\varphi_{10} - \varphi_7\right) \qquad . \qquad (164)$$

Note from Eqs. (163) and (164) that $\vartheta_{2G}$ and $\Phi_{2G}$ are not sensitive to tilts of either reflecting surfaces **95** or **96** and insensitive to thermal and mechanical disturbances that may occur in the interferometer beam splitting cubes and associated optical components as a consequence of the use of differential plane mirror interferometers.

In a next step $\varphi_5$, $\varphi_{10}$, $\vartheta_{2G}$, and $\Phi_{2G}$ are transmitted, preferably in digital format, to computer **110** for computation of refractivity, dispersion, $\Gamma$, and/or $k_1$. Quantities $\varphi_5$, $\varphi_{10}$, $\vartheta_{2G}$, $\Phi_{2G}$, $\xi$, and Z of the variant of the sixth embodiment are formally equivalent to $\Phi_{5 \times l1}$, $\Phi_{10 \times l1}$, $\vartheta_{2G}$, $\Phi_{2G}$, $\xi$, and Z, respectively, of the sixth embodiment with $\varphi_{l1}$ and $\varphi_{l2}$ set equal to zero, $l_1 = p_1$, and $l_2 = p_2$. Thus, r, refractivity ($n_1$ - 1), dispersion ($n_2$ - $n_1$)$_{2G}$, and $k_1$ can be expressed in terms of the quantities measured by the variant of the sixth embodiment by Eqs. (23), (158), (159), and (160), respectively, wherein the phase offsets $\xi$ and Z are defined by equations corresponding to Eqs. (161) and (162) , respectively, and $\chi$ and $K$ are given by Eqs. (26) and (27), respectively, with $\varphi_{l1}$ and $\varphi_{l2}$ set equal to zero, $l_1 = p_1$, and $l_2 = p_2$. The remaining description of the variant of the sixth embodiment is substantially the same as corresponding portions of the descriptions given for the sixth embodiment.

The third group of preferred embodiments of the present invention represent preferred modes for the determination of intrinsic optical properties such as r for a subsequent downstream use wherein the properties of the subsequent downstream use can either effect or not effect the choice of the particular manner in which the intrinsic optical properties are determined and the stability of the adopted light sources is not sufficient and the ratio of the wavelengths of the light beams generated by the adopted light sources is not matched to a known ratio value with a relative precision sufficient to meet the required precision imposed on the output data by the final end use application. The third group comprises the seventh, eighth, and ninth preferred embodiments and variants thereof.

Reference is now made to FIGS. **7a-7c** which depict in diagrammatic form the seventh embodiment of the present invention from the third group. The description of the sources of light beams **9** and **10** and of light beams **9** and 10 for the seventh embodiment is the same as that for description of the sources of light beams **9** and **10** and of light beams **9** and **10** given for the first preferred embodiment.

Referring to FIG. **7a**, beam **9** is reflected by mirror **53** becoming beam **11** and beam **10** is reflected by mirror **54** as beam **12**. Beam **11** is incident on differential plane mirror interferometer group **269** and beam **12** is incident on differential plane mirror interferometer group **470**. Differential plane mirror interferometer groups **269** and **470** with external mirrors furnished by measurement cell **90** comprise interferometric means for introducing a phase shift $\varphi_1$ between a first portion of the *x* and *y* components of beam **11**, a phase shift $\varphi_6$ between a second portion of the *x* and *y* components of beam **11**, a phase shift $\varphi_2$ between a first portion of the *x* and *y* components of beam **12** and a phase shift $\varphi_7$ between a second portion of the *x* and *y* components of beam **12**.

Differential plane mirror interferometer group **269** is the same as differential plane mirror interferometer group **269** of the fourth embodiment. Differential plane mirror interferometer group **470** comprises the differential plane mirror interferometer **70** of the first embodiment and the differential plane mirror interferometer **270** of the fourth embodiment as depicted in FIG. **7b**. With reference to FIG. **7b**, a portion of beam **12** is transmitted by beam splitter **56A**, preferably a polarizing type, as beam **14**. A second portion of beam **12** is reflected by beam splitter **56A**. A first portion of the second portion of beam **12** is transmitted by beam splitter **56E**, preferably a non polarizing type, reflected by mirror **56B**, and transmitted by half-wave phase retardation plate 80A as beam **114**. A second portion of the second portion of beam 12 is reflected by beam splitter **56E** and transmitted by half-wave phase retardation plate **80C** as beam **1114**. The function of half-wave phase retardation plates 80A and 80C is to rotate the planes of polarization of beams **114** and **1114**, respectively, by 90° such that beams **14**, **114**, and **1114** have the same polarizations. The paths of the external beams **18, 118, 1118, 26, 126,** and **1126** of the differential plane mirror interferometer group **470** in relation to measurement cell **90** is shown diagramatically in FIG. **7c**.

The magnitude of phase shifts $\varphi_1$, $\varphi_6$, $\varphi_2$, and $\varphi_7$ are related to the round-trip physical length of measurement path **97**, reference path **98**, or a reference path of zero physical length as shown in FIGS. **4d** and **7c** according to the formulae

$$\varphi_1 = \sum_{i=1}^{i=p} k_1\left(L_{G,j} n_{1i} - L_{v,j}\right) + \zeta_1 \quad , \qquad \varphi_6 = \sum_{i=1}^{i=p} k_1 L_{G,j} n_{1i} + \zeta_6 \quad ,$$

$$\text{(165)}$$

$$\varphi_2 = \sum_{i=1}^{i=p} k_2\left(L_{G,j} n_{2i} - L_{v,j}\right) + \zeta_2 \quad , \qquad \varphi_7 = \sum_{i=1}^{i=p} k_2 L_{G,j} n_{2i} + \zeta_7$$

where the index of refraction in the reference path **98** has been set to 1. The illustrations in FIGS. **4b** and **7b** are for *p*=2 so as to illustrate in the simplest manner the function of the invention in the seventh embodiment. To those skilled in the art, the generalization to the case when *p*≠2 is a straight forward procedure.

Cyclic errors that produce non linearities in distance measuring interferometry (*cf.* the cited articles by Bobroff) have been omitted in Eqs. (165). Techniques known to those skilled in the art can be used to either reduce the cyclic errors to negligible levels or compensate for the presence of cyclic errors, techniques such as using separated beams in the interferometer and/or separated beams in the delivery system for light beams from each light beam source to the interferometer (Tanaka, Yamagami, and Nakayama, *ibid.*).

In a next step as shown in FIG. **7a**, phase-shifted beams **129, 1129, 130,** and **1130** impinge upon photodetectors **85, 1085, 86,** and **1086**, respectively, resulting in four interference signals, heterodyne signals $s_1$, $s_6$, $s_2$, and $s_7$, respectively, preferably by photoelectric detection. The signals $s_1$ and $s_6$ correspond to wavelength $\lambda_1$ and signals $s_2$ and $s_7$ correspond to wavelength $\lambda_2$. The signals $s_j$ have the form

$$s_j = A_j \cos\left[\alpha_j(t)\right] \quad , \qquad j = 1, 6, 2, \text{ and } 7 \qquad \text{(166)}$$

where the time-dependent arguments $\alpha_j(t)$ are given by

$$\alpha_1(t) = 2\pi f_1 t + \varphi_1 \quad ,$$

$$\alpha_6(t) = 2\pi f_1 t + \varphi_6 \quad ,$$

$$\alpha_2(t) = 2\pi f_2 t + \varphi_2$$

$$\alpha_7(t) = 2\pi f_2 t + \varphi_7$$

$$(167)$$

Heterodyne signals $s_1$, $s_6$, $s_2$, and $s_7$ are transmitted to electronic processor **709** for analysis as electronic signals **103**, **1103**, **104**, and **1104**, respectively, preferably in digital format.

The phases of drivers **5** and **6** are transmitted by electrical signals, reference signals **101** and **102**, respectively, in either digital or analog format to electronic processor **709**.

A preferred method for electronically processing the heterodyne signals $s_1$, $s_6$, $s_2$, and $s_7$ is presented herewithin for the case when $l_1$ and $l_2$ are not low order integers. For the case when $l_1$ and $l_2$ are low order integers, the preferred procedure for electronically processing the heterodyne signals $s_1$, $s_6$, $s_2$, and $s_7$ is the same as the one subsequently set down for the variant of the seventh preferred embodiment of the present invention.

Referring now to FIG. **7a**, electronic processor **709** comprises electronic processors **109** and **409**, as depicted in FIGS. **1f** and **4f**, respectively, with omission of obvious duplications. More formally, electronic processor 709 is the union, as used in set theory, of the elements of electronic processors **109** and **409**. Thus, the heterodyne signals $s_1$, $s_6$, and $s_7$ of the seventh embodiment are each processed by the same sequence of electronic processing steps as signals $s_1$, $s_6$, and $s_7$ of the fourth embodiment and signals $s_1$ and $s_2$ of the seventh embodiment are processed by the same sequence of electronic processing steps as signals $s_1$ and $s_2$ of the first embodiment. The results of that analysis are phases

$$\Phi_{1 \times I1} = \varphi_1 - \varphi_{I1} \quad , \quad \Phi_{6 \times I1} = \varphi_6 - \varphi_{I1} \quad ,$$

$$\vartheta_{1G} = \left( \frac{l_1}{p} \Phi_{1 \times I1} + \frac{l_2}{p} \Phi_{2 \times I2} \right) \quad , \quad \Phi_{1G} = \left( \frac{l_1}{p} \Phi_{1 \times I1} - \frac{l_2}{p} \Phi_{2 \times I2} \right) \quad , \quad (168)$$

$$\vartheta_{2G} = \left( \frac{l_1}{p} \Phi_{6 \times I1} + \frac{l_2}{p} \Phi_{7 \times I2} \right) \quad , \quad \Phi_{2G} = \left( \frac{l_1}{p} \Phi_{6 \times I1} - \frac{l_2}{p} \Phi_{7 \times I2} \right) \quad .$$

The refractivity $(n_1 - 1)$, the dispersions $(n_2 - n_1)_{1G}$ and $(n_2 - n_1)_{2G}$, and the wavenumbers $k_1$ and $k_2$ can be expressed in terms of other quantities by the formulae

$$(n_1 - 1) = \frac{1}{(\chi + K)L_G} \left( \frac{l_1}{p} \right) \left[ \Phi_{1 \times I1} - (\zeta_1 - \varphi_{I1}) \right] - \frac{(L_G - L_V)}{L_G} \quad (169)$$

$$(n_2 - n_1)_{1G} = \frac{1}{\chi L_G \left[ 1 - (K/\chi)^2 \right]} \left\{ [\vartheta_{1G}(K/\chi) - \Phi_{1G}] - [\xi_1(K/\chi) - Z_1] \right\} \quad (170)$$

$$(n_2 - n_1)_{2G} = \frac{1}{\chi L_G \left[1 - (K/\chi)^2\right]} \{[\vartheta_{2G}(K/\chi) - \Phi_{2G}] - [\xi_2(K/\chi) - Z_2]\} \qquad (171)$$

$$k_1 = \frac{1}{pL_V}\left[(\Phi_{6\times I1} - \Phi_{1\times I1}) - (\zeta_6 - \zeta_1)\right] \qquad (172)$$

$$k_2 = \frac{1}{L_v}\left\{\frac{1}{2l_2}\left[(\vartheta_{2G} - \Phi_{2G}) - (\vartheta_{1G} - \Phi_{1G})\right] - \frac{1}{p}(\zeta_7 - \zeta_2)\right\} \qquad (173)$$

where

$$\xi_1 = \frac{l_1}{p}(\zeta_1 - \varphi_{I1}) + \frac{l_2}{p}(\zeta_2 - \varphi_{I2}) \qquad (174)$$

$$Z_1 = \frac{l_1}{p}(\zeta_1 - \varphi_{I1}) - \frac{l_2}{p}(\zeta_2 - \varphi_{I2}) \qquad , \qquad (175)$$

$$\xi_2 = \frac{l_1}{p}(\zeta_6 - \varphi_{I1}) + \frac{l_2}{p}(\zeta_7 - \varphi_{I2}) \qquad (176)$$

$$Z_2 = \frac{l_1}{p}(\zeta_6 - \varphi_{I1}) - \frac{l_2}{p}(\zeta_7 - \varphi_{I2}) \qquad (177)$$

and $\chi$ and $K$ are given by Eqs. (26) and (27), respectively.

In a next step, electronic processing means 709 transmits to the computer **110** the phases $\Phi_{1\times I1}$, $\Phi_{6\times I1}$, $\vartheta_{1G}$, $\vartheta_{2G}$, $\Phi_{1G}$, and $\Phi_{2G}$ as electronic signal **105** in either digital or analog format, preferably a digital format, for the computation of a $\Gamma$, $K/\chi$, and the calculation of $k_1$ if required according to Eqs. (23), (169), (170) or (171), (172), and (173) substantially independent of fluctuations in the column density of the gas or turbulence of the gas in the measuring path **97** to the extent that measuring paths experienced by beams of differing wavelengths are coextensive, without knowledge of the gas constituents, without knowledge of the environmental conditions, and without knowledge of the properties of the refractivities of the gas constituents.

The remaining description of the seventh embodiment is the same as corresponding portions of the description given for the first and fourth embodiments of the present invention.

Reference is again made to FIGS. **7a-7c** which taken together, with electronic processor **709** in FIG. **7a** being replaced by electronic processor **709A**, depict in diagrammatic form a variant of the seventh preferred embodiment of the present invention wherein the wavelengths of the light beams are approximately harmonically related, the approximate harmonic ratio of the wavelengths of the light beams generated by the adopted light sources is not matched to a known harmonic ratio with a relative precision sufficient to meet the required precision and/or the stability of the adopted light sources is not sufficient to meet the required precision imposed on the output data by the final end use application. The condition wherein the wavelengths are approximately harmonically related corresponds to the special case of the seventh embodiment in which the ratio $(l_1/l_2)$ is expressible as the ratio of low order non-zero integers $(p_1/p_2)$, *cf* Eq. (35).

The description of the sources of light beams 9 and **10** and of light beams **9** and **10** for the variant of the seventh embodiment is the same as that for description of the sources of light beams **9** and **10** and of light beams **9** and **10** given for the first embodiment with the additional requirement that the wavelengths be approximately harmonically related although not matched to a known harmonic ratio to a relative precision sufficient to meet the required precision imposed on the output data by the final end use application. The description of the apparatus for the variant of the seventh embodiment depicted in FIGS. **7a-7c** is the same as corresponding portions of the description given for the seventh embodiment.

Referring now to FIG. **7a** with electronic processor **709** replaced with electronic processor **709A**, electronic processor **709A** comprises electronic processors **109A** and **409A**, as depicted in FIGS. **1g** and **4g**, respectively, with omission of obvious duplications. More formally, electronic processor **709A** is the union, as used in set theory, of the elements of electronic processors **109A** and **409A**. Thus, the heterodyne signals $s_1$, $s_6$, and $s_7$ of the variant of the seventh embodiment are each processed by the same sequence of electronic processing steps as signals $s_1$, $s_6$, and $s_7$ of the variant of the fourth embodiment and signals $s_1$ and $s_2$ of the variant of the seventh embodiment are processed by the same sequence of electronic processing steps as signals $s_1$ and $s_2$ of the variant of the first embodiment. The results of that analysis are phases $\varphi_1$, $\varphi_6$,

$$\tilde{\vartheta}_{1G} = (p_1\varphi_1 + p_2\varphi_2) \quad , \quad \tilde{\Phi}_{1G} = (p_1\varphi_1 - p_2\varphi_2) \quad ,$$
$$\tilde{\vartheta}_{2G} = (p_1\varphi_6 + p_2\varphi_7) \quad , \quad \tilde{\Phi}_{2G} = (p_1\varphi_6 - \acute{p}_2\varphi_7) \tag{178}$$

In a next step, $\varphi_1$, $\varphi_6$, $\tilde{\vartheta}_{1G}$, $\tilde{\Phi}_{1G}$, $\tilde{\vartheta}_{2G}$, and $\tilde{\Phi}_{2G}$ are transmitted, either in digital or analog format, preferably in digital format, to computer 110 for computation of $\Gamma$, $(K/\chi)$, and $k_1$ if required. Quantities $\varphi_1$, $\varphi_6$, $p\tilde{\vartheta}_{1G}$, $p\tilde{\Phi}_{1G}$, $p\tilde{\vartheta}_{2G}$, $p\tilde{\Phi}_{2G}$, $p\tilde{\xi}_1$, $p\tilde{Z}_1$, $p\tilde{\xi}_2$, and $p\tilde{Z}_2$ are formally equivalent to $\Phi_{1 \times l1}$, $\Phi_{6 \times l1}$, $\vartheta_{1G}$, $\Phi_{1G}$, $\vartheta_{2G}$, $\Phi_{2G}$, $\xi_1$, $Z_1$, $\xi_2$, and $Z_2$, respectively, of the seventh embodiment with $\varphi_{l1}$ and $\varphi_{l2}$ set equal to zero, $l_1 = p_1$, and $l_2 = p_2$. As a consequence, the refractivity $(n_1 - 1)$, dispersion $(n_2 - n_1)_{1G}$, dispersion $(n_2 - n_1)_{2G}$, $k_1$, and $k_2$ can be expressed in terms of the quantities measured by the variant of the seventh embodiment according to Eqs. (169), (170), (171), (172), and (173) with $\varphi_{l1}$ and $\varphi_{l2}$ set equal to zero, $l_1 = p_1$, and $l_2 = p_2$. Thus, the computation of a r, $K/\chi$, and the calculation of $k_1$ if required is performed according Eqs. (23), (169), (170) or (171), (172), and (173) with $\varphi_{l1}$ and $\varphi_{l2}$ set equal to zero, $l_1 = p_1$, and $l_2 = p_2$ substantially independent of fluctuations in the column density of the gas or turbulence of the gas in the measuring path **97** to the extent that measuring paths experienced by beams of differing wavelengths are coextensive, without knowledge of the gas constituents, without knowledge of the environmental conditions, and without knowledge of the properties of the refractivities of the gas constituents. The remaining discussion of the variant of the seventh embodiment is the same as corresponding portions of the descriptions given for the seventh embodiment.

The principal advantage of the variant of the seventh embodiment lies a simplified electronic processing in relation to that of the seventh embodiment although at the risk of possibly enhancing frequency sensitive phase offset errors due to differences in group delays experienced by heterodyne and/or modified heterodyne signals having significantly different frequencies. The discussion of the effects of group delay for the variant of the seventh embodiment is the same as corresponding portions of the description given for the seventh embodiment.

Reference is now made to FIGS. **8a-8c** that depict in diagrammatic form the eighth embodiment of the present invention from the third group. The description of the sources of light beams **9** and **10** and of light beams **9** and **10** for the eighth embodiment is the same as that for description of the sources of light beams **9** and **10** and of light beams **9** and **10** given for the first preferred embodiment.

Referring to FIG. **8a**, beam **9** is reflected by mirror **53** becoming beam **11**. A first portion of beam **10** is reflected by beam splitter **54A**, preferably a non polarizing type, as beam **12** and a second portion of beam 10 transmitted by beam splitter **54A** is reflected by mirror **54B** as beam **212**. Beam **11** is incident on differential plane mirror interferometer group **269** and beams **12** and **212** are incident on differential plane mirror interferometer group **570.** Differential plane mirror interferometer groups **269** and **570** with external mirrors furnished by measurement cell **90** comprise interferometric means for introducing a phase shift $\varphi_1$ between a first portion of the *x* and *y* components of beam **11,** a phase shift $\varphi_6$ between a second portion of the *x* and *y* components of beam **11,** a phase shift $\varphi_8$ between the *x* and *y* components of beam **12** and a phase shift $\varphi_9$ between the *x* and *y* components of beam **212.**

Differential plane mirror interferometer group **269** is the same as differential plane mirror interferometer group **269** of the fifth embodiment. Differential plane mirror interferometer group **570** comprises the differential plane mirror interferometer **170** of the second embodiment, the differential plane mirror interferometer **370** of the fifth embodiment, and beam splitters **56G** and **56H,** preferably of the non polarizing type, as depicted in FIG. **8b.** The paths of the external beams **18, 118, 1118, 218, 318,** and **1328** of the differential plane mirror interferometer group **570** in relation to measurement cell **90** is shown diagramatically in FIG. **8c.**

The magnitude of phase shifts $\varphi_1$, $\varphi_6$, $\varphi_3$, $\varphi_4$, $\varphi_8$, and $\varphi_9$ are related to the round-trip physical length of measurement path **97,** reference path **98,** or a reference path of zero physical length as shown in FIGS. **5c** and **8c** according to the formulae

$$\varphi_1 = \sum_{i=1}^{i=p_1} k_1 \left( L_{G,i} n_{1i} - L_{V,i} \right) + \zeta_1 \quad , \quad \varphi_6 = \sum_{i=1}^{i=p_1} k_1 L_{G,i} n_{1i} + \zeta_6 \quad ,$$

$$\varphi_3 = \sum_{i=1}^{i=p_2} k_2 \left( L_{G,i} n_{2i} - L_{V,i} \right) + \zeta_3 \quad ,$$

$$\varphi_4 = \sum_{i=p_2+1}^{i=p_1} k_2 \left( L_{G,i} n_{2i} - L_{V,i} \right) + \zeta_4 \quad ,$$

$$\varphi_8 = \sum_{i=1}^{i=p_2} k_2 L_{G,i} n_{2i} + \zeta_8 \quad , \quad \varphi_9 = \sum_{i=p_2+1}^{i=p_1} k_2 L_{G,i} n_{2i} + \zeta_9 \quad ,$$

(179)

for the case of $p_1 = 2p_2$ with the index of refraction in the reference path **98** set to 1. The phase offsets $\zeta_j$ comprise all contributions to the phase shifts $\varphi_j$ that are not related to the measurement path **97** or reference path **98.** To those skilled in the art, the generalization to the case when $p_1 \neq 2p_2$ is a straight forward procedure. Differential plane mirror interferometer group **269** (*c.f.* FIG. **4b**) and differential plane mirror interferometer group **570** shown in FIG. **8b,** along with measurement cell **90,** are configured with $p_1 = 2$ and $p_2 = 1$ so as to illustrate in the simplest manner the function of the apparatus of the eighth embodiment.

Cyclic errors that produce nonlinearities in distance measuring interferometry (*cf.* the cited articles by Bobroff) have been omitted in Eqs. (179). Techniques known to those skilled in the art can be used to either reduce the cyclic errors to negligible levels or compensate for the presence of cyclic errors, techniques such as using separated beams in the interferometer and/or separated beams in the delivery system for light beams from each light beam source to the interferometer (Tanaka, Yamagami, and Nakayama, *ibid.*).

In a next step as shown in FIG. **8a,** phase-shifted beams **129, 1129, 122, 1122, 322,** and **1322** impinge upon photodetectors **85, 1085, 186, 1186, 286,** and **1286,** respectively, resulting in six interference signals, heterodyne signals $s_1, s_6, s_3, s_9, s_8$, and $s_9$, respectively, preferably by photoelectric detection. The signals $s_1$ and $s_6$ correspond to wavelength $\lambda_1$ and signals $s_3, s_4, s_8$, and $s_9$ correspond to wavelength $\lambda_2$. The signals $s_j$ have the form

$$s_j = A_j \cos\left[\alpha_j(t)\right] \quad , \qquad j = 1, 6, 3, 4, 8, \text{ and } 9 \qquad (180)$$

where the time-dependent arguments $\alpha_j(t)$ are given by

$$\alpha_1(t) = 2\pi f_1 t + \varphi_1 \quad , \quad \alpha_6(t) = 2\pi f_1 t + \varphi_6 \quad ,$$

$$\alpha_3(t) = 2\pi f_2 t + \varphi_3 \quad , \quad \alpha_4(t) = 2\pi f_2 t + \varphi_4 \quad , \tag{181}$$

$$\alpha_8(t) = 2\pi f_2 t + \varphi_8 \quad , \quad \alpha_9(t) = 2\pi f_2 t + \varphi_9$$

Heterodyne signals $s_1$, $s_6$, $s_3$, $s_4$, $s_8$, and $s_9$ are transmitted to electronic processor **809** for analysis as electronic signals **103, 1103, 204, 404, 1204,** and **1404,** respectively, preferably in digital format.

The phases of drivers **5** and **6** are transmitted by electrical signals, reference signals **101** and **102,** respectively, in either digital or analog format to electronic processor **809.**

A preferred method for electronically processing the heterodyne signals $s_1$, $s_6$, $s_3$, $s_4$, $s_3$, and $s_9$ is presented herewithin for the case when $l_1$ and $l_2$ are not low order integers. For the case when $l_1$ and $l_2$ are low order integers, the preferred procedure for electronically processing the heterodyne signals $s_1$, $s_6$, $s_3$, $s_4$, $s_8$, and $s_9$ is the same as the one subsequently set down for the variant of the eighth preferred embodiment of the present invention.

Referring now to FIG. **8a,** electronic processor **809** comprises electronic processors **209** and **509,** as depicted in FIGS. **2d** and **5d,** respectively, with omission of obvious duplications. More formally, electronic processor **809** is the union, as used in set theory, of the elements of electronic processors **209** and **509.** Thus, the heterodyne signals $s_1$, $s_6$, $s_8$, and $s_9$ of the eighth embodiment are each processed by the same sequence of electronic processing steps as signal $s_1$, $s_6$, $s_8$, and $s_9$ of the fifth embodiment and $s_1$, $s_3$, and $s_4$ of the eighth embodiment are processed by the same sequence of electronic processing steps as signal $s_1$, $s_3$, and $s_4$ of the second embodiment, respectively. The results of that analysis are phases

$$\Phi_{1\times I1} = \varphi_1 - \varphi_{I1} \quad , \quad \Phi_{6\times I1} = \varphi_6 - \varphi_{I1}$$

$$\vartheta_{1G} = \left[ \frac{l_1}{p_1} \Phi_{1\times I1} + \frac{l_2}{p_2} \frac{(\Phi_{3\times I2} + \Phi_{4\times I2})}{2} \right] \quad ,$$

$$\Phi_{1G} = \left[ \frac{l_1}{p_1} \Phi_{1\times I1} - \frac{l_2}{p_2} \frac{(\Phi_{3\times I2} + \Phi_{4\times I2})}{2} \right] \quad , \tag{182}$$

$$\vartheta_{2G} = \left[ \frac{l_1}{p_1} \Phi_{6\times I1} + \frac{l_2}{p_2} \frac{(\Phi_{8\times I2} + \Phi_{9\times I2})}{2} \right] \quad ,$$

$$\Phi_{2G} = \left[ \frac{l_1}{p_1} \Phi_{6\times I1} - \frac{l_2}{p_2} \frac{(\Phi_{8\times I2} + \Phi_{9\times I2})}{2} \right] \quad .$$

The refractivity $(n_1 - 1)$, the dispersions $(n_2 - n_1)_{1G}$ and $(n_2 - n_1)_{2G}$, and the wavenumbers $k_1$ and $k_2$ can be expressed in terms of other quantities by the formulae

$$(n_1 - 1) = \frac{1}{(\chi + K)L_G} \left( \frac{l_1}{p_1} \right) \left[ \Phi_{1\times I1} - (\zeta_1 - \varphi_{I1}) \right] - \frac{(L_G - L_v)}{L_G} \tag{183}$$

$$(n_2 - n_1)_{1G} = \frac{1}{\chi L_G \left[1 - (K/\chi)^2\right]} \left\{ \begin{matrix} \left[\vartheta_{1G}(K/\chi) - \Phi_{1G}\right] \\ -\left[\xi_1(K/\chi) - Z_1\right] \end{matrix} \right\} \qquad (184)$$

$$(n_2 - n_1)_{2G} = \frac{1}{\chi L_G \left[1 - (K/\chi)^2\right]} \left\{ \begin{matrix} \left[\vartheta_{2G}(K/\chi) - \Phi_{2G}\right] \\ -\left[\xi_2(K/\chi) - Z_2\right] \end{matrix} \right\} \quad , \qquad (185)$$

$$k_1 = \frac{1}{p_1 L_V} \left[ (\Phi_{6 \times I1} - \Phi_{1 \times I1}) - (\zeta_6 - \zeta_1) \right] \qquad (186)$$

$$k_2 = \frac{1}{L_V} \left\{ \begin{matrix} \frac{1}{2l_2} \left[ (\vartheta_{2G} - \Phi_{2G}) - (\vartheta_{1G} - \Phi_{1G}) \right] \\ -\frac{1}{2p_2} \left[ (\zeta_8 + \zeta_9) - (\zeta_3 + \zeta_4) \right] \end{matrix} \right\} \quad , \qquad (187)$$

where

$$\xi_1 = \frac{l_1}{p_1}(\zeta_1 - \varphi_{I1}) + \frac{l_2}{p_2}\left(\frac{\zeta_3 + \zeta_4}{2} - \varphi_{I2}\right) \qquad (188)$$

$$Z_1 = \frac{l_1}{p_1}(\zeta_1 - \varphi_{I1}) - \frac{l_2}{p_2}\left(\frac{\zeta_3 + \zeta_4}{2} - \varphi_{I2}\right) \quad , \qquad (189)$$

$$\xi_2 = \frac{l_1}{p_1}(\zeta_6 - \varphi_{I1}) + \frac{l_2}{p_2}\left(\frac{\zeta_8 + \zeta_9}{2} - \varphi_{I2}\right) \qquad (190)$$

$$Z_2 = \frac{l_1}{p_1}\left(\zeta_6 - \varphi_{I1}\right) - \frac{l_2}{p_2}\left(\frac{\zeta_8 + \zeta_9}{2} - \varphi_{I2}\right) \tag{191}$$

and $\chi$ and $K$ are given by Eqs. (26) and (27), respectively.

In a next step, electronic processing means 809 transmits to the computer 110 the phases $\Phi_{1xI1}$, $\Phi_{6xI1}$, $\vartheta_{1G}$, $\Phi_{1G}$, $\vartheta_{2G}$, and $\Phi_{2G}$ as electronic signal 105 in either digital or analog format, preferably a digital format, for the computation of a $\Gamma$, $K/\chi$, and the calculation of $k_1$ if required according to Eqs. (23), (183), (184) or (185), (186), and (187) substantially independent of fluctuations in the column density of the gas or turbulence of the gas in the measuring path 97 to the extent that measuring paths experienced by beams of differing wavelengths are coextensive, without knowledge of the gas constituents, without knowledge of the environmental conditions, and without knowledge of the properties of the refractivities of the gas constituents.

The remaining description of the eighth embodiment is the same as corresponding portions of the description given for the second and fifth embodiments of the present invention.

Reference is again made to FIGS. 8a-8c which taken together, with electronic processor 809 in FIG. 8a being replaced by electronic processor 809A, depict in diagrammatic form a variant of the eighth preferred embodiment of the present invention wherein the wavelengths of the light beams are approximately harmonically related, the approximate harmonic ratio of the wavelengths of the light beams generated by the adopted light sources is not matched to a known harmonic ratio with a relative precision sufficient to meet the required precision and/or the stability of the adopted light sources is not sufficient to meet the required precision imposed on the output data by the final end use application. The condition wherein the wavelengths are approximately harmonically related corresponds to the special case of the eighth embodiment in which the ratio $(l_1/l_2)$ is expressible as the ratio of low order non zero integers $(p_1/p_2)$, cf. Eq. (35).

The description of the sources of light beams 9 and 10 and of light beams 9 and 10 for the variant of the eighth embodiment is the same as that for description of the sources of light beams 9 and 10 and of light beams 9 and 10 given for the first embodiment with the additional requirement that the wavelengths be approximately harmonically related although not matched to a known harmonic ratio to a relative precision sufficient to meet the required precision imposed on the output data by the final end use application. The description of the apparatus for the variant of the eighth embodiment depicted in FIGS. 8a-8c is the same as corresponding portions of the description given for the eighth embodiment.

Referring now to FIG. 8a with electronic processor 809 replaced with electronic processor 809A, electronic processor 809A comprises electronic processors 209A and 509A, as depicted in FIGS. 2e and 5e, respectively, with omission of obvious duplications. More formally, electronic processor 809A is the union, as used in set theory, of the elements of electronic processors 209A and 509A. Thus, the heterodyne signals $s_1$, $s_6$, $s_8$, and $s_9$ of the variant of the eighth embodiment are each processed by the same sequence of electronic processing steps as signal $s_1$, $s_6$, $s_8$, and $s_9$ of the variant of the fifth embodiment and $s_1$, $s_3$, and $s_4$ of the variant of the eighth embodiment are each processed by the same sequence of electronic processing steps as signal $s_1$, $s_3$, and $s_4$ of the variant of the second embodiment, respectively. The results of that analysis are phases $\varphi_1$, $\varphi_6$,

$$\vartheta_{1G} = \left[\varphi_1 + \frac{(\varphi_3 + \varphi_4)}{2}\right] \quad , \quad \Phi_{1G} = \left[\varphi_1 - \frac{(\varphi_3 + \varphi_4)}{2}\right] \quad ,$$

$$\vartheta_{2G} = \left[\varphi_6 + \frac{(\varphi_8 + \varphi_9)}{2}\right] \quad , \quad \Phi_{2G} = \left[\varphi_6 - \frac{(\varphi_8 + \varphi_9)}{2}\right] \tag{192}$$

In a next step, $\varphi_1$, $\varphi_6$, $\vartheta_{1G}$, $\Phi_{1G}$, $\vartheta_{2G}$, and $\Phi_{2G}$ are transmitted, preferably in digital format, to computer 110 for computation of $\Gamma$, $(K/\chi)$, and $k_1$ if required. Quantities $\varphi_1$, $\varphi_6$, $\vartheta_{1G}$, $\Phi_{1G}$, $\vartheta_{2G}$, $\Phi_{2G}$ $\xi_1$, $Z_1$, $\xi_2$, and $Z_2$ are formally equivalent to $\Phi_{1\times I1}$, $\Phi_{6\times I1}$, $\vartheta_{1G}$, $\Phi_{1G}$, $\vartheta_{2G}$, $\Phi_{2G}$, $\xi_1$, $Z_1$, $\xi_2$, and $Z_2$, respectively, of the eighth embodiment with $\varphi_{I1}$ and $\varphi_{I2}$ set equal to zero, $l_1=p_1$, and $l_2 = p_2$. As a consequence, the refractivity $(n_1-1)$, dispersions $(n_2 - n_1)_{1G}$ and $(n_2 - n_1)_{2G}$, $k_1$, and $k_2$ can be expressed in terms of the quantities measured by the variant of the eighth embodiment according to Eqs. (183), (184), (185), (186), and (187) with $\varphi_{I1}$ and $\varphi_{I2}$ set equal to zero, $l_1 = p_1$, and $l_2 = p_2$. Thus, the computation of a $\Gamma$, $K/\chi$, and the calculation of $k_1$ if required is performed according to Eqs. (23), (183), (184) or (185), (186), and (187) with $\varphi_{I1}$ and $\varphi_{I2}$ set equal to zero, $l_1 = p_1$, and $l_2 = p_2$ substantially independent of fluctuations in the column density of the gas or turbulence of the gas in the measuring path **97** to the extent that measuring paths experienced by beams of differing wavelengths are coextensive, without knowledge of the gas constituents, without knowledge of the environmental conditions, and without knowledge of the properties of the refractivities of the gas constituents. The remaining description of the variant of the eighth embodiment is the same as corresponding portions of the descriptions given for the eighth embodiment.

The principal advantage of the variant of the eighth embodiment in relation to the eighth embodiment is the same as that described with regard to the advantage of the variant of the second embodiment in relation to the second embodiment.

Reference is now made to FIG. **9** that depicts in diagrammatic form the ninth embodiment of the present invention from the third group. The description of the sources of light beams **9** and **10** and of light beams **9** and 10 for the ninth embodiment is the same as that for description of the sources of light beams **9** and **10** and of light beams **9** and **10** given for the first preferred embodiment.

Referring to FIG. **9,** beam **9** is reflected by mirror **53** becoming beam **11** and beam **10** is reflected by mirror **54** as beam **12**. Beam **11** is incident on differential plane mirror interferometer group **369** and beam **12** is incident on differential plane mirror interferometer group **470**. Differential plane mirror interferometer groups **369** and **470** with external mirrors furnished by measurement cell **90** comprise interferometric means for introducing a phase shift $\varphi_5$ between a first portion of the $x$ and $y$ components of beam **11**, a phase shift $\varphi_{10}$ between a second portion of the $x$ and $y$ components of beam **11**, a phase shift $\varphi_2$ between a first portion of the $x$ and $y$ components of beam **12** and a phase shift $\varphi_7$ between a second portion of the $x$ and $y$ components of beam **12.**

Differential plane mirror interferometer group **369** is the same as differential plane mirror interferometer group **369** of the sixth embodiment and differential plane mirror interferometer group **470** is the same as differential plane mirror interferometer group **470** of the seventh embodiment.

The magnitude of phase shifts $\varphi_5$, $\varphi_{10}$, $\varphi_2$, and $\varphi_7$ are related to the round-trip physical length of measurement path **97**, reference path **98**, or a reference path of zero physical length as shown in FIGS. **6d** and **7c** according to the formulae

$$\varphi_5 = \sum_{i=1}^{i=p_1} k_1\left(L_{G,i}n_{1i} - L_{V,i}\right) + \zeta_5 \quad , \quad \varphi_{10} = \sum_{i=1}^{i=p_1} k_1 L_{G,i}n_{1i} + \zeta_{10} \quad ,$$

$$\qquad\qquad\qquad\qquad\qquad\qquad\qquad\qquad\qquad (193)$$

$$\varphi_2 = \sum_{i=1}^{i=p_2} k_2\left(L_{G,i}n_{2i} - L_{V,i}\right) + \zeta_2 \quad , \quad \varphi_7 = \sum_{i=1}^{i=p_2} k_2 L_{G,i}n_{2i} + \zeta_7 \quad ,$$

for the case of $p_1 = 2p_2$ with the index of refraction in the reference path **98** set to 1. The phase offsets $\zeta_j$ comprise all contributions to the phase shifts $\varphi_j$ that are not related to the measurement path **97** or reference path **98**. To those skilled in the art, the generalization to the case when $p_1 \neq 2p_2$ is a straight forward procedure. Differential plane mirror interferometer group **369** (*c.f.* FIGS. **6b** and **6c**) and differential plane mirror interferometer group **470** (*c.f.* FIG. **7b**), along with measurement cell **90**, are configured with $p_1 = 2$ and $p_2 = 1$ so as to illustrate in the simplest manner the function of the apparatus of the eighth embodiment.

Cyclic errors that produce nonlinearities in distance measuring interferometry (*cf.* the cited articles by Bobroff) have been omitted in Eqs. (193). Techniques known to those skilled in the art can be used to either reduce the cyclic errors to negligible levels or compensate for the presence of cyclic errors, techniques such as using separated beams in the interferometer and/or separated beams in the delivery system for light beams from each light beam source to the interferometer (Tanaka, Yamagami, and Nakayama, *ibid.*).

In a next step as shown in FIG. **9**, phase-shifted beams **345, 1345, 130,** and **1130** impinge upon photodetectors **185, 1285, 86,** and **1086,** respectively, resulting in four interference signals, heterodyne signals $s_5$, $s_{10}$, $s_2$, and $s_7$, respectively, preferably by photoelectric detection. The signals $s_5$ and $s_{10}$ correspond to wavelength $\lambda_1$ and signals $s_2$ and $s_7$ correspond to wavelength $\lambda_2$. The signals $s_j$ have the form

$$s_j = A_j \cos\left[\alpha_j(t)\right] \quad , \qquad j = 5, 10, 2, \text{ and } 7 \qquad\qquad (194)$$

where the time-dependent arguments $\alpha_j(t)$ are given by

$$\begin{aligned}
\alpha_5(t) &= 2\pi f_1 t + \varphi_5 \quad , \quad \alpha_{10}(t) = 2\pi f_1 t + \varphi_{10} \\
\alpha_2(t) &= 2\pi f_2 t + \varphi_2 \quad , \quad \alpha_7(t) = 2\pi f_2 t + \varphi_7 \quad .
\end{aligned} \tag{195}$$

Heterodyne signals $s_5$, $s_{10}$, $s_2$, and $s_7$ are transmitted to electronic processor **909** for analysis as electronic signals **203, 1203, 104,** and **1104,** respectively, in either digital or analog format, preferably a digital format.

The phases of drivers **5** and **6** are transmitted by electrical signals, reference signals **101** and **102,** respectively, in either digital or analog format, preferably a digital format, to electronic processor **909.**

A preferred method for electronically processing the heterodyne signals $s_5$, $s_{10}$, $s_2$, and $s_7$ is presented herewithin for the case when $l_1$ and $l_2$ are not low order integers. For the case when $l_1$ and $l_2$ are low order integers, the preferred procedure for electronically processing the heterodyne signals $s_5$, $s_{10}$, $s_2$, and $s_7$ is the same as the one subsequently set down for the variant of the ninth preferred embodiment of the present invention.

Referring now to FIG. **9,** electronic processor **909** comprises electronic processors of electronic processors **309** and **609** that process heterodyne signals $s_5$, $s_{10}$, $s_2$, and $s_7$. Thus, the heterodyne signals $s_5$, $s_{10}$, and $s_7$ of the ninth embodiment are each processed by the same sequence of electronic processing steps as signals $s_5$, $s_{10}$, and $s_7$ of the sixth embodiment and $s_5$ and $s_2$ of the ninth embodiment are processed by the same sequence of electronic processing steps as signal $s_5$ and $s_2$ of the third embodiment, respectively. The results of that analysis are phases

$$\Phi_{5\times I1} = \varphi_5 - \varphi_{I1} \quad , \quad \Phi_{10\times I1} = \varphi_{10} - \varphi_{I1} \quad ,$$

$$\vartheta_{1G} = \begin{pmatrix} \dfrac{l_1}{p_1}\Phi_{5\times I1} \\[2mm] +\dfrac{l_2}{p_2}\Phi_{2\times I2} \end{pmatrix} \quad , \quad \Phi_{1G} = \begin{pmatrix} \dfrac{l_1}{p_1}\Phi_{5\times I1} \\[2mm] -\dfrac{l_2}{p_2}\Phi_{2\times I2} \end{pmatrix} \quad , \tag{196}$$

$$\vartheta_{2G} = \begin{pmatrix} \dfrac{l_1}{p_1}\Phi_{10\times I1} \\[2mm] +\dfrac{l_2}{p_2}\Phi_{7\times I2} \end{pmatrix} \quad , \quad \Phi_{2G} = \begin{pmatrix} \dfrac{l_1}{p_1}\Phi_{10\times I1} \\[2mm] -\dfrac{l_2}{p_2}\Phi_{7\times I2} \end{pmatrix}$$

The refractivity $(n_1 - 1)$, the dispersions $(n_2 - n_1)_{1G}$ and $(n_2 - n_1)_{2G}$, and the wavenumbers $k_1$ and $k_2$ can be expressed in terms of other quantities by the formulae

$$(n_1 - 1) = \frac{1}{(\chi + K)L_G}\left(\frac{l_1}{p_1}\right)\left[\Phi_{5\times I1} - (\zeta_5 - \varphi_{I1})\right] - \frac{(L_G - L_V)}{L_G} \tag{197}$$

$$(n_2 - n_1)_{1G} = \frac{1}{\chi L_G \left[1 - (K/\chi)^2\right]} \left\{ \begin{array}{c} \left[\vartheta_{1G}(K/\chi) - \Phi_{1G}\right] \\ -\left[\xi_1(K/\chi) - Z_1\right] \end{array} \right\} \qquad (198)$$

$$(n_2 - n_1)_{2G} = \frac{1}{\chi L_G \left[1 - (K/\chi)^2\right]} \left\{ \begin{array}{c} \left[\vartheta_{2G}(K/\chi) - \Phi_{2G}\right] \\ -\left[\xi_2(K/\chi) - Z_2\right] \end{array} \right\}, \qquad (199)$$

$$k_1 = \frac{1}{p_1 L_v} \left[ (\Phi_{10 \times I1} - \Phi_{5 \times I1}) - (\zeta_{10} - \zeta_5) \right] \qquad (200)$$

$$k_2 = \frac{1}{L_v} \left\{ \frac{1}{2l_2} \left[ (\vartheta_{2G} - \Phi_{2G}) - (\vartheta_{1G} - \Phi_{1G}) \right] - \frac{1}{p_2} (\zeta_7 - \zeta_2) \right\} \qquad (201)$$

where

$$\xi_1 = \frac{l_1}{p_1} (\zeta_5 - \varphi_{I1}) + \frac{l_2}{p_2} (\zeta_2 - \varphi_{I2}) \qquad (202)$$

$$Z_1 = \frac{l_1}{p_1} (\zeta_5 - \varphi_{I1}) - \frac{l_2}{p_2} (\zeta_2 - \varphi_{I2}), \qquad (203)$$

$$\xi_2 = \frac{l_1}{p_1} (\zeta_{10} - \varphi_{I1}) + \frac{l_2}{p_2} (\zeta_7 - \varphi_{I2}) \qquad (204)$$

70

$$Z_2 = \frac{l_1}{p_1}\left(\zeta_{10} - \varphi_{I1}\right) - \frac{l_2}{p_2}\left(\zeta_7 - \varphi_{I2}\right) \tag{205}$$

and $\chi$ and $K$ are given by Eqs. (26) and (27), respectively.

In a next step, electronic processing means **909** transmits to the computer **110** the phases $\Phi_{5\times I1}$, $\Phi_{10\times I1}$, $\vartheta_{1G}$, $\vartheta_{2G}$, $\Phi_{1G}$, and $\Phi_{2G}$ as electronic signal **105** in either digital or analog format, preferably a digital format, for the computation of a r, $K/\chi$, and the calculation of $k_1$ if required according to Eqs. (23), (197), (198) or (199), (200), and (201) substantially independent of fluctuations in the column density of the gas or turbulence of the gas in the measuring path **97** to the extent that measuring paths experienced by beams of differing wavelengths are coextensive, without knowledge of the gas constituents, without knowledge of the environmental conditions, and without knowledge of the properties of the refractivities of the gas constituents.

The remaining description of the ninth embodiment is the same as corresponding portions of the description given for the third and sixth embodiments of the present invention.

Reference is again made to FIG. **9** which, with electronic processor **909** in FIG. **9** being replaced by electronic processor **909A,** depict in diagrammatic form a variant of the ninth preferred embodiment of the present invention wherein the wavelengths of the light beams are approximately harmonically related, the approximate harmonic ratio of the wavelengths of the light beams generated by the adopted light sources is not matched to a known harmonic ratio with a relative precision sufficient to meet the required precision and/or the stability of the adopted light sources is not sufficient to meet the required precision imposed on the output data by the final end use application. The condition wherein the wavelengths are approximately harmonically related corresponds to the special case of the ninth embodiment in which the ratio $(l_1/l_2)$ is expressible as the ratio of low order non-zero integers $(p_1/p_2)$, cf. Eq. (35).

The description of the sources of light beams **9** and 10 and of light beams **9** and **10** for the variant of the ninth embodiment is the same as that for description of the sources of light beams **9** and **10** and of light beams **9** and **10** given for the first embodiment with the additional requirement that the wavelengths be approximately harmonically related although not matched to a known harmonic ratio to a relative precision sufficient to meet the required precision imposed on the output data by the final end use application. The description of the apparatus for the variant of the ninth embodiment depicted in FIG. **9** is the same as corresponding portions of the description given for the ninth embodiment.

Referring now to FIG. **9** with electronic processor **909** replaced by electronic processor **909A,** electronic processor **909A** comprises electronic processors of electronic processors **309A** and **609A** that process heterodyne signals $s_5$, $s_{10}$, $s_2$, and $s_7$. Thus, the heterodyne signals $s_5$, $s_{10}$, and $s_7$ of the variant of the ninth embodiment are each processed by the same sequence of electronic processing steps as signals $s_5$, $s_{10}$, and $s_7$ of the variant of the sixth embodiment and $s_5$ and $s_2$ of the variant of the ninth embodiment are processed by the same sequence of electronic processing steps as signal $s_5$ and $s_2$ of the variant of the third embodiment, respectively. The results of that analysis are phases $\varphi_5$, $\varphi_{10}$, $\vartheta_{1G}$, $\Phi_{1G}$, $\vartheta_{2G}$, and $\Phi_{2G}$ where

$$\vartheta_{1G} = \left(\varphi_5 + \varphi_2\right) \quad , \quad \Phi_{1G} = \left(\varphi_5 - \varphi_2\right) \quad ,$$
$$\vartheta_{2G} = \left(\varphi_{10} + \varphi_7\right) \quad , \quad \Phi_{2G} = \left(\varphi_{10} - \varphi_7\right) \quad . \tag{206}$$

In a next step, $\varphi_5$, $\varphi_{10}$, $\vartheta_{1G}$, $\Phi_{1G}$, $\vartheta_{2G}$, and $\Phi_{2G}$ are transmitted, preferably in digital format, to computer **110** for computation of $\Gamma$, $(K/\chi)$, and $k_1$ if required. Quantities $\varphi_5$, $\varphi_{10}$, $\vartheta_{1G}$, $\Phi_{1G}$, $\vartheta_{2G}$, $\Phi_{2G}$, $\xi_1$, $Z_1$, $\xi_2$, and $Z_2$ of the variant of the ninth embodiment are formally equivalent to $\Phi_{5\times I1}$, $\Phi_{10\times I1}$, $\vartheta_{1G}$, $\Phi_{1G}$, $\vartheta_{2G}$, $\Phi_{2G}$, $\xi_1$, $Z_1$, $\xi_2$, and $Z_2$, respectively, of the ninth embodiment with $\varphi_{I1}$ and $\varphi_{I2}$ set equal to zero, $l_1 = p_1$, and $l_2 = p_2$. As a consequence, the refractivity $(n_1 - 1)$, dispersions $(n_2 - n_1)_{1G}$ and $(n_2 - n_1)_{2G}$, $k_1$, and $k_2$ can be expressed in terms of the quantities measured by the variant of the ninth embodiment according to Eqs. (197), (198), (199), (200), and (201) with $\varphi_{I1}$ and $\varphi_{I2}$ set equal to zero, $l_1 = p_1$, and $l_2 = p_2$. Thus, the computation of a $\Gamma$, $K/\chi$, and the calculation of $k_1$ if required is performed according to Eqs. (23), (197), (198) or (199), (200), and (201) with $\varphi_{I1}$ and $\varphi_{I2}$ set equal to zero, $l_1 = p_1$, and $l_2 = p_2$ substantially independent of fluctuations in the column density of the gas or turbulence of the gas in the measuring path **97** to the extent that measuring paths experienced by beams of differing wavelengths are coextensive, without knowledge of the gas constituents, without knowledge of the environmental conditions, and without knowledge of the properties of the refractivities of the gas constituents. The remaining discussion of the variant of the ninth embodiment is the same as corresponding portions of the descriptions given for the ninth embodiment.

The principal advantage of the variant of the ninth embodiment in relation to the ninth embodiment is the same as that described with regard to the advantage of the variant of the third embodiment in relation to the third embodiment.

In certain of the embodiments, there will be differences in optical delays experienced by optical beams when the number of passes through an interferometer is different for the different optical beams. It will be apparent to those skill in the art that such differences in delays will generally produce negligible effects as both of the mirrors of the measuring cell **90** are stationary and gas turbulence typically produces small-amplitude, low-frequency effects.

It will be apparent to those skilled in the art that the second, third, fifth, sixth, eighth, and ninth embodiments and variants thereof of the present invention disclosed herein will typically generate a phases $\Phi_{1G}$ and $\Phi_{2G}$ with a reduced sensitivities to relative differences in group delays experienced by the heterodyne signals, the heterodyne signals for a given embodiment or variant thereof each having substantially the same frequency spectrum, in relation to the first, fourth, and seventh embodiments and variants thereof.

It will be further appreciated by those skilled in the art that both the $x$ and $y$ polarization components of beam **9** and/or of beam **10** of the preferred embodiments and variants thereof may be frequency shifted without departing from the scope and spirit of the invention, $f_1$ remaining the difference in frequencies of the $x$ and $y$ polarization components of beam **9** and $f_2$ remaining the difference in frequencies of the $x$ and $y$ polarization components of beam **10.** Improved isolation of an interferometer and a laser source is generally possible by frequency shifting both $x$ and $y$ polarization components of a beam, the degree of improved isolation depending on the means used for generating the frequency shifts.

It will also be appreciated by those skilled in the art that the two frequency components of either or both beams **9** and **10** may be spatially separated at any point following the means for introducing the frequency shifts and prior to entering the respective interferometers of the described preferred embodiments and variants thereof without departing from the scope and spirit of the present invention. If the two frequency components of either of the two beams are spatially separated for any significant distance from the respective interferometer, it may be necessary to employ alternative reference beams such as described in the first embodiment.

The illustrations in FIGS. **1a-1e, 1h, 2a-2c, 3a-3c, 4a-4e, 5a-5c, 6a-6d, 7a-7c, 8a-8c,** and **9** depict nine preferred embodiments and variants thereof of the present invention wherein all of the optical beams for an embodiment or variant of an embodiment are in a single plane. Clearly, modifications using multiple planes can be made to one or more of the nine embodiments and variants thereof without departing from the scope or spirit of the invention.

The nine preferred embodiments and variants thereof of the present invention have measurement cells 90 wherein the measurement paths for $\lambda_1$ and $\lambda_2$ have the same physical lengths and the reference paths for $X_1$ and $\lambda_2$ have the same physical lengths. It will be appreciated by those skilled in the art that the measurement paths for $\lambda_1$ and $\lambda_2$ can have different physical lengths and the reference paths for $\lambda_1$ and $\lambda_2$ can have different physical lengths without departing from the scope and spirit of the present invention as defined in the claims. It will be further appreciated by those skilled in the art that the measurement paths for $\lambda_1$ and $\lambda_2$ can be physically displaced one from the other and the reference paths for $\lambda_1$ and $\lambda_2$ can be physically displaced one from the other without departing from the scope and spirit of the present invention as defined in the claims.

The nine preferred embodiments and variants thereof of the present invention are all configured for use of heterodyne detection. It will be appreciated by those skilled in the art that homodyne detection can be employed in each of the nine embodiments and variants thereof without departing from the scope and spirit of the present invention as defined in the claims. Homodyne receivers would be employed such as disclosed in commonly owned U.S. Pat. No. 5,663,793 entitled "Homodyne Interferometric Receiver and Method" issued Sept. 2, 1997 in the name of P. de Groot. The computation of the reciprocal dispersive power r would be obtained for example in the homodyne version of the first preferred embodiment directly from homodyne phases $\varphi_{1H}$ and $\varphi_{2H}$, the homodyne phases $\varphi_{1H}$ and $\varphi_{2H}$ corresponding to phases $\varphi_1$ and $\varphi_2$ of the first preferred embodiment.

The third set of preferred embodiments of the present invention and variants thereof measure the ratio $(K/\chi)$ and use the measured value of $(K/\chi)$ in the computation of the reciprocal dispersive power r. It will be appreciated by those skilled in the art that the measured value of $(K/\chi)$ can be used as an error signal in a feedback system such that the condition expressed either by Eq. (34) or Eq. (135) is satisfied without departing from the scope and spirit of the present invention as defined in the claims. The measured value of $(K/\chi)$ in the feedback system is sent to either source **1** or source **2** and used to control the respective wavelength of either source **1** or source **2,** for example by controlling the injection current and/or temperature of a diode laser or the cavity frequency of an external cavity diode laser.

It will also be appreciated by those skilled in the art that the differential plane mirror interferometers and the measurement cell may be configured such that the light beams corresponding to two or more differing wavelengths may enter and exit from the same end of the measurement cell in contrast to opposite ends as disclosed in the preferred embodiments and variants thereof without departing from the scope or spirit of the invention as defined in the claims.

Reference is now made to FIG. 10 which is a generalized flowchart depicting via blocks 1600-1626 various steps for practicing an inventive method for measuring intrinsic optical properties of a gas, particularly its reciprocal dispersive power. While it will be evident that the inventive method depicted in FIG. 10 may be carried out using the inventive apparatus disclosed hereinabove, it will also be apparent to those skilled in the art that it may also be implemented with apparatus other than that disclosed. For example, it will be apparent that one need not use a concentric measurement cell arrangement such as that used in the preferred embodiments, but rather may use more conventional interferometric arrangements so long as the required reference and measurement legs are present. In addition, it will be evident that one may use either a homodyne approach or one in which heterodyning techniques are advantageously employed. As will be further appreciated, many of the steps in FIG. 10 may be carried out via appropriate software run on a general purpose computer or a suitably programmed microprocessor either of which may be used to control other elements of the system as needed.

As seen in FIG. 10, one starts in block 1600 by providing two or more light beams having different wavelengths which preferably have a known approximate ratio as previously described. In block **1602,** the light beams are separated into components which in block **1604** are preferably altered by either polarization or spatial encoding, or frequency shifting or both. Otherwise, the light beams may simply be left unaltered and passed through to block **1606.**

As shown in blocks **1622** and **1624,** the relationship of the wavelengths of the light beams may be monitored and if their wavelengths are not within the limits previously discussed, one can adopt corrective measures to compensate from departures of the relationship of the wavelengths from the desired relationship of the wavelengths. Either the departures can be used to provide feedback to control the wavelengths of the light beam sources or corrections can be established and used in subsequent calculations which are influenced by departures or some combination of both approaches can be implemented.

In parallel or contemporaneously with generating the light beams in block **1600,** one also provides as indicated in block **1626** an interferometer having two legs, one occupied preferably by a vacuum (reference leg) and the other by the gas whose intrinsic optical properties are to be measured.

As shown by blocks **1606** and **1608,** the previously generated light beam components are introduced into the interferometer legs so that each component has its phase shifted based on the optical path length it experiences in traveling through the physical length of its assigned leg. Preferably, the physical length for a commonly related pair of components is the same.

After the beams emerge from block **1608,** they are combined in block **1610** to generate mixed optical signals. These mixed optical signals are then sent to block 1612 where by means of photodetection corresponding electrical signals, preferably heterodyne, are generated, and these electrical signals contain information about the relative phases between the light beam components. Preferably the electrical signals are heterodyne signals brought about by previously frequency shifting treatment.

In block 1614, the electrical signals may be directly analyzed to extract relative phase information which can then be passed on to blocks 1616-1620 or, preferably, by superheterodyne signal processing techniques.

Alternatively, depending on the wavelength relationships between the original beams and the optical paths over which they subsequently traveled, modified heterodyne signals are generated prior to superheterodyne signal processing.

In block 1616, any phase ambiguities in homodyne, heterodyne, and/or superheterodyne signals are resolved, preferably by means and calculations previously elaborated in connection with describing the preferred apparatus.

In block 1618, the intrinsic optical properties including the relative dispersive power are calculated, corrections are applied as previously decided, and output signals are generated for subsequent downstream applications or data format requirements.

**Claims**

**1.**   An interferometric apparatus for monitoring select intrinsic optical properties of a gas independently of environmental conditions, the interferometric apparatus comprising:

a source (1, 2) of at least two light beams (7, 8) having different wavelengths;
an interferometer (90) comprising a reference leg and a measurement leg, the reference leg being configured and arranged to be occupied by a predetermined medium and the measurement leg being configured and arranged to be occupied by the gas;
introduction means for introducing at least a portion of each of the light beams (7, 8) into the interferometer (90) so that each beam portion travels through the gas along predetermined paths, and another portion of at least one of the beams travels through the predetermined medium along predetermined paths, the portions and the another portion emerging from the interferometer (90) as exit beams (17, 18, 25, 26, 117, 118, 125, 126) containing information about the respective optical path lengths through the predetermined medium in the reference leg and about the optical path lengths through the gas in the measurement leg,

mixing means (69, 70) for combining the exit beams (17, 18, 25, 26, 117, 118, 125, 126) to produce mixed optical signals containing information corresponding to the phase differences between each of the exit beams (17, 18, 25, 26, 117, 118, 125, 126) from corresponding ones of the predetermined paths of the reference and measurement legs; and

detecting means (85, 86) for detecting the mixed optical signals and generating electrical interference signals containing information corresponding to the select intrinsic optical properties of the gas, the interferometric apparatus being **characterized in that**:

the introduction means is configured such that portions of each of the light beams (7, 8) travel through the predetermined medium along predetermined paths; and
a first exit beam (17) corresponding to one of the beam wavelengths has traveled through the gas in the measurement leg, a second exit beam (25) corresponding to the other wavelength has traveled through the gas in the measurement leg, a third exit beam (117) corresponding to said one wavelength has traveled through the predetermined medium in the reference leg, and a fourth exit beam (125) corresponding to said other wavelength has traveled through the predetermined medium in the reference leg.

2. An interferometric apparatus according to claim 1 **characterized in that** two of the exit beams (17, 117, 25, 125) corresponding to one of the beam wavelengths have traveled through the gas and the predetermined medium, respectively, such that, when combined by the mixing means, they provide a mixed optical signal (129, 130) containing information about the refractivity of the gas at this one wavelength.

3. An interferometric apparatus according to claim 1 **characterized by** nonlinear optical means (67) for receiving the first, second, third and fourth exit beams and doubling the frequencies of at least two of these exit beams to generate signals containing information about the dispersion of the gas.

4. An interferometric apparatus according to any one of the preceding claims **characterized in that** the introduction means (269, 270 comprises means for introducing other portions of each of the light beams into the interferometer such that these other portions are returned as a second set of exit beams (1117, 1125) without traveling along the reference leg and the measurement leg, this second set of exit beams (1117, 1125) containing information about the optical path lengths of the interferometric apparatus other than those of the reference and measurement legs.

5. An interferometric apparatus according to any one of the preceding claims **characterized by** frequency doubling means (67) arranged to double the frequency of at least one of the exit beams and/or at least one of the second set of exit beams prior to combining these beams to produce the mixed optical signals.

6. An interferometric apparatus according to any one of the preceding claims **characterized by** electronic means (109) for analyzing the electrical interference signals and determining the select intrinsic optical properties of the gas.

7. An interferometric apparatus according to claim 6 **characterized in that** the electronic means (109) is configured to determine any one or more of:

(a) the reciprocal dispersive power, $\Gamma$, of the gas, as:

$$\Gamma = \frac{[n_1(\lambda_1) - 1]}{[n_3(\lambda_3) - n_2(\lambda_2)]}$$

where $\lambda_1$, $\lambda_2$ and $\lambda_3$ are wavelengths and $n_1$, $n_2$ and $n_3$ are indices of refraction, and wherein the denominator may be replaced by

$$[n_3(\lambda_3) - n_1(\lambda_1)] \text{ or } [n_2(\lambda_2) - n_1(\lambda_1)];$$

(b) the refractivities of the gas corresponding to each light beam wavelength;
(c) the reciprocal dispersive power, $\Gamma$, of the gas, as:

$$\Gamma = \frac{[n_i(\lambda_i) - 1]}{[n_{j+1}(\lambda_{j+1}) - 1] - [n_j(\lambda_j) - 1]}$$

where $i$ and $j$ are integers corresponding to wavelengths; and
(d) the relative refractivities at different beam wavelengths, where these relative refractivities are of the form:

$$\frac{n_{\lambda_i} - 1}{n_{\lambda_j} - 1}$$

where $i$ and $j$ are integers corresponding to wavelengths, and are different from each other.

8. An interferometric apparatus according to claim 6 or 7 **characterized in that** the electronic means (109) is configured to provide output signals representative of the select intrinsic optical properties of the gas for downstream applications.

9. An interferometric apparatus according to any one of the preceding claims **characterized in that** the predetermined medium comprises a vacuum.

10. An interferometric apparatus according to any one of the preceding claims **characterized in that** the interferometer (90) comprises a concentric cell, this concentric cell comprising a closed inner chamber that serves as the reference leg (98) and an outer chamber surrounding the inner chamber that serving as the measurement leg (97).

11. An interferometric apparatus according to claims 9 and 10 **characterized in that** the inner chamber is substantially evacuated so that the predetermined medium is a vacuum and the outer chamber is opened to the ambient environment.

12. An interferometric apparatus according to claim 11 **characterized in that** the ambient environment comprises air.

13. An interferometric apparatus according to any one of claims 10 to 12 **characterized in that** the concentric cell is in form a right circular cylinder with end sections each of which includes wavelength selective mirrors (95E) as part of the interferometer.

14. An interferometric apparatus according to claim 13 **characterized in that** the introduction means is configured and arranged to introduce one of the portions of the light beams corresponding to one wavelength into one of the end sections of the concentric cell and another of the portions of the light beams corresponding to another wavelength into the other end section of the concentric cell.

15. An interferometric apparatus according to any one of the preceding claims **characterized in that** the light source (1, 2) comprises means (3, 4) for generating orthogonally polarized components of each of the light beams (7, 8).

16. An interferometric apparatus according to claim 15 **characterized by** means (71) for separating the light beams (7, 8) into pairs of orthogonally polarized components of common wavelength.

17. An interferometric apparatus according to claim 16 **characterized by** means (71) for spatially separating the orthogonally polarized pairs of components for subsequent downstream use in the interferometer (69, 70).

18. An interferometric apparatus according to any one of the preceding claims **characterized in that** the wavelengths of the light beams (7, 8) have an approximate harmonic relationship to each other, this approximate harmonic relationship being expressed as a sequence of ratios, each ratio being comprised of a ratio of low order, non-zero integers.

19. An interferometric apparatus according to any one of the preceding claims **characterized in that** the source (1) comprises at least one light source for providing a light beam having one of the beam wavelengths and frequency doubling means (66) associated with this one light source for doubling the frequency of this light beam to provide the other beam at the other wavelength.

20. An interferometric apparatus according to claim 19 **characterized in that** the source (1) comprises a laser and the frequency doubling means (66) comprises a nonlinear optical material for second harmonic generation.

21. An interferometric apparatus according to claim 16 or 17 **characterized by** means (3, 4) for introducing a frequency difference between the orthogonally polarized components of each of the light beams to generate a set of frequency-shifted light beams such that no two frequency-shifted light beams have the same frequency difference.

22. An interferometric apparatus according to claim 21 **characterized by** optical means (54A, 54B) for dividing each beam of the frequency-shifted light beams into one or more beams to provide an expanded set of at least three frequency-shifted light beams (11, 12, 212) from the set of frequency-shifted light beams such that the number of frequency-shifted light beams for each wavelength in the expanded set of frequency-shifted light beams is inversely related in accordance with the approximate harmonic relationship.

23. An interferometric apparatus according to claim 22 **characterized in that** the interferometer (90) introduces phase shifts between the orthogonally polarized components of each beam of the expanded set(11, 12, 212) to produce the exit beams as a set of phase-shifted, frequency-shifted light beams and aligns and directs the beams of the expanded set so that the combined measurement and reference paths traversed by each subset of phase-shifted, frequency-shifted light beams are substantially the same where a subset of the phase-shifted, frequency-shifted light beams comprises beams of the phase-shifted, frequency-shifted light beams having the same wavelength, the measurement and reference paths traversed by any two beams of a subset of phase-shifted, frequency-shifted light beams being substantially non-overlapping.

24. An interferometric apparatus according to claim 23 **characterized in that**:

(a) the physical path lengths for the measurement leg and the reference leg of any beam of the phase-shifted, frequency-shifted light beams are substantially the same;
(b) the magnitude of the phase shifts introduced into each beam of the expanded set of frequency-shifted light beams is proportional to the product of the number of passes of each beam over the measurement and reference legs, of the physical lengths of the measurement and reference legs, and the differences in refractivity of the gas in the measurement leg and the predetermined medium in the reference leg, the refractivity of the gas in the measurement leg for each subset of phase-shifted, frequency-shifted light beams being different, one with respect to another, the refractivity of the gas being a function of wavelength; and
(c) the mixing means mixes the two different frequency components of each beam of the set of phase-shifted, frequency-shifted light beams to produce the mixed optical signals as a set of mixed output beams comprised of at least three mixed output beams, each beam of the set of mixed output beams being derived from one beam of the set of phase-shifted, frequency-shifted light beams.

25. An interferometric apparatus according to claim 24 **characterized by** a nonlinear optical material (67) for doubling the frequency of one of the phase-shifted, frequency shifted light beams prior to entering the mixing means.

26. An interferometric apparatus according to claim 24 or 25 **characterized in that** the detecting means comprises a photodetector (85, 1085, 1086) for generating the electrical interference signals as a set of at least three heterodyne signals (103, 1103, 1104) from the intensities of the set of mixed output beams, this set of at least three heterodyne signals being **characterized by** oscillations at heterodyne frequencies related to the frequency differences between the orthogonally polarized components of the beams of the expanded set of frequency-shifted light beams, the set of at least three heterodyne signals being further **characterized by** a set of heterodyne phases, the set of at least three heterodyne signals being comprised of a set of subsets of heterodyne signals, a subset of heterodyne signals being the heterodyne signals generated from a subset of phase-shifted, frequency-shifted light beams.

27. An interferometric apparatus according to claim 30 **characterized by** means (1092A, 1092L, 1092M) for adding the heterodyne signals of each subset of heterodyne signals to produce a set of superheterodyne signals, each superheterodyne signal of the set of superheterodyne signals being comprised of a signal having a superheterodyne frequency equal to the heterodyne frequency of the subset of heterodyne signals added to produce that superheterodyne signal and a superheterodyne phase equal to the average of the heterodyne phases of the subset of heterodyne signals added to produce that superheterodyne signal, the superheterodyne phases being substantially null except for differences due to the refractivity of the gas in the measurement leg and the predetermined medium in the reference leg of the set of phase-shifted, frequency-shifted light beams.

28. An interferometric apparatus according to claim 27 **characterized in that** the electronic means comprises extracting means for extracting the signals of two of the set of superheterodyne signals and mixing the signals to produce a second level superheterodyne signal comprised of two sidebands, the sum and difference sidebands, having frequencies, the sum and difference frequencies, equal to the sum and difference of the superheterodyne frequencies, respectively, of the superheterodyne signals mixed to produce the second level superheterodyne signal and having phases, the sum and difference phases, equal to the sum and difference of the superheterodyne phases, respectively, of the superheterodyne signals mixed to produce the second level superheterodyne signal, the difference phase being substantially null except for differences due to the dispersion of the refractivity of gas in the measurement leg and the refractivity of the predetermined medium in the reference leg of the set of phase-shifted, frequency-shifted light beams.

29. An interferometric apparatus according to claim 28 **characterized in that** the electronic means operates on the sum phase and difference phase and one of the superheterodyne phases to determine the reciprocal dispersive power of the gas.

30. An interferometric apparatus according to any one of claims 24 to 29 **characterized in that** the mixing means is configured and arranged to produce the mixed optical signals as a set of at least two mixed output beams, each generated from one subset of phase-shifted, frequency-shifted light beams.

31. An interferometric apparatus according to claim 18 **characterized by** electronic processing means (709) to measure the approximate harmonic ratio of the wavelengths of the source (1, 2) and provide a signal for correcting the calculations made in determining the select intrinsic optical properties.

32. An interferometric apparatus according to any one of claims 21 to 30 **characterized in that** the interferometer introduces phase shifts between the orthogonally polarized components of each beam of the set of frequency-shifted light beams to produce a set of phase-shifted, frequency-shifted light beams and aligns and directs the beams of the set of frequency-shifted light beams so that the measurement and reference legs traversed by each beam of the set of phase-shifted, frequency-shifted light beams are substantially the same.

33. An interferometric apparatus according to any one of claims 23 to 30 and 32 **characterized in that** the physical path lengths for the measurement leg and the reference leg of any beam of the phase-shifted, frequency-shifted light beams are substantially the same.

34. An interferometric apparatus according to claim 33 **characterized in that** the magnitude of the phase shifts introduced into each beam of the set of frequency-shifted light beams and/or the expanded set of frequency-shifted light beams is proportional to the product of a number of passes over the measurement and reference legs, the physical lengths of the measurement and reference legs, and the differences in refractivity of the gas in the measurement leg and the predetermined medium in the reference leg, the refractivity of the gas in the measurement leg for each beam of phase-shifted, frequency-shifted light beams being different, one with respect to another, the refractivity of the gas being a function of wavelength.

35. An interferometric apparatus according to claim 34 **characterized in that** the mixing means mixes the two different frequency components of each beam of the set of phase-shifted, frequency-shifted light beams to produce the mixed optical signals as a set of mixed output beams comprised of at least two mixed output beams, each beam of the set of mixed output beams being derived from one, and only one, beam of the set of phase-shifted, frequency-shifted light beams, and further **characterized in that** the detecting means comprises a photodetector for generating the electrical interference signals as a set of heterodyne signals from the intensities of the set of mixed output beams, this set of heterodyne signals being comprised of at least two heterodyne signals and having oscillations at heterodyne frequencies related to the frequency differences between the orthogonally polarized components of the beams of the set of frequency-shifted light beams, the set of heterodyne signals also having a set of heterodyne phases substantially inversely related to the approximate harmonic relationship between the light beam wavelengths except for differences related to the refractivity of the gas in the measurement leg.

36. An interferometric apparatus according to claim 35 **characterized by** means for processing the set of heterodyne signals to generate a set of modified heterodyne signals having modified heterodyne frequencies harmonically related to the heterodyne frequencies in accordance with the approximate harmonic relationship between the light beam wavelengths, and having modified heterodyne phases harmonically related to the heterodyne phases in accordance with the approximate harmonic relationship between the light beam wavelengths, the set of modified heterodyne phases of the set of modified heterodyne signals being substantially equal except for differences due to the refractivity of the gas in the measurement leg and of the predetermined medium in the reference leg of the set of the phase-shifted, frequency-shifted light beams.

37. An interferometric apparatus according to claim 36 **characterized by** electronic means for mixing two of the modified heterodyne signals to produce a superheterodyne signal comprised of two sidebands, the sum and difference sidebands, having frequencies, the sum and difference frequencies, equal to the sum and difference of the modified heterodyne frequencies, respectively, of the pair of modified heterodyne signals and having phases, the sum and difference phases, equal to the sum and difference of the modified heterodyne phases, respectively, of the pair of modified heterodyne signals, the difference phase being substantially null except for differences due to the dispersion of the refractivity of the gas in the measurement leg and of the predetermined medium in the reference leg of the set of phase-shifted, frequency shifted light beams, the apparatus further being **characterized in that** the electronic means includes means for analyzing the difference phase and the modified heterodyne phase of one of the pair of modified heterodyne signals to determine the reciprocal dispersive power of the gas in the measurement leg.

38. An interferometric apparatus according to any one of claims 32 to 37 **characterized in that** the interferometer comprises means for generating multiple passes over the measurement leg and the reference leg for the set of phase-shifted, frequency-shifted light beams, the number of multiple passes for a beam of the set of phase-shifted, frequency-shifted light beams being proportional to the wavelength of the beam of the set of phase-shifted, frequency-shifted light beams, the physical lengths of the measurement leg and the reference leg of any beam of the set of phase-shifted, frequency-shifted light beams light beams being substantially the same.

39. An interferometric apparatus according to claim 38 **characterized in that** the magnitude of the phase shifts introduced into each of the set of frequency-shifted light beams is proportional to the product of the number of passes over the measurement and reference legs, the physical lengths of the measurement and reference legs, and the differences in refractivity of the gas in the measurement leg and the predetermined medium in the reference leg, the refractivity of the gas in the measurement leg for each of the phase-shifted, frequency-shifted light beams being different, one with respect to another, the refractivity of the gas being a function of wavelength.

40. An interferometric apparatus according to any one of claims 34 to 39 **characterized in that** the mixing means mixes the two different frequency components of each of the set of phase-shifted, frequency-shifted light beams to produce mixed optical signals as a set of mixed output beams comprised of at least two mixed output beams, each beam of this set of mixed output beams being derived from one, and only one, of the set of phase-shifted, frequency-shifted light beams.

41. An interferometric apparatus according to claim 40 **characterized in that** the detecting means comprises a photodetector for generating the electrical interference signals as a set of heterodyne signals from the intensities of the set of mixed output beams, this set of heterodyne signals being comprised of at least two heterodyne signals and having oscillations at heterodyne frequencies related to the frequency differences between the orthogonally polarized components of the beams of the set of frequency-shifted light beams, the set of heterodyne signals also having a set of heterodyne phases substantially equal except for differences related to the refractivity of the gas in the measurement leg and the refractivity of the predetermined medium in the reference leg.

42. An interferometric apparatus according to claim 36 or 41 **characterized by** electronic means for mixing two of the heterodyne signals to produce a superheterodyne signal comprised of two sidebands, the sum and difference sidebands, having frequencies, the sum and difference frequencies, equal to the sum and difference of the heterodyne frequencies, respectively, of the pair of heterodyne signals and having phases, the sum and difference phases, equal to the sum and difference of the heterodyne phases, respectively, of the pair of heterodyne signals, the difference phase being substantially null except for differences due to the dispersion of the refractivity of the gas in the measurement leg and of the predetermined medium in the reference leg of the set of phase-shifted, frequency-shifted light beams.

**43.** An interferometric apparatus according to any one of claims 18, 28, 29, 31 and 42 **characterized in that** the relative precision of the approximate harmonic relationship expressed as the sequence of ratios is of an order of magnitude less than the dispersive power of the gas times the relative precision required for the measurement of the reciprocal dispersive power of the gas.

**44.** An interferometric apparatus according to any one of claims 28, 28, 29, 31 and 42 **characterized by** monitoring means for monitoring the relative precision of the approximate harmonic relationship expressed as the sequence of ratios.

**45.** An interferometric apparatus according to claim 44 **characterized by** means responsive to the monitoring means for providing a feedback signal to control the source of the light beams so that the relative precision of the approximate harmonic relationship is of an order of magnitude less than the dispersive power of the gas times the relative precision required for the measurement of the reciprocal dispersive power of the gas.

**46.** An interferometric apparatus according to any one of claims 42 to 45 **characterized in that** the electronic means comprises means for analyzing the difference phase and the heterodyne phase of one of the pair of heterodyne signals to determine the reciprocal dispersive power of the gas in the measurement leg.

**47.** An interferometric apparatus according to any one of claims 44 to 48 **characterized by** means responsive to the monitoring means for correcting either the select intrinsic optical properties or the reciprocal dispersive power of the gas in the measurement leg as determined by the electronic means.

**48.** An interferometric apparatus according to claim 47 **characterized in that** the electronic means comprises means for analyzing the difference phase and the heterodyne phase of one of the pair of heterodyne signals to determine the reciprocal dispersive power of the gas in the measurement leg.

**49.** An interferometric apparatus according to any one of the preceding claims **characterized in that** the electrical interference signals comprise heterodyne signals containing phase information corresponding to the refractivities of the gas and further **characterized by** means for mixing the heterodyne signals to generate at least one superheterodyne signal containing phase information corresponding to the dispersion of the refractivities of the gas.

**50.** An interferometric apparatus according to claim 49 **characterized by** means (1616) for resolving phase ambiguities of the heterodyne and superheterodyne signals.


### Patentansprüche

**1.** Interferometrische Vorrichtung zum Beobachten ausgewählter intrinsischer optischer Eigenschaften eines Gases unabhängig von Umweltbedingungen, wobei die interferometrische Vorrichtung aufweist:

eine Quelle (1, 2) von mindestens zwei Lichtstrahlen (7, 8) mit unterschiedlichen Wellenlängen;
ein Interferometer (90), das einen Referenzschenkel und einen Messungsschenkel aufweist, wobei der Referenzschenkel so gestaltet und angeordnet ist, dass er mit einem vorbestimmten Medium gefüllt ist, und der Messschenkel so gestaltet und angeordnet ist, dass er mit Gas gefüllt ist;
ein Einleitungsmittel zum Einleiten mindestens eines Teils jedes der Lichtstrahlen (7, 8) in das Interferometer (90), so dass sich jeder Strahlteil entlang vorbestimmter Pfade durch das Gas bewegt und ein anderer Teil mindestens eines der Strahlen sich entlang vorbestimmter Pfade durch das vorbestimmte Medium bewegt, wobei die Teile und
der andere Teil, die aus dem Interferometer (90) als Ausgangsstrahlen (17, 18, 25, 26, 117, 118, 125, 126) austreten, Informationen über die entsprechenden optischen Pfadlängen durch das vorbestimmte Medium im Referenzschenkel und über die optischen Pfadlängen durch das Gas im Messschenkel enthalten;
Mischungsmittel (69, 70) zum Vereinen der Ausgangsstrahlen (17, 18, 25, 26, 117, 118, 125, 126), um gemischte optische Signale zu erzeugen, die Informationen entsprechend den Phasendifferenzen zwischen jedem der Ausgangsstrahlen (17, 18, 25, 26, 117, 118, 125, 126) von entsprechenden der vorbestimmten Pfade der Referenz- und Messschenkel enthalten; und
Detektionsmittel (85, 86) zum Erfassen der gemischten optischen Signale und zum Erzeugen elektrischer Interferenzsignale, die Informationen enthalten, die den gewählten intrinsischen optischen Eigenschaften des Gases entsprechen,
wobei die interferometrische Vorrichtung **dadurch gekennzeichnet ist, dass**:

das Einleitungsmittel so gestaltet ist, dass sich Teile jedes der Lichtstrahlen (7, 8) durch das vorbestimmte Medium entlang vorbestimmter Pfade bewegen; und
ein erster Ausgangsstrahl (17), der einer der Strahlwellenlängen entspricht, sich durch das Gas im Messschenkel bewegt hat, ein zweiter Ausgangsstrahl (25), der der anderen Wellenlänge entspricht, sich durch das Gas im Messschenkel bewegt hat, ein dritter Ausgangsstrahl (117), der der einen Wellenlänge entspricht, sich durch das vorbestimmte Medium im Referenzschenkel bewegt hat, und ein vierter Ausgangsstrahl (125), der der anderen Wellenlänge entspricht, sich durch das vorbestimmte Medium im Referenzschenkel bewegt hat.

2. Interferometrische Vorrichtung nach Anspruch 1, **dadurch gekennzeichnet, dass** sich zwei der Ausgangsstrahlen (17, 117, 25, 125), die einer der Strahlwellenlängen entsprechen, durch das Gas bzw. das vorbestimmte Medium bewegt haben, so dass sie, wenn sie von dem Mischungsmittel vereint werden, ein gemischtes optisches Signal (129, 130) vorsehen, das Informationen über das Brechungsvermögen des Gases bei dieser einen Wellenlänge enthält.

3. Interferometrische Vorrichtung nach Anspruch 1, **gekennzeichnet durch** nicht lineare optische Mittel (67) zum Empfangen der ersten, zweiten, dritten und vierten Ausgangsstrahlen und zum Verdoppeln der Frequenzen von mindestens zwei dieser Ausgangsstrahlen, um Signale zu erzeugen, die Informationen über die Dispersion des Gases enthalten.

4. Interferometrische Vorrichtung nach einem der vorangehenden Ansprüche, **dadurch gekennzeichnet, dass** das Einleitungsmittel (269, 270) Mittel zum Einleiten anderer Teile jedes der Lichtstrahlen in das Interferometer aufweist, so dass diese anderen Teile als ein zweiter Satz von Ausgangsstrahlen (1117, 1125) zurückgeleitet werden, ohne sich entlang des Referenzschenkels und des Messschenkels zu bewegen, wobei dieser zweite Satz von Ausgangsstrahlen (1117, 1125) Informationen über die optischen Pfadlängen der interferometrischen Vorrichtung außer jenen der Referenz- und Messschenkel enthält.

5. Interferometrische Vorrichtung nach einem der vorangehenden Ansprüche, **gekennzeichnet durch** ein Frequenzverdopplungsmittel (67), das zum Verdoppeln der Frequenz mindestens eines der Ausgangsstrahlen und/oder mindestens eines des zweiten Satzes von Ausgangsstrahlen vor dem Vereinen dieser Strahlen zum Erzeugen der gemischten optischen Signale angeordnet ist.

6. Interferometrische Vorrichtung nach einem der vorangehenden Ansprüche, **gekennzeichnet durch** elektronische Mittel (109) zum Analysieren der elektrischen Interferenzsignale und Bestimmen der gewählten intrinsischen optischen Eigenschaften des Gases.

7. Interferometrische Vorrichtung nach Anspruch 6, **dadurch gekennzeichnet, dass** das elektronische Mittel (109) konfiguriert ist zum Bestimmen eines oder mehrerer von:

(a) dem reziproken Dispersionsvermögen $\Gamma$ des Gases als:

$$\Gamma = \frac{[n_1(\lambda_1) - 1]}{[n_3(\lambda_3) - n_2(\lambda_2)]}$$

wobei $\lambda_1$, $\lambda_2$ und $\lambda_3$ Wellenlängen sind und $n_1$, $n_2$ und $n_3$ Brechungsindizes sind und wobei der Nenner ersetzt werden kann durch

$$[n_3(\lambda_3) - n_1(\lambda_1)]$$

oder

$$[n_2(\lambda_2) - n_1(\lambda_1)]\,;$$

(b) dem Brechungsvermögen des Gases entsprechend jeder Lichtstrahlwellenlänge;
(c) dem reziproken Dispersionsvermögen $\Gamma$ des
Gases als:

$$\Gamma = \frac{[n_i(\lambda_i) - 1]}{[n_{j+1}(\lambda_{j+1}) - 1] - [n_j(\lambda_j) - 1]}$$

wobei *i* und j ganze Zahlen sind, die Wellenlängen entsprechen; und
(d) dem relativen Brechungsvermögen bei verschiedenen Strahlwellenlängen, wobei dieses relative Brechungsvermögen die Formel:

$$\frac{n_{\lambda_i} - 1}{n_{\lambda_j} - 1}$$

hat, wobei *i* und j ganze Zahlen sind, die Wellenlängen entsprechen, und sich voneinander unterscheiden.

8. Interferometrische Vorrichtung nach Anspruch 6 oder 7, **dadurch gekennzeichnet, dass** das elektronische Mittel (109) zum Vorsehen von Ausgangssignalen, die für die gewählten intrinsischen optischen Eigenschaften des Gases repräsentativ sind, für nachgeschaltete Anwendungen konfiguriert ist.

9. Interferometrische Vorrichtung nach einem der vorangehenden Ansprüche, **dadurch gekennzeichnet, dass** das vorbestimmte Medium ein Vakuum aufweist.

10. Interferometrische Vorrichtung nach einem der vorangehenden Ansprüche, **dadurch gekennzeichnet, dass** das Interferometer (90) eine konzentrische Zelle aufweist, die eine geschlossene Innenkammer aufweist, die als Referenzschenkel (98) dient, und eine Außenkammer, die die Innenkammer umgibt, die als Messschenkel (97) dient.

11. Interferometrische Vorrichtung nach Anspruch 9 und 10, **dadurch gekennzeichnet, dass** die Innenkammer im Wesentlichen evakuiert ist, so dass das vorbestimmte Medium ein Vakuum ist, und die Außenkammer zur Umgebung hin geöffnet ist.

12. Interferometrische Vorrichtung nach Anspruch 11, **dadurch gekennzeichnet, dass** die Umgebung Luft aufweist.

13. Interferometrische Vorrichtung nach einem der Ansprüche 10 bis 12, **dadurch gekennzeichnet, dass** die konzentrische Zelle die Form eines rechtszirkularen Zylinders hat, dessen Endabschnitte jeweils wellenlängenselektive Spiegel (95E) als Teil des Interferometers enthalten.

14. Interferometrische Vorrichtung nach Anspruch 13, **dadurch gekennzeichnet, dass** das Einleitungsmittel zum Einleiten eines der Teile der Lichtstrahlen, die einer Wellenlänge entsprechen, in einen der Endabschnitte der konzentrischen Zelle und einen anderen der Teile der Lichtstrahlen, die einer anderen Wellenlänge entsprechen, in den anderen Endabschnitt der konzentrischen Zelle konfiguriert und angeordnet ist.

15. Interferometrische Vorrichtung nach einem der vorangehenden Ansprüche, **dadurch gekennzeichnet, dass** die Lichtquelle (1, 2) Mittel (3, 4) zum Erzeugen orthogonal polarisierter Komponenten jedes der Lichtstrahlen (7, 8) aufweist.

16. Interferometrische Vorrichtung nach Anspruch 15, **gekennzeichnet durch** Mittel (71) zum Trennen der Lichtstrahlen (7, 8) in Paare von orthogonal polarisierten Komponenten einer gemeinsamen Wellenlänge.

**17.** Interferometrische Vorrichtung nach Anspruch 16, **gekennzeichnet durch** Mittel (71) zum räumlichen Trennen der orthogonal polarisierten Paare von Komponenten zur anschließenden nachgeschalteten Verwendung im Interferometer (69, 70).

**18.** Interferometrische Vorrichtung nach einem der vorangehenden Ansprüche, **dadurch gekennzeichnet, dass** die Wellenlängen der Lichtstrahlen (7, 8) ein approximatives Oberwellenverhältnis zueinander haben, wobei dieses approximative Oberwellenverhältnis als eine Sequenz von Verhältnissen ausgedrückt wird, wobei jedes Verhältnis aus einem Verhältnis ganzer, niederwertiger Zahlen ungleich null besteht.

**19.** Interferometrische Vorrichtung nach einem der vorangehenden Ansprüche, **dadurch gekennzeichnet, dass** die Quelle (1) mindestens eine Lichtquelle zum Vorsehen eines Lichtstrahls mit einer der Strahlwellenlängen und Frequenzverdopplungsmittel (66), die mit dieser einen Lichtquelle verbunden sind, zum Verdoppeln der Frequenz dieses Lichtstrahls, um den anderen Strahl bei der anderen Wellenlänge vorzusehen, aufweist.

**20.** Interferometrische Vorrichtung nach Anspruch 19, **dadurch gekennzeichnet, dass** die Quelle (1) einen Laser aufweist und das Frequenzverdopplungsmittel (66) ein nicht lineares optisches Material zur Erzeugung einer zweiten Oberwelle aufweist.

**21.** Interferometrische Vorrichtung nach Anspruch 16 oder 17, **gekennzeichnet durch** Mittel (3, 4) zum Einführen einer Frequenzdifferenz zwischen den orthogonal polarisierten Komponenten jedes der Lichtstrahlen, um einen Satz von frequenzverschobenen Lichtstrahlen zu erzeugen, so dass keine zwei frequenzverschobenen Lichtstrahlen dieselbe Frequenzdifferenz haben.

**22.** Interferometrische Vorrichtung nach Anspruch 21, **gekennzeichnet durch** optische Mittel (54A, 54B) zum Teilen jedes Strahls der frequenzverschobenen Lichtstrahlen in einen oder mehrere Strahlen, um einen erweiterten Satz von mindestens drei frequenzverschobenen Lichtstrahlen (11, 12, 212) aus dem Satz von frequenzverschobenen Lichtstrahlen vorzusehen, so dass die Anzahl von frequenzverschobenen Lichtstrahlen für jede Wellenlänge in dem erweiterten Satz von frequenzverschobenen Lichtstrahlen gemäß dem approximativen Oberwellenverhältnis in einem umgekehrten Verhältnis steht.

**23.** Interferometrische Vorrichtung nach Anspruch 22, **dadurch gekennzeichnet, dass** das Interferometer (90) Phasenverschiebungen zwischen den orthogonal polarisierten Komponenten des erweiterten Satzes (11, 12, 212) einführt, um die Ausgangsstrahlen als einen Satz von phasenverschobenen, frequenzverschobenen Lichtstrahlen zu erzeugen, und die Strahlen des erweiterten Satzes so ausrichtet und lenkt, dass die kombinierten Mess- und Referenzpfade, die von jedem Teilsatz von phasenverschobenen, frequenzverschobenen Lichtstrahlen durchquert werden, im Wesentlichen dieselben sind, wobei ein Teilsatz der phasenverschobenen, frequenzverschobenen Lichtstrahlen Strahlen der phasenverschobenen, frequenzverschobenen Lichtstrahlen mit derselben Wellenlänge aufweist, wobei die Mess- und Referenzpfade, die von beliebigen zwei Strahlen eines Teilsatzes von phasenverschobenen, frequenzverschobenen Lichtstrahlen durchquert werden, im Wesentlichen nicht überlappend sind.

**24.** Interferometrische Vorrichtung nach Anspruch 23, **dadurch gekennzeichnet, dass**:

(a) die physischen Pfadlängen für den Messschenkel und den Referenzschenkel eines beliebigen Strahls der phasenverschobenen, frequenzverschobenen Lichtstrahlen im Wesentlichen dieselben sind;

(b) die Größe der Phasenverschiebungen, die in jeden Strahl des erweiterten Satzes von frequenzverschobenen Lichtstrahlen eingeführt werden, zum Produkt der Anzahl von Durchgängen jedes Strahls über die Mess- und Referenzschenkel, der physikalischen Längen der Mess- und Referenzschenkel und den Differenzen im Brechungsvermögen des Gases im Messschenkel und des vorbestimmten Mediums im Referenzschenkel proportional ist, wobei sich das Brechungsvermögen des Gases im Messschenkel für jeden Teilsatz von phasenverschobenen, frequenzverschobenen Lichtstrahlen, einer in Bezug auf den anderen, unterscheidet, wobei das Brechungsvermögen des Gases eine Funktion einer Wellenlänge ist; und

(c) das Mischungsmittel die zwei verschiedenen Frequenzkomponenten jedes Strahls des Satzes von phasenverschobenen, frequenzverschobenen Lichtstrahlen mischt, um die gemischten optischen Signale als einen Satz von gemischten Ausgangsstrahlen zu erzeugen, der aus mindestens drei gemischten Ausgangsstrahlen besteht, wobei jeder Strahl des Satzes von gemischten Ausgangsstrahlen von einem Strahl des Satzes von phasenverschobenen, frequenzverschobenen Lichtstrahlen abgeleitet ist.

**25.** Interferometrische Vorrichtung nach Anspruch 24, **gekennzeichnet durch** ein nicht lineares optisches Material (67) zum Verdoppeln der Frequenz eines der phasenverschobenen, frequenzverschobenen Lichtstrahlen vor dem Eintritt in das Mischungsmittel.

**26.** Interferometrische Vorrichtung nach Anspruch 24 oder 25, **dadurch gekennzeichnet, dass** das Detektionsmittel einen Photodetektor (85, 1085, 1086) zum Erzeugen elektrischer Interferenzsignale als einen Satz von mindestens drei heterodynen Signalen (103, 1103, 1104) aus den Intensitäten des Satzes gemischter Ausgangsstrahlen aufweist, wobei dieser Satz von mindestens drei heterodynen Signalen durch Schwingungen bei heterodynen Frequenzen gekennzeichnet ist, die mit den Frequenzdifferenzen zwischen den orthogonal polarisierten Komponenten der Strahlen des erweiterten Satzes von frequenzverschobenen Lichtstrahlen zusammenhängen, wobei der Satz von mindestens drei heterodynen Signalen des Weiteren durch einen Satz von heterodynen Phasen gekennzeichnet ist, wobei der Satz von mindestens drei heterodynen Signalen aus einem Satz von Teilsätzen heterodyner Signale besteht, wobei ein Teilsatz heterodyner Signale die heterodynen Signale sind, die aus einem Teilsatz von phasenverschobenen, frequenzverschobenen Lichtstrahlen erzeugt werden.

**27.** Interferometrische Vorrichtung nach Anspruch 30, **gekennzeichnet durch** Mittel (1092A, 1092L, 1092M) zum Addieren der heterodynen Signale jedes Teilsatzes von heterodynen Signalen, um einen Satz von superheterodynen Signalen zu erzeugen, wobei jedes superheterodyne Signal des Satzes von superheterodynen Signalen aus einem Signal besteht mit einer superheterodynen Frequenz, die gleich der heterodynen Frequenz des Teilsatzes von heterodynen Signalen ist, die zum Erzeugen des superheterodynen Signals addiert werden, und mit einer superheterodynen Phase gleich dem Durchschnitt der heterodynen Phasen des Teilsatzes von heterodynen Signalen, die zum Erzeugen des superheterodynen Signals addiert werden, wobei die superheterodynen Phasen im Wesentlichen null sind, mit Ausnahme von Differenzen aufgrund des Brechungsvermögens des Gases im Messschenkel und des vorbestimmten Mediums im Referenzschenkel des Satzes von phasenverschobenen, frequenzverschobenen Lichtstrahlen.

**28.** Interferometrische Vorrichtung nach Anspruch 27, **dadurch gekennzeichnet, dass** das elektronische Mittel ein Extrahiermittel zum Extrahieren der Signale von zwei des Satzes von superheterodynen Signalen und Mischen der Signale zum Erzeugen eines superheterodynen Signals zweiter Ebene aufweist, das aus zwei Seitenbändern besteht, den Summen- und Differenzseitenbändern, mit Frequenzen, den Summen- und Differenzfrequenzen, gleich der Summe bzw. Differenz der superheterodynen Frequenzen der superheterodynen Signale, die zum Erzeugen des superheterodynen Signals zweiter Ebene gemischt werden, und mit Phasen, den Summen- und Differenzphasen, die gleich der Summe bzw. Differenz der superheterodynen Phasen der superheterodynen Signale sind, die zum Erzeugen des superheterodynen Signals zweiter Ebene gemischt werden, wobei die Differenzphase im Wesentlichen null ist, mit Ausnahme von Differenzen aufgrund der Dispersion des Brechungsvermögens des Gases im Messschenkel und des Brechungsvermögens des vorbestimmten Mediums im Referenzschenkel des Satzes von phasenverschobenen, frequenzverschobenen Lichtstrahlen.

**29.** Interferometrische Vorrichtung nach Anspruch 28, **dadurch gekennzeichnet, dass** das elektronische Mittel die Summenphase und Differenzphase und eine der superheterodynen Phasen bearbeitet, um das reziproke Dispersionsvermögen des Gases zu bestimmen.

**30.** Interferometrische Vorrichtung nach einem der Ansprüche 24 bis 29, **dadurch gekennzeichnet, dass** das Mischungsmittel zum Erzeugen der gemischten optischen Signale als einen Satz von mindestens zwei gemischten Ausgangsstrahlen gestaltet und angeordnet ist, wobei jeder aus einem Teilsatz von phasenverschobenen, frequenzverschobenen Lichtstrahlen erzeugt wird.

**31.** Interferometrische Vorrichtung nach Anspruch 18, **gekennzeichnet durch** elektronische Verarbeitungsmittel (709) zum Messen des approximativen Oberwellenverhältnisses der Wellenlänge der Quelle (1, 2) und zum Vorsehen einer Signals zum Korrigieren der Berechnungen, die in der Bestimmung der gewählten intrinsischen optischen Eigenschaften vorgenommen werden.

**32.** Interferometrische Vorrichtung nach einem der Ansprüche 21 bis 30, **dadurch gekennzeichnet, dass** das Interferometer Phasenverschiebungen zwischen den orthogonal polarisierten Komponenten jedes Strahls des Satzes von frequenzverschobenen Lichtstrahlen einführt, um einen Satz von phasenverschobenen, frequenzverschobenen Lichtstrahlen zu erzeugen, und die Strahlen des Satzes von frequenzverschobenen Lichtstrahlen so ausrichtet und lenkt, dass die Mess- und Referenzschenkel, die von jedem Strahl des Satzes von phasenverschobenen, frequenzverschobenen Lichtstrahlen durchquert werden, im Wesentlichen dieselben sind.

**33.** Interferometrische Vorrichtung nach einem der Ansprüche 23 bis 30 und 32, **dadurch gekennzeichnet, dass** die physischen Pfadlängen für den Messschenkel und den Referenzschenkel jedes Strahls der phasenverschobenen, frequenzverschobenen Lichtstrahlen im Wesentlichen dieselben sind.

**34.** Interferometrische Vorrichtung nach Anspruch 33, **dadurch gekennzeichnet, dass** die Größe der Phasenverschiebungen, die in jeden Strahl des Satzes von frequenzverschobenen Lichtstrahlen und/oder des erweiterten Satzes von frequenzverschobenen Lichtstrahlen eingeführt werden, zum Produkt einer Anzahl von Durchgängen über die Mess- und Referenzschenkel, der physikalischen Längen der Mess- und Referenzschenkel und den Differenzen im Brechungsvermögen des Gases im Messschenkel und des vorbestimmten Mediums im Referenzschenkel proportional ist, wobei sich das Brechungsvermögen des Gases im Messschenkel für jeden Strahl der phasenverschobenen, frequenzverschobenen Lichtstrahlen, einer in Bezug auf den anderen, unterscheidet, wobei das Brechungsvermögen des Gases eine Funktion der Wellenlänge ist.

**35.** Interferometrische Vorrichtung nach Anspruch 34, **dadurch gekennzeichnet, dass** das Mischungsmittel die zwei verschiedenen Frequenzkomponenten jedes Strahls des Satzes von phasenverschobenen, frequenzverschobenen Lichtstrahlen mischt, um die gemischten optischen Signale als einen Satz gemischter Ausgangsstrahlen zu erzeugen, der aus mindestens zwei gemischten Ausgangsstrahlen besteht, wobei jeder Strahl des Satzes von gemischten Ausgangsstrahlen aus einem und nur einem Strahl des Satzes von phasenverschobenen, frequenzverschobenen Lichtstrahlen erzeugt wird, und des Weiteren **dadurch gekennzeichnet ist, dass** das Detektionsmittel einen Photodetektor zum Erzeugen der elektrischen Interferenzsignale als einen Satz heterodyner Signale aus den Intensitäten des Satzes gemischter Ausgangsstrahlen aufweist, wobei dieser Satz von heterodynen Signalen aus mindestens zwei heterodynen Signalen besteht und Schwingungen bei heterodynen Frequenzen hat, die mit den Frequenzdifferenzen zwischen den orthogonal polarisierten Komponenten der Strahlen des Satzes von frequenzverschobenen Lichtstrahlen zusammenhängen, wobei der Satz von heterodynen Signalen auch einen Satz von heterodynen Phasen hat, die im Wesentlichen mit dem approximativen Oberwellenverhältnis zwischen den Lichtstrahlwellenlängen in umgekehrtem Verhältnis stehen, mit Ausnahme von Differenzen, die mit dem Brechungsvermögen des Gases im Messschenkel zusammenhängen.

**36.** Interferometrische Vorrichtung nach Anspruch 35, **gekennzeichnet durch** Mittel zum Verarbeiten des Satzes von heterodynen Signalen zum Erzeugen eines Satzes von modifizierten heterodynen Signalen mit modifizierten heterodynen Frequenzen, die mit den heterodynen Frequenzen gemäß dem approximativen Oberwellenverhältnis zwischen den Lichtstrahlwellenlängen harmonisch zusammenhängen, und mit modifizierten heterodynen Phasen, die mit den heterodynen Phasen gemäß dem approximativen Oberwellenverhältnis zwischen den Lichtstrahlwellenlängen harmonisch zusammenhängen, wobei der Satz von modifizierten heterodynen Phasen des Satzes von modifizierten heterodynen Signalen im Wesentlichen gleich ist, mit Ausnahme von Differenzen aufgrund des Brechungsvermögens des Gases im Messschenkel und des vorbestimmten Mediums im Referenzschenkel des Satzes von phasenverschobenen, frequenzverschobenen Lichtstrahlen.

**37.** Interferometrische Vorrichtung nach Anspruch 36, **gekennzeichnet durch** elektronische Mittel zum Mischen von zwei der modifizierten heterodynen Signale, um ein superheterodynes Signal zu erzeugen, das aus zwei Seitenbändern besteht, den Summen- und Differenzseitenbändern, mit Frequenzen, den Summen- und Differenzfrequenzen, gleich der Summe bzw. Differenz der modifizierten heterodynen Frequenzen des Paares von modifizierten heterodynen Signalen, und mit Phasen, den Summen- und Differenzphasen, die gleich der Summe bzw. Differenz der modifizierten heterodynen Phasen des Paares von modifizierten heterodynen Signalen sind, wobei die Differenzphase im Wesentlichen null ist, mit Ausnahme von Differenzen aufgrund der Dispersion des Brechungsvermögens des Gases im Messschenkel und des vorbestimmten Mediums im Referenzschenkel des Satzes von phasenverschobenen, frequenzverschobenen Lichtstrahlen, wobei die Vorrichtung des Weiteren **dadurch** gekennzeichnet ist, dass das elektronische Mittel ein Mittel zum Analysieren der Differenzphase und der modifizierten heterodynen Phase eines des Paares von modifizierten heterodynen Signalen enthält, um das reziproke Dispersionsvermögen des Gases im Messschenkel zu bestimmen.

**38.** Interferometrische Vorrichtung nach einem der Ansprüche 32 bis 37, **dadurch gekennzeichnet, dass** das Interferometer Mittel zum Erzeugen mehrerer Durchgänge über den Messschenkel und den Referenzschenkel für den Satz von phasenverschobenen, frequenzverschobenen Lichtstrahlen aufweist, wobei die Anzahl von mehreren Durchgängen für einen Strahl des Satzes von phasenverschobenen, frequenzverschobenen Lichtstrahlen zur Wellenlänge des Strahls des Satzes von phasenverschobenen, frequenzverschobenen Lichtstrahlen proportional ist, wobei die physischen Längen des Messschenkels und Referenzschenkels jedes Strahls des Satzes von phasenverschobenen, frequenzverschobenen Lichtstrahlen im Wesentlichen dieselben sind.

**39.** Interferometrische Vorrichtung nach Anspruch 38, **dadurch gekennzeichnet, dass** die Größe der Phasenverschiebung, die in jeden des Satzes von frequenzverschobenen Lichtstrahlen eingeführt wird, zum dem Produkt der Anzahl von Durchgängen über die Mess- und Referenzschenkel, der physikalischen Längen der Mess- und Referenzschenkel und den Differenzen im Brechungsvermögen des Gases im Messschenkel und des vorbestimmten Mediums im Referenzschenkel proportional ist, wobei sich das Brechungsvermögen des Gases im Messschenkel für jeden der phasenverschobenen, frequenzverschobenen Lichtstrahlen, einer in Bezug auf den anderen, unterscheidet, wobei das Brechungsvermögen des Gases eine Funktion einer Wellenlänge ist.

**40.** Interferometrische Vorrichtung nach einem der Ansprüche 34 bis 39, **dadurch gekennzeichnet, dass** das Mischungsmittel die zwei verschiedenen Frequenzkomponenten jedes des Satzes von phasenverschobenen, frequenzverschobenen Lichtstrahlen mischt, um gemischte optische Signale als einen Satz von gemischten Ausgangsstrahlen zu erzeugen, der aus mindestens zwei gemischten Ausgangsstrahlen besteht, wobei jeder Strahl dieses Satzes von gemischten Ausgangsstrahlen von einem und nur einem des Satzes von phasenverschobenen, frequenzverschobenen Lichtstrahlen abgeleitet ist.

**41.** Interferometrische Vorrichtung nach Anspruch 40, **dadurch gekennzeichnet, dass** das Detektionsmittel einen Photodetektor zum Erzeugen elektrischer Interferenzsignale als einen Satz von heterodynen Signalen aus den Intensitäten des Satzes gemischter Ausgangsstrahlen aufweist, wobei dieser Satz von heterodynen Signalen aus mindestens zwei heterodynen Signalen besteht und Schwingungen bei heterodynen Frequenzen hat, die mit den Frequenzdifferenzen zwischen den orthogonal polarisierten Komponenten der Strahlen des Satzes von frequenzverschobenen Lichtstrahlen zusammenhängen, wobei der Satz von heterodynen Signalen auch einen Satz von heterodynen Phasen hat, die im Wesentlichen gleich sind, mit Ausnahme von Differenzen, die mit dem Brechungsvermögen des Gases im Messschenkel und dem Brechungsvermögen des vorbestimmten Mediums im Referenzschenkel zusammenhängen.

**42.** Interferometrische Vorrichtung nach Anspruch 36 oder 41, **gekennzeichnet durch** elektronische Mittel zum Mischen von zwei der heterodynen Signale, um ein superheterodynes Signal zu erzeugen, das aus zwei Seitenbändern besteht, den Summen- und Differenzseitenbändern, mit Frequenzen, den Summen- und Differenzfrequenzen, gleich der Summe bzw. Differenz der heterodynen Frequenzen des Paares von heterodynen Signalen, und mit Phasen, den Summen- und Differenzphasen, die gleich der Summe bzw. Differenz der heterodynen Phasen des Paares von heterodynen Signalen sind, wobei die Differenzphase im Wesentlichen null ist, mit Ausnahme von Differenzen aufgrund der Dispersion des Brechungsvermögens des Gases im Messschenkel und des vorbestimmten Mediums im Referenzschenkel des Satzes von phasenverschobenen, frequenzverschobenen Lichtstrahlen.

**43.** Interferometrische Vorrichtung nach einem der Ansprüche 18, 28, 29, 31 und 42, **dadurch gekennzeichnet, dass** die relative Präzision des approximativen Oberwellenverhältnisses, ausgedrückt als die Sequenz von Verhältnissen, eine Größenordnung von weniger als dem Dispersionsvermögen des Gases mal der relativen Präzision hat, die zur Messung des reziproken Dispersionsvermögens erforderlich ist.

**44.** Interferometrische Vorrichtung nach einem der Ansprüche 28, 28, 29, 31 und 42, **gekennzeichnet durch** Beobachtungsmittel zum Beobachten der relativen Präzision des approximativen Oberwellenverhältnisses, ausgedrückt als die Sequenz von Verhältnissen.

**45.** Interferometrische Vorrichtung nach Anspruch 44, **gekennzeichnet durch** Mittel, die auf das Beobachtungsmittel ansprechen, um ein Rückkopplungssignal zur Steuerung der Quelle der Lichtstrahlen zu liefern, so dass die relative Präzision des approximativen Oberwellenverhältnisses eine Größenordnung von weniger als dem Dispersionsvermögen des Gases mal der relativen Präzision hat, die zur Messung des reziproken Dispersionsvermögens erforderlich ist.

**46.** Interferometrische Vorrichtung nach einem der Ansprüche 42 bis 45, **dadurch gekennzeichnet, dass** das elektronische Mittel ein Mittel zum Analysieren der Differenzphase und der heterodynen Phase eines des Paares von heterodynen Signalen enthält, um das reziproke Dispersionsvermögen des Gases im Messschenkel zu bestimmen.

**47.** Interferometrische Vorrichtung nach einem der Ansprüche 44 bis 48, **gekennzeichnet durch** Mittel, die auf das Beobachtungsmittel ansprechen, zum Korrigieren entweder der gewählten intrinsischen optischen Eigenschaften oder des reziproken Dispersionsvermögens des Gases im Messschenkel, wie **durch** das elektronische Mittel bestimmt.

**48.** Interferometrische Vorrichtung nach Anspruch 47.
**dadurch gekennzeichnet, dass** das elektronische Mittel ein Mittel zum Analysieren der Differenzphase und der heterodynen Phase eines des Paares von heterodynen Signalen enthält, um das reziproke Dispersionsvermögen des Gases im Messschenkel zu bestimmen.

**49.** Interferometrische Vorrichtung nach einem der vorangehenden Ansprüche, **dadurch gekennzeichnet, dass** die elektrischen Interferenzsignale heterodyne Signale enthalten, die Phaseninformationen entsprechend dem Brechungsvermögen des Gases enthalten, und des Weiteren **gekennzeichnet durch** Mittel zum Mischen der heterodynen Signale, um mindestens ein superheterodynes Signal zu erzeugen, das Phaseninformationen enthält, die der Dispersion des Brechungsvermögens des Gases entsprechen.

**50.** Interferometrische Vorrichtung nach Anspruch 49, **gekennzeichnet durch** Mittel (1616) zum Auflösen von Phasenmehrdeutigkeiten der heterodynen und superheterodynen Signale.

**Revendications**

**1.** Appareil interférométrique pour surveiller des propriétés optiques intrinsèques sélectionnées d'un gaz indépendamment des conditions environnementales, l'appareil interférométrique comprenant :

une source (1, 2) d'au moins deux faisceaux lumineux (7, 8) ayant des longueurs d'onde différentes ;
un interféromètre (90) comprenant une branche de référence et une branche de mesure, la branche de référence étant configurée et disposée pour être occupée par un milieu prédéterminé et la branche de mesure étant configurée et disposée pour être occupée par le gaz ;
un moyen d'introduction pour introduire au moins une partie de chacun des faisceaux lumineux (7, 8) dans l'interféromètre (90) de telle sorte que chaque partie de faisceau se déplace à travers le gaz le long de chemins prédéterminés, et une autre partie de l'un au moins des faisceaux se déplace à travers le milieu prédéterminé le long de chemins prédéterminés, les parties et l'autre partie sortant de l'interféromètre (90) sous la forme de faisceaux de sortie (17, 18, 25, 26, 117, 118, 125, 126) contenant des informations sur les longueurs des chemins optiques respectifs à travers le milieu prédéterminé dans la branche de référence et sur les longueurs des chemins optiques à travers le gaz dans la branche de mesure ;
un moyen de mélange (69, 70) pour combiner les faisceaux de sortie (17, 18, 25, 26, 117, 118, 125, 126) afin de générer des signaux optiques mixtes contenant des informations correspondant aux déphasages entre chacun des faisceaux de sortie (17, 18, 25, 26, 117, 118, 125, 126) provenant des chemins prédéterminés correspondants des branches de référence et de mesure ; et
un moyen de détection (85, 86) pour détecter les signaux optiques mixtes et générer des signaux d'interférence électriques contenant des informations correspondant aux propriétés optiques intrinsèques sélectionnées du gaz,
l'appareil interférométrique étant **caractérisé en ce que** :

le moyen d'introduction est configuré de telle sorte que des parties de chacun des faisceaux lumineux (7, 8) se déplacent à travers le milieu prédéterminé le long de chemins prédéterminés ; et
un premier faisceau de sortie (17) correspondant à l'une des longueurs d'onde des faisceaux s'est déplacé à travers le gaz dans la branche de mesure, un deuxième faisceau de sortie (25) correspondant à l'autre longueur d'onde s'est déplacé à travers le gaz dans la branche de mesure, un troisième faisceau de sortie (117) correspondant à ladite une longueur d'onde s'est déplacé à travers le milieu prédéterminé dans la branche de référence, et un quatrième faisceau de sortie (125) correspondant à ladite autre longueur d'onde s'est déplacé à travers le milieu prédéterminé dans la branche de référence.

**2.** Appareil interférométrique selon la revendication 1 **caractérisé en ce que** deux des faisceaux de sortie (17, 117, 25, 125) correspondant à l'une des longueurs d'onde des faisceaux se sont respectivement déplacés à travers le gaz et le milieu prédéterminé de telle sorte que, lorsqu'ils sont combinés par le moyen de mélange, ils fournissent un signal optique mixte (129, 130) contenant des informations sur la réfractivité du gaz à cette longueur d'onde.

**3.** Appareil interférométrique selon la revendication 1 **caractérisé par** un moyen optique non linéaire (67) pour recevoir le premier, le deuxième, le troisième et le quatrième faisceau de sortie et doubler les fréquences d'au moins deux de ces faisceaux de sortie afin de générer des signaux contenant des informations sur la dispersion du gaz.

**4.** Appareil interférométrique selon l'une quelconque des revendications précédentes **caractérisé en ce que** le moyen d'introduction (269, 270) comprend un moyen pour introduire d'autres parties de chacun des faisceaux lumineux dans l'interféromètre de telle sorte que ces autres parties sont retournées sous la forme d'un deuxième ensemble de faisceaux de sortie (1117, 1125) sans se déplacer le long de la branche de référence et de la branche de mesure, ce deuxième ensemble de faisceaux de sortie (1117, 1125) contenant des informations sur les longueurs des chemins optiques de l'appareil interférométrique autres que ceux des branches de référence et de mesure.

**5.** Appareil interférométrique selon l'une quelconque des revendications précédentes **caractérisé par** un moyen de doublage de fréquence (67) disposé pour doubler la fréquence de l'un au moins des faisceaux de sortie et/ou d'au moins un faisceau du deuxième ensemble de faisceaux de sortie avant de combiner ces faisceaux pour générer les signaux optiques mixtes.

**6.** Appareil interférométrique selon l'une quelconque des revendications précédentes **caractérisé par** un moyen électronique (109) pour analyser les signaux d'interférence électriques et déterminer les propriétés optiques intrinsèques sélectionnées du gaz.

**7.** Appareil interférométrique selon la revendication 6 **caractérisé en ce que** le moyen électronique (109) est configuré pour déterminer l'un quelconque ou plusieurs des paramètres suivants :

(a) le pouvoir dispersif réciproque, $\Gamma$, du gaz, sous la forme :

$$\Gamma = \frac{[n_1(\lambda_1)-1]}{[n_3(\lambda_3)-n_2(\lambda_2)]}$$

où $\lambda_1$, $\lambda_2$ et $\lambda_3$ sont des longueurs d'onde et $n_1$, $n_2$ et $n_3$ sont des indices de réfraction, et où le dénominateur peut être remplacé par
$[n_3(\lambda_3)\text{-}n_1(\lambda_1)]$ ou $[n_2(\lambda_2)\text{-}n_1(\lambda_1)]$ ;
(b) les réfractivités du gaz correspondant à la longueur d'onde de chaque faisceau lumineux ;
(c) le pouvoir dispersif réciproque, $\Gamma$, du gaz, sous la forme :

$$\Gamma = \frac{[n_i(\lambda_i)-1]}{[n_{j+1}(\lambda_{j+1})-1]-[n_j(\lambda_j)-1]}$$

où i et j sont des entiers correspondant à des longueurs d'onde ; et
(d) les réfractivités relatives aux longueurs d'onde de différents faisceaux, ces réfractivités relatives se présentant sous la forme :

$$\frac{n_{\lambda_i}-1}{n_{\lambda_j}-1}$$

où i et j sont des entiers correspondant à des longueurs d'onde, et sont différents l'un de l'autre.

**8.** Appareil interférométrique selon la revendication 6 ou 7 **caractérisé en ce que** le moyen électronique (109) est configuré pour fournir des signaux de sortie représentatifs des propriétés optiques intrinsèques sélectionnées du gaz pour des applications en aval.

**9.** Appareil interférométrique selon l'une quelconque des revendications précédentes **caractérisé en ce que** le milieu prédéterminé comprend un vide.

**10.** Appareil interférométrique selon l'une quelconque des revendications précédentes **caractérisé en ce que** l'interféromètre (90) comprend une cellule concentrique, cette cellule concentrique comprenant une chambre interne fermée qui sert de branche de référence (98) et une chambre externe entourant la chambre interne qui sert de branche de mesure (97).

**11.** Appareil interférométrique selon les revendications 9 et 10 **caractérisé en ce que** la chambre interne est sensiblement évacuée de telle sorte que le milieu prédéterminé est un vide et la chambre externe est ouverte à l'environnement ambiant.

**12.** Appareil interférométrique selon la revendication 11 **caractérisé en ce que** l'environnement ambiant comprend de l'air.

**13.** Appareil interférométrique selon l'une quelconque des revendications 10 à 12 **caractérisé en ce que** la cellule concentrique se présente sous la forme d'un cylindre circulaire droit avec des sections d'extrémité dont chacune comporte des miroirs sélectifs en longueur d'onde (95E) comme partie de l'interféromètre.

**14.** Appareil interférométrique selon la revendication 13 **caractérisé en ce que** le moyen d'introduction est configuré et disposé pour introduire l'une des parties des faisceaux lumineux correspondant à une longueur d'onde dans l'une des sections d'extrémité de la cellule concentrique et une autre des parties des faisceaux lumineux correspondant à une autre longueur d'onde dans l'autre section d'extrémité de la cellule concentrique.

**15.** Appareil interférométrique selon l'une quelconque des revendications précédentes **caractérisé en ce que** la source de lumière (1, 2) comprend un moyen (3, 4) pour générer des composantes polarisées orthogonalement de chacun des faisceaux lumineux (7, 8).

**16.** Appareil interférométrique selon la revendication 15 **caractérisé par** un moyen (71) pour séparer les faisceaux lumineux (7, 8) en paires de composantes polarisées orthogonalement de longueur d'onde commune.

**17.** Appareil interférométrique selon la revendication 16 **caractérisé par** un moyen (71) pour séparer spatialement l'hyper de composantes polarisées orthogonalement pour utilisation consécutive en aval dans l'interféromètre (69, 70).

**18.** Appareil interférométrique selon l'une quelconque des revendications précédentes **caractérisé en ce que** les longueurs d'onde des faisceaux lumineux (7, 8) ont une relation harmonique approximative l'une avec l'autre, cette relation harmonique approximative étant exprimée comme une séquence de rapports, chaque rapport étant composé d'un rapport d'entiers non nuls d'ordre faible.

**19.** Appareil interférométrique selon 1'une quelconque des revendications précédentes **caractérisé en ce que** la source (1) comprend au moins une source de lumière pour émettre un faisceau lumineux ayant l'une des longueurs d'onde des faisceaux et un moyen de doublement de fréquence (66) associé à cette source de lumière pour doubler la fréquence de ce faisceau lumineux afin d'obtenir l'autre faisceau à l'autre longueur d'onde.

**20.** Appareil interférométrique selon la revendication 19 **caractérisé en ce que** la source (1) comprend un laser et le moyen de doublement de fréquence (66) comprend un matériau optique non linéaire pour générer la deuxième harmonique.

**21.** Appareil interférométrique selon la revendication 16 ou 17 **caractérisé par** un moyen (3, 4) pour introduire une différence de fréquence entre les composantes polarisées orthogonalement de chacun des faisceaux lumineux afin de générer un ensemble de faisceaux lumineux décalés en fréquence de telle sorte qu'aucune paire de faisceaux lumineux décalés en fréquence ne présente la même différence de fréquence.

**22.** Appareil interférométrique selon la revendication 21 **caractérisé par** un moyen optique (54A, 54B) pour diviser chaque faisceau parmi les faisceaux lumineux décalés en fréquence en un ou plusieurs faisceaux afin d'obtenir un ensemble agrandi d'au moins trois faisceaux lumineux décalés en fréquence (11, 12, 212) à partir de l'ensemble de faisceaux lumineux décalés en fréquence de telle sorte que le nombre de faisceaux lumineux décalés en fréquence pour chaque longueur d'onde dans l'ensemble agrandi de faisceaux lumineux décalés en fréquence est inversement associé conformément à la relation harmonique approximative.

**23.** Appareil interférométrique selon la revendication 22 **caractérisé en ce que** l'interféromètre (90) introduit des déphasages entre les composantes polarisées orthogonalement de chaque faisceau de l'ensemble agrandi (11, 12, 212) pour générer les faisceaux de sortie sous la forme d'un ensemble de faisceaux lumineux déphasés, décalés en fréquence et aligne et dirige les faisceaux de l'ensemble agrandi de telle sorte que les chemins de mesure et de référence combinés parcourus par chaque sous-ensemble de faisceaux lumineux déphasés, décalés en fréquence sont sensiblement les mêmes, un sous-ensemble des faisceaux lumineux déphasés, décalés en fréquence comprenant des faisceaux parmi les faisceaux lumineux déphasés, décalés en fréquence ayant la même longueur d'onde, les chemins de mesure et de référence parcourus par deux faisceaux quelconques d'un sous-ensemble de faisceaux lumineux déphasés, décalés en fréquence étant sensiblement non chevauchants.

24. Appareil interférométrique selon la revendication 23 **caractérisé en ce que** :

    (a) les longueurs des chemins physiques pour la branche de mesure et la branche de référence de n'importe quel faisceau parmi les faisceaux lumineux déphasés, décalés en fréquence sont sensiblement identiques ;
    (b) l'amplitude des déphasages introduits dans chaque faisceau de l'ensemble agrandi de faisceaux lumineux décalés en fréquence est proportionnelle au produit du nombre de passes de chaque faisceau sur les branches de mesure et de référence, des longueurs physiques des branches de mesure et de référence, et des différences de réfractivité du gaz dans la branche de mesure et du milieu prédéterminé dans la branche de référence, la réfractivité du gaz dans la branche de mesure étant différente pour chaque sous-ensemble de faisceaux lumineux déphasés, décalés en fréquence, la réfractivité du gaz étant une fonction de la longueur d'onde ; et
    (c) le moyen de mélange mélange les deux composantes de fréquences différentes de chaque faisceau de l'ensemble de faisceaux lumineux déphasés, décalés en fréquence pour générer les signaux optiques mixtes sous la forme d'un ensemble de faisceaux de sortie mixtes composé d'au moins trois faisceaux de sortie mixtes, chaque faisceau de l'ensemble de faisceaux de sortie mixtes étant dérivé d'un faisceau de l'ensemble de faisceaux lumineux déphasés, décalés en fréquence.

25. Appareil interférométrique selon la revendication 24 **caractérisé par** un matériau optique non linéaire (67) pour doubler la fréquence de l'un des faisceaux lumineux déphasés, décalés en fréquence avant qu'il ne pénètre dans le moyen de mélange.

26. Appareil interférométrique selon la revendication 24 ou 25 **caractérisé en ce que** le moyen de détection comprend un photodétecteur (85, 1085, 1086) pour générer les signaux d'interférence électriques sous la forme d'un ensemble d'au moins trois signaux hétérodynes (103, 1103, 1104) à partir des intensités de l'ensemble de faisceaux de sortie mixtes, cet ensemble d'au moins trois signaux hétérodynes étant **caractérisé par** des oscillations aux fréquences hétérodynes associées aux différences de fréquence entre les composantes polarisées orthogonalement des faisceaux de l'ensemble agrandi de faisceaux lumineux décalés en fréquence, l'ensemble d'au moins trois signaux hétérodynes étant en outre **caractérisé par** un ensemble de phases hétérodynes, l'ensemble d'au moins trois signaux hétérodynes étant composé d'un ensemble de sous-ensembles de signaux hétérodynes, un sous-ensemble de signaux hétérodynes regroupant les signaux hétérodynes générés à partir d'un sous-ensemble de faisceaux lumineux déphasés, décalés en fréquence.

27. Appareil interférométrique selon la revendication 30 **caractérisé par** un moyen (1092A, 1092L, 1092M) pour ajouter les signaux hétérodynes de chaque sous-ensemble de signaux hétérodynes afin de générer un ensemble de signaux superhétérodynes, chaque signal superhétérodyne de l'ensemble de signaux superhétérodynes étant composé d'un signal ayant une fréquence superhétérodyne égale à la fréquence hétérodyne du sous-ensemble de signaux hétérodynes ajoutés pour générer ce signal superhétérodyne et une phase superhétérodyne égale à la moyenne des phases hétérodynes du sous-ensemble de signaux hétérodynes ajoutés pour générer ce signal superhétérodyne, les phases superhétérodynes étant sensiblement nulles à l'exception des différences dues à la réfractivité du gaz dans la branche de mesure et du milieu prédéterminé dans la branche de référence de l'ensemble de faisceaux lumineux déphasés, décalés en fréquence.

28. Appareil interférométrique selon la revendication 27 **caractérisé en ce que** le moyen électronique comprend un moyen d'extraction pour extraire deux signaux de l'ensemble de signaux superhétérodynes et mélanger les signaux afin de générer un signal superhétérodyne de deuxième niveau composé de deux bandes latérales, les bandes latérales de somme et de différence, ayant des fréquences, les fréquences de somme et de différence, respectivement égales à la somme et à la différence des fréquences superhétérodynes des signaux superhétérodynes mélangés pour générer le signal superhétérodyne de deuxième niveau et ayant des phases, les phases de somme et de différence, respectivement égales à la somme et à la différence des phases superhétérodynes des signaux superhétérodynes mélangés pour générer le signal superhétérodyne de deuxième niveau, la phase de différence étant sensiblement nulle à l'exception des différences dues à la dispersion de la réfractivité du gaz dans la branche de mesure et de la réfractivité du milieu prédéterminé dans la branche de référence de l'ensemble de faisceaux lumineux déphasés, décalés en fréquence.

29. Appareil interférométrique selon la revendication 28 **caractérisé en ce que** le moyen électronique opère sur la phase de somme et la phase de différence et l'une des phases superhétérodynes pour déterminer le pouvoir dispersif réciproque du gaz.

30. Appareil interférométrique selon l'une quelconque des revendications 24 à 29 **caractérisé en ce que** le moyen de mélange est configuré et disposé pour générer des signaux optiques mixtes sous la forme d'un ensemble d'au moins deux faisceaux de sortie mixtes, chacun généré à partir d'un sous-ensemble de faisceaux lumineux déphasés, décalés en fréquence.

31. Appareil interférométrique selon la revendication 18 **caractérisé par** un moyen de traitement électronique (709) pour mesurer le rapport harmonique approximatif des longueurs d'onde de la source (1, 2) et émettre un signal afin de corriger les calculs effectués pour déterminer les propriétés optiques intrinsèques sélectionnées.

32. Appareil interférométrique selon l'une quelconque des revendications 21 à 30 **caractérisé en ce que** l'interféromètre introduit des déphasages entre les composantes polarisées orthogonalement de chaque faisceau de l'ensemble de faisceaux lumineux décalés en fréquence pour générer un ensemble de faisceaux lumineux déphasés, décalés en fréquence et aligne et dirige les faisceaux de l'ensemble de faisceaux lumineux décalés en fréquence de telle sorte que les branches de mesure et de référence traversées par chaque faisceau de l'ensemble de faisceaux lumineux déphasés, décalés en fréquence sont sensiblement les mêmes.

33. Appareil interférométrique selon l'une quelconque des revendications 23 à 30 et 32 **caractérisé en ce que** les longueurs des chemins physiques pour la branche de mesure et la branche de référence de n'importe quel faisceau parmi les faisceaux lumineux déphasés, décalés en fréquence sont sensiblement identiques.

34. Appareil interférométrique selon la revendication 33 **caractérisé en ce que** l'amplitude des déphasages introduits dans chaque faisceau de l'ensemble de faisceaux lumineux décalés en fréquence et/ou de l'ensemble agrandi de faisceaux lumineux décalés en longueurs physiques des branches de mesure et de référence, et des différences de réfractivité du gaz dans la branche de mesure et du milieu prédéterminé dans la branche de référence, la réfractivité du gaz dans la branche de mesure étant différente pour chaque faisceau parmi les faisceaux lumineux déphasés, décalés en fréquence, la réfractivité du gaz étant une fonction de la longueur d'onde.

35. Appareil interférométrique selon la revendication 34 **caractérisé en ce que** le moyen de mélange mélange les deux composantes de fréquences différentes de chaque faisceau de l'ensemble de faisceaux lumineux déphasés, décalés en fréquence pour générer les signaux optiques mixtes sous la forme d'un ensemble de faisceaux de sortie mixtes composé d'au moins deux faisceaux de sortie mixtes, chaque faisceau de l'ensemble de faisceaux de sortie mixtes étant dérivé d'un, et d'un seul faisceau de l'ensemble de faisceaux lumineux déphasés, décalés en fréquence, et **caractérisé en outre en ce que** le moyen de détection comprend un photodétecteur pour générer les signaux d'interférence électriques sous la forme d'un ensemble de signaux hétérodynes à partir des intensités de l'ensemble de faisceaux de sortie mixtes, cet ensemble de signaux hétérodynes étant composé d'au moins deux signaux hétérodynes et présentant des oscillations aux fréquences hétérodynes associées aux différences de fréquence entre les composantes polarisées orthogonalement des faisceaux de l'ensemble de faisceaux lumineux décalés en fréquence, l'ensemble de signaux hétérodynes comportant également un ensemble de phases hétérodynes sensiblement inversement associées à la relation harmonique approximative entre les longueurs d'onde des faisceaux lumineux à l'exception des différences liées à la réfractivité du gaz dans la branche de mesure.

36. Appareil interférométrique selon la revendication 35 **caractérisé par** un moyen pour traiter l'ensemble de signaux hétérodynes afin de générer un ensemble de signaux hétérodynes modifiés ayant des fréquences hétérodynes modifiées harmoniquement associées aux fréquences hétérodynes conformément à la relation harmonique approximative entre les longueurs d'onde des faisceaux lumineux, et ayant des phases hétérodynes modifiées harmoniquement associées aux phases hétérodynes conformément à la relation harmonique approximative entre les longueurs d'onde des faisceaux lumineux, l'ensemble des phases hétérodynes modifiées de l'ensemble de signaux hétérodynes modifiés étant sensiblement égales à l'exception des différences dues à la réfractivité du gaz dans la branche de mesure et du milieu prédéterminé dans la branche de référence de l'ensemble de faisceaux lumineux déphasés, décalés en fréquence.

37. Appareil interférométrique selon la revendication 36 **caractérisé par** un moyen électronique pour mélanger deux des signaux hétérodynes modifiés afin de générer un signal superhétérodyne composé de deux bandes latérales, les bandes latérales de somme et de différence, ayant des fréquences, les fréquences de somme et de différence, respectivement égales à la somme et à la différence des fréquences hétérodynes modifiées de la paire de signaux hétérodynes modifiés et ayant des phases, les phases de somme et de différence, respectivement égales à la somme et à la différence des phases hétérodynes modifiées de la paire de signaux hétérodynes modifiés, la phase de différence étant sensiblement nulle à l'exception des différences dues à la dispersion de la réfractivité du gaz dans la branche de mesure et du milieu prédéterminé dans la branche de référence de l'ensemble de faisceaux lumineux déphasés, décalés en fréquence, l'appareil étant en outre **caractérisé en ce que** le moyen électronique comprend un moyen pour analyser la phase de différence et la phase hétérodyne modifiée d'un signal de la paire de signaux hétérodynes modifiés afin de déterminer le pouvoir dispersif réciproque du gaz dans la branche de mesure.

38. Appareil interférométrique selon l'une quelconque des revendications 32 à 37 **caractérisé en ce que** l'interféromètre comprend un moyen pour générer de multiples passes sur la branche de mesure et la branche de référence pour l'ensemble de faisceaux lumineux déphasés, décalés en fréquence, le nombre de multiples passes pour un faisceau de l'ensemble de faisceaux lumineux déphasés, décalés en fréquence étant proportionnel à la longueur d'onde du faisceau de l'ensemble de faisceaux lumineux déphasés, décalés en fréquence, les longueurs physiques de la branche de mesure et de la branche de référence de n'importe quel faisceau de l'ensemble de faisceaux lumineux déphasés, décalés en fréquence étant sensiblement identiques.

39. Appareil interférométrique selon la revendication 38 **caractérisé en ce que** l'amplitude des déphasages introduits dans chaque faisceau de l'ensemble de faisceaux lumineux décalés en fréquence est proportionnelle au produit du nombre de passes sur les branches de mesure et de référence, des longueurs physiques des branches de mesure et de référence, et des différences de réfractivité du gaz dans la branche de mesure et du milieu prédéterminé dans la branche de référence, la réfractivité du gaz dans la branche de mesure étant différente pour chacun des faisceaux lumineux déphasés, décalés en fréquence, la réfractivité du gaz étant une fonction de la longueur d'onde.

40. Appareil interférométrique selon l'une quelconque des revendications 34 à 39 **caractérisé en ce que** le moyen de mélange mélange les deux composantes de fréquences différentes de chaque faisceau de l'ensemble de faisceaux lumineux déphasés, décalés en fréquence pour générer les signaux optiques mixtes sous la forme d'un ensemble de faisceaux de sortie mixtes composé d'au moins deux faisceaux de sortie mixtes, chaque faisceau de cet ensemble de faisceaux de sortie mixtes étant dérivé d'un, et d'un seul faisceau de l'ensemble de faisceaux lumineux déphasés, décalés en fréquence.

41. Appareil interférométrique selon la revendication 40 **caractérisé en ce que** le moyen de détection comprend un photodétecteur pour générer les signaux d'interférence électriques sous la forme d'un ensemble de signaux hétérodynes à partir des intensités de l'ensemble de faisceaux de sortie mixtes, cet ensemble de signaux hétérodynes étant composé d'au moins deux signaux hétérodynes et présentant des oscillations aux fréquences hétérodynes associées aux différences de fréquence entre les composantes polarisées orthogonalement des faisceaux de l'ensemble de faisceaux lumineux décalés en fréquence, l'ensemble de signaux hétérodynes comportant également un ensemble de phases hétérodynes sensiblement égales à l'exception des différences liées à la réfractivité du gaz dans la branche de mesure et à la réfractivité du milieu prédéterminé dans la branche de référence.

42. Appareil interférométrique selon la revendication 36 ou 41 **caractérisé par** un moyen électronique pour mélanger deux des signaux hétérodynes afin de générer un signal superhétérodyne composé de deux bandes latérales, les bandes latérales de somme et de différence, ayant des fréquences, les fréquences de somme et de différence, respectivement égales à la somme et à la différence des fréquences hétérodynes de la paire de signaux hétérodynes et ayant des phases, les phases de somme et de différence, respectivement égales à la somme et à la différence des phases hétérodynes de la paire de signaux hétérodynes, la phase de différence étant sensiblement nulle à l'exception des différences dues à la dispersion de la réfractivité du gaz dans la branche de mesure et du milieu prédéterminé dans la branche de référence de l'ensemble de faisceaux lumineux déphasés, décalés en fréquence.

43. Appareil interférométrique selon l'une quelconque des revendications 18, 28, 29, 31 et 42 **caractérisé en ce que** la précision relative de la relation harmonique approximative exprimée comme la séquence de rapports est inférieure d'un ordre de grandeur au pouvoir dispersif du gaz multiplié par la précision relative nécessaire pour la mesure du pouvoir dispersif réciproque du gaz.

44. Appareil interférométrique selon l'une quelconque des revendications 28, 28, 29, 31 et 42 **caractérisé par** un moyen de surveillance pour surveiller la précision relative de la relation harmonique approximative exprimée comme la séquence de rapports.

**45.** Appareil interférométrique selon la revendication 44 **caractérisé par** un moyen réactif au moyen de surveillance pour émettre un signal de retour afin de contrôler la source des faisceaux lumineux de telle sorte que la précision relative de la relation harmonique approximative est inférieure d'un ordre de grandeur au pouvoir dispersif du gaz multiplié par la précision relative nécessaire pour la mesure du pouvoir dispersif réciproque du gaz.

**46.** Appareil interférométrique selon l'une quelconque des revendications 42 à 45 **caractérisé en ce que** le moyen électronique comprend un moyen pour analyser la phase de différence et la phase hétérodyne d'un signal de la paire de signaux hétérodynes afin de déterminer le pouvoir dispersif réciproque du gaz dans la branche de mesure.

**47.** Appareil interférométrique selon l'une quelconque des revendications 44 à 48 **caractérisé par** un moyen réactif au moyen de surveillance pour corriger les propriétés optiques intrinsèques sélectionnées ou le pouvoir dispersif réciproque du gaz dans la branche de mesure tels que déterminés par le moyen électronique.

**48.** Appareil interférométrique selon la revendication 47 **caractérisé en ce que** le moyen électronique comprend un moyen pour analyser la phase de différence et la phase hétérodyne d'un signal de la paire de signaux hétérodynes afin de déterminer le pouvoir dispersif réciproque du gaz dans la branche de mesure.

**49.** Appareil interférométrique selon l'une quelconque des revendications précédentes **caractérisé en ce que** les signaux d'interférence électriques comprennent des signaux hétérodynes contenant des informations sur la phase correspondant aux réfractivités du gaz et **caractérisé en outre par** un moyen pour mélanger les signaux hétérodynes afin de générer au moins un signal superhétérodyne contenant des informations sur la phase correspondant à la dispersion des réfractivités du gaz.

**50.** Appareil interférométrique selon la revendication 49 **caractérisé par** un moyen (1616) pour résoudre les ambiguïtés de phase des signaux hétérodynes et superhétérodynes.

FIG. 1a

FIG. 1b

FIG. 1c

FIG. 1d

EP 1 058 810 B1

FIG. 1e

EP 1 058 810 B1

FIG. 1f

FIG. 1g

FIG. 1h

FIG. 1i

FIG. 2a

**FIG. 2b**

FIG. 2c

EP 1 058 810 B1

FIG. 2d

FIG. 2e

FIG. 3a

FIG. 3b

EP 1 058 810 B1

FIG. 3c

EP 1 058 810 B1

109

FIG. 3d

FIG. 3e

EP 1 058 810 B1

FIG. 4a

FIG. 4b

FIG. 4c

114

FIG. 4d

FIG. 4e

FIG. 4f

FIG. 4g

118

FIG. 5a

**FIG. 5b**

FIG. 5c

EP 1 058 810 B1

FIG. 5d

EP 1 058 810 B1

FIG. 5e

FIG. 6a

FIG. 6b

125

EP 1 058 810 B1

FIG. 6c

FIG. 6d

EP 1 058 810 B1

FIG. 6e

FIG. 6f

FIG. 7a

FIG. 7b

FIG. 7c

EP 1 058 810 B1

FIG. 8a

FIG. 8b

FIG. 8C

FIG. 9

1600 ─Feedback─

**START**
Generate Two
Or More
Light Beams

Downstream
Application

DMI Or
OTHER

1620

1622

Separate
Each Beam
Into
Components

1604

Calculate
Gamma And
Other
Optical
Properties

Wavelengths
OK

1602

1618

Alter One
Of The
Components

Receive
Heterodyne And/
Or
Superheterodyne
Signals

1624

Assess And
Calculate
Correction

1606 1316

1626

Send Altered
Component
Through
Interferometer

Provide An
Interferometer

Directly
Extract Phase
Information Or
Generate
Superheterodyne
Or Modified
Heterodyne
Signals

1608

Reference
Leg
(Vacuum)

Measurement
Leg
(Gas)

1614

1610

Combine
Beams To
Generate A
Mixed
Optical
Signal

1612

Generate A
Corresponding
Electrical
Signal

**FIG. 10**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4215938 A, C. L. Farrand, V. F. Foster, and W. H. Grace
- US 4685803 A
- US 4733967 A, G. E. Sommargren
- US 5218426 A, J. L. Hall, P. J. Martin, M. L. Eickhoff, and M. P. Winters
- US 3647302 A, R. B. Zipin and J. T. Zalusky
- US 4948254 A, A. Ishida
- US 5404222 A
- US 5537209 A
- US 5642195 A
- US 5483343 A
- US 4813783 A
- WO 9918424 A
- US 4552457 A
- GB 2236181 A
- WO 9808214 A
- US 5663793 A

### Non-patent literature cited in the description

- **W. T. ESTLER.** High-Accuracy Displacement Interferometry in Air. *Appl. Opt,* 1985, vol. 24, 808-815
- **N. BOBROFF.** Residual Errors in Laser Interferometry from Air Turbulence and Non-Linearity. *Appl. Opt,* 1987, vol. 26 (13), 2676-2682
- **N. BOBROFF.** Recent Advances in Displacement Measuring Interferometry. *Measurement Science & Tech.,* 1993, vol. 4 (9), 907-926
- **F. E. JONES.** The Refractivity Of Air. *J. Res. NBS,* 1981, vol. 86 (1), 27-32
- **H. MATSUMOTO ; K. TSUKAHARA.** Effects Of The Atmospheric Phase Fluctuation On Long-Distance Measurement. *Appl. Opt.,* 1984, vol. 23 (19), 3388-3394
- **G. N. GIBSON ; J. HEYMAN ; J. LUGTEN ; W. FITELSON ; C. H. TOWNES.** Optical Path Length Fluctuation In The Atmosphere. *Appl. Opt.,* 1984, vol. 23 (23), 4383-4389
- **K. E. ERICKSON.** Long-Path Interferometry Through An Uncontrolled Atmosphere. *J. Opt. Soc. Am.,* 1962, vol. 52 (7), 781-787
- **P. L. BENDER ; J. C. OWENS.** Correction Of Optical Distance Measurements for the Fluctuating Atmospheric Index of Refraction. *J. Geo. Res.,* 1965, vol. 70 (10), 2461-2462
- **K. B. EARNSHAW ; E. N. HERNANDEZ.** Two-Laser Optical Distance-Measuring Instrument That Corrects For The Atmospheric Index Of Refraction. *Appl. Opt.,* 1972, vol. 11 (4), 749-754
- **E. N. HERNANDEZ ; K. B. EARNSHAW.** Field Tests of a Two-Laser (4416A And 6328A) Optical Distance-Measuring Instrument Correcting for the Atmospheric Index of Refraction. *J. Geo. Res.,* 1972, vol. 77 (35), 6994-6998
- **E. BERG ; J. A. CARTER.** Distance Corrections for Single- and Dual-Color Lasers by Ray Tracing. *J. Geo. Res.,* 1980, vol. 85 (B11), 6513-6520
- **L. E. SLATER ; G. R. HUGGETT.** A Multi-Wavelength Distance-Measuring Instrument For Geophysical Experiments. *J. Geo. Res.,* 1976, vol. 81 (35), 6299-6306
- **Y. ZHU ; H. MATSUMOTO ; T. O'ISHI.** Long-Arm Two-Color Interferometer For Measuring The Change Of Air Refractive Index. *SPIE, 1319, Optics in complex systems,* 1990, vol. 1319, 538-539
- **ZHU et al.** Measurement Of Atmospheric Phase And Intensity Turbulence For Long-Path Distance Interferometer. *Proc. 3rd meeting on lightwave sensing technology, Appl. Phys. Soc. of Jpn.,* 1989, vol. 39
- Two Wavelength Displacement-Measuring Interferometer Using Second-Harmonic Light To Eliminate Air-Turbulence-Induced Errors. *Jpn. J. Appl. Phys.,* 1989, vol. 28 (3), L473-475
- An Air Turbulence Compensated Interferometer For IC Manufacturing. *SPIE,* 1995, vol. 2440
- **ISHIDA.** *Jpn. J. Appl. Phys.*
- The Refractive Index of Air. *Metrologia,* 1966, vol. 2 (2), 71-80
- **K. P. BIRCH ; M. J. DOWNS.** *Appl. Opt.,* 1989, vol. 28 (5), 825-826
- **J. BEERS ; T. DOIRON.** *Metrologia,* 1992, vol. 29, 315-316
- **N. BOBROFF.** *Meas. Sci. Technol.,* 1993, vol. 4, 907-926
- **M. TANAKA ; T. YAMAGAMI ; K. NAKAYAMA.** Linear Interpolation of Periodic Error in a Heterodyne Laser Interferometer at Subnanometer Levels. *IEEE Trans. Instrum. and Meas.,* 1989, vol. 38 (2), 552-554

- **R. E. BEST.** Phase-locked loops: theory, design, and applications. McGraw-Hill, 1993
- Discrete Hilbert Transforms. **A. V. OPPERHEIM ; R. W. SCHAFER.** Discrete-Time Signal Processing. Prentice Hall, 1989
- **H. J. BLINCHIKOFF ; A. I. ZVEREV.** Filtering in the Time and Frequency Domains. Wiley, 1976
- **C. ZANONI.** Differential interferometer arrangements for distance and angle measurements: Principles, advantages and applications. *VDI Berichte,* 1989, 93-106